(19) Europäisches Patentamt
European Patent Office
Office européen des brevets

(11) **EP 4 301 052 A1**

(12) **EUROPEAN PATENT APPLICATION**
published in accordance with Art. 153(4) EPC

(43) Date of publication:
**03.01.2024 Bulletin 2024/01**

(21) Application number: **22781721.0**

(22) Date of filing: **04.04.2022**

(51) International Patent Classification (IPC):
**H04W 52/36** $^{(2009.01)}$    **H04W 52/14** $^{(2009.01)}$

(52) Cooperative Patent Classification (CPC):
**H04W 52/14; H04W 52/36**

(86) International application number:
**PCT/KR2022/004800**

(87) International publication number:
**WO 2022/211602 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2021 KR 20210043647**

(71) Applicant: Samsung Electronics Co., Ltd.
Suwon-si, Gyeonggi-do 16677 (KR)

(72) Inventors:
• **PARK, Sungjin**
Suwon-si Gyeonggi-do 16677 (KR)
• **RYU, Hyunseok**
Suwon-si Gyeonggi-do 16677 (KR)
• **KIM, Youngbum**
Suwon-si Gyeonggi-do 16677 (KR)
• **KIM, Younsun**
Suwon-si Gyeonggi-do 16677 (KR)

(74) Representative: **Gulde & Partner**
**Patent- und Rechtsanwaltskanzlei mbB**
**Wallstraße 58/59**
**10179 Berlin (DE)**

(54) **METHOD AND DEVICE FOR REPORTING UPLINK POWER HEADROOM IN WIRELESS COMMUNICATION SYSTEM**

(57)    The present disclosure relates to a 5G or 6G communication system for supporting higher data transmission rates. According to one embodiment of the present disclosure, a method performed by a terminal in a communication system is provided. The method comprises: receiving power headroom reporting (PHR)-related configuration information; confirming at least one PHR based on the PHR-related configuration information; and transmitting the at least one PHR, wherein the at least one PHR comprises one of PHR for an actual physical uplink shared channel (PUSCH) related to a first resource index, and PHR for a reference PUSCH related to the first resource index, and, if a PUSCH related to the first resource index is transmitted in slot n, then the PHR for the actual PUSCH related to the first resource index is for a first PUSCH related to the first resource index overlapping with slot n.

FIG. 27

**Description**

**[Technical Field]**

The disclosure relates to an operation of a terminal and a base station in a wireless communication system. Specifically, the disclosure relates to a method of reporting an uplink power headroom in a wireless communication system and a device capable of performing the same.

**[Background Art]**

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive MIMO for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a bandwidth part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services that 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in areas where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service areas by integrating wireless backhaul links and access links, mobility enhancement including conditional handover and dual active protocol stack (DAPS) handover, and 2-step RACH for NR that simplifies a random access procedure is also in progress, and standardization in the field of system architecture/service for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, AI-based communication technology that utilizes artificial intelligence (AI) from a design stage and that realizes system optimization by internalizing end-to-end AI support functions, and next generation distributed computing technology that realizes complex services beyond the limits of LTE computing capabilities by utilizing ultra-high-performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

**[Disclosure of Invention]**

**[Technical Problem]**

Various embodiments of the disclosure provide a method and device capable of effectively providing a service in a mobile communication system.

**[Solution to Problem]**

According to an embodiment of the disclosure, a method performed by a terminal in a communication system is provided. The method includes receiving power headroom reporting (PHR) related configuration information; identifying at least one PHR based on the PHR related configuration information; and transmitting the at least one PHR, wherein the at least one PHR includes one of a PHR for an actual physical uplink shared channel (PUSCH) associated with a first resource index and a PHR for a reference PUSCH associated with the first resource index, and wherein in the case that a PUSCH associated with the first resource index is transmitted in a slot n, PHR for the actual PUSCH associated with the first resource index is for a first PUSCH associated with the first resource index overlapped with the slot n.

According to an embodiment of the disclosure, a method performed by a base station in a communication system is provided. The method includes transmitting power headroom reporting (PHR) related configuration information; and receiving at least one PHR, wherein the at least one PHR is based on the PHR related configuration information, wherein the at least one PHR includes one of a PHR for an actual physical uplink shared channel (PUSCH) associated with a first resource index and a PHR for a reference PUSCH associated with the first resource index, and wherein in the case that a PUSCH associated with the first resource index is transmitted in a slot n, the PHR for the actual PUSCH associated with the first resource index is for a first PUSCH associated with the first resource index overlapped with the slot n.

According to an embodiment of the disclosure, a terminal of a communication system is provided. The terminal includes a transceiver; and a controller coupled with the transceiver and configured to receive power headroom reporting (PHR) related configuration information, to identify at least one PHR based on the PHR related configuration information, and to transmit the at least one PHR, wherein the at least one PHR includes one of a PHR for an actual physical uplink shared channel (PUSCH) associated with a first resource index and a PHR for a reference PUSCH associated with the first resource index, and wherein in the case that a PUSCH associated with the first resource index is transmitted in a slot n, the PHR for the actual PUSCH associated with the first resource index is for a first PUSCH associated with the first resource index overlapped with the slot n.

According to an embodiment of the disclosure, a base station of a communication system is provided. The base station includes a transceiver; and a controller coupled with the transceiver and configured to transmit power headroom reporting (PHR) related to configuration information, and to receive at least one PHR, wherein the at least one PHR is based on the PHR related configuration information, wherein the at least one PHR includes one of a PHR for an actual physical uplink shared channel (PUSCH) associated with a first resource index and a PHR for a reference PUSCH associated with the first resource index, and wherein in the case that a PUSCH associated with the first resource index is transmitted in a slot n, the PHR for the actual PUSCH associated with the first resource index is for a first PUSCH associated with the first resource index overlapped with the slot n.

**[Advantageous Effects of Invention]**

According to various embodiments of the disclosure, a method and device capable of effectively providing a service in a mobile communication system are provided.

According to an embodiment of the disclosure, a method of constituting power headroom (PH) information by a terminal supporting multiple transmission and reception point (TRP)-based physical uplink shared channel (PUSCH) transmission is provided.

Effects obtainable in the disclosure are not limited to the above-described effects, and other effects not described will be clearly understood by those of ordinary skill in the art to which the disclosure belongs from the description below.

**[Brief Description of Drawings]**

The above and other objects, features and advantages of the disclosure will become more apparent through the following description of embodiments of the disclosure with reference to the accompanying drawings.

FIG. 1 is a diagram illustrating a basic structure of a time-frequency domain in a wireless communication system according to an embodiment of the disclosure.

FIG. 2 is a diagram illustrating a frame, subframe, and slot structure in a wireless communication system according to an embodiment of the disclosure.

FIG. 3 is a diagram illustrating an example of a bandwidth part configuration in a wireless communication system according to an embodiment of the disclosure.

FIG. 4 is a diagram illustrating an example of a control area configuration of a downlink control channel in a wireless communication system according to an embodiment of the disclosure.

FIG. 5 is a diagram illustrating a structure of a downlink control channel in a wireless communication system according to an embodiment of the disclosure.

FIG. 6 is a diagram illustrating through a span the case that a UE may have a plurality of physical downlink control channel (PDCCH) monitoring positions within a slot in a wireless communication system according to an embodiment of the disclosure.

FIG. 7 is a diagram illustrating an example of base station beam allocation according to a TCI state configuration in a wireless communication system according to an embodiment of the disclosure.

FIG. 8 is a diagram illustrating an example of a method of allocating a TCI state for a PDCCH in a wireless communication system according to an embodiment of the disclosure.

FIG. 9 is a diagram illustrating a TCI indication MAC CE signaling structure for a PDCCH DMRS in a wireless communication system according to an embodiment of the disclosure.

FIG. 10 is a diagram illustrating an example of a beam configuration of a control resource set and a search space in a wireless communication system according to an embodiment of the disclosure.

FIG. 11A is a diagram illustrating a method of selecting a receivable control resource set in consideration of a priority when a UE receives a downlink control channel in a wireless communication system according to an embodiment of the disclosure.

FIG. 11B is a diagram illustrating a method of selecting a receivable control resource set in consideration of a priority when a UE receives a downlink control channel in a wireless communication system according to an embodiment of the disclosure.

FIG. 12 is a diagram illustrating a method for a base station and a UE to transmit and receive data in consideration of a downlink data channel and a rate matching resource in a wireless communication system according to an embodiment of the disclosure.

FIG. 13 is a diagram illustrating an example of a PUSCH repetition transmission type B in a wireless communication system according to an embodiment of the disclosure.

FIG. 14 is a diagram illustrating an example of an aperiodic CSI reporting method according to an embodiment of the disclosure.

FIG. 15 is a diagram illustrating a radio protocol structure of a base station and a UE in a single cell, carrier aggregation, and dual connectivity situation in a wireless communication system according to an embodiment of the disclosure.

FIG. 16 is a diagram illustrating an example of antenna port constitution and resource allocation for transmitting a PDSCH using cooperative communication in a wireless communication system according to an embodiment of the disclosure.

FIG. 17 is a diagram illustrating an example of a downlink control information (DCI) constitution for cooperative communication in a wireless communication system according to an embodiment of the disclosure.

FIG. 18 is a message flow diagram illustrating a procedure in which a base station controls transmission power of a LTE in a wireless communication system according to an embodiment of the disclosure.

FIG. 19A illustrates an operation of a base station for PUSCH repetition transmission in consideration of single DCI transmission-based multiple TRPs in which a plurality of SRI or TPMI fields exist according to an embodiment of the disclosure.

FIG. 19B illustrates an operation of a UE for PUSCH repetition transmission in consideration of single DCI transmission-based multiple TRPs in which a plurality of SRI or TPMI fields exist according to an embodiment of the disclosure.

FIG. 20 is a diagram illustrating a MAC CE structure including PHR information according to an embodiment of the disclosure.

FIG. 21 is a diagram illustrating a MAC CE structure including PHR information according to an embodiment of the disclosure.

FIG. 22 is a diagram illustrating a MAC CE structure including PHR information according to an embodiment of the disclosure.

FIG. 23 is a diagram illustrating a MAC CE structure including PHR information according to an embodiment of the disclosure.

FIG. 24 is a diagram illustrating a MAC CE structure including PHR information according to an embodiment of the disclosure.

FIG. 25 is a diagram illustrating a MAC CE structure including PHR information according to an embodiment of the disclosure.

FIG. 26 is a diagram illustrating a MAC CE structure including PHR information according to an embodiment of the disclosure.

FIG. 27 is a diagram illustrating scheduling of PUSCH resources including PH information in a multi-cell environment according to an embodiment of the disclosure.

FIG. 28 is a flowchart illustrating an operation of a LTE according to an embodiment of the disclosure.

FIG. 29 is a flowchart illustrating an operation of a base station according to an embodiment of the disclosure.

FIG. 30 is a block diagram illustrating a structure of a UE in a communication system according to an embodiment of the disclosure.

FIG. 31 is a block diagram illustrating the structure of a base station in a communication system according to an embodiment of the disclosure.

## [Mode for the Invention]

Hereinafter, embodiments of the disclosure will be described in detail with reference to the accompanying drawings.

In describing embodiments, descriptions of technical contents that are well known in the technical field to which the disclosure pertains and that are not directly related to the disclosure will be omitted. This is to more clearly convey the gist of the disclosure without obscuring the gist of the disclosure by omitting unnecessary description.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only embodiments of the disclosure enable the disclosure to be complete, and are provided to fully inform the scope of the disclosure to those of ordinary skill in the art to which the disclosure belongs, and the disclosure is only defined by the scope of the claims. Like reference numerals refer to like components throughout the specification. Further, in describing the disclosure, in the case that it is determined that a detailed description of a related function or constitution may unnecessarily obscure the gist of the disclosure, a detailed description thereof will be omitted. Terms described below are terms defined in consideration of functions in the disclosure, which may vary according to intentions or customs of users and operators. Therefore, the definition should be made based on the content throughout this specification.

Hereinafter, a base station is a subject performing resource allocation of a terminal, and may be at least one of a gNode B, an eNode B, a node B, a base station (BS), a radio access unit, a base station controller, or a node on a network. The terminal may include a user equipment (UE), a mobile station (MS), a cellular phone, a smart phone, a computer, or a multimedia system capable of performing a communication function. In the disclosure, a downlink (DL) is a wireless transmission path of a signal transmitted from a base station to a terminal, and an uplink (UL) is a wireless transmission path of a signal transmitted from a terminal to a base station. Hereinafter, although LTE or LTE-A system may be described as an example, embodiments of the disclosure may be applied to other communication systems having a similar technical background or channel type. For example, 5G mobile communication technology (5G, new radio (NR)) developed after LTE-A may be included therein, and the following 5G may be a concept including existing LTE, LTE-A and other similar services. Further, the disclosure may be applied to other communication systems through some modifications within a range that does not significantly deviate from the scope of the disclosure by the determination of a person having skilled technical knowledge.

In this case, it will be understood that each block of flowcharts and combinations of the flowcharts may be performed by computer program instructions. Because these computer program instructions may be mounted in a processor of a general purpose computer, a special purpose computer, or other programmable data processing equipment, instructions performed by a processor of a computer or other programmable data processing equipment generate a means that performs functions described in the flowchart block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the flowchart block(s). Because the computer program instructions may be mounted on a computer or other programmable data processing equipment, a series of operation steps are performed on the computer or other programmable data processing equipment to generate a computer-executed process; thus, instructions for performing the computer or other programmable data processing equipment may provide steps for performing functions described in the flowchart block(s).

Further, each block may represent a portion of a module, a segment, or a code including one or more executable instructions for executing a specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, a term '-unit' used in this embodiment means software or hardware components such as a field programmable gate array (FPGA) or an application specific integrated circuit (ASIC), and '-unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card. Further, in an embodiment, '-unit' may include one or more processors.

A wireless communication system has evolved from providing voice-oriented services in the early days to a broadband wireless communication system that provides high-speed and high-quality packet data services as in communication standards such as high speed packet access (HSPA), long term evolution (LTE) or evolved universal terrestrial radio access (E-UTRA), LTE-Advanced (LTE-A), and LTE-Pro of 3GPP, high rate packet data (HRPD) and ultra mobile broadband (UMB) of 3GPP2, and IEEE 802.16e.

An LTE system, which is a representative example of the broadband wireless communication system, employs an orthogonal frequency division multiplexing (OFDM) scheme in a downlink (DL) and a single carrier frequency division multiple access (SC-FDMA) scheme in an uplink. The uplink means a radio link in which a user equipment (UE) or a mobile station (MS) transmits data or control signals to an eNode B (eNB) or a base station (BS), and the downlink means a radio link in which a base station transmits data or control signals to a terminal. The above-described multiple access method enables data or control information of each user to distinguish by allocating and operating data or control information so that time-frequency resources to carry data or control information for each user in general do not overlap each other, that is, so that orthogonality is established.

A 5G communication system, which is a future communication system after LTE, should support services that simultaneously satisfy various requirements so that various requirements of users and service providers may be freely reflected. Services considered for the 5G communication system include enhanced mobile broadband (eMBB), massive machine type communication (mMTC), ultra reliability low latency communication (URLLC), and the like.

The eMBB aims to provide a more improved data rate than a data rate supported by existing LTE, LTE-A, or LTE-Pro. For example, in the 5G communication system, the eMBB should be able to provide a peak data rate of 20 Gbps in a downlink and a peak data rate of 10 Gbps in an uplink from the viewpoint of one base station. Further, the 5G communication system should provide an increased user perceived data rate of a terminal while providing a peak data rate. In order to satisfy such requirements, it is required to improve various transmission and reception technologies, including more advanced multi input and multi output (MIMO) transmission technology. Further, the LTE system transmits a signal using a transmission bandwidth of maximum 20 MHz in the 2 GHz band, whereas the 5G communication system can satisfy a data rate required by the 5G communication system by using a frequency bandwidth wider than 20 MHz in a frequency band of 3 to 6 GHz or 6 GHz or more.

At the same time, mMTC is being considered to support application services such as Internet of Thing (IoT) in the 5G communication system. In order to efficiently provide IoT, mMTC requires access support for large-scale terminals within a cell, improvement of coverage of terminals, an improved battery time, and cost reduction of terminals. Because the IoT is attached to various sensors and various devices to provide communication functions, it should be able to support a large number of terminals (e.g., 1,000,000 terminals/km$^2$) within a cell. Further, because a terminal supporting mMTC is highly likely to be positioned in a shaded area that a cell cannot cover, such as the basement of a building, due to the nature of the service, the terminal may require wider coverage compared to other services provided by the 5G communication system. The terminal supporting mMTC should be composed of a low cost terminal, and because it is difficult to frequently exchange a battery of the terminal, a very long battery life time such as 10 to 15 years may be required.

Finally, URLLC is a cellular-based wireless communication service used for mission-critical. For example, a service used for remote control of a robot or machinery, industrial automation, unmanned aerial vehicle, remote health care, emergency alert, and the like may be considered. Therefore, communication provided by URLLC should provide very low latency and very high reliability. For example, a service supporting URLLC should satisfy air interface latency smaller than 0.5 milliseconds and simultaneously has the requirement of a packet error rate of 10-5 or less. Therefore, for a service supporting URLLC, the 5G system should provide a transmit time interval (TTI) smaller than that of other services, and at the same time, it may require a design that should allocate a wide resource in a frequency band in order to secure reliability of a communication link.

Three services, i.e., eMBB, URLLC, and mMTC of 5G may be multiplexed and transmitted in a single system. In this case, in order to satisfy different requirements of each service, different transmission and reception techniques and transmission and reception parameters may be used between services. 5G is not limited to the above-described three services.

[NR time-frequency resource]

Hereinafter, a frame structure of a 5G system will be described in more detail with reference to the drawings.

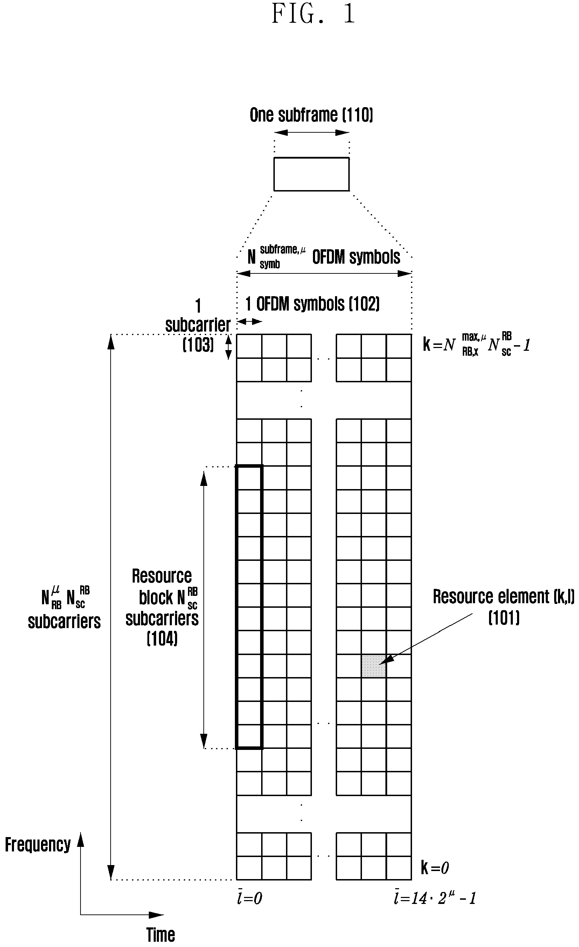

FIG. 1 is a diagram illustrating a basic structure of a time-frequency domain in a wireless communication system according to an embodiment of the disclosure.

A horizontal axis of FIG. 1 represents a time domain, and a vertical axis of FIG. 1 represents a frequency domain. A basic unit of resources in the time and frequency domains is a resource element (RE) 101 and may be defined to 1 orthogonal frequency division multiplexing (OFDM) symbol 102 on the time axis and 1 subcarrier 103 on the frequency axis. In the frequency domain, the $N_{SC}^{RB}$ (e.g., 12) number of consecutive REs may constitute one resource block (RB) 104. Further, the $N_{symb}^{subframe}$ number of consecutive OFDM symbols in the time domain may constitute one subframe 110.

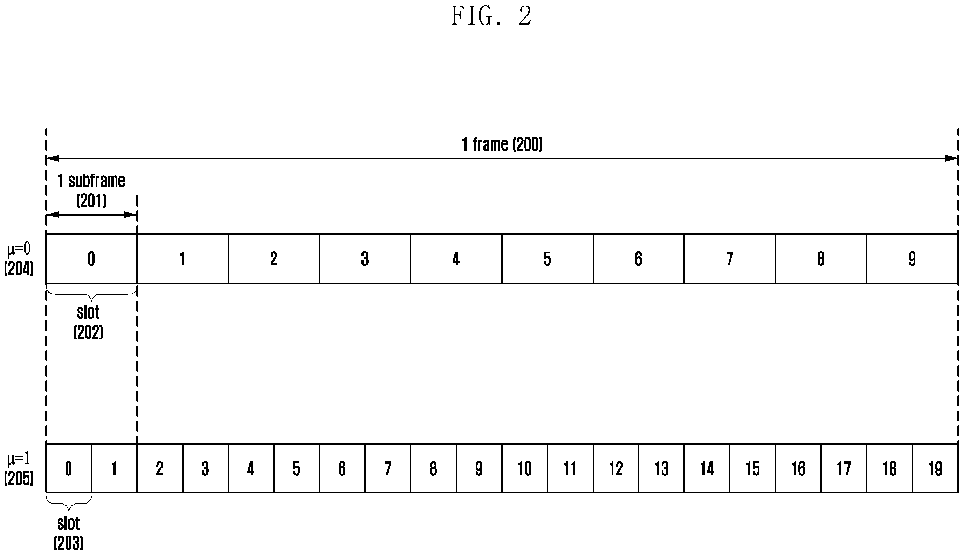

FIG. 2 is a diagram illustrating a frame, subframe, and slot structure in a wireless communication system according to an embodiment of the disclosure.

FIG. 2 illustrates an example of a structure of a frame 200, a subframe 201, and a slot 202. 1 frame 200 may be defined to 10 ms. 1 subframe 201 may be defined to 1 ms; thus, 1 frame 200 may be composed of total 10 subframes 201. 1 slots 202 and 203 may be defined to 14 OFDM symbols (i.e., the number $N_{symb}^{slot}$ of symbols per slot is 14). 1 subframe 201 may be composed of one or a plurality of slots 202 and 203, and the number of slots 202 and 203 per subframe 201 may vary according to configuration values $\mu$ 204 and 205 for subcarrier spacing. In an example of FIG. 2, the case that $\mu$ = 0, 204 and the case that $\mu$ = 1, 205 are illustrated as the subcarrier spacing configuration value. In the case that $\mu$ = 0, 204, 1 subframe 201 may be composed of 1 slot 202, and in the case that $\mu$ = 1, 205, 1 subframe 201 may be composed of 2 slots 203. That is, the number $N_{slot}^{subframe,\mu}$ of slots per subframe may vary according to the configuration value $\mu$ for the subcarrier spacing; thus, the number $N_{slot}^{frame,\mu}$ of slots per frame may vary.

[Table 1]

| $\mu$ | $N_{symbol}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth Part (BWP)]

Hereinafter, a bandwidth part (BWP) configuration in a 5G communication system to which the disclosure may be applied will be described in detail with reference to the drawings.

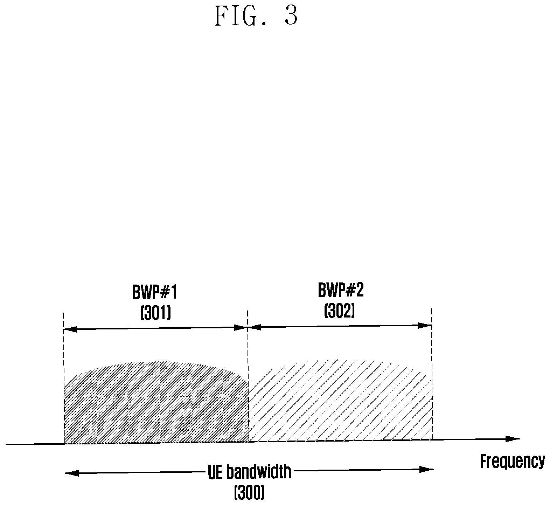

FIG. 3 is a diagram illustrating an example of a bandwidth part configuration in a wireless communication system according to an embodiment of the disclosure.

FIG. 3 illustrates an example in which a UE bandwidth 300 is configured to two bandwidth parts (BWPs), that is, a BWP#1, 301 and a BWP#2, 302. The base station may configure one or a plurality of bandwidth parts to the UE and configure the following information for each bandwidth part.

[Table 2]

| BWP ::= | SEQUENCE { |
|---|---|
| bwp-Id | BWP-Id, |
| (bandwidth part identifier) | |
| locationAndBandwidth | INTEGER (1..65536), |
| (bandwidth part location) | |
| subcarrierSpacing | ENUMERATED {n0, n1, n2, n3, n4, n5}, |
| (subcarrier spacing) | |
| cyclicPrefix | ENUMERATED { extended } |
| (cyclic prefix) | |
| } | |

The disclosure is not limited to the above example, and various parameters related to the bandwidth part may be configured to the UE in addition to the configuration information. The information may be transmitted by the base station to the UE through higher layer signaling, for example, RRC signaling. At least one bandwidth part among one or a plurality of configured bandwidth parts may be activated. Whether the configured bandwidth part is activated may be semi-statically transmitted from the base station to the UE through RRC signaling or may be dynamically transmitted from the base station to the UE through downlink control information (DCI).

According to some embodiments, the UE before RRC connection may receive a configuration of an initial BWP for initial access from the base station through a master information block (MIB). More specifically, in an initial access step, the UE may receive configuration information on a search space and a control resource set (CORESET) in which a PDCCH for receiving system information (may correspond to remaining system information (RMSI) or system information block 1 (SIB1)) necessary for initial access may be transmitted through the MIB. The CORESET and search space configured by the MIB may be regarded as an identity (ID) 0, respectively. The base station may notify the UE of configuration information such as frequency allocation information, time allocation information, and numerology for the CORESET #0 through the MIB. Further, the base station may notify the LTE of configuration information on a monitoring period and occasion for the CORESET #0, that is, configuration information on a search space #0 through the MIB. The UE may regard a frequency domain configured to the CORESET #0 acquired from the MIB as an initial bandwidth part for initial access. In this case, an identifier (ID) of the initial bandwidth part may be regarded as 0.

The configuration for the bandwidth part supported in the 5G system may be used for various purposes.

According to some embodiments, in the case that a bandwidth supported by the UE is smaller than the system bandwidth, this may be supported through the bandwidth part configuration. For example, as the base station configures a frequency position (configuration information 2) of the bandwidth part to the UE, the UE may transmit and receive data at a specific frequency position within the system bandwidth.

Further, according to some embodiments, for the purpose of supporting different numerologies, the base station may configure a plurality of bandwidth parts to the UE. For example, in order to support both data transmission and reception using subcarrier spacing of 15 kHz and subcarrier spacing of 30 kHz to a certain UE, the base station may configure two bandwidth parts to subcarrier spacings of 15 kHz and 30 kHz, respectively. Different bandwidth parts may be frequency division multiplexed, and in the case that data is to be transmitted and received at specific subcarrier spacing, a bandwidth part configured at corresponding subcarrier spacing may be activated.

Further, according to some embodiments, for the purpose of reducing power consumption of the LTE, the base station may configure bandwidth parts having different sizes of bandwidth to the UE. For example, in the case that the UE supports a very large bandwidth, for example, a bandwidth of 100 MHz and always transmits and receives data with the corresponding bandwidth, very large power consumption may occur. In particular, monitoring an unnecessary downlink control channel with a large bandwidth of 100 MHz in a situation in which there is no traffic may be very inefficient in terms of power consumption. For the purpose of reducing power consumption of the UE, the base station may configure a bandwidth part of a relatively small bandwidth, for example, a bandwidth part of 20 MHz to the UE. In a situation in which there is no traffic, the UE may perform a monitoring operation in the bandwidth part of 20 MHz, and in the case that data is generated, the LTE may transmit and receive data with the bandwidth part of 100 MHz according to the instruction of the base station.

In a method of configuring the bandwidth part, UEs before RRC connection may receive configuration information on the initial bandwidth part through an MIB in an initial access step. More specifically, the UE may receive a configuration of a control resource set (CORESET) for a downlink control channel in which DCI scheduling the system information block (SIB) may be transmitted from the MIB of a physical broadcast channel (PBCH). A bandwidth of the CORESET configured by the MIB may be regarded as an initial bandwidth part, and the UE may receive a physical downlink shared channel (PDSCH) in which the SIB is transmitted through the configured initial bandwidth part. The initial bandwidth part may be used for other system information (OSI), paging, and random access in addition to the use of receiving the SIB.

[Bandwidth Part (BWP) change]

In the case that one or more bandwidth parts are configured for the UE, the base station may instruct the UE to change (or switch, transition) the bandwidth part using a BWP indicator field in the DCI. For example, in FIG. 3, in the case that the currently activated BWP of the UE is a BWP #1, 301, the base station may indicate a BWP #2, 302 with a BWP indicator in the DCI to the UE, and the UE may perform the BWP change with the BWP #2, 302 indicated by the BWP indicator in the received DCI.

As described above, because the DCI-based bandwidth part change may be indicated by DCI scheduling the PDSCH or PUSCH, in the case that the UE receives the bandwidth part change request, the UE should receive or transmit the PDSCH or PUSCH scheduled by the corresponding DCI in the changed bandwidth part without difficulty. To this end, the standard stipulates the requirements for a delay time (TBWP) required when changing the bandwidth part, and may be defined, for example, as follows.

[Table 3]

| μ | NR Slot length(ms) | BWP switch delay $T_{BWP}$(slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirement for the bandwidth part change delay time supports type 1 or type 2 according to a capability of the UE. The UE may report a supportable bandwidth part delay time type to the base station.

According to the above-mentioned requirement for the bandwidth part change delay time, in the case that the UE receives the DCI including the bandwidth part change indicator in a slot n, the UE may complete the change to a new bandwidth portion indicated by a bandwidth part change indicator at a time point not later than a slot n+TBWP and perform transmission and reception for a data channel scheduled by the corresponding DCI in the changed new bandwidth part. In the case that the base station wants to schedule a data channel with a new bandwidth part, the base station may determine time domain resource allocation for the data channel in consideration of the bandwidth part change delay time (TBWP) of the UE. That is, when scheduling a data channel with a new bandwidth part, in the method of determining time domain resource allocation for the data channel, the base station may schedule the corresponding data channel after the bandwidth part change delay time. Accordingly, the UE may not expect that the DCI indicating the bandwidth part change indicates a slot offset value (K0 or K2) smaller than the bandwidth part change delay time (TBWP).

When the UE receives DCI (e.g., DCI format 1_1 or 0_1) indicating a change in bandwidth part, the UE may not perform any transmission or reception during a corresponding time interval from a third symbol of a slot that receives a PDCCH including the corresponding DCI to a start point of a slot indicated by a slot offset value (K0 or K2) indicated by a time domain resource allocation indicator field in the corresponding DCI. For example, when the UE received DCI indicating a bandwidth part change in a slot n, and a slot offset value indicated by the corresponding DCI is K, the UE may not perform any transmission or reception from a third symbol of the slot n to the previous symbol of a slot n+K (i.e., a last symbol of a slot n+K-1).

[SS/PBCH block]

Hereinafter, a synchronization signal (SS)/PBCH block in a 5G system to which the disclosure may be applied will be described.
The SS/PBCH block may mean a physical layer channel block composed of a primary SS (PSS), a secondary SS (SSS), and a PBCH. Specifically, it is as follows.

- PSS: As a reference signal for downlink time/frequency synchronization, the PSS provides some information of a cell ID.
- SSS: The SSS serves as a reference for downlink time/frequency synchronization, and provides remaining cell ID information that is not provided by the PSS. Additionally, the SSS may serve as a reference signal for demodulation of the PBCH.
- PBCH: The PBCH provides essential system information required for transmission and reception of data channels and control channels of the UE. Essential system information may include search space related control information indicating radio resource mapping information of a control channel, scheduling control information on a separate data channel that transmits system information, and the like.
- SS/PBCH block: The SS/PBCH block is composed of a combination of the PSS, SSS, and PBCH. One or a plurality of SS/PBCH blocks may be transmitted within 5 ms, and each transmitted SS/PBCH block may be distinguished by an index.

The UE may detect the PSS and SSS in the initial access step and decode the PBCH. The MIB may be acquired from the PBCH, and a control resource set (CORESET) #0 (which may correspond to a CORESET having a CORESET index of 0) may be configured therefrom. The UE may assume that the selected SS/PBCH block and demodulation reference signal (DMRS) transmitted in the CORESET #0 are quasi co-located (QCL) and perform monitoring for the CORESET #0. The UE may receive system information with downlink control information transmitted in the CORESET #0. The UE may acquire random access channel (RACH) related configuration information required for initial access from the received system information. The UE may transmit a physical RACH (PRACH) to the base station in consideration of the selected SS/PBCH index, and the base station that has received the PRACH may acquire information on the SS/PBCH block index selected by the UE. The base station may know that the UE has selected a certain block among SS/PBCH blocks and monitors the CORESET #0 related thereto.

[PDCCH: related to DCI]

Hereinafter, downlink control information (DCI) in a 5G system to which the present disclosure may be applied will be described in detail.
Scheduling information on uplink data (or physical uplink shared channel (PUSCH)) or downlink data (or physical downlink shared channel (PDSCH)) in the 5G system is transmitted from the base station to the UE through DCI. The UE may monitor a DCI format for fallback and a DCI format for non-fallback with respect to the PUSCH or PDSCH. The DCI format for fallback may be composed of a fixed field predefined between the base station and the UE, and the DCI format for non-fallback may include a configurable field.
The DCI may be transmitted through a physical downlink control channel (PDCCH) via channel coding and modulation processes. A cyclic redundancy check (CRC) is attached to a DCI message payload, and the CRC may be scrambled with a radio network temporary identifier (RNTI) corresponding to the identity of the UE. Different RNTIs may be used according to the purpose of the DCI message, for example, UE-specific data transmission, power control command, or random access response. That is, the RNTI is not explicitly transmitted but is included in a CRC calculation process and transmitted. Upon receiving the DCI message transmitted on the PDCCH, the UE may identify the CRC using the allocated RNTI, and when the CRC identification result is correct, the UE may know that the corresponding message has been transmitted to the UE.
For example, DCI scheduling a PDSCH for system information (SI) may be scrambled with an SI-RNTI. DCI scheduling a PDSCH for a random access response (RAR) message may be scrambled with an RA-RNTI. DCI scheduling a PDSCH for a paging message may be scrambled with a P-RNTI. DCI notifying a slot format indicator (SFI) may be scrambled with an SFI-RNTI. DCI notifying transmit power control (TPC) may be scrambled with a TPC-RNTI. DCI scheduling a UE-specific PDSCH or PUSCH may be scrambled with a cell RNTI (C-RNTI).

A DCI format 0_0 may be used as fallback DCI scheduling a PUSCH, and in this case, a CRC may be scrambled with a C-RNTI. The DCI format 0_0 in which a CRC is scrambled with a C-RNTI may include, for example, the following information.

[Table 4]

| |
|---|
| - Identifier for DCI formats - [1] bit |
| $-[\lceil log_2(N_{RB}^{UL,BWP}(N_{RB}^{UL,BWP} + 1)/ \; 2)\rceil]$bits |
| - Frequency domain resource assignment |
| - Time domain resource assignment -Xbits |
| - Frequency hopping flag-1 bit. |
| - Modulation and coding scheme - 5 bits |
| - New data indicator - 1 bit |
| - Redundancy version -2 bits |
| - HARQ process number - 4 bits |
| - TPC command for scheduled PUSCH -[2] bits |
| - UL/SUL indicator - 0 or 1 bit |

A DCI format 0_1 may be used as non-fallback DCI scheduling a PUSCH, and in this case, a CRC may be scrambled with a C-RNTI. The DCI format 0_1 in which a CRC is scrambled with a C-RNTI may include, for example, the following information.

[Table 5]

| |
|---|
| - Carrier indicator - 0 or 3 bits |
| - UL/SLTL indicator - 0 or 1 bit |
| - Identifier for DCI formats - [1] bits |
| - Bandwidth part indicator -0, 1 or 2 bits |
| - Frequency domain resource assignment |
| For resource allocation type 0, $\lceil N_{RB}^{UL,BWP}/P)\rceil$bits |
| For resource allocation type 1, $\lceil log_2(N_{RB}^{UL,BWP}(N_{RB}^{UL,BWP} + 1)/2)\rceil$bits |
| - Time domain resource assignment -1, 2, 3, or 4 bits |
| - VRB-to-PRB mapping - 0 or 1 bit, only for resource allocation type 1. |
| 0 bit if only resource allocation type 0 is configured; |
| 1 bit otherwise. |
| - Frequency hopping flag - 0 or 1 bit, only for resource allocation type 1. |
| O bit if only resource allocation type 0 is configured; |
| 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index - 1 or 2 bits |
| 1 bit for semi-static HARQ-ACK codebook; |
| 2 bits for dynamic HARQ-ACK codebook with single HARQ-ACK codebook. |
| - 2nd downlink assignment index -0 or 2 bits |
| 2 bits for dynamic HARQ-ACK codebook with two HARQ-ACK sub-codebooks; |
| 0 bit otherwise. |
| - TPC command for scheduled PUSCH - 2 bits |

(continued)

| |
|---|
| - SRS resource indicator - $\left\lceil \log_2\left(\sum_{k=1}^{L_{max}}\binom{N_{SRS}}{k}\right)\right\rceil$ ,     or     $\lceil log_2(N_{SRS})\rceil$ bits <br><br> $\left\lceil \log_2\left(\sum_{k=1}^{L_{max}}\binom{N_{SRS}}{k}\right)\right\rceil$ bits for non-codebook based PUSCH transmission; <br><br> $\lceil log_2(N_{SRS})\rceil$ bits    for codebook based PUSCH transmission. <br> - Precoding information and number of layers -up to 6 bits <br> - Antenna ports - up to 5 bits <br> - SRS request (SRS)-2 bits <br> - CSI request - 0, 1, 2, 3, 4, 5, or 6 bits <br> - CBG transmission information - 0, 2, 4, 6, or 8 bits <br> - PTRS-DMRS association -0 or 2 bits. <br> - beta_offset indicator -0 or 2 bits <br> - DMRS sequence initialization - 0 or 1 bit |

A DCI format 1_0 may be used as fallback DCI scheduling a PDSCH, and in this case, a CRC may be scrambled with a C-RNTI. The DCI format 1_0 in which a CRC is scrambled with a C-RNTI may include, for example, the following information.

[Table 6]

| |
|---|
| - Identifier for DCI formats - [1] bit <br> - Frequency domain resource assignment - $\left\lceil\lceil log_2(N_{RB}^{DL,BWP}(N_{RB}^{DL,BWP}+1)/2)\rceil\right\rceil$ bits <br> - Time domain resource assignment - X bits <br> - VRB-to-PRB mapping - 1 bit. <br> - Modulation and coding scheme - 5 bits <br> - New data indicator - 1 bit <br> - Redundancy version - 2 bits <br> - HARQ process number - 4 bits <br> - Downlink assignment index - 2 bits <br> - TPC command for scheduled PUCCH - [2] bits <br> - PUCCH resource indicator - 3 bits <br> - PDSCH-to-HARQ feedback timing indicator -[3] bits |

A DCI format 1_1 may be used as non-fallback DCI scheduling a PDSCH, and in this case, a CRC may be scrambled with a C-RNTI. The DCI format 1_1 in which a CRC is scrambled with a C-RNTI may include, for example, the following information.

[Table 7]

| |
|---|
| - Carrier indicator - 0 or 3 bits <br> - Identifier for DCI formats - [1] bits <br> - Bandwidth part indicator - 0, 1 or 2 bits <br> - Frequency domain resource assignment <br> For resource allocation type 0,     $\lceil N_{RB}^{DL,BWP}/P\rceil$ bits |

(continued)

| For resource allocation type 1, | $\lceil log_2(N_{RB}^{DL,BWP}(N_{RB}^{DL,BWP} + 1)/2)\rceil_{bits}$ |
| --- | --- |

- Time domain resource assignment -1, 2, 3, or 4 bits
- VRB-to-PRB mapping - 0 or 1 bit, only for resource allocation type 1.
0 bit if only resource allocation type 0 is configured;
1 bit otherwise.
- PRB bundling size indicator - 0 or 1 bit
- Rate matching indicator - 0, 1, or 2 bits
- ZP CSI-RS trigger -0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication -0 or 3 bits
- SRS request - 2 bits
- CBG transmission information - 0, 2, 4, 6, or 8 bits
- CBG flushing out information - 0 or 1 bit
- DMRS sequence initialization - 1 bit

[PDCCH: CORESET, REG, CCE, Search Space]

In the following description, a downlink control channel in a 5G communication system to which the disclosure may be applied will be described in more detail with reference to the drawings.

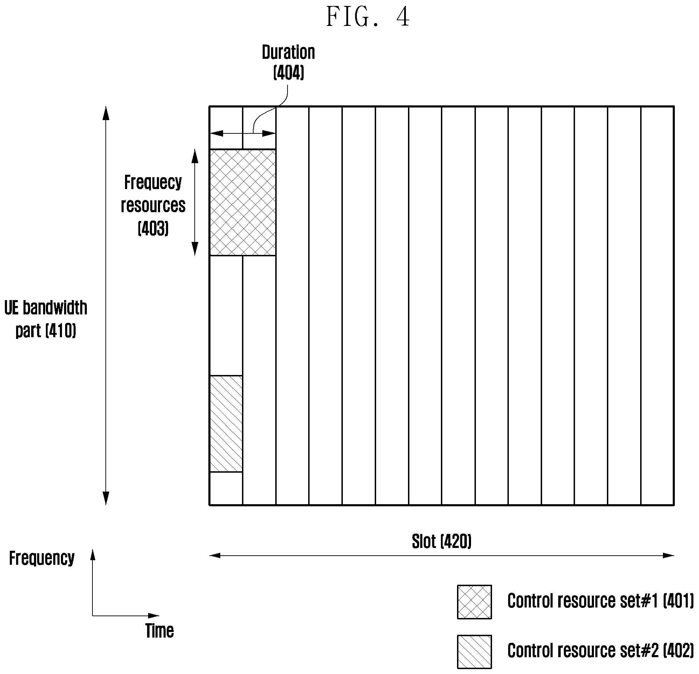

FIG. 4 is a diagram illustrating an example of a control area configuration of a downlink control channel in a wireless communication system according to an embodiment of the disclosure.

FIG. 4 is a diagram illustrating an example of a control resource set (CORESET) of a downlink control channel in a 5G communication system.

FIG. 4 illustrates an example in which a UE bandwidth part 410 is configured on the frequency axis and in which two CORESETs (CORESET # 1, 401 and CORESET # 2, 402) are configured within 1 slot 420 on the time axis. The CORESETs 401 and 402 may be configured to a specific frequency resource 403 within the entire UE bandwidth part 410 on the frequency axis. The time axis may be configured to one or a plurality of OFDM symbols, and this may be defined to a control resource set duration 404. With reference to the illustrated example of FIG. 4, a CORESET #1, 401 is configured to a control resource set duration of 2 symbols, and a CORESET #2, 402 is configured to a control resource set duration of 1 symbol.

The CORESET in the above-described 5G system may be configured by the base station to the UE through higher layer signaling (e.g., system information, master information block (MIB), radio resource control (RRC) signaling). Configuring the CORESET to the UE means providing information such as a CORESET identifier (Identity), a frequency location of the CORESET, and a symbol length of the CORESET. For example, it may include the following information.

[Table 8]

```
ControlResourceSet ::=                                          SEQUENCE {
        -- Corresponds to L1 parameter 'CORESET-ID'

        controlResourceSetId                                    ControlResourceSetId,
        (control resource set identity)
                frequencyDomainResources                BIT STRING (SIZE (45)),
        (frequency axis resource allocation information)
                duration                                                INTEGER
(1..maxCoReSetDuration),
        (time axis resource allocation information)
                cce-REG-MappingType                                     CHOICE {
        (CCE-to-REG mapping scheme)
                        interleaved
        SEQUENCE {

                        reg-BundleSize
        ENUMERATED {n2, n3, n6},
        (REG bundle size)

                        precoderGranularity
        ENUMERATED {sameAsREG-bundle, allContiguousRBs},

                        interleaverSize
        ENUMERATED {n2, n3, n6}
                        (interleaver size)

                        shiftIndex
        INTEGER(0..maxNrofPhysicalResourceBlocks-1)
                                        OPTIONAL
                        (interleaver shift)
        },
                nonInterleaved                                  NULL
        },
                tci-StatesPDCCH                                 SEQUENCE(SIZE
(1..maxNrofTCI-StatesPDCCH)) OF TCI-StateId                     OPTIONAL,
        (QCL configuration information)
                tci-PresentInDCI                                ENUMERATED {enabled}

                OPTIONAL,         -- Need S
}
```

In Table 8, tci-StatesPDCCH (simply referred to as a transmission configuration indication (TCI) state) configuration information may include one or a plurality of synchronization signal (SS)/physical broadcast channel (PBCH) block index or channel state information reference signal (CSI-RS) index information in a quasi co located(QCL) relationship with a DMRS transmitted in the corresponding CORESET.

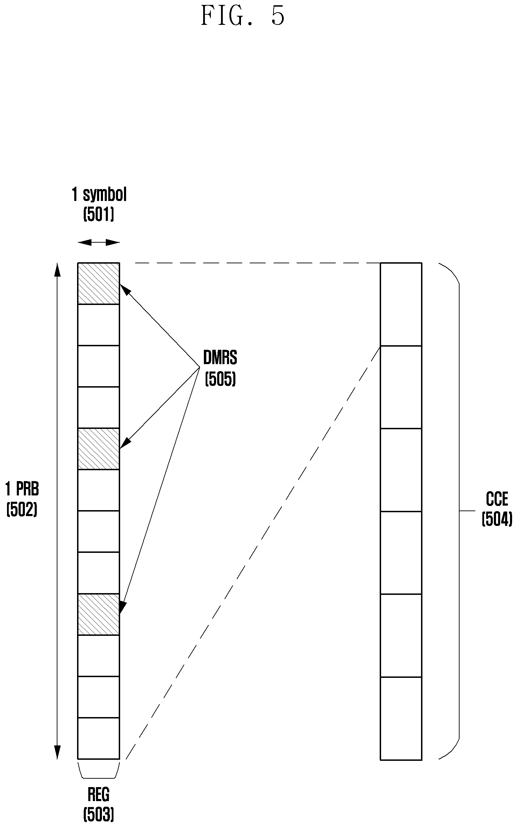

FIG. 5 is a diagram illustrating a structure of a downlink control channel in a wireless communication system according to an embodiment of the disclosure.

FIG. 5 is a diagram illustrating an example of basic units of time and frequency resources constituting a downlink control channel that may be used in a 5G system to which the disclosure may be applied. With reference to FIG. 5, a basic unit of time and frequency resources constituting a control channel may be referred to as a resource element group (REG) 5-03, and the REG 5-03 may be defined to 1 OFDM symbol 501 in the time axis and 1 physical resource block (PRB) 502 in the frequency axis, that is, 12 subcarriers. The base station may concatenate the REG 5-03 to constitute a downlink control channel allocation unit.

As illustrated in FIG. 5, in the case that a basic unit to which a downlink control channel is allocated in 5G is a control channel element (CCE) 504, 1 CCE 504 may be composed of a plurality of REGs 5-03. When the REG 5-03 illustrated in FIG. 5 is described as an example, the REG 5-03 may be composed of 12 REs, and when 1 CCE 504 is composed of 6 REGs 5-03, 1 CCE 504 may be composed of 72 REs. When a downlink control area is configured, the corresponding area may be composed of a plurality of CCEs 504, and a specific downlink control channel may be mapped and transmitted to one or a plurality of CCEs 504 according to an aggregation level (AL) in the control area. The CCEs 504 in the control area are identified by numbers, and in this case, the numbers of the CCEs 504 may be assigned according to a logical mapping method.

The basic unit of the downlink control channel illustrated in FIG. 5, that is, the REG 5-03 may include both REs to which DCI is mapped and an area to which a DMRS 505, which is a reference signal for decoding them, is mapped. As illustrated in FIG. 5, three DMRSs 505 may be transmitted within one REG 5-03. The number of CCEs required to transmit the PDCCH may be 1, 2, 4, 8, or 16 according to an aggregation level (AL), and the numbers of different CCEs may be used for implementing link adaptation of the downlink control channel. For example, in the case that AL=L, one downlink control channel may be transmitted through the L number of CCEs. The UE should detect a signal without knowing information on a downlink control channel, and a search space representing a set of CCEs is defined for blind decoding. The search space is a set of downlink control channel candidates consisting of CCEs in which the UE should attempt to decode on a given aggregation level, and because there are various aggregations levels that make one group with 1, 2, 4, 8, and 16 CCEs, the UE may have a plurality of search spaces. A search space set may be defined as a set of search spaces in all configured aggregation levels.

The search space may be classified into a common search space and a UE-specific search space. In order to receive cell common control information such as dynamic scheduling for system information or paging messages, a certain group of UEs or all UEs may search for the common search space of the PDCCH. For example, PDSCH scheduling allocation information for transmission of an SIB including cell operator information may be received by searching for the common search space of the PDCCH. In the case of a common search space, because a certain group of UEs or all UEs should receive the PDCCH, the common search space may be defined as a set of pre-promised CCEs. Scheduling allocation information on the UE-specific PDSCH or PUSCH may be received by searching for the UE-specific search space of the PDCCH. The UE-specific search space may be defined UE-specifically as a function of various system parameters and the identity of the UE.

In 5G, a parameter for a search space for a PDCCH may be configured from the base station to the UE through higher layer signaling (e.g., SIB, MIB, RRC signaling). For example, the base station may configure the number of PDCCH candidates at each aggregation level L, a monitoring period for the search space, a monitoring occasion in symbol units within a slot for the search space, a search space type (common search space or UE-specific search space), a combination of a DCI format and a radio network temporary identifier (RNTI) to be monitored in a corresponding search space, and a CORESET index to monitor a search space to the UE. For example, the parameter for the search space for the PDCCH may include the following information.

[Table 9]

```
SearchSpace ::=                              SEQUENCE {
        -- Identity of the search space. SearchSpaceId = 0 identifies the SearchSpace configured via PBCH (MIB) or ServingCellConfigCommon.
        searchSpaceId                                        SearchSpaceId,
    (search space identifier)
        controlResourceSetId                                 ControlResourceSetId,
    (control resource set identifier)
        monitoringSlotPeriodicityAndOffset       CHOICE {
    (monitoring slot level period)
            sl1                                                      NULL,
            sl2                                                      INTEGER (0..1),
            sl4                                                      INTEGER (0..3),
            sl5                                                  INTEGER (0..4),
            sl8                                                      INTEGER (0..7),
            sl10                                                 INTEGER (0..9),
            sl16                                                 INTEGER (0..15),
            sl20                                                 INTEGER (0..19)
        }
                                                             OPTIONAL,
    duration (monitoring length)          INTEGER (2..2559)
        monitoringSymbolsWithinSlot                  BIT STRING (SIZE (14))
                            OPTIONAL,
    (monitoring symbol within slot)
        nrofCandidates                               SEQUENCE {
    (number of PDCCH candidates at each aggregation level)
            aggregationLevel1                        ENUMERATED {n0, n1, n2, n3, n4, n5, n6, n8},
            aggregationLevel2                        ENUMERATED {n0, n1, n2, n3, n4, n5, n6, n8},
            aggregationLevel4                        ENUMERATED {n0, n1, n2, n3, n4, n5, n6, n8},
            aggregationLevel8                        ENUMERATED {n0, n1, n2, n3, n4, n5, n6, n8},
            aggregationLevel16                       ENUMERATED {n0, n1, n2, n3, n4, n5, n6, n8}
        },

        searchSpaceType                              CHOICE {
    (search space type)
            -- Configures this search space as CSS and DCI formats to monitor.
            common                                   SEQUENCE {
    (common search space)
        }
            ue-Specific                              SEQUENCE {
    (UE-specific search space)
                -- Indicates whether the UE monitors in this USS for DCI formats 0-0 and 1-0 or for formats 0-1 and 1-1.
                formats                                  ENUMERATED {formats0-0-And-1-0, formats0-1-And-1-1},
                ...
        }
```

According to configuration information, the base station may configure one or a plurality of search space sets to the UE. According to some embodiments, the base station may configure a search space set 1 and a search space set 2 to the LTE, configure to monitor a DCI format A scrambled with an X-RNTI in the common search space in the search space set 1, and configure to monitor a DCI format B scrambled with a Y-RNTI in the UE-specific search space in the search space set 2.

According to configuration information, one or a plurality of search space sets may exist in a common search space or a UE-specific search space. For example, a search space set #1 and a search space set #2 may be configured to common search spaces, and a search space set #3 and a search space set #4 may be configured to UE-specific search spaces.

In the common search space, a combination of the following DCI format and RNTI may be monitored. The disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, a combination of the following DCI format and RNTI may be monitored. The disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the following definitions and uses.

- C-RNTI (Cell RNTI): Used for scheduling a UE-specific PDSCH
- TC-RNTI (Temporary Cell RNTI): Used for scheduling a UE-specific PDSCH
- CS-RNTI (Configured Scheduling RNTI): Used for scheduling a semi-statically configured UE-specific PDSCH
- RA-RNTI (Random Access RNTI): Used for scheduling a PDSCH in a random access step
- P-RNTI (Paging RNTI): Used for scheduling a PDSCH in which paging is transmitted
- SI-RNTI (System Information RNTI): Used for scheduling a PDSCH through which system information is transmitted
- INT-RNTI (Interruption RNTI): Used for notifying whether puncturing for a PDSCH
- TPC-PUSCH-RNTI (Transmit Power Control for PUSCH RNTI): Used for indicating a power control command for a PUSCH
- TPC-PUCCH-RNTI (Transmit Power Control for PUCCH RNTI): Used for indicating a power control command for a PUCCH
- TPC-SRS-RNTI (Transmit Power Control for SRS RNTI): Used for indicating a power control command for an SRS

The above-described specified DCI formats may follow the definition below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

A search space of an aggregation level L in a control area p and a search space set s of a 5G wireless communication system (e.g., 5G or NR system) according to an embodiment of the disclosure may be expressed as in Equation 1.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{p,s,max}^{(L)}} \right\rfloor + n_{CI} \right) \bmod \left\lfloor N_{CCE,p} / L \right\rfloor \right\} + i$$

- $L$: aggregation level
- $n_{CI}$: carrier index
- $N_{CCE,p}$: number of total CCEs existing in a control area p

- $n^{\mu}_{s,f}$ : slot index

- $M^{(L)}_{s,max}$ : Number of PDCCH candidates of the aggregation level L

- $m_{s,n_{Cl}} = 0,..., M^{(L)}_{s,max} -1$ : PDCCH candidate index of the aggregation level L

- $i = 0,..., L-1$

- $Y_{p,n^{\mu}_{s,f}} = \left(A_p \cdot Y_{p,n^{\mu}_{s,f}-1}\right) \bmod D$ , $Y_{p,-1} = n_{RNTI} \neq 0$, $A_0 = 39827$, $A_, = 39829$, $A_2 = 39839$, $D = 65537$

- $n_{RNTI}$: UE identifier

The $Y_{p,n^{\mu}_{s,f}}$ value may correspond to 0 in the case of a common search space.

In the case of a UE-specific search space, the $Y_{p,n^{\mu}_{s,f}}$ value may correspond to a value that changes according to an identity of the UE (C-RNTI or an ID configured to the UE by the base station) and a time index.

In a 5G wireless communication system (e.g., 5G or NR system) according to an embodiment of the disclosure, as a plurality of search space sets may be configured with different parameters (e.g., parameters in Table 9), a set of search space sets monitored by the UE at each time point may be different. For example, in the case that a search space set #1 is configured to an X-slot period and that a search space set #2 is configured to a Y-slot period and that X and Y are different, the UE may monitor both the search space set #1 and the search space set #2 in a specific slot and monitor one of the search space set #1 and the search space set #2 in a specific slot.

[PDCCH: span]

The UE may perform LTE capability reporting for the case of having a plurality of PDCCH monitoring positions within a slot for each subcarrier spacing, and in this case, the concept of a span may be used. The span means consecutive symbols in which the UE may monitor a PDCCH within a slot, and each PDCCH monitoring position is within one span. The span may be expressed with (X,Y), where x means the minimum number of symbols that should be separated between first symbols of two consecutive spans, and Y means the number of consecutive symbols that may monitor PDCCH within one span. In this case, the UE may monitor the PDCCH in a section within Y symbols from the first symbol of the span within the span.

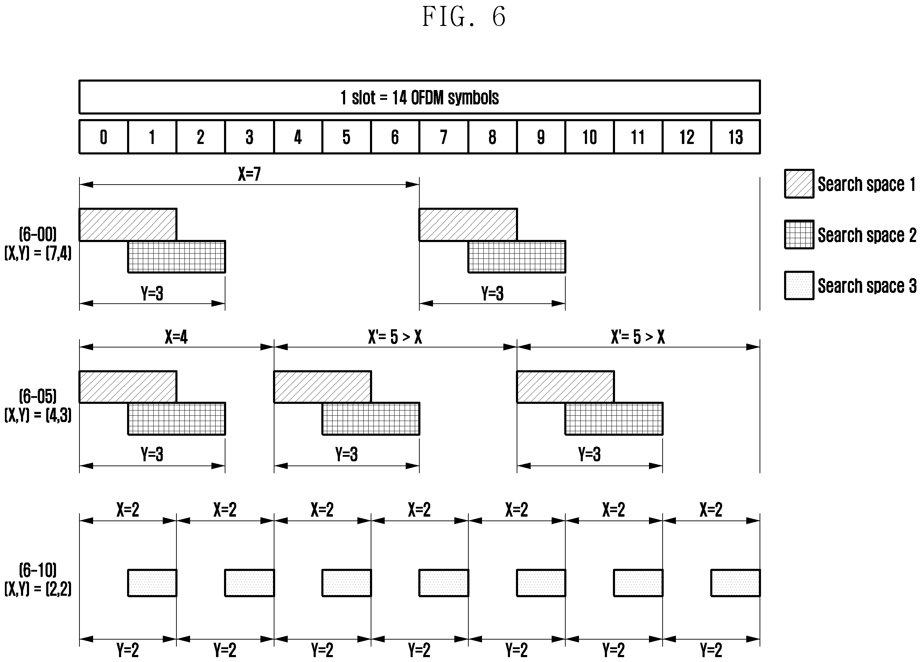

FIG. 6 is a diagram illustrating through a span the case that a LTE may have a plurality of PDCCH monitoring positions within a slot in a wireless communication system according to an embodiment of the disclosure.

With reference to FIG. 6, the span may be (X, Y) = (7,4), (4,3), (2,2), and each of the three cases is expressed as (6-00), (6-05), (6-10) of FIG. 6. As an example, (6-00) expresses the case that two spans that may be expressed as (7,4) exist in the slot. An interval between first symbols of two spans is expressed as X=7, and a PDCCH monitoring position may exist within the total Y=3 number of symbols from a first symbol of each span, and it is represented that each of search spaces 1 and 2 exists within Y=3 symbols. As another example, in (6-05), the case that total three spans that may be expressed as (4,3) exist in the slot is expressed, and an interval between the second and third spans represents that they are separated by X'=5 symbol greater than X=4.

[PDCCH: LTE Capability Report]

Slot positions where the above-described common search space and UE-specific search space are located are indicated by a monitoringSymbolsWitninSlot parameter, and symbol positions within the slot are indicated by a bitmap through a monitoringSymbolsWithinSlot parameter of Table 9. A symbol position within a slot in which search space monitoring is possible by the UE may be reported to the base station through the following UE capabilities.

**[0089]** - UE capability 1 (hereafter, referred to as FG 3-1). As illustrated in Table 11, in the case that one MO monitoring occasion (MO) for the type 1 and type 3 common search space or UE-specific search space exists in the slot, when the corresponding MO location is positioned inside first 3 symbols in the slot, the UE capability 1 means a capability to monitor the corresponding MO. The UE capability is a mandatory capability that all UEs supporting NR should support, and whether this capability is supported is not explicitly reported to the base station.

[Table 11]

| Index | Feature group | Components | Field name in TS 38.331 [2] |
|---|---|---|---|
| 3-1 | Basic DL control channel | 1) One configured CORESET per BWP per cell in addition to CORESET0- CORESET resource allocation of 6RB bit-map and duration of 1 - 3 OFDM symbols for FR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | n/a |

**[0090]** - UE capability 2 (hereafter, referred to as FG 3-2). As illustrated in Table 12, in the case that one MO monitoring occasion (MO) for a common search space or a UE-specific search space exists in a slot, the UE capability means a capability that monitoring is possible regardless of a start symbol position of the corresponding MO. The UE capability may be selectively supported by the UE (optional), and whether this capability is supported is explicitly reported to the base station.

[Table 12]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter, referred to as FG 3-5, 3-5a, 3-5b). As illustrated in Tables 13a, 13b, and 13c, the UE capability indicates a pattern of MO that may be monitored by the UE in the case that a plurality of monitoring occasions (MOs) for a common search space or a UE-specific search space exist in a slot. The above-described pattern is composed of a start symbol interval X between different MOs and a maximum symbol length Y for one MO. A combination of (X, Y) supported by the UE may be one or a plurality of {(2,2), (4,3), (7,3)}. The UE capability may be selectively supported by the UE (optional), and whether the UE capability is supported and the above-described (X, Y) combination are explicitly reported to the base station.

[Table 13a]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions* {<br>3-5. *withoutDCI-Gap*<br>3-5a. *withDCI-Gap*<br>} |

[Table 13b]

| Index | Feature group | Components | Field name in TS 38.331 [2] |
|---|---|---|---|
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2 OFDM symbols for 15kHz<br>- 4 OFDM symbols for 30kHz<br>- 7 OFDM symbols for 60kHz with NCP<br>- 11 OFDM symbols for 120kHz<br>Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. | |

20

[Table 13c]

| Index | Feature group | Components | Field name in TS 38.331 [2] |
|---|---|---|---|
| 3-5b | All PDCCH monitoring occasion can be any OFDM symbol(s) of a slot for Case 2 with a span gap | PDCCH monitoring occasions of FG-3-1, plus additional PDCCH monitoring occasion (s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(l), 0<=l<=13 is generated, where b(l)=1 if symbol l of any slot is part of a monitoring occasion, b(l)=0 otherwise. The first span in the span pattern begins at the smallest l for which b(l)=1. The next span in the span pattern begins at the smallest l not included in the previous span(s) for which b(l)=1. The span duration is max{maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary. For the set of monitoring occasions which are within the same span: <br>• Processing one unicast DCI scheduling DL and one unicast DCI scheduling UL per scheduled CC across this set of monitoring occasions for FDD <br>• Processing one unicast DCI scheduling DL and two unicast DCI scheduling UL per scheduled CC across this set of monitoring occasions for TDD <br>• Processing two unicast DCI scheduling DL and one unicast DCI scheduling UL per scheduled CC across this set of monitoring occasions for TDD <br>The number of different start symbol indices of spans for all PDCCH monitoring occasions per slot, including PDCCH monitoring occasions of FG-3-1, is no more than floor(14/X) (X is minimum among values reported by UE). <br>The number of different start symbol indices of PDCCH monitoring occasions per slot including PDCCH monitoring occasions of FG-3-1, is no more than 7. <br>The number of different start symbol indices of PDCCH monitoring occasions per half-slot including PDCCH monitoring occasions of FG-3-1 is no more than 4 in SCell. | |

The UE may report whether the above-described LTE capability 2 and/or LTE capability 3 is(are) supported and related parameters to the base station. The base station may perform time axis resource allocation for a common search space and a UE-specific search space based on the reported UE capabilities. When allocating the resource, the base station may prevent the LTE from locating the MO at a position where monitoring is impossible.

[QCL, TCI state]

In a wireless communication system, one or more different antenna ports (or may be substituted into one or more channels, signals, and combinations thereof, but in the future description of the disclosure, for convenience, will be collectively referred to different antenna ports) may be associated with each other by a quasi co-location (QCL) configuration, as illustrated in Table 14. The TCI state is to notify the QCL relationship between a PDCCH (or PDCCH DMRS) and another RS or channel, and a reference antenna port A (reference RS #A) and another target antenna port B (target RS #B) are QCLed means that the UE is allowed to apply some or all of large-scale channel parameters estimated in the antenna port A to channel measurement from the antenna port B. QCL may need to associate different parameters according to situations such as 1) time tracking affected by average delay and delay spread, 2) frequency tracking affected by Doppler shift and Doppler spread, 3) radio resource management (RRM) affected by average gain, and 4) beam management (BM) affected by a spatial parameter. Accordingly, NR supports four types of QCL relationships, as illustrated in Table 14.

[Table 14]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may collectively refer to some or all of various parameters such as angle of arrival (AoA), power angular spectrum (PAS) of AoA, angle of departure (AoD), PAS of AoD, transmit and receive channel correlation, transmit and receive beamforming, and spatial channel correlation.

The QCL relationship may be configured to the UE through the RRC parameter TCI-State and QCL-Info, as illustrated in Table 15. With reference to Table 15, the base station may configure one or more TCI states to the UE and notify the UE of maximum two QCL relationships (qcl-Type1, qcl-Type2) for an RS, that is, the target RS referring to an ID of the TCI state. In this case, each QCL information (QCL-Info) included in each of the TCI states includes a serving cell index and BWP index of the reference RS indicated by the corresponding QCL information, a type and ID of the reference RS, and a QCL type, as illustrated in Table 14.

[Table 15]

```
TCI-State ::=                                      SEQUENCE {
        tci-StateId                                        TCI-StateId,
        (ID of corresponding TCI state)
        qcl-Type1                                          QCL-Info,
        (QCL information of first reference RS of RS (target RS) referring to corresponding TCI state ID)
        qcl-Type2                                          QCL-Info
                OPTIONAL,       -- Need R
        (QCL information of second reference RS of RS (target RS) referring to corresponding TCI state ID)
        ...
}

QCL-Info ::=                                       SEQUENCE {
        cell                                               ServCellIndex
                OPTIONAL,       -- Need R
        (serving cell index of reference RS indicated by corresponding QCL information)
        bwp-Id                                             BWP-Id
                        OPTIONAL, -- Cond CSI-RS-Indicated
        (BWP index of reference RS indicated by corresponding QCL information)
        referenceSignal                                    CHOICE {
                csi-rs                                             NZP-CSI-RS-
ResourceId,
                ssb                                                SSB-
Index
                (one of CSI-RSI ID or SSB ID indicated by corresponding QCL information)
        },
        qcl-Type                                           ENUMERATED  {typeA,  typeB,
typeC, typeD},
        ...
}
```

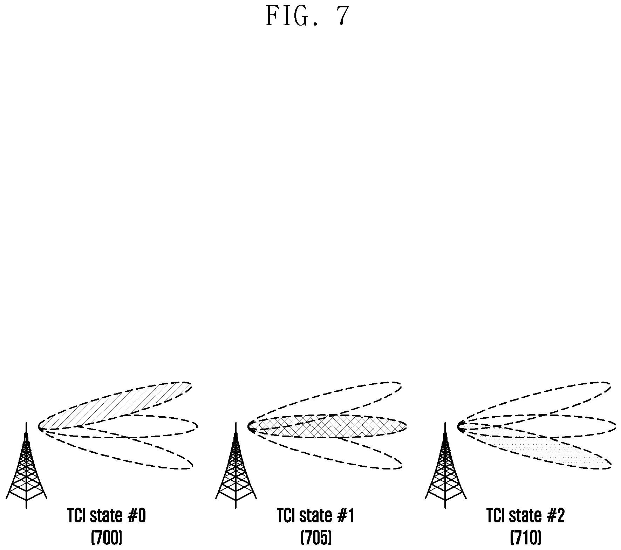

FIG. 7 is a diagram illustrating an example of base station beam allocation according to a TCI state configuration in a wireless communication system according to an embodiment of the disclosure.

With reference to FIG. 7, the base station may transmit information on the different N number of beams to the UE through the different N number of TCI states. For example, as illustrated in FIG. 7, in the case that N = 3, the base station may notify that qcl-Type2 parameters included in three TCI states (700, 705, and 710) are associated with a CSI-RS or SSB corresponding to different beams and are configured to a QCL type D and that antenna ports referring to the different TCI states 700, 705, or 710 are associated with different spatial Rx parameters, that is, different beams.

Tables 16 to 20 illustrate valid TCI state configurations according to a type of target antenna port.

Table 16 illustrates valid TCI state configurations in the case that a target antenna port is a CSI-RS for tracking (TRS). The TRS means an NZP CSI-RS in which a repetition parameter is not configured and in which trs-Info is configured to true among CSI-RSs. In the case of a configuration # 3 in Table 16, it may be used for aperiodic TRS.

[Table 16]

| Valid TCI state configuration | DL RS 1 | qcl-Type 1 | DL RS 2 (if configured) | qcl-Type 2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 17 illustrates valid TCI state configurations in the case that a target antenna port is a CSI-RS for CSI. The CSI-RS for CSI means an NZP CSI-RS in which a parameter indicating repetition (e.g., repetition parameter) is not configured and in which trs-Info is not configured to true among CSI-RSs.

[Table 17]

| Valid TCI state configuration | DL RS 1 | qcl-Type 1 | DL RS 2 (if configured) | qcl-Type 2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS(same as DL RS1) | QCL-TypeD |
| 4 | TRS | QCL-TypeB | | |

Table 18 illustrates valid TCI state configurations in the case that a target antenna port is a CSI-RS for beam management (BM, meaning the same as CSI-RS for L1 RSRP reporting). The CSI-RS for BM means an NZP CSI-RS in which a repetition parameter is configured and has a value of On or Off and in which trs-Info is not configured to true among CSI-RSs.

[Table 18]

| Valid TCI state configuration | DL RS 1 | qcl-Type 1 | DL RS 2 (if configured) | qcl-Type 2 (if configured) |
|---|---|---|---|---|
| 1 | TRS | QCL-TypeA | TRS(same as DL RS1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 19 illustrates valid TCI state configurations in the case that a target antenna port is a PDCCH DMRS.

[Table 19]

| Valid TCI state configuration | DL RS 1 | qcl-Type 1 | DL RS 2 (if configured) | qcl-Type 2 (if configured) |
|---|---|---|---|---|
| 1 | TRS | QCL-TypeA | TRS(same as DL RS1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 20 illustrates valid TCI state configurations in the case that a target antenna port is a PDSCH DMRS.

[Table 20]

| Valid TCI state configuration | DL RS 1 | qcl-Type 1 | DL RS 2 (if configured) | qcl-Type 2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

In a representative QCL configuration method according to Tables 16 to 20, a target antenna port and reference antenna port for each step are configured and operated as in "SSB" -> "TRS" -> "CSI-RS for CSI, CSI-RS for BM, PDCCH DMRS, or PDSCH DMRS". Thereby, it is possible to help a reception operation of the UE by linking statistical characteristics measurable from the SSB and TRS to each antenna port.

[PDCCH: related to TCI state]

Specifically, TCI state combinations applicable to the PDCCH DMRS antenna port are illustrated in Table 21. In Table 21, a fourth row is a combination assumed by the UE before RRC is configured, and a configuration after RRC is impossible.

[Table 21]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS(BM) | QCL-TypeD |
| 3 | CSI-RS(CSI) | QCL-TypeA | | |
| 4 | SS/PBCH Block | QCL-TypeA | SS/PBCH Block | QCL-TypeD |

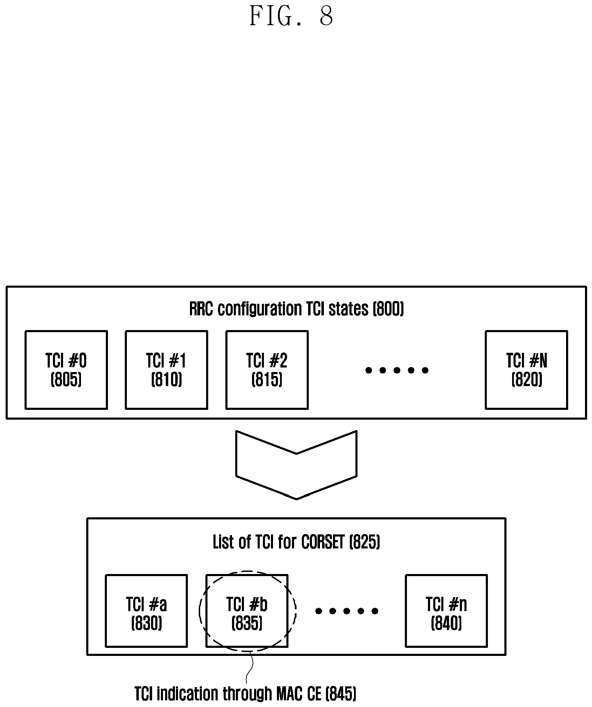

FIG. 8 is a diagram illustrating an example of a method of allocating a TCI state for a PDCCH in a wireless communication system according to an embodiment of the disclosure.

In an embodiment of the disclosure, a wireless communication system (e.g., 5G system or NR system) supports a hierarchical signaling method as illustrated in FIG. 8 for dynamic allocation of PDCCH beams.

With reference to FIG. 8, the base station may configure the N number of TCI states (805, 810, 815,..., 820) to the UE through RRC signaling 800, and configure some thereof to TCI states for a CORESET (825). Thereafter, the base station may indicate one of the TCI states 830, 835, and 840 for the CORESET to the UE through MAC CE signaling (845). Thereafter, the UE receives the PDCCH based on beam information included in the TCI state indicated by the MAC CE signaling.

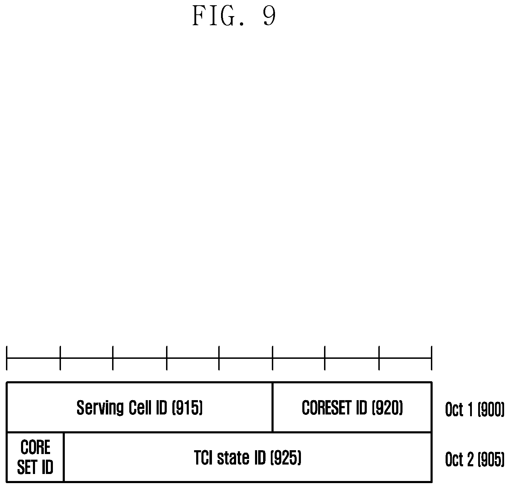

FIG. 9 is a diagram illustrating a TCI indication MAC CE signaling structure for a PDCCH DMRS in a wireless communication system according to an embodiment of the disclosure.

With reference to FIG. 9, TCI indication MAC CE signaling for the PDCCH DMRS is composed of 2 bytes (16 bits) and includes 5-bit serving cell ID 915, 4-bit CORESET ID 920, and 7-bit TCI state ID 925.

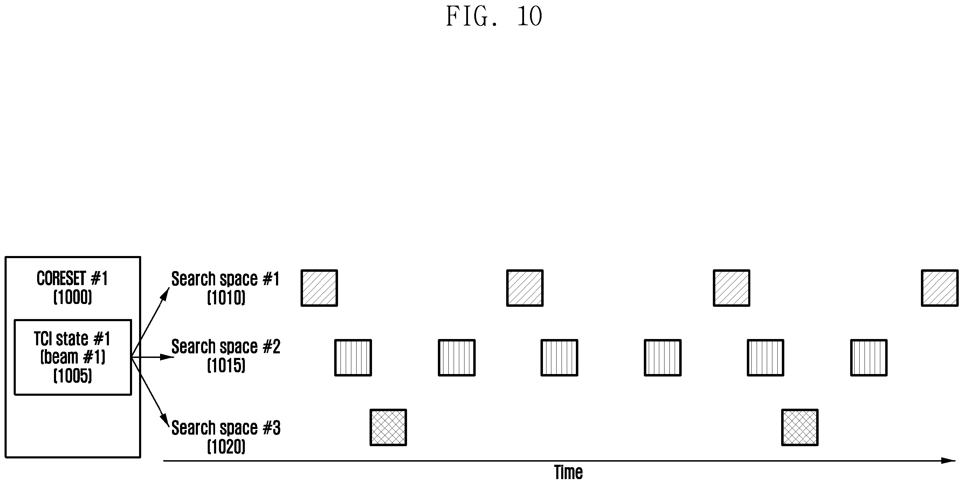

FIG. 10 is a diagram illustrating an example of a beam configuration of a control resource set (CORESET) and a search space in a wireless communication system according to an embodiment of the disclosure.

With reference to FIG. 10, the base station may indicate one (e.g., TCI state #1) 1005 of TCI state lists included in a configuration for a CORESET (e.g., CORESET #1) 1000 through MAC CE signaling. Thereafter, until another TCI state is indicated to the corresponding CORESET through another MAC CE signaling, the UE regards that the same QCL information (beam # 1) is applied to one or more search spaces 1010, 1015, and 1020 connected to the CORESET 1000. In the PDCCH beam allocation method described above, there is a disadvantage that it is difficult to instruct a beam change faster than the MAC CE signaling delay and that the same beam is collectively applied to each CORESET regardless of the search space characteristics, which makes flexible PDCCH beam operation difficult. Hereinafter, embodiments of the disclosure provide a more flexible PDCCH beam configuration and operation method. Hereinafter, in describing the embodiments of the disclosure, several distinct examples are provided for convenience of description, but they are not mutually exclusive and may be applied by appropriately combining with each other according to the situation.

The base station may configure one or a plurality of TCI states for a specific control area to the LTE, and activate one of the configured TCI states through a MAC CE activation command. For example, {TCI state#0, TCI state#1, TCI state#2} may be configured as TCI states in a control area #1, and the base station may transmit a command activating to assume the TCI state#0 as the TCI state for the control area #1 to the UE through an MAC CE. The UE may accurately receive a DMRS of the corresponding control area based on QCL information in the activated TCI state based on the activation command for the TCI state received through the MAC CE.

For the control area (control area #0) whose index is configured to 0, when the UE does not receive an MAC CE activation command for the TCI state of the control area #0, the UE may assume that the DMRS transmitted from the control area #0 was QCLed with the SS/PBCH block identified in an initial access process or in a non-contention based random access process not triggered by the PDCCH command.

For a control area (control area #X) whose index is configured to a value other than 0, when the UE does not configured with a TCI state for the control area #X or are not configured with one or more TCI states but is not received an MAC CE activation command that activates one of them, the UE may assume that the DMRS transmitted in the control area #X is QCLed with the SS/PBCH block identified in the initial access process.

[PDCCH: related to QCL prioritization rule]

In the following description, a QCL priority determination operation for the PDCCH will be described in detail.
In the case that the UE operates with carrier aggregation within a single cell or band, while a plurality of control resource sets existing within an activated bandwidth part within a single or a plurality of cells have the same or different QCL-TypeD characteristics in a specific PDCCH monitoring occasion, the plurality of control resource sets overlap in time, the UE may select a specific control resource set according to the QCL priority determination operation and monitor control resource sets having the same QCL-TypeD characteristics as the corresponding control resource set. That is, when a plurality of control resource sets overlap in time, only one QCL-TypeD characteristic may be received. In this case, the criteria for determining the QCL priority may be as follows.
Criterion 1. A control resource set connected to a common search occasion with a lowest index within a cell corresponding to the lowest index among cells including a common search occasion.
Criterion 2. A control resource set connected to a UE-specific search occasion having a lowest index within a cell corresponding to the lowest index among cells including a UE-specific search occasion.
As described above, each of the above criteria applies the next criterion in the case that the criterion is not satisfied. For example, in the case that control resource sets overlap in time in a specific PDCCH monitoring occasion, when all control resource sets are not connected to a common search occasion but connected to a UE-specific search occasion, that is, when the criterion 1 is not satisfied, the LTE may omit the application of the criterion 1 and apply the criterion 2.
In the case of selecting a control resource set based on the above-described criteria, the UE may additionally consider the following two items for QCL information configured to the control resource set. First, in the case that a control resource set 1 has a CSI-RS 1 as a reference signal having a QCL-TypeD relationship and that a reference signal having a QCL-TypeD relationship with the CSI-RS 1 is a SSB 1 and that a reference signal having a QCL-TypeD relationship with another control resource set 2 is a SSB 1, the UE may consider that these two control resource sets 1 and 2 have different QCL-TypeD characteristics. Second, in the case that the control resource set 1 has a CSI-RS 1 configured to the cell 1 as a reference signal having a QCL-TypeD relationship and that a reference signal having a QCL-TypeD relationship with the CSI-RS 1 is a SSB 1 and that the control resource set 2 has a CSI-RS 2 configured to the cell 2 as a reference signal having a QCL-TypeD relationship and that a reference signal having a QCL-TypeD relationship with the CSI-RS 2 is the same SSB 1, the UE may consider that two control resource sets have the same QCL-TypeD characteristics.

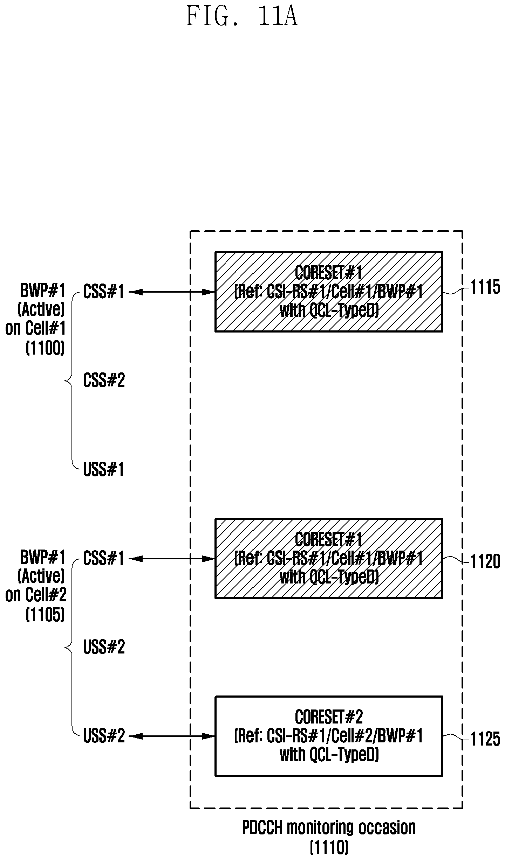

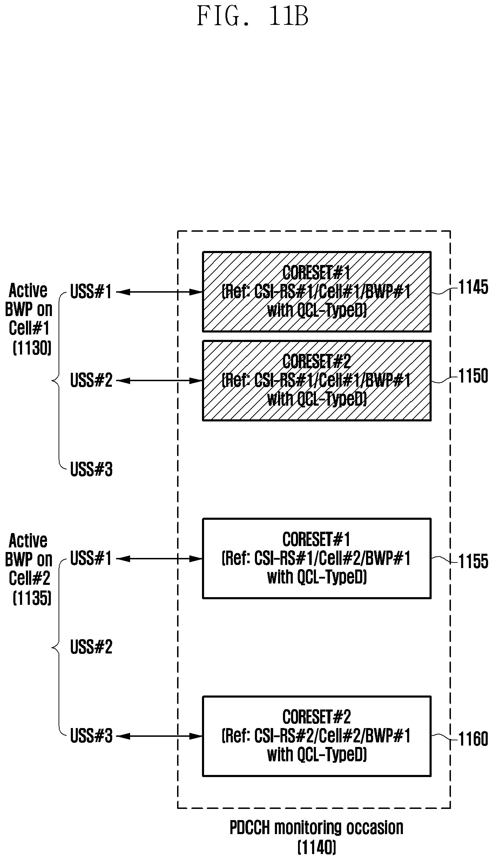

FIGS. 11A and 11B are diagrams illustrating a method of selecting a receivable control resource set in consideration of a priority when a UE receives a downlink control channel in a wireless communication system according to an embodiment of the disclosure.
For example, the UE may be configured to receive a plurality of control resource sets overlapping in time in a specific PDCCH monitoring occasion 1110, and the plurality of control resource sets may be connected to a common search space or a UE-specific search space for a plurality of cells. Within the corresponding PDCCH monitoring occasion, a COREST #1, 1115 connected to the first common search occasion may exist in a BWP#1, 1100 of a cell #1, and a COREST #1, 1120 connected to the first common search occasion and a COREST #2, 1125 connected to the second UE-specific search occasion may exist in a BWP#1, 1105 of a cell #2. The control resource set 1115 may have a QCL-TypeD relationship with a first CSI-RS resource configured within the BWP#1 of the cell #1, and the COREST #2, 1125 may have a QCL-TypeD relationship with a first CSI-RS resource configured within the BWP#1 of the cell #2. Therefore, when a criterion 1 is applied to the corresponding PDCCH monitoring occasion 1110, all other control resource sets having the same QCL-TypeD reference signal as the COREST #1, 1115 may be received. Therefore, the LTE may receive the CORESTs 1115 and 1120 in the corresponding PDCCH monitoring occasion 1110. As another example, the UE may be configured to receive a plurality of control resource sets overlapping in time in a specific PDCCH monitoring occasion 1140, and the plurality of control resource sets may be connected to a common search space or a UE-specific search space for a plurality of cells. Within the corresponding PDCCH monitoring occasion, a COREST #1, 1145 connected to a specific search occasion of the first UE and a COREST #2, 1150 connected to a specific search occasion of the second UE may exist within a BWP#1, 1130 of the cell #1, and a COREST #1, 1155 connected to the first UE-specific search occasion and a COREST #2, 1160 connected to a third UE-specific search occasion may exist within the BWP#1, 1135 of the cell #2. The CORESTs 1145 and 1150 may have a QCL-TypeD relationship with a first CSI-RS resource configured within the BWP#1 of the cell #1, and the COREST #1, 1155 may have a QCL-TypeD relationship with a first CSI-RS resource configured within the BWP#1 of the cell #2, and the COREST #2, 1160 may have a QCL-TypeD relationship with the second CSI-RS resource configured in the BWP#1 of the cell #2. However, when the criterion 1 is applied to the corresponding PDCCH monitoring occasion 1140, there is no common search occasion; thus, a criterion 2, which is the next criterion may be applied. When the criterion 2 is applied to the corresponding PDCCH monitoring occasion 1140, all other control resource sets having the same QCL-TypeD reference signal as the control resource set 1145 may be received. Therefore, the UE may receive the control resource sets 1145 and 1150 in the corresponding PDCCH monitoring occasion 1140.

[Related to Rate matching/Puncturing]

In the following description, a rate matching operation and a puncturing operation will be described in detail.

In the case that a time and frequency resource A to transmit a random symbol sequence A overlaps with a random time and frequency resource B, a rate matching or puncturing operation may be considered by a transmitting and receiving operation of a channel A considering an area resource C in which the resource A and the resource B overlap. A specific operation thereof may follow the following description.

[Rate Matching Operation]

- The base station may map and transmit a channel A only to the remaining resource domains excluding a resource C corresponding to an area overlapped with a resource B among all resources A to transmit a symbol sequence A to the UE. For example, in the case that the symbol sequence A is composed of {symbol #1, symbol #2, symbol #3, symbol 4} and that the resource A is {resource #1, resource #2, resource #3, resource #4} and that the resource B is {resource #3, resource #5}, the base station may sequentially map and transmit a symbol sequence A to the remaining resources {resource #1, resource #2, resource #4} excluding {resource #3} corresponding to the resource C among the resource A. As a result, the base station may map and transmit the symbol sequence {symbol #1, symbol #2, and symbol #3} to {resource #1, resource #2, and resource #4}, respectively.
- The UE may determine a resource A and a resource B from scheduling information on a symbol sequence A from the base station, thereby determining a resource C, which is an area where the resource A and the resource B overlap. The UE may assume that the symbol sequence A is mapped and transmitted in the remaining areas excluding the resource C among all resources A and receive the symbol sequence A. For example, in the case that the symbol sequence A is composed of {symbol #1, symbol #2, symbol #3, symbol 4} and that the resource A is {resource #1, resource #2, resource #3, resource #4} and that the resource B is {resource #3, resource #5 1, the UE may assume and receive that the symbol sequence A is sequentially mapped to the remaining resources {resource #1, resource #2, resource #4} excluding { resource #3 } corresponding to the resource C among the resource A. As a result, the UE may assume that the symbol sequences {symbol #1, symbol #2, and symbol #3} are mapped and transmitted to {resource #1, resource #2, and resource #4}, respectively, and perform a series of subsequent reception operations.

[Puncture operation]

- The base station may map the symbol sequence A to the entire resource A in the case that there is a corresponding resource C in an area overlapped with a resource B among all resources A to transmit a symbol sequence A to the UE, but may not perform transmission in the resource domain corresponding to the resource C but perform transmission only in the remaining resource domains excluding the resource C among the resource A. For example, in the case that the symbol sequence A is composed of {symbol #1, symbol #2, symbol #3, symbol 4} and that the resource A is {resource #1, resource #2, resource #3, resource #4} and that the resource B is {resource #3, resource #5}, the base station may map the symbol sequence A {symbol #1, symbol #2, symbol #3, symbol #4} to the resource A {resource #1, resource #2, resource # 3, resource #4}, respectively and transmit only the symbol sequence {symbol #1, symbol #2, and symbol #4} corresponding to {resource #1, resource #2, resource #4}, which are the remaining resources excluding {resource #3} corresponding to the resource C among the resource A, but not transmit {symbol #3} mapped to {resource #3} corresponding to the resource C. As a result, the base station may map and transmit the symbol sequence {symbol #1, symbol #2, and symbol #4} to {resource #1, resource #2, and resource #4}, respectively.
- The UE may determine a resource A and a resource B from scheduling information on a symbol sequence A from the base station, thereby determining a resource C, which is an area in which the resource A and the resource B overlap. The UE may assume that a symbol sequence A is mapped to the entire resource A and transmitted only in the remaining areas excluding the resource C among resource domains A and receive the symbol sequence A.

For example, in the case that the symbol sequence A is composed of {symbol #1, symbol #2, symbol #3, symbol 4} and that the resource A is {resource #1, resource #2, resource #3, resource #4} and that the resource B is {resource #3, resource #5}, the LTE may assume that the symbol sequence A {symbol #1, symbol #2, symbol #3, symbol #4} is mapped to the resource A {resource #1, resource #2, resource # 3, resource #4}, respectively but that {symbol #3} mapped to {resource #3} corresponding to the resource C is not transmitted, and assume and receive that the symbol sequence {symbol #1, symbol #2, symbol #4} corresponding to the remaining resources {resource #1, resource #2, resource #4} excluding {resource #3 } corresponding to the resource C among the resource A is mapped and transmitted. As a result, the UE may assume that the symbol sequence {symbol #1, symbol #2, symbol #4} is mapped to {resource #1, resource #2, resource #4}, respectively and transmitted, and perform a series of subsequent reception operations.

In the following description, a method of configuring rate matching resources for the purpose of rate matching in the 5G communication system will be described. Rate matching means that a magnitude of a signal is adjusted in consideration of an amount of resources capable of transmitting the signal. For example, rate matching of data channels may mean that a magnitude of data is adjusted accordingly without mapping and transmitting data channels for specific time and frequency resource domains.

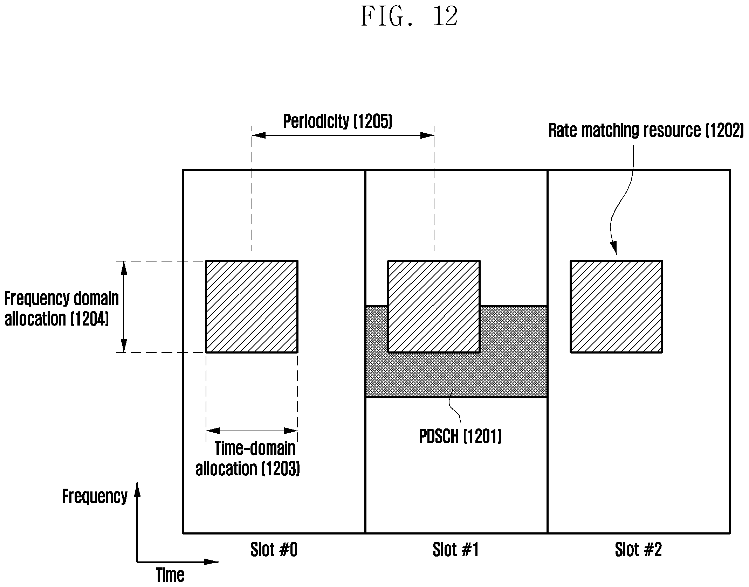

FIG. 12 is a diagram illustrating a method for a base station and a UE to transmit and receive data in consideration of a downlink data channel and a rate matching resource.

FIG. 12 illustrates a downlink data channel (PDSCH) 1201 and a rate matching resource 1202. The base station may configure one or a plurality of rate matching resources 1202 to the UE through higher layer signaling (e.g., RRC signaling). Rate matching resource 1202 configuration information may include time axis resource allocation information 1203, frequency axis resource allocation information 1204, and period information 1205. In the following description, a bitmap corresponding to the frequency axis resource allocation information 1204 may be referred to as a "first bitmap", a bitmap corresponding to the time axis resource allocation information 1203 may be referred to as a "second bitmap", and a bitmap corresponding to the period information 1205 may be referred to as a "third bitmap". In the case that all or part of time and frequency resources of the scheduled data channel 1201 overlap with the configured rate matching resource 1202, the base station may rate-match and transmit the data channel 1201 in the rate matching resource 1202 portion, and the UE may perform reception and decoding after assuming that the data channel 1201 is rate-matched in the rate matching resource 1202 portion.

The base station may dynamically notify the UE through DCI whether to rate match the data channel in the configured rate matching resource portion through additional configuration (corresponding to the "rate matching indicator" in the above-described DCI format). Specifically, the base station may select some of the configured rate matching resources and group them into rate matching resource groups, and indicate the UE whether rate matching of a data channel for each rate matching resource group with DCI using a bitmap method. For example, in the case that four rate matching resources, RMR#1, RMR#2, RMR#3, and RMR#4 are configured, the base station may configure RMG#1={RMR#1, RMR#2}, RMG#2={RMR#3, RMR#4} as a rate matching group, and instruct whether rate matching in the RMG#1 and RMG#2 to the UE with a bitmap using 2 bits in the DCI field. For example, "1" may be indicated in the case that rate matching is to be performed, and "0" may be indicated in the case that rate matching is not to be performed.

In the 5G system to which the disclosure may be applied, granularity of "RB symbol level" and "RE level" is supported with a method of configuring the above-described rate matching resources to the UE. More specifically, the following configuration method may be followed.

[RB Symbol Level]

The UE may receive a configuration of maximum four RateMatchPatterns for each bandwidth part by higher layer signaling, and one RateMatchPattern may include the following contents.

A reserved resource in the bandwidth part may include a resource in which time and frequency resource domains of the corresponding reserved resource are configured in a combination of an RB level bitmap and a symbol level bitmap on the frequency axis. The reserve resource may span one or two slots. A time domain pattern (periodicityAndPattern) in which time and frequency domains composed of each RB level and symbol level bitmap pair are repeated may be additionally configured.

The reserved resource in the bandwidth part may include time and frequency domain resource domains configured with control resource sets within the bandwidth part and resource domains corresponding to time domain patterns configured with search space configurations in which the corresponding resource domains are repeated.

[RE level]

The UE may receive the following contents through higher layer signaling.

Configuration information (lte-CRS-ToMatchAround) for the RE corresponding to an LTE CRS (Cell-specific Reference Signal or Common Reference Signal) pattern may include the number of LTE CRS ports (nrofCRS-Ports), an LTE-CRS-vshift(s) value (v-shift), LTE carrier center subcarrier location information (carrierFreqDL) from a frequency point (e.g., reference point A) to be the reference, LTE carrier bandwidth size (carrierBandwidthDL) information, and subframe configuration information (mbsfn-SubframeConfigList) corresponding to a multicast-broadcast single-frequency network (MBSFN). The UE may determine a position of the CRS in the NR slot corresponding to the LTE subframe based on the above information.

Configuration information (lte-CRS-ToMatchAround) for the RE may include configuration information on a resource set corresponding to one or a plurality of zero power (ZP) CSI-RS in the bandwidth part.

[Related to LTE CRS rate match]

Hereinafter, a rate match process for the above-described LTE CRS will be described in detail. For coexistence of Long Term Evolution (LTE) and New RAT (NR) (LTE-NR Coexistence), NR provides a function of configuring a cell specific reference signal (CRS) pattern of LTE to an NR UE. More specifically, the CRS pattern may be provided by RRC signaling including at least one parameter in a ServingCellConfig Information Element (IE) or a ServingCellConfigCommon IE. The parameters may include, for example, lte-CRS-ToMatchAround, lte-CRS-PatternList1-r16, lte-CRS-PatternList2-r16, crs-RateMatch-PerCORESETPoolIndex-r16, and the like.

Rel-15 NR provides a function of configuring one CRS pattern per serving cell through the lte-CRS-ToMatchAround parameter. In Rel-16 NR, the above function has been extended to configure a plurality of CRS patterns per serving cell. More specifically, one CRS pattern per LTE carrier may be configured in a single-transmission and reception point (TRP) configuration UE, and two CRS patterns per LTE carrier may be configured in a multi-TRP configuration UE. For example, maximum three CRS patterns per serving cell may be configured in a single-TRP configuration UE through an lte-CRS-PatternList1-r16 parameter. For another example, a CRS for each TRP may be configured in a multi-TRP configuration UE. That is, a CRS pattern for a TRP1 may be configured through the lte-CRS-PatternList1-r16 parameter, and a CRS pattern for a TRP2 may be configured through the lte-CRS-PatternList2-r16 parameter. In the case that two TRPs are configured as described above, it is determined through the crs-RateMatch-PerCORESETPoolIndex -r16 parameter whether both CRS patterns of the TRP1 and the TRP2 are applied or whether only the CRS pattern for one TRP is applied to a specific physical downlink shared channel (PDSCH), and when the crs-RateMatch-PerCORESETPoolIndex-r16 parameter is configured to enabled, only a CRS pattern of one TRP is applied, and in other cases, all CRS patterns of two TRPs are applied.

Table 22 illustrates a ServingCellConfig IE including the CRS pattern, and Table 23 illustrates a RateMatch-PatternLTE-CRS IE including at least one parameter for the CRS pattern.

[Table 22]

```
ServingCellConfig ::=          SEQUENCE {
    tdd-UL-DL-ConfigurationDedicated   TDD-UL-DL-ConfigDedicated                    OPTIONAL,   -- Cond TDD
    initialDownlinkBWP          BWP-DownlinkDedicated                      OPTIONAL,   -- Need M
    downlinkBWP-ToReleaseList      SEQUENCE(SIZE(1..maxNrofBWPs)) OF BWP-Id              OPTIONAL,   -- Need N
    downlinkBWP-ToAddModList       SEQUENCE(SIZE(1..maxNrofBWPs)) OF BWP-Downlink            OPTIONAL,   -- Need N
    firstActiveDownlinkBWP-Id      BWP-Id                       OPTIONAL,   -- Cond SyncAndCellAdd
    bwp-InactivityTimer         ENUMERATED {ms2, ms3, ms4, ms5, ms6, ms8, ms10, ms20, ms30,
                    ms40,ms50, ms60, ms80,ms100, ms200,ms300, ms500,
                    ms750, ms1280, ms1920, ms2560, spare10, spare9, spare8,
                    spare7, spare6, spare5, spare4, spare3, spare2, spare1 }   OPTIONAL,   --Need R
    defaultDownlinkBWP-Id        BWP-Id                     OPTIONAL,   -- Need S
    uplinkConfig            UplinkConfig                  OPTIONAL,   -- Need M
    supplementaryUplink         UplinkConfig                  OPTIONAL,   -- Need M
    pdcch-ServingCellConfig       SetupRelease { PDCCH-ServingCellConfig }           OPTIONAL,   -- Need M
    pdsch-ServingCellConfig       SetupRelease { PDSCH-ServingCellConfig }           OPTIONAL,   -- Need M
    csi-MeasConfig           SetupRelease { CSI-MeasConfig }             OPTIONAL,   -- Need M
    sCellDeactivationTimer        ENUMERATED {ms20, ms40, ms80, ms160, ms200, ms240,
                    ms320, ms400, ms480, ms520, ms640, ms720,
                    ms840, ms1280, spare2,spare1}   OPTIONAL,   -- Cond ServingCellWithoutPUCCH
    crossCarrierSchedulingConfig     CrossCarrierSchedulingConfig              OPTIONAL,   -- Need M
    tag-Id           TAG-Id,
    dummy            ENUMERATED {enabled}                 OPTIONAL,   -- Need R
    pathlossReferenceLinking       ENUMERATED {spCell, sCell}              OPTIONAL,   -- Cond SCellOnly
    servingCellMO           MeasObjectId                  OPTIONAL,   -- Cond MeasObject
    ...,
    [[
    lte-CRS-ToMatchAround        SetupRelease { RateMatchPatternLTE-CRS }          OPTIONAL,   -- Need M
    rateMatchPatternToAddModList       SEQUENCE(SIZE(1..maxNrofRateMatchPatterns)) OF RateMatchPattern    OPTIONAL,   -- Need N
    rateMatchPatternToReleaseList      SEQUENCE(SIZE(1..maxNrofRateMatchPatterns)) OF RateMatchPatternId    OPTIONAL,   -- Need N
    downlinkChannelBW-PerSCS-List      SEQUENCE(SIZE(1..maxSCSs)) OF SCS-SpecificCarrier           OPTIONAL   -- Need S
    ]],
    [[
    supplementaryUplinkRelease      ENUMERATED {true}                  OPTIONAL,   -- Need N
    tdd-UL-DL-ConfigurationDedicated-IAB-MT-r16   TDD-UL-DL-ConfigDedicated-IAB-MT-r16             OPTIONAL,   -- Cond TDD_IAB
    dormantBWP-Config-r16        SetupRelease { DormantBWP-Config-r16 }           OPTIONAL,   -- Need M
    ca-SlotOffset-r16          CHOICE {
        refSCS15kHz            INTEGER(-2..2),
        refSCS30KHz            INTEGER(-5..5),
        refSCS60KHz            INTEGER(-10..10),
        refSCS120KHz           INTEGER(-20..20)
    }                                OPTIONAL,   -- Cond AsyncCA
    channelAccessConfig-r16       SetupRelease { ChannelAccessConfig-r16 }          OPTIONAL,   -- Need M
    intraCellGuardBandsDL-List-r16     SEQUENCE(SIZE(1..maxSCSs)) OF IntraCellGuardBandsPerSCS-r16       OPTIONAL,   -- Need S
    intraCellGuardBandsUL-List-r16     SEQUENCE(SIZE(1..maxSCSs)) OF IntraCellGuardBandsPerSCS-r16       OPTIONAL,   -- Need S
    csi-RS-ValidationWith-DCI-r16      ENUMERATED {enabled}                 OPTIONAL,   -- Need R
    lte-CRS-PatternList1-r16       SetupRelease { LTE-CRS-PatternList-r16 }          OPTIONAL,   -- Need M
    lte-CRS-PatternList2-r16       SetupRelease { LTE-CRS-PatternList-r16 }          OPTIONAL,   -- Need M
    crs-RateMatch-PerCORESETPoolIndex-r16 ENUMERATED {enabled}                    OPTIONAL,   -- Need R
    enableTwoDefaultTCI-States-r16     ENUMERATED {enabled}              OPTIONAL,   -- Need R
    enableDefaultTCI-StatePerCoresetPoolIndex-r16 ENUMERATED {enabled}              OPTIONAL,   -- Need R
    enableBeamSwitchTiming-r16      ENUMERATED {true}              OPTIONAL,   -- Need R
    cbg-TxDiffTBsProcessingType1-r16  ENUMERATED {enabled}               OPTIONAL,   -- Need R
    cbg-TxDiffTBsProcessingType2-r16  ENUMERATED {enabled}               OPTIONAL   -- Need R
    ]]
}
```

[Table 23]

```
-       RateMatchPatternLTE-CRS

The IE RateMatchPatternLTE-CRS is used to configure a pattern to rate match around LTE CRS. See TS 38.214 [19], clause 5.1.4.2.

RateMatchPatternLTE-CRS information element

-- ASN1START

-- TAG-RATEMATCHPATTERNLTE-CRS-START


RateMatchPatternLTE-CRS ::=        SEQUENCE {
    carrierFreqDL                INTEGER(0..16383),
    carrierBandwidthDL             ENUMERATED {n6, n15, n25, n50, n75, n100, spare2, spare1},
    mbsfn-SubframeConfigList       EUTRA-MBSFN-SubframeConfigList              OPTIONAL,   -- Need M
    nrofCRS-Ports                ENUMERATED {n1, n2, n4},
    v-Shift                ENUMERATED {n0, n1, n2, n3, n4, n5}
}


LTE-CRS-PatternList-r16 ::=       SEQUENCE(SIZE(1..maxLTE-CRS-Patterns-r16)) OF RateMatchPatternLTE-CRS


-- TAG-RATEMATCHPATTERNLTE-CRS-STOP

-- ASN1STOP
```

| *RateMatchPatternLTE-CRS* field descriptions |
| --- |
| *carrierBandwidthDL* |
| BW of the LTE carrier in number of PRBs (see TS 38.214 [19], clause 5.1.4.2). |
| *carrierFreqDL* |
| Center of the LTE carrier (see TS 38.214 [19], clause 5.1.4.2). |
| *mbsfn-SubframeConfigList* |
| LTE MBSFN subframe configuration (see TS 38.214 [19], clause 5.1.4.2). |
| *nrofCRS-Ports* |
| Number of LTE CRS antenna port to rate-match around (see TS 38.214 [19], clause 5.1.4.2). |
| *v-Shifrt* |
| Shifting value v-shift in LTE to rate match around LTE CRS (see TS 38.214 [19], clause 5.1.4.2). |

[PDSCH: Processing Time]

Hereinafter, a PDSCH processing procedure time will be described. In the case that the base station schedules the LTE to transmit a PDSCH using a DCI format 1_0, 1_1, or 1_2, the UE applies a transmission method (modulation and demodulation and coding instruction index (MCS), demodulation reference signal related information, time and frequency resource allocation information, and the like) indicated through DCI; thus, a PDSCH processing time for receiving a PDSCH may be required. In NR, the PDSCH processing time was defined in consideration of this. The PDSCH processing time of the LTE may follow [Equation 2].

[Equation 2]

$$T_{proc,1} = (N_1 + d_{1,1} + d_2)(2048 + 144)\kappa 2^{-\mu} T_c + T_{ext}$$

In Tproc, 1 described above with Equation 2, each variable may have the following meaning.

- N1: The number of symbols determined according to UE processing capability 1 or 2 and numerology $\mu$ according to the capability of the UE. In the case of being reported as UE processing capability 1 according to a capability report of the UE, N1 has a value of [Table 24], and in the case of being reported as UE processing capability 2 and that it is configured through higher layer signaling that UE processing capability 2 may be used, N1 may have a value of [Table 25]. The numerology $\mu$ may correspond to the minimum value among $\mu$PDCCH, $\mu$PDSCH, and $\mu$UL

in order to maximize Tproc,1, and μPDCCH, μPDSCH, and μUL may mean numerology of the PDCCH that schedules the PDSCH, numerology of the scheduled PDSCH, and numerology of an uplink channel through which HARQ-ACK is to be transmitted.

[Table 24]

| μ | PDSCH decoding time $N_1$ [symbols] | |
|---|---|---|
| | dmrs within DMRS-DownlinkConfig in which both PDSCH mapping types A and B are higher layer signaling - the case that AdditionalPosition = pos0 | dmrs within DMRS-DownlinkConfig in which both PDSCH mapping types A and B are higher layer signaling - the case that AdditionalPosition is not pos0 or the case that a higher layer parameter is not configured |
| 0 | 8 | $N_{1.0}$ |
| 1 | 10 | 13 |
| 2 | 17 | 20 |
| 3 | 20 | 24 |

[Table 25]

| μ | PDSCH decoding time $N_1$ [symbols] |
|---|---|
| | dmrs within DMRS-DownlinkConfig in which both PDSCH mapping types A and B are higher layer signaling - the case that AdditionalPosition = pos0 |
| 0 | 3 |
| 1 | 4.5 |
| 2 | 9 for frequency range 1 |

- κ: 64
- Text: In the case that the UE uses a shared spectrum channel access method, the UE may calculate a text and apply the text to a PDSCH processing time. Otherwise, the text is assumed as 0.
- If l1 representing a PDSCH DMRS location value is 12, N1,0 in [Table x2-2] has a value of 14, otherwise, 11 has a value of 13.
- For a PDSCH mapping type A, a last symbol of the PDSCH is an i-th symbol in a slot in which the PDSCH is transmitted, and if i < 7, then d1,1 is 7-i, otherwise, d1,1 is 0.
- d2: In the case that a PUCCH with a high priority index and a PUCCH or PUSCH with a low priority index overlap in time, d2 of the PUCCH with a high priority index may be configured to a value reported from the UE. Otherwise, d2 is 0.
- In the case that a PDSCH mapping type B is used for UE processing capability 1, a value of d1,1 may be determined according to L, which is the number of symbols of the scheduled PDSCH, and the number d of symbols overlapped between the PDCCH scheduling the PDSCH and the scheduled PDSCH as follows.
- If L ≥ 7, then d1,1 = 0.
- If L ≥ 4 and L ≤ 6, then d1,1 = 7 - L.
- If L = 3, then d1,1 = min(d, 1).
- If L = 2, then d1,1 = 3 + d.
- In the case that a PDSCH mapping type B is used for UE processing capability 2, a value of d1,1 may be determined according to L, which is the number of symbols of the scheduled PDSCH, and the number d of symbols overlapped between the PDCCH scheduling the PDSCH and the scheduled PDSCH as follows.
- If L ≥ 7, then d1,1 = 0.
- If L ≥ 4 and L ≤ 6, then d1,1 = 7 - L.
- in the case that L = 2,
- in the case that the scheduling PDCCH exists in a CORESET consisting of 3 symbols and that the corresponding CORESET and the scheduled PDSCH have the same start symbol, d1,1 = 3.
- Otherwise, d1,1 = d.
- In the case of the UE supporting capability 2 in a given serving cell, the UE may apply a PDSCH processing time according to UE processing capability 2 in the case that processingType2Enabled, which is higher layer signaling, is configured to enable for the corresponding cell.

When a position of a first uplink transmission symbol of a PUCCH including HARQ-ACK information (the corresponding position is K1 defined as a transmission time point of HARQ-ACK, a PUCCH resource used for HARQ-ACK transmission, and the timing advance effect may be considered) does not start earlier than a first uplink transmission symbol that appears after a time of Tproc,1 from a last symbol of the PDSCH, the UE should transmit a valid HARQ-ACK message. That is, the UE should transmit the PUCCH including a HARQ-ACK only in the case that a PDSCH processing time is sufficient. Otherwise, the UE may not provide valid HARQ-ACK information corresponding to the scheduled PDSCH to the base station. The Tproc,1 may be used to both general and extended CP cases. In the case of a PDSCH composed of two PDSCH transmission positions within one slot, d1,1 is calculated based on a first PDSCH transmission position within the corresponding slot.

[PDSCH: Reception preparation time upon cross-carrier scheduling]

Hereinafter, in the case of cross-carrier scheduling in which μPDCCH, which is numerology in which the scheduling PDCCH is transmitted, and μPDSCH which is numerology in which a PDSCH scheduled through the corresponding PDCCH is transmitted, are different, Npdsch, which is a PDSCH reception preparation time of the UE defined for a time interval between the PDCCH and the PDSCH will be described.

In the case of μPDCCH < μPDSCH, the scheduled PDSCH may not be transmitted earlier than a first symbol of a slot appearing after an Npdsch symbol from a last symbol of a PDCCH that schedules the corresponding PDSCH. A transmission symbol of the corresponding PDSCH may include a DM-RS.

In the case of μPDCCH > μPDSCH, the scheduled PDSCH may be transmitted after an Npdsch symbol from a last symbol of a PDCCH that schedules the corresponding PDSCH. A transmission symbol of the corresponding PDSCH may include a DM-RS.

Npdsch according to the scheduled PDCCH subcarrier spacing may be the same as that illustrated in Table 26.

[Table 26]

| $\mu_{PDCCH}$ | $N_{pdsch}$ [symbols] |
|---|---|
| 0 | 4 |
| 1 | 5 |
| 2 | 10 |
| 3 | 14 |

[Related to SRS]

Hereinafter, a method of estimating an uplink channel using sounding reference signal (SRS) transmission of the UE will be described. In order to transmit configuration information for SRS transmission to the UE, the base station may configure at least one SRS configuration for each uplink BWP, and configure at least one SRS resource set for each SRS configuration. As an example, in order to transmit information on the SRS resource set, the base station and the UE may send and receive higher-layer signaling information as follows.

- srs-ResourceSetId: SRS resource set index
- srs-ResourceIdList: A set of SRS resource indexes referenced in the SRS resource set
- resourceType: As a time axis transmission configuration of an SRS resource referenced in the SRS resource set, one of 'periodic', 'semi-persistent', and 'aperiodic' may be configured. In the case that 'periodic' or 'semi-persistent' is configured, associated CSI-RS information may be provided according to the usage of the SRS resource set. In the case that 'aperiodic' is configured, an aperiodic SRS resource trigger list and slot offset information may be provided, and associated CSI-RS information may be provided according to the usage of the SRS resource set.
- usage: as a configuration for the usage of the SRS resource referenced in the SRS resource set, one of 'beamManagement', 'codebook', 'nonCodebook', and 'antennaSwitching' may be configured.
- alpha, p0, pathlossReferenceRS, srs-PowerControlAdjustmentStates: It provides a parameter configuration for adjusting transmission power of the SRS resource referenced in the SRS resource set.

The UE may understand that the SRS resource included in the set of SRS resource indexes referenced in the SRS resource set follows information configured to the SRS resource set.

Further, in order to transmit individual configuration information on the SRS resource, the base station and the LTE may transmit and receive higher layer signaling information. As an example, individual configuration information on the SRS resource may include time-frequency axis mapping information within a slot of the SRS resource, which may include information on frequency hopping within a slot or between slots of the SRS resource. Further, individual configuration information on the SRS resource may include a time axis transmission configuration of the SRS resource, and be configured to one of 'periodic', 'semi-persistent', and 'aperiodic'. This may be limited to have the same time axis transmission configuration as that of an SRS resource set including an SRS resource. In the case that a time axis transmission configuration of the SRS resource is configured to 'periodic' or 'semi-persistent', an SRS resource transmission period and slot offset (e.g., periodicityAndOffset) may be additionally included in the time axis transmission configuration.

The base station may activate, deactivate, or trigger SRS transmission to the UE through higher layer signaling including RRC signaling or MAC CE signaling, or L1 signaling (e.g., DCI). For example, the base station may activate or deactivate periodic SRS transmission through higher layer signaling to the UE. The base station may instruct to activate an SRS resource set in which a resourceType is configured to periodic through higher layer signaling, and the UE may transmit a referring SRS resource in the activated SRS resource set. Time-frequency axis resource mapping within a slot of the transmitting SRS resource follows resource mapping information configured to the SRS resource, and slot mapping including a transmission period and slot offset follows periodicityAndOffset configured to the SRS resource. Further, a spatial domain transmission filter applied to the transmitting SRS resource may refer to spatial relation info configured to the SRS resource or associated CSI-RS information configured to the SRS resource set including the SRS resource. The UE may transmit an SRS resource within the activated uplink BWP for a periodic SRS resource activated through higher layer signaling.

For example, the base station may activate or deactivate semi-persistent SRS transmission to the UE through higher layer signaling. The base station may instruct to activate the SRS resource set through MAC CE signaling, and the UE may transmit an SRS resource referenced in the activated SRS resource set. An SRS resource set activated through MAC CE signaling may be limited to an SRS resource set whose resourceType is configured to semi-persistent. Time-frequency axis resource mapping within a slot of the transmitting SRS resource follows resource mapping information configured to the SRS resource, and slot mapping including a transmission period and slot offset follows periodicityAndOffset configured to the SRS resource. Further, a spatial domain transmission filter applied to the transmitting SRS resource may refer to spatial relation info configured to the SRS resource or associated CSI-RS information configured to the SRS resource set including the SRS resource. In the case that spatial relation info is configured to the SRS resource, a spatial domain transmission filter may be determined with reference to configuration information on spatial relation info transmitted through MAC CE signaling activating semi-persistent SRS transmission instead of following it. The UE may transmit an SRS resource within an activated uplink BWP for a semi-persistent SRS resource activated through higher layer signaling.

For example, the base station may trigger aperiodic SRS transmission to the UE through DCI. The base station may indicate one of aperiodic SRS resource triggers (aperiodicSRS-ResourceTrigger) through an SRS request field of DCI. The UE may understand that the SRS resource set including the aperiodic SRS resource trigger indicated through DCI in an aperiodic SRS resource trigger list among configuration information of the SRS resource set has been triggered. The UE may transmit a referring SRS resource in the triggered SRS resource set. Time-frequency axis resource mapping within a slot of the transmitting SRS resource follows resource mapping information configured to the SRS resource. Further, slot mapping of the transmitting SRS resource may be determined through a slot offset between a PDCCH including DCI and an SRS resource, which may refer to a value(s) included in a slot offset set configured to the SRS resource set. Specifically, the slot offset between the PDCCH including DCI and the SRS resource may apply a value indicated in a time domain resource assignment field of DCI among offset value(s) included in the slot offset set configured to the SRS resource set. Further, a spatial domain transmission filter applied to the transmitting SRS resource may refer to spatial relation info configured to the SRS resource or associated CSI-RS information configured to the SRS resource set including the SRS resource. The UE may transmit an SRS resource within an activated uplink BWP for an aperiodic SRS resource triggered through DCI.

In the case that the base station triggers aperiodic SRS transmission to the UE through DCI, in order for the UE to transmit an SRS by applying configuration information on the SRS resource, a minimum time interval between a PDCCH including DCI triggering aperiodic SRS transmission and a transmitting SRS may be required. A time interval for SRS transmission of the UE may be defined as the number of symbols between a last symbol of a PDCCH including DCI triggering aperiodic SRS transmission and a first symbol to which a first transmitted SRS resource among transmitting SRS resource(s) is mapped. The minimum time interval may be determined with reference to a PUSCH preparation procedure time required for the UE to prepare for PUSCH transmission. Further, the minimum time interval may have a different value according to where an SRS resource set including a transmitting SRS resource is used. For example, the minimum time interval may be determined to an N2 symbol defined in consideration of a UE processing capability according to the capability of the LTE with reference to the PUSCH preparation procedure time of the UE. Further, in the case that the usage of the SRS resource set is configured to 'codebook' or 'antennaSwitching' in consideration of the usage of the SRS resource set including the transmitting SRS resource, the minimum time interval is determined to N2 symbol, and in the case that the usage of the SRS resource set is configured to 'nonCodebook' or 'beamManagement', the minimum time interval may be determined to N2+14 symbols. The UE may transmit an aperiodic SRS in the case that a time interval for aperiodic SRS transmission is greater than or equal to the minimum time interval, and ignore DCI triggering an aperiodic SRS in the case that a time interval for aperiodic SRS transmission is smaller than the minimum time interval.

[Table 27]

```
SRS-Resource ::=              SEQUENCE {
    srs-ResourceId                SRS-ResourceId,
    nrofSRS-Ports                 ENUMERATED {port1, ports2, ports4},
    ptrs-PortIndex                ENUMERATED {n0, n1 }                    OPTIONAL,   -- Need R
    transmissionComb              CHOICE {
        n2                            SEQUENCE {
            combOffset-n2                 INTEGER(0..1),
            cyclicShift-n2                INTEGER(0..7)
        },
        n4                            SEQUENCE {
            combOffset-n4                 INTEGER(0..3),
            cyclicShift-n4                INTEGER(0..11)
        }
    },
    resourceMapping               SEQUENCE {
        startPosition                 INTEGER(0..5),
        nrofSymbols                   ENUMERATED {n1, n2, n4},
        repetitionFactor              ENUMERATED {n1, n2, n4}
    },
    freqDomainPosition            INTEGER(0..67),
    freqDomainShift               INTEGER(0..268),
    freqHopping                   SEQUENCE {
        c-SRS                         INTEGER(0..63),
        b-SRS                         INTEGER(0..3),
        b-hop                         INTEGER(0..3)
    },
    groupOrSequenceHopping        ENUMERATED { neither, groupHopping, sequenceHopping },
    resourceType                  CHOICE {
        aperiodic                     SEQUENCE {
            ...
        },
        semi-persistent               SEQUENCE {
            periodicityAndOffset-sp       SRS-PeriodicityAndOffset,
            ...
        },
        periodic                      SEQUENCE {
            periodicityAndOffset-p        SRS-PeriodicityAndOffset,
            ...
        }
    },
    sequenceId                    INTEGER(0..1023),
    spatialRelationInfo           SRS-SpatialRelationInfo                OPTIONAL,   -- Need R
    ...
}
```

The spatialRelationInfo configuration information in [Table 27] applies beam information of the reference signal to the beam used for the corresponding SRS transmission with reference to one reference signal. For example, the configuration of spatialRelationInfo may include information such as [Table 28].

[Table 28]

```
SRS-SpatialRelationInfo ::=    SEQUENCE {
    servingCellId              ServCellIndex        OPTIONAL,    -- Need S
    referenceSignal            CHOICE {
        ssb-Index              SSB-Index,
        csi-RS-Index           NZP-CSI-RS-ResourceId,
        srs                    SEQUENCE {
            resourceId             SRS-ResourceId,
            uplinkBWP              BWP-Id
        }
    }
}
```

With reference to the spatialRelationInfo configuration, an SS/PBCH block index, CSI-RS index, or SRS index may be configured as an index of a reference signal to be referred in order to use beam information of a specific reference signal. A higher-layer signaling referenceSignal is configuration information indicating beam information of which reference signal is referred to for transmission of the corresponding SRS, an ssb-Index means an index of the SS/PBCH block, a csi-RS-Index means an index of the CSI-RS, and an srs means an index of the SRS. When a value of a higher-layer signaling referenceSignal is configured to an 'ssb-Index', the UE may apply a receiving beam used when receiving the SS/PBCH block corresponding to the ssb-Index as a transmitting beam of the corresponding SRS transmission. When a value of higher-layer signaling referenceSignal is configured to a 'csi-RS-Index', the UE may apply a receiving beam used when receiving the CSI-RS corresponding to the csi-RS-Index as a transmitting beam of the corresponding SRS transmission. When a value of a higher-layer signaling referenceSignal is configured to the 'srs', the UE may apply a transmission beam used when transmitting an SRS corresponding to the srs as a transmission beam of the corresponding SRS transmission.

[PUSCH: related to transmission method]

Hereinafter, a scheduling method of PUSCH transmission will be described. PUSCH transmission may be dynamically scheduled by a UL grant in DCI or may be operated by a configured grant Type 1 or Type 2. Dynamic scheduling indication for PUSCH transmission is available in a DCI format 0_0 or 0_1.

Configured grant Type 1 PUSCH transmission may be semi-statically configured through reception of configuredGrantConfig including rrc-ConfiguredUplinkGrant in [Table 29] through higher-layer signaling without reception of the UL grant in DCI. Configured grant type 2 PUSCH transmission may be scheduled semi-persistently by UL grant in DCI after receiving configuredGrantConfig not including rrc-ConfiguredUplinkGrant in [Table 29] through higher-layer signaling. In the case that PUSCH transmission operates by a configured grant, parameters applied to PUSCH transmission are applied through configuredGrantConfig, which is higher-layer signaling of [Table 29] except for dataScramblingIdentityPUSCH, txConfig, codebookSubset, maxRank, and scaling of UCI-OnPUSCH provided by a push-Config of [Table 30], which is higher-layer signaling. When the UE is provided with a transformPrecoder in a configuredGrantConfig, which is higher-layer signaling of [Table 29], the UE applies tp-pi2BPSK in a push-Config of [Table 29] to PUSCH transmission operating by the configured grant.

[Table 29]

```
ConfiguredGrantConfig ::=        SEQUENCE {
    frequencyHopping             ENUMERATED {intraSlot, interSlot}                    OPTIONAL,  -- Need S,
    cg-DMRS-Configuration        DMRS-UplinkConfig,
    mcs-Table                    ENUMERATED {qam256, qam64LowSE}                       OPTIONAL,  -- Need S
    mcs-TableTransformPrecoder   ENUMERATED {qam256, qam64LowSE}                       OPTIONAL,  -- Need S
    uci-OnPUSCH                  SetupRelease { CG-UCI-OnPUSCH }                       OPTIONAL,  -- Need M
    resourceAllocation           ENUMERATED { resourceAllocationType0, resourceAllocationType1, dynamicSwitch },
    rbg-Size                     ENUMERATED {config2}                                 OPTIONAL,  -- Need S
    powerControlLoopToUse        ENUMERATED {n0, n1},
    p0-PUSCH-Alpha               P0-PUSCH-AlphaSetId,
    transformPrecoder            ENUMERATED {enabled, disabled}                       OPTIONAL,  -- Need S
    nrofHARQ-Processes           INTEGER(1..16),
    repK                 ENUMERATED {n1, n2, n4, n8},
    repK-RV                      ENUMERATED {s1-0231, s2-0303, s3-0000}               OPTIONAL,  -- Need R
    periodicity                  ENUMERATED {
        sym2, sym7, sym1x14, sym2x14, sym4x14, sym5x14, sym8x14, sym10x14, sym16x14, sym20x14,
        sym32x14, sym40x14, sym64x14, sym80x14, sym128x14, sym160x14, sym256x14, sym320x14, sym512x14,
        sym640x14, sym1024x14, sym1280x14, sym2560x14, sym5120x14,
        sym6, sym1x12, sym2x12, sym4x12, sym5x12, sym8x12, sym10x12, sym16x12, sym20x12, sym32x12,
        sym40x12, sym64x12, sym80x12, sym128x12, sym160x12, sym256x12, sym320x12, sym512x12, sym640x12,
        sym1280x12, sym2560x12
    },
    configuredGrantTimer         INTEGER(1..64)                                       OPTIONAL,  -- Need R
    rrc-ConfiguredUplinkGrant        SEQUENCE {
        timeDomainOffset             INTEGER(0..5119),
        timeDomainAllocation         INTEGER (0..15),
        frequencyDomainAllocation    BIT STRING(SIZE(18)),
        antennaPort              INTEGER(0..31),
        dmrs-SeqInitialization       INTEGER(0..1)                                    OPTIONAL,  -- Need R
        precodingAndNumberOfLayers   INTEGER(0..63),
        srs-ResourceIndicator        INTEGER(0..15)                                   OPTIONAL,  -- Need R
        mcsAndTBS                INTEGER(0..31),
        frequencyHoppingOffset       INTEGER(1.. maxNrofPhysicalResourceBlocks-1)     OPTIONAL,  -- Need R
        pathlossReferenceIndex       INTEGER(0..maxNrofPUSCH-PathlossReferenceRSs-1),
        ...
    }                                                                                 OPTIONAL,  -- Need R
    ...
}
```

Hereinafter, a PUSCH transmission method will be described. A DMRS antenna port for PUSCH transmission is the same as an antenna port for SRS transmission. PUSCH transmission may follow a codebook-based transmission method and a non-codebook-based transmission method, respectively, according to whether a value of txConfig in a push-Config of [Table 30], which is higher-layer signaling is 'codebook' or 'nonCodebook'.

As described above, PUSCH transmission may be dynamically scheduled through a DCI format 0_0 or 0_1, and be semi-statically configured by configured grant. When the UE is instructed to schedule PUSCH transmission through a DCI format 0_0, the UE performs a beam configuration for PUSCH transmission using a pucch-spatialRelationInfoID corresponding to an UE-specific PUCCH resource corresponding to the minimum ID within the activated uplink BWP in the serving cell, and in this case, PUSCH transmission is based on a single antenna port. The LTE does not expect scheduling for PUSCH transmission through a DCI format 0_0 in BWP in which a PUCCH resource including pucch-spatialRelationInfo is not configured. When the UE is not configured with txConfig in push-Config of [Table 30], the UE does not expect to be scheduled in a DCI format 0_1.

[Table 30]

```
PUSCH-Config ::=                  SEQUENCE {
    dataScramblingIdentityPUSCH         INTEGER(0..1023)                    OPTIONAL,  -- Need S
    txConfig                     ENUMERATED {codebook, nonCodebook}          OPTIONAL,  -- Need S
    dmrs-UplinkForPUSCH-MappingTypeA     SetupRelease { DMRS-UplinkConfig }           OPTIONAL,  -- Need M
    dmrs-UplinkForPUSCH-MappingTypeB     SetupRelease { DMRS-UplinkConfig }           OPTIONAL,  -- Need M

    pusch-PowerControl              PUSCH-PowerControl              OPTIONAL,  -- Need M
    frequencyHopping               ENUMERATED {intraSlot, interSlot}          OPTIONAL,  -- Need S
    frequencyHoppingOffsetLists        SEQUENCE(SIZE(1..4)) OF INTEGER(1.. maxNrofPhysicalResourceBlocks-1)
                                         OPTIONAL,  -- Need M
    resourceAllocation             ENUMERATED { resourceAllocationType0, resourceAllocationType1, dynamicSwitch},
    pusch-TimeDomainAllocationList       SetupRelease { PUSCH-TimeDomainResourceAllocationList }    OPTIONAL,  -- Need M
    pusch-AggregationFactor           ENUMERATED { n2, n4, n8 }              OPTIONAL,  -- Need S
    mcs-Table                   ENUMERATED {qam256, qam64LowSE}           OPTIONAL,  -- Need S
    mcs-TableTransformPrecoder         ENUMERATED {qam256, qam64LowSE}           OPTIONAL,  -- Need S
    transformPrecoder              ENUMERATED {enabled, disabled}           OPTIONAL,  -- Need S
    codebookSubset                ENUMERATED {fullyAndPartialAndNonCoherent, partialAndNonCoherent,nonCoherent}
                                         OPTIONAL, -- Cond codebookBased
    maxRank                    INTEGER(1..4)                OPTIONAL, -- Cond codebookBased
    rbg-Size                    ENUMERATED { config2}            OPTIONAL, -- Need S
    uci-OnPUSCH                   SetupRelease { UCI-OnPUSCH}            OPTIONAL, -- Need M
    tp-pi2BPSK                   ENUMERATED {enabled}             OPTIONAL, -- Need S
    ...
}
```

Hereinafter, codebook-based PUSCH transmission will be described. Codebook-based PUSCH transmission may be dynamically scheduled through a DCI format 0_0 or 0_1, and operate quasi-statically by configured grant. When the codebook-based PUSCH is dynamically scheduled by a DCI format 0_1 or quasi-statically configured by a configured grant, the UE determines a precoder for PUSCH transmission based on a SRS resource indicator (SRI), transmission precoding matrix indicator (TPMI), and transmission rank (PUSCH transmission layer number).

In this case, the SRI may be given through a field SRS resource indicator in DCI or may be configured through an srs-ResourceIndicator, which is higher-layer signaling. When transmitting a codebook-based PUSCH, the UE may be configured with at least one SRS resource, and be configured with maximum two SRS resources. In the case that the UE receives the SRI through DCI, the SRS resource indicated by the corresponding SRI means an SRS resource corresponding to the SRI among SRS resources transmitted earlier than the PDCCH including the corresponding SRI. Further, TPMI and transmission rank may be given through a field precoding information and number of layers in DCI or may be configured through precodingAndNumberOfLayers, which is higher-layer signaling. The TPMI is used for indicating a precoder applied to PUSCH transmission. When the UE is configured with one SRS resource, the TPMI is used for indicating a precoder to be applied in the configured one SRS resource. When the UE is configured with a plurality of SRS resources, the TPMI is used for indicating a precoder to be applied in the SRS resource indicated through the SRI.

A precoder to be used for PUSCH transmission is selected from an uplink codebook having the same number of antenna ports as a value of nrofSRS-Ports in SRS-Config, which is higher-layer signaling. In codebook-based PUSCH transmission, the UE determines a codebook subset based on TPMI and codebookSubset in push-Config, which is higher-layer signaling. CodebookSubset in push-Config, which is higher-layer signaling may be configured to one of 'fullyAndPartialAndNonCoherent', 'partialAndNonCoherent', or 'nonCoherent' based on the UE capability reported by the UE to the base station. When the UE reported 'partialAndNonCoherent' with the UE capability, the UE does not expect that a value of codebookSubset, which is higher-layer signaling is configured to 'fullyAndPartialAndNonCoherent'. Further, when the UE reported 'nonCoherent' with the UE capability, the UE does not expect that a value of codebook-Subset, which is higher-layer signaling is configured to 'fullyAndPartialAndNonCoherent' or 'partialAndNonCoherent'. In the case that nrofSRS-Ports in SRS-ResourceSet, which is higher-layer signaling indicates two SRS antenna ports, the UE does not expect that a value of codebookSubset, which is higher-layer signaling is configured to 'partialAndNon-Coherent'.

The UE may be configured with one SRS resource set in which a value of usage in the SRS-ResourceSet, which is higher-layer signaling is configured to 'codebook', and one SRS resource in the corresponding SRS resource set may be indicated through the SRI. When several SRS resources are configured in an SRS resource set in which a usage value in SRS-ResourceSet, which is higher-layer signaling is configured to 'codebook', the UE expects that a value of nrofSRS-Ports in the SRS-Resource, which is higher-layer signaling is configured to the same value for all SRS resources.

The UE transmits one or a plurality of SRS resources included in an SRS resource set in which a value of usage is configured to 'codebook' to the base station according to higher-layer signaling, and the base station selects one of SRS resources transmitted by the UE to instruct the LTE to perform PUSCH transmission using transmission beam information of the SRS resource. In this case, in codebook-based PUSCH transmission, the SRI is used as information for selecting an index of one SRS resource and is included in DCI. Additionally, the base station includes information indicating the TPMI and rank to be used by the UE for PUSCH transmission in the DCI. The UE applies a rank indicated based on a transmission beam of the corresponding SRS resource and a precoder indicated by the TPMI to perform PUSCH transmission using the SRS resource indicated by the SRI.

Hereinafter, non-codebook based PUSCH transmission will be described. Non-codebook based PUSCH transmission may be dynamically scheduled through a DCI format 0_0 or 0_1, and operate quasi-statically by a configured grant. In the case that at least one SRS resource is configured in an SRS resource set in which a value of usage in the SRS-ResourceSet, which is higher-layer signaling is configured to 'nonCodebook', the UE may receive scheduling of non-codebook based PUSCH transmission through a DCI format 0_1.

For an SRS resource set in which a value of usage in the SRS-ResourceSet, which is higher-layer signaling is configured to 'nonCodebook', the UE may be configured with one connected non-zero power CSI-RS (NZP CSI-RS) resource. The UE may calculate a precoder for SRS transmission through measurement of an NZP CSI-RS resource connected to the SRS resource set. When the difference between a last reception symbol of an aperiodic NZP CSI-RS resource connected to the SRS resource set and a first symbol of aperiodic SRS transmission in the UE is smaller than 42 symbols, the UE does not expect that information on the precoder for SRS transmission is updated.

When a value of resourceType in SRS-ResourceSet, which is higher-layer signaling is configured to 'aperiodic', the connected NZP CSI-RS is indicated by an SRS request, which is a field in a DCI format 0_1 or 1_1. In this case, when the connected NZP CSI-RS resource is an aperiodic NZP CSI-RS resource, it indicates that the connected NZP CSI-RS exists in the case that a value of a field SRS request in a DCI format 0_1 or 1_1 is not '00'. In this case, the corresponding DCI should not indicate cross carrier or cross BWP scheduling. Further, when a value of the SRS request indicates existence of the NZP CSI-RS, the corresponding NZP CSI-RS is located in a slot in which the PDCCH including the SRS request field is transmitted. In this case, TCI states configured to the scheduled subcarriers are not configured to QCL-TypeD.

When a periodic or semi-persistent SRS resource set is configured, the connected NZP CSI-RS may be indicated through associatedCSI-RS in an SRS-ResourceSet, which is higher-layer signaling. For non-codebook based transmission, the UE does not expect that spatialRelationInfo, which is higher-layer signaling for an SRS resource and associatedCSI-RS in SRS-ResourceSet, which is higher-layer signaling are configured together.

In the case that the UE are configured with a plurality of SRS resources, the UE may determine a precoder and transmission rank to be applied to PUSCH transmission based on the SRI instructed by the base station. In this case, the SRI may be indicated through a field SRS resource indicator in DCI or may be configured through a srs-ResourceIndicator, which is higher-layer signaling. Similar to the above-described codebook-based PUSCH transmission, in the case that the UE receives an SRI through DCI, the SRS resource indicated by the corresponding SRI means the SRS resource corresponding to the SRI among SRS resources transmitted earlier than the PDCCH including the corresponding SRI. The UE may use one or a plurality of SRS resources for SRS transmission, and the number of maximum SRS resources that may be simultaneously transmitted in the same symbol within one SRS resource set and the number of maximum SRS resources are determined by an UE capability reporting by the UE to the base station. In this case, SRS resources transmitted simultaneously by the UE occupy the same RB. The UE configures one SRS port for each SRS resource. A SRS resource set in which a value of usage in the SRS-ResourceSet, which is higher-layer signaling is configured to 'nonCodebook' may be configured to only one, and SRS resources for non-codebook based PUSCH transmission may be configured to maximum four.

The base station transmits one NZP-CSI-RS connected to the SRS resource set to the UE, and the UE calculates a precoder to use when transmitting one or a plurality of SRS resources in the corresponding SRS resource set based on the measurement result upon receiving the corresponding NZP-CSI-RS. The UE applies the calculated precoder when transmitting one or a plurality of SRS resources in the SRS resource set in which the usage is configured to 'nonCodebook' to the base station, and the base station selects one or a plurality of SRS resources among one or a plurality of received SRS resources. In this case, in non-codebook based PUSCH transmission, the SRI indicates an index capable of expressing a combination of one or a plurality of SRS resources, and the SRI is included in DCI. In this case, the number of SRS resources indicated by the SRI transmitted by the base station may be the number of transmission layers of the PUSCH, and the UE applies a precoder applied to transmission of the SRS resource to each layer to transmit the PUSCH.

[PUSCH: Preparation Procedure Time]

Hereinafter, a PUSCH preparation procedure time will be described. In the case that the base station schedules the UE to transmit a PUSCH using a DCI format 0_0, 0_1, or 0_2, the UE may apply a transmission method (transmission precoding method of SRS resource, number of transmission layers, spatial domain transmission filter) indicated through DCI to require a PUSCH preparation procedure time for transmitting the PUSCH. NR defined a PUSCH preparation procedure time considering this. The PUSCH preparation procedure time of the LTE may follow [Equation 3].

[Equation 3]

$$T_{proc,2} = \max((N_2 + d_{2,1} + d_2)(2048 + 144)\kappa 2^{-\mu} T_c + T_{ext} + T_{switch}, d_{2,2})$$

In Tproc,2 described above with Equation 3, each variable may have the following meaning.

- N2: The number of symbols determined according to numerology $\mu$ and an UE processing capability 1 or 2 according to an UE capability. In the case of being reported as UE processing capability 1 according to a capability report of the UE, N2 has a value of [Table 31], and in the case of being reported as an UE processing capability 2 and of being configured through higher layer signaling that the UE processing capability 2 may be used, N2 may have a value of [Table 32].

[Table 31]

| $\mu$ | PUSCH preparation time $N_2$ [symbols] |
|---|---|
| 0 | 10 |
| 1 | 12 |
| 2 | 23 |
| 3 | 36 |

[Table 32]

| $\mu$ | PUSCH preparation time $N_2$ [symbols] |
|---|---|
| 0 | 5 |
| 1 | 5.5 |
| 2 | 11 for frequency range 1 |

- d2,1: d2,1 is 0 in the case that all resource elements of a first OFDM symbol of PUSCH transmission are configured to be composed of only DM-RS, and otherwise, d2,1 is the number of symbols determined to 1.
- $\kappa$: 64
- $\mu$: $\mu$ follows a value in which Tproc,2 becomes larger among $\mu_{DL}$ or $\mu_{UL}$ $\mu_{DL}$ denotes numerology of a downlink through which a PDCCH including DCI scheduling a PUSCH is transmitted, and $\mu_{UL}$ denotes numerology of an uplink through which a PUSCH is transmitted.
- Tc: $1/(\Delta f_{max} \cdot N_f)$, $\Delta f_{max} = 480 \cdot 10^3 Hz$, $N_f = 4096$
- d2,2: d2,2 follows a BWP switching time in the case that DCI scheduling the PUSCH indicates BWP switching, otherwise, d2,2 has 0.
- d2: In the case that OFDM symbols of a PUCCH and a PUSCH with a high priority index and a PUCCH with a low priority index overlap in time, a d2 value of the PUSCH with a high priority index is used. Otherwise, d2 is 0.
- Text: In the case that the UE uses a shared spectrum channel access method, the UE may calculate a text and apply the text to the PUSCH preparation procedure time. Otherwise, the text is assumed as 0.
- Tswitch: In the case that an uplink switching interval is triggered, Tswitch is assumed as a switching interval time. Otherwise, Tswitch is assumed as 0.

When the base station and the LTE consider time axis resource mapping information of a PUSCH scheduled through DCI and the effect of timing advance between the uplink and downlink, in the case that a first symbol of a PUSCH starts earlier than a first uplink symbol in which the CP starts after Tproc,2 from a last symbol of the PDCCH including DCI that schedules the PUSCH, the base station and the UE determine that a PUSCH preparation procedure time is not sufficient. When not, the base station and the UE determine that the PUSCH preparation procedure time is sufficient. The UE may transmit the PUSCH only in the case that the PUSCH preparation procedure time is sufficient, and ignore DCI scheduling the PUSCH in the case that the PUSCH preparation procedure time is not sufficient.

[PUSCH: related to repetition transmission]

In the following description, repetition transmission of an uplink data channel in a 5G system to which the disclosure may be applied will be described in detail. The 5G system supports two types, a PUSCH repetition transmission type A and a PUSCH repetition transmission type B with a repetition transmission method of an uplink data channel. The LTE may be configured with either PUSCH repetition transmission type A or B through higher layer signaling.

[PUSCH repetition transmission type A]

As described above, a symbol length of an uplink data channel and a location of a start symbol are determined by a time domain resource allocation method within one slot, and the base station may notify the UE of the number of repetition transmissions through higher layer signaling (e.g., RRC signaling) or L1 signaling (e.g., DCI).
The UE may repeatedly transmit an uplink data channel in which a length and start symbol of a configured uplink data channel are the same in consecutive slots based on the number of repetition transmissions received from the base station. In this case, in the case that a slot configured by the base station to the UE as downlink or at least one symbol of symbols of an uplink data channel configured by the UE is configured to a downlink, the UE skips transmission of the uplink data channel, but the number of repetition transmissions of the uplink data channel is counted.

[PUSCH repetition transmission type B]

As described above, a start symbol and length of an uplink data channel are determined by a time domain resource allocation method within one slot, and the base station may notify the UE of the number numberofrepetitions of repetition transmissions through higher-layer signaling (e.g., RRC signaling) or L1 signaling (e.g., DCI).
First, nominal repetition of the uplink data channel is determined based on a start symbol and length of the configured uplink data channel as follows. A slot in which the nth nominal repetition starts is given by $K_s + \left\lfloor \dfrac{S + n \cdot L}{N_{symb}^{slot}} \right\rfloor$

, and a symbol starting in the slot is given by $\mod\left(S + n \cdot L, N_{symb}^{slot}\right)$. A slot in which the nth nominal repetition ends is given by $K_s + \left\lfloor \dfrac{S + (n+1) \cdot L - 1}{N_{symb}^{slot}} \right\rfloor$, and a symbol ending in the slot is given by $\mod\left(S + (n+1) \cdot L - 1, N_{symb}^{slot}\right)$

. Here, n = 0,..., numberofrepetitions-1, S denotes a start symbol of the configured uplink data channel, and L denotes a symbol length of the configured uplink data channel. $K_s$ denotes a slot in which PUSCH transmission starts, and $N_{symb}^{slot}$ denotes the number of symbols per slot.

The UE determines an invalid symbol for the PUSCH repetition transmission type B. A symbol configured to a downlink by tdd-LTL-DL-ConfigurationCommon or tdd-UL-DL-ConfigurationDedicated is determined as an invalid symbol for the PUSCH repetition transmission type B. Additionally, an invalid symbol may be configured in a higher layer parameter (e.g., InvalidSymbolPattern). A higher layer parameter (e.g., InvalidSymbolPattern) provides a symbol level bitmap over one slot or two slots; thus, invalid symbols may be configured. 1 in the bitmap represents an invalid symbol. Additionally, a period and pattern of the bitmap may be configured through a higher layer parameter (e.g., periodicity-AndPattern). When a higher layer parameter (e.g., InvalidSymbolPattern) is configured and the InvalidSymbolPatternIndicator-ForDCIFormat0_1 or InvalidSymbolPatternIndicator-ForDCIFormat0_2 parameter indicates 1, the UE applies an invalid symbol pattern, and when the parameter indicates 0, the UE does not apply an invalid symbol pattern. When a higher layer parameter (e.g., InvalidSymbolPattern) is configured and the InvalidSymbolPatternIndicator-ForDCIFormat0_1 or InvalidSymbolPatternIndicator-ForDCIFormat0_2 parameter is not configured, the UE applies an invalid symbol pattern.

After an invalid symbol is determined, for each nominal repetition, the UE may consider symbols other than the invalid symbol as valid symbols. When one or more valid symbols are included in each nominal repetition, the nominal repetition may include one or more actual repetitions. Here, each actual repetition includes a continuous set of valid symbols that may be used for the PUSCH repetition transmission type B in one slot.

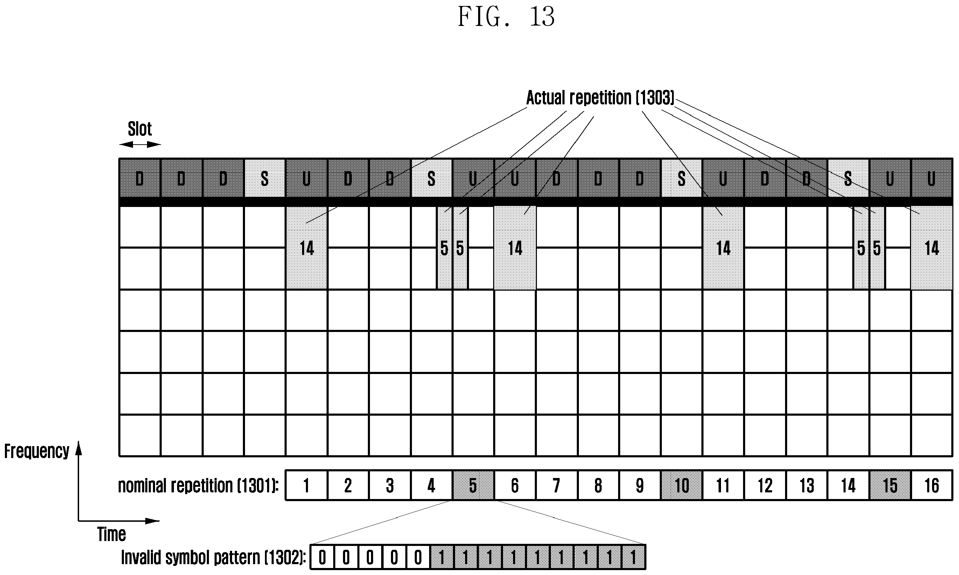

FIG. 13 is a diagram illustrating an example of a PUSCH repetition transmission type B in a wireless communication system according to an embodiment of the disclosure.

For example, the LTE may receive a configuration of a start symbol S of an uplink data channel to 0, a length L of an uplink data channel to 14, and the number of repetition transmissions to 16. In this case, nominal repetition is appeared in 16 consecutive slots (1301). Thereafter, the LTE may determine a symbol configured to a downlink symbol in each nominal repetition 1301 as an invalid symbol. Further, the UE determines symbols configured to 1 in an invalid symbol pattern 1302 as invalid symbols. In each nominal repetition, in the case that valid symbols, not invalid symbols, are composed of one or more consecutive symbols in one slot, the valid symbols are configured to actual repetitions and transmitted (1303).

Further, for PUSCH repetition transmission, NR Release 16 may define the following additional methods for UL grant-based PUSCH transmission and configured grant-based PUSCH transmission across slot boundaries.

- Method 1 (mini-slot level repetition): Through one UL grant, two or more PUSCH repetition transmissions are scheduled within one slot or across the boundary of consecutive slots. Further, for a method 1, time domain resource allocation information in DCI indicates resources of first repetition transmission. Further, time domain resource information of the remaining repetition transmissions may be determined according to time domain resource information of first repetition transmission and an uplink or downlink direction determined for each symbol of each slot. Each repetition transmission occupies consecutive symbols.

- Method 2 (multi-segment transmission): Two or more PUSCH repetition transmissions are scheduled in consecutive slots through one UL grant. In this case, one transmission is designated for each slot, and a start point or repetition length may be different for each transmission. Further, in the method 2, time domain resource allocation information in the DCI indicates a start point and repetition length of all repetition transmissions. Further, in the case that repetition transmission is performed within a single slot through the method 2, when there are several bundles of consecutive uplink symbols in the corresponding slot, each repetition transmission is performed for each bundle of uplink symbols. When a bundle of consecutive uplink symbols exists uniquely in the corresponding slot, PUSCH repetition transmission of one time is performed according to the method of NR Release 15.

- Method 3: Two or more PUSCH repetition transmissions are scheduled in consecutive slots through two or more UL grants. In this case, transmission of one time is designated for each slot, and the n-th UL grant may be received before PUSCH transmission scheduled for the n-1-th UL grant ends.

- Method 4: Through one UL grant or one configured grant, one or several PUSCH repetition transmissions within a single slot, or two or more PUSCH repetition transmissions across the boundary of consecutive slots may be supported. The number of repetitions instructed by the base station to the UE is only a nominal value, and the number of PUSCH repetition transmissions actually performed by the UE may be greater than the nominal number of repetitions. Time domain resource allocation information within the DCI or within the configured grant means a resource of first repetition transmission instructed by the base station. Time domain resource information of the remaining repetition transmissions may be determined with reference to resource information of at least first repetition transmission and uplink or downlink directions of symbols. When time domain resource information of repetition transmission instructed by the base station spans a slot boundary or includes an uplink/downlink switching point, the repetition transmission may be divided into a plurality of repetition transmissions. In this case, one repetition transmission may be included for each uplink period in one slot.

[PUSCH: frequency hopping process]

In the following description, frequency hopping of a physical uplink shared channel (PUSCH) in a 5G system to which the disclosure may be applied will be described in detail.

In 5G, as a frequency hopping method of an uplink data channel, two methods are supported for each PUSCH repetition transmission type. First, a PUSCH repetition transmission type A supports intra-slot frequency hopping and inter-slot frequency hopping, and a PUSCH repetition transmission type B supports inter-repetition frequency hopping and inter-slot frequency hopping.

An intra-slot frequency hopping method supported in the PUSCH repetition transmission type A is a method in which the LTE changes and transmits allocated resources of a frequency domain by configured frequency offset in two hops within one slot. In intra-slot frequency hopping, a starting RB of each hop may be represented through Equation 4.

[Equation 4]

$$RB_{start} = \begin{cases} RB_{start} & i = 0 \\ \left(RB_{start} + RB_{offset}\right) \bmod N_{BWP}^{size} & i = 1 \end{cases}$$

In Equation 4, i = 0 and i = 1 denote the first hop and the second hop, respectively, $RB_{start}$ denotes a starting RB in LTL BWP and is calculated from a frequency resource allocation method. $RB_{offset}$ represents a frequency offset between two hops through a higher layer parameter. The number of symbols of the first hop may be represented by $\left\lfloor N_{symb}^{PUSCH,s} / 2 \right\rfloor$ , and the number of symbols of the second hop may be represented by $N_{symb}^{PUSCH,s} - \left\lfloor N_{symb}^{PUSCH,s} / 2 \right\rfloor$. $N_{symb}^{PUSCH,s}$ is a length of PUSCH transmission within one slot and is represented by the number of OFDM symbols.

Hereinafter, an inter-slot frequency hopping method supported in PUSCH repetition transmission types A and B is a method in which the UE changes and transmits allocated resources of the frequency domain by configured frequency offset for each slot. In inter-slot frequency hopping, a starting RB during a $n_s^{\mu}$ slot may be represented through Equation 5.

[Equation 5]

$$RB_{start}\left(n_s^{\mu}\right) = \begin{cases} RB_{start} & n_s^{\mu} \bmod 2 = 0 \\ \left(RB_{start} + RB_{offset}\right) \bmod N_{BWP}^{size} & n_s^{\mu} \bmod 2 = 1 \end{cases}$$

In Equation 5, $n_s^{\mu}$ denotes a current slot number in multi-slot PUSCH transmission, $RB_{start}$ denotes a starting RB in UL BWP and is calculated from a frequency resource allocation method. $RB_{offset}$ represents a frequency offset between two hops through a higher layer parameter.

Hereinafter, an inter-repetition frequency hopping method supporting in a PUSCH repetition transmission type B is to move and transmit resources allocated in a frequency domain for one or a plurality of actual repetitions within each nominal repetition by configured frequency offset. RBstart(n), which is an index of a starting RB in a frequency domain for one or a plurality of actual repetitions within the n-th nominal repetition, may follow Equation 6.

[Equation 6]

$$RB_{start}(n) = \begin{cases} RB_{start} & n \bmod 2 = 0 \\ \left(RB_{start} + RB_{offset}\right) \bmod N_{BWP}^{size} & n \bmod 2 = 1 \end{cases}$$

In Equation 6, n is an index of nominal repetition, and $RB_{offset}$ denotes a RB offset between two hops through a higher layer parameter.

[PUSCH: multiplexing rule during AP/SP CSI reporting]

In the following description, a method of measuring and reporting a channel state in a 5G communication system to which the disclosure may be applied will be described in detail. Channel state information (CSI) may include channel quality information (CQI), precoding matrix index (PMI), CSI-RS resource indicator (CRI), SS/PBCH block resource indicator (SSBRI), layer indicator (LI), rank indicator (RI), and/or L1-reference signal received power (RSRP), and the like. The base station may control time and frequency resources for the above-described CSI measurement and reporting of the UE.

For the above-described CSI measurement and reporting, the UE may receive a configuration of setting information (CSI-ReportConfig) for the N (≥1) number of CSI reporting, setting information (CSI-ResourceConfig) for the M (≥1) number of RS transmission resources, and one or two trigger states (CSI-AperiodicTriggerStateList, CSI-SemiPersistentOnPUSCH-TriggerStateList) list information through higher layer signaling. Configuration information for the above-described CSI measurement and reporting may be described in more detail in [Table 33a] to [Table 39] as follows.

[Table 33a]

```
CSI-ReportConfig
The IE CSI-ReportConfig is used to configure a periodic or semi-persistent report sent on PUCCH on the cell in which the CSI-ReportConfig is included, or to configure a semi-persistent or
aperiodic report sent on PUSCH triggered by DCI received on the cell in which the CSI-ReportConfig is included(in this case, the cell on which the report is sent is determined by the received
DCI). See TS 38.214 [19], clause 5.2.1.
CSI-ReportConfig information element
-- ASN1START
-- TAG-CSI-REPORTCONFIG-START

CSI-ReportConfig ::=            SEQUENCE {
    reportConfigId             CSI-ReportConfigId,
    carrier                    ServCellIndex        OPTIONAL,   -- Need S
    resourcesForChannelMeasurement      CSI-ResourceConfigId,
    csi-IM-ResourcesForInterference     CSI-ResourceConfigId      OPTIONAL,   -- Need R
    nzp-CSI-RS-ResourcesForInterference    CSI-ResourceConfigId      OPTIONAL,   -- Need R
    reportConfigType           CHOICE {
        periodic               SEQUENCE {
            reportSlotConfig           CSI-ReportPeriodicityAndOffset,
            pucch-CSI-ResourceList         SEQUENCE(SIZE(1..maxNrofBWPs)) OF PUCCH-CSI-Resource
        },
        semiPersistentOnPUCCH          SEQUENCE {
            reportSlotConfig           CSI-ReportPeriodicityAndOffset,
            pucch-CSI-ResourceList         SEQUENCE(SIZE(1..maxNrofBWPs)) OF PUCCH-CSI-Resource
        },
        semiPersistentOnPUSCH          SEQUENCE {
            reportSlotConfig           ENUMERATED {sl5, sl10, sl20, sl40, sl80, sl160, sl320},
            reportSlotOffsetList       SEQUENCE(SIZE(1.. maxNrofUL-Allocations)) OF INTEGER(0..32),
            p0alpha                    P0-PUSCH-AlphaSetId
        },
        aperiodic              SEQUENCE {
            reportSlotOffsetList       SEQUENCE(SIZE(1..maxNrofUL-Allocations)) OF INTEGER(0..32)
        }
    },

    reportQuantity            CHOICE {
        none                  NULL,
        cri-RI-PMI-CQI            NULL,
        cri-RI-i1                NULL,
        cri-RI-i1-CQI            SEQUENCE {
            pdsch-BundleSizeForCSI         ENUMERATED {n2, n4}              OPTIONAL  -- Need S
        },
        cri-RI-CQI            NULL,
        cri-RSRP             NULL,
        ssb-Index-RSRP           NULL,
        cri-RI-LI-PMI-CQI           NULL
    },
```

```
reportFreqConfiguration          SEQUENCE {
    cqi-FormatIndicator              ENUMERATED { widebandCQI, subbandCQI }           OPTIONAL,   -- Need R
    pmi-FormatIndicator              ENUMERATED { widebandPMI, subbandPMI }           OPTIONAL,   -- Need R
    csi-ReportingBand                CHOICE {
        subbands3                    BIT STRING(SIZE(3)),
        subbands4                    BIT STRING(SIZE(4)),
        subbands5                    BIT STRING(SIZE(5)),
        subbands6                    BIT STRING(SIZE(6)),
        subbands7                    BIT STRING(SIZE(7)),
        subbands8                    BIT STRING(SIZE(8)),
        subbands9                    BIT STRING(SIZE(9)),
        subbands10                   BIT STRING(SIZE(10)),
        subbands11                   BIT STRING(SIZE(11)),
        subbands12                   BIT STRING(SIZE(12)),
        subbands13                   BIT STRING(SIZE(13)),
        subbands14                   BIT STRING(SIZE(14)),
        subbands15                   BIT STRING(SIZE(15)),
        subbands16                   BIT STRING(SIZE(16)),
        subbands17                   BIT STRING(SIZE(17)),
        subbands18                   BIT STRING(SIZE(18)),
        ...,
        subbands19-v1530             BIT STRING(SIZE(19))
    }   OPTIONAL   -- Need S

}                                                                                    OPTIONAL,   -- Need R


timeRestrictionForChannelMeasurements       ENUMERATED {configured, notConfigured},
timeRestrictionForInterferenceMeasurements  ENUMERATED {configured, notConfigured},
codebookConfig                   CodebookConfig                      OPTIONAL,   -- Need R
dummy                            ENUMERATED {n1, n2}                  OPTIONAL,   -- Need R
groupBasedBeamReporting          CHOICE {
    enabled                      NULL,
    disabled                     SEQUENCE {
        nrofReportedRS               ENUMERATED {n1, n2, n3, n4}         OPTIONAL   -- Need S
    }
},
cqi-Table            ENUMERATED {table1, table2, table3, spare1}      OPTIONAL,   -- Need R
subbandSize          ENUMERATED {value1, value2},
non-PMI-PortIndication     SEQUENCE(SIZE(1..maxNrofNZP-CSI-RS-ResourcesPerConfig)) OF PortIndexFor8Ranks OPTIONAL,   -- Need R
...,


[[
semiPersistentOnPUSCH-v1530      SEQUENCE {
    reportSlotConfig-v1530           ENUMERATED {sl4, sl8, sl16}
}                                                OPTIONAL   -- Need R
]],
[[
semiPersistentOnPUSCH-v1610      SEQUENCE {
    reportSlotOffsetListDCI-0-2-r16     SEQUENCE(SIZE(1.. maxNrofUL-Allocations-r16)) OF INTEGER(0..32)   OPTIONAL,   -- Need R
    reportSlotOffsetListDCI-0-1-r16     SEQUENCE(SIZE(1.. maxNrofUL-Allocations-r16)) OF INTEGER(0..32)   OPTIONAL   -- Need R
}                                                OPTIONAL,   -- Need R
aperiodic-v1610          SEQUENCE {
    reportSlotOffsetListDCI-0-2-r16     SEQUENCE(SIZE(1.. maxNrofUL-Allocations-r16)) OF INTEGER(0..32)   OPTIONAL,   -- Need R
    reportSlotOffsetListDCI-0-1-r16     SEQUENCE(SIZE(1.. maxNrofUL-Allocations-r16)) OF INTEGER(0..32)   OPTIONAL   -- Need R
}                                                OPTIONAL,   -- Need R
reportQuantity-r16       CHOICE {
    cri-SINR-r16             NULL,
    ssb-Index-SINR-r16       NULL
}                                                OPTIONAL,   -- Need R
codebookConfig-r16               CodebookConfig-r16                   OPTIONAL   -- Need R
]]
}
```

```
CSI-ReportPeriodicityAndOffset ::= CHOICE {
    slots4              INTEGER(0..3),
    slots5              INTEGER(0..4),
    slots8              INTEGER(0..7),
    slots10             INTEGER(0..9),
    slots16             INTEGER(0..15),
    slots20             INTEGER(0..19),
    slots40             INTEGER(0..39),
    slots80             INTEGER(0..79),
    slots160            INTEGER(0..159),
    slots320            INTEGER(0..319)
}


PUCCH-CSI-Resource ::=       SEQUENCE {
    uplinkBandwidthPartId        BWP-Id,
    pucch-Resource               PUCCH-ResourceId
}




PortIndexFor8Ranks ::=       CHOICE {
    portIndex8              SEQUENCE{
        rank1-8                PortIndex8                         OPTIONAL,  -- Need R
        rank2-8                SEQUENCE(SIZE(2)) OF PortIndex8              OPTIONAL,  -- Need R
        rank3-8                SEQUENCE(SIZE(3)) OF PortIndex8              OPTIONAL,  -- Need R
        rank4-8                SEQUENCE(SIZE(4)) OF PortIndex8              OPTIONAL,  -- Need R
        rank5-8                SEQUENCE(SIZE(5)) OF PortIndex8              OPTIONAL,  -- Need R
        rank6-8                SEQUENCE(SIZE(6)) OF PortIndex8              OPTIONAL,  -- Need R
        rank7-8                SEQUENCE(SIZE(7)) OF PortIndex8              OPTIONAL,  -- Need R
        rank8-8                SEQUENCE(SIZE(8)) OF PortIndex8              OPTIONAL   -- Need R
    },
    portIndex4              SEQUENCE{
        rank1-4                PortIndex4                         OPTIONAL,  -- Need R
        rank2-4                SEQUENCE(SIZE(2)) OF PortIndex4              OPTIONAL,  -- Need R
        rank3-4                SEQUENCE(SIZE(3)) OF PortIndex4              OPTIONAL,  -- Need R
        rank4-4                SEQUENCE(SIZE(4)) OF PortIndex4              OPTIONAL   -- Need R
    },
    portIndex2              SEQUENCE{
        rank1-2                PortIndex2                         OPTIONAL,  -- Need R
        rank2-2                SEQUENCE(SIZE(2)) OF PortIndex2              OPTIONAL   -- Need R
    },
    portIndex1              NULL
}


PortIndex8::=            INTEGER(0..7)
PortIndex4::=            INTEGER(0..3)
PortIndex2::=            INTEGER(0..1)


-- TAG-CSI-REPORTCONFIG-STOP
-- ASN1STOP
```

[Table 33b]

| *CSI-ReportConfig* field descriptions |
|---|
| *carrier* |
| Indicates in which serving cell the *CSI-ResourceConfig* indicated below are to be found. If the field is absent, the resources are on the same serving cell as this report configuration. |
| *codebookConfig* |
| Codebook configuration for Type-1 or Type-2 including codebook subset restriction. Network does not configure codebookConfig and codebookConfig-r16 simultaneously to a UE |
| *cqi-FormatIndicator* |
| Indicates whether the UE shall report a single (wideband) or multiple (subband) CQI. (see TS 38.214 [19], clause 5.2.1.4). |
| *cqi-Table* |
| Which CQI table to use for CQI calculation (see TS 38.214 [19], clause 5.2.2.1). |
| *csi-IM-ResourcesForInterference* |
| CSI-IM resources for interference measurement. *csi-ResourceConfigId* of a *CSI-ResourceConfig* included in the configuration of the serving cell indicated with the field "carrier" above. The *CSI-ResourceConfig* indicated here contains only CSI-IM resources. The *bwp-Id* in that *CSI-ResourceConfig* is the same value as the *bwp-Id* in the *CSI-ResourceConfig* indicated by *resourcesForChannelMeasurement*. |
| *csi-ReportingBand* |
| Indicates a contiguous or non-contiguous subset of subbands in the bandwidth part which CSI shall be reported for. Each bit in the bit-string represents one subband. The right-most bit in the bit string represents the lowest subband in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise, the number of sub bands can be from 3 (24 PRBs, sub band size 8) to 18 (72 PRBs, sub band size 4). |
| *dummy* |
| This field is not used in the specification. If received it shall be ignored by the UE. |
| *groupBasedBeamReporting* |
| Turning on/off group beam based reporting (see TS 38.214 [19], clause 5.2.1.4). |
| *non-PMI-PortIndication* |
| Port indication for RI/CQI calculation. For each CSI-RS resource in the linked ResourceConfig for channel measurement, a port indication for each rank R, indicating which R ports to use. Applicable only for non-PMI feedback (see TS 38.214 [19], clause 5.2.1.4.2). The first entry in *non-PMI-PortIndication* corresponds to the NZP-CSI-RS-Resource indicated by the first entry in *nzp-CSI-RS-Resources* in the *NZP-CSI-RS-ResourceSet* indicated in the first entry of *nzp-CSI-RS-ResourceSetList* of the *CSI-ResourceConfig* whose *CSI-ResourceConfigId* is indicated in a CSI-MeasId together with the above *CSI-ReportConfigId*; the second entry in *non-PMI-PortIndication* corresponds to the NZP-CSI-RS-Resource indicated by the second entry in *nzp-CSI-RS-Resources* in the *NZP-CSI-RS-ResourceSet* indicated in the first entry of *nzp-CSI-RS-ResourceSetList* of the same *CSI-ResourceConfig*, and so on until the NZP-CSI-RS-Resource indicated by the last entry in *nzp-CSI-RS-Resources* in the in the *NZP-CSI-RS-ResourceSet* indicated in the first entry of *nzp-CSI-RS-ResourceSetList* of the same *CSI-ResourceConfig*. Then the next entry corresponds to the NZP-CSI-RS-Resource indicated by the first entry in *nzp-CSI-RS-Resources* in the *NZP-CSI-RS-ResourceSet* indicated in the second entry of *nzp-CSI-RS-ResourceSetList* of the same *CSI-ResourceConfig* and so on. |
| *nrofReportedRS* |
| The number (N) of measured RS resources to be reported per report setting in a non-group-based report. N $\leq$ N_max, where N_max is either 2 or 4 depending on UE capability. (see TS 38.214 [19], clause 5.2.1.4) When the field is absent the UE applies the value 1. |
| *nzp-CSI-RS-ResourcesForInterference* |
| NZP CSI RS resources for interference measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources. The *bwp-Id* in that *CSI-ResourceConfig* is the same value as the *bwp-Id* in the *CSI-ResourceConfig* indicated by *resourcesForChannelMeasurement*. |
| *p0alpha* |
| Index of the p0-alpha set determining the power control for this CSI report transmission (see TS 38.214 [19], clause 6.2.1.2). |
| *pdsch-BundleSizeForCSI* |
| PRB bundling size to assume for CQI calculation when *reportQuantity* is CRI/RI/i1/CQI. If the field is absent, the UE assumes that no PRB bundling is applied (see TS 38.214 [19], clause 5.2.1.4.2). |

| *pmi-FormatIndicator* |
|---|
| Indicates whether the UE shall report a single (wideband) or multiple (subband) PMI. (see TS 38.214 [19], clause 5.2.1.4). |
| *pucch-CSI-ResourceList* |
| Indicates which PUCCH resource to use for reporting on PUCCH. |
| *reportConfigType* |
| Time domain behavior of reporting configuration. |
| *reportFreqConfiguration* |
| Reporting configuration in the frequency domain. (see TS 38.214 [19], clause 5.2.1.4). |
| *reportQuantity* |
| The CSI related quantities to report. see TS 38.214 [19], clause 5.2.1. If the field *reportQuantity-r16* is present, UE shall ignore *reportQuantity* (without suffix). |
| *reportSlotConfig* |
| Periodicity and slot offset (see TS 38.214 [19], clause 5.2.1.4). If the field *reportSlotConfig-v1530* is present, the UE shall ignore the value provided in *reportSlotConfig* (without suffix). |
| *reportSlotOffsetList, reportSlotOffsetListDCI-0-1, reportSlotOffsetListDCI-0-2* |
| Timing offset Y for semi persistent reporting using PUSCH. This field lists the allowed offset values. This list must have the same number of entries as the *pusch-TimeDomainAllocationList* in *PUSCH-Config*. A particular value is indicated in the DCI field of the UL grant, which of the configured report slot offsets the UE shall apply. The DCI value 0 corresponds to the first report slot offset in this list, the DCI value 1 corresponds to the second report slot offset in this list, and so on. The first report is transmitted in slot n+Y, second report in n+Y+P, where P is the configured periodicity. Timing offset Y for aperiodic reporting using PUSCH. This field lists the allowed offset values. This list must have the same number of entries as the *pusch-TimeDomainAllocationList* in *PUSCH-Config*. A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on (see TS 38.214 [19], clause 6.1.2.1). The field *reportSlotOffsetList* applies to DCI format 0_0, the field *reportSlotOffsetListDCI-0-1* applies to DCI format 0_1 and the field *reportSlotOffsetListDCI-0-2* applies to DCI format 0_2 (see TS 38.214 [19], clause 6.1.2.1). |
| *resourcesForChannelMeasurement* |
| Resources for channel measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources and/or SSB resources. This *CSI-ReportConfig* is associated with the DL BWP indicated by *bwp-Id* in that *CSI-ResourceConfig*. |
| *subbandSize* |
| Indicates one out of two possible BWP-dependent values for the subband size as indicated in TS 38.214 [19], table 5.2.1.4-2 . If *csi-ReportingBand* is absent, the UE shall ignore this field. |
| *timeRestrictionForChannelMeasurements* |
| Time domain measurement restriction for the channel (signal) measurements (see TS 38.214 [19], clause 5.2.1.1). |
| *timeRestrictionForInterferenceMeasurements* |
| Time domain measurement restriction for interference measurements (see TS 38.214 [19], clause 5.2.1.1). |

[Table 34a]

```
CSI-ResourceConfig
The IE CSI-ResourceConfig defines a group of one or more NZP-CSI-RS-ResourceSet, CSI-IM-ResourceSet and/or CSI-SSB-ResourceSet.


CSI-ResourceConfig information element
-- ASN1START
-- TAG-CSI-RESOURCECONFIG-START


CSI-ResourceConfig ::=    SEQUENCE {
   csi-ResourceConfigId      CSI-ResourceConfigId,
   csi-RS-ResourceSetList     CHOICE {
      nzp-CSI-RS-SSB           SEQUENCE {
         nzp-CSI-RS-ResourceSetList SEQUENCE(SIZE(1..maxNrofNZP-CSI-RS-ResourceSetsPerConfig)) OF NZP-CSI-RS-ResourceSetId
                                                 OPTIONAL, -- Need R
         csi-SSB-ResourceSetList     SEQUENCE(SIZE(1..maxNrofCSI-SSB-ResourceSetsPerConfig)) OF CSI-SSB-ResourceSetId OPTIONAL -- Need R
      },
      csi-IM-ResourceSetList     SEQUENCE(SIZE(1..maxNrofCSI-IM-ResourceSetsPerConfig)) OF CSI-IM-ResourceSetId
   },


   bwp-Id               BWP-Id,
   resourceType            ENUMERATED { aperiodic, semiPersistent, periodic },
   ...
}


-- TAG-CSI-RESOURCECONFIG-STOP
-- ASN1STOP
```

[Table 34b]

| CSI-ResourceConfig field descriptions |
| --- |
| **bwp-Id** |
| The DL BWP which the CSI-RS associated with this *CSI-ResourceConfig* are located in (see TS 38.214 [19], clause 5.2.1.2. |
| **csi-IM-ResourceSetList** |
| List of references to CSI-IM resources used for beam measurement and reporting in a CSI-RS resource set. Contains up to *maxNrofCSI-IM-ResourceSetsPerConfig* resource sets if *resourceType* is 'aperiodic' and 1 otherwise (see TS 38.214 [19], clause 5.2.1.2). |
| **csi-ResourceConfigId** |
| Used in *CSI-ReportConfig* to refer to an instance of *CSI-ResourceConfig*. |
| **csi-SSB-ResourceSetList** |
| List of references to SSB resources used for beam measurement and reporting in a CSI-RS resource set (see TS 38.214 [19], clause 5.2.1.2). |
| **nzp-CSI-RS-ResourceSetList** |
| List of references to NZP CSI-RS resources used for beam measurement and reporting in a CSI-RS resource set. Contains up to *maxNrofNZP-CSI-RS-ResourceSetsPerConfig* resource sets if *resourceType* is 'aperiodic' and 1 otherwise (see TS 38.214 [19], clause 5.2.1.2). |
| **resourceType** |
| Time domain behavior of resource configuration (see TS 38.214 [19], clause 5.2.1.2). It does not apply to resources provided in the *csi-SSB-ResourceSetList*. |

[Table 35a]

NZP-CSI-RS-ResourceSet

The IE NZP-CSI-RS-ResourceSet is a set of Non-Zero-Power(NZP) CSI-RS resources(their IDs) and set-specific parameters.

*NZP-CSI-RS-ResourceSet* information element

```
-- ASN1START
-- TAG-NZP-CSI-RS-RESOURCESET-START
NZP-CSI-RS-ResourceSet ::=        SEQUENCE {
    nzp-CSI-ResourceSetId             NZP-CSI-RS-ResourceSetId,
    nzp-CSI-RS-Resources              SEQUENCE(SIZE(1..maxNrofNZP-CSI-RS-ResourcesPerSet)) OF NZP-CSI-RS-ResourceId,
    repetition                ENUMERATED { on, off }                    OPTIONAL,   -- Need S
    aperiodicTriggeringOffset       INTEGER(0..6)                       OPTIONAL,   -- Need S
    trs-Info                  ENUMERATED {true}                         OPTIONAL,   -- Need R
    ...,
    [[
    aperiodicTriggeringOffset-r16     INTEGER(0..31)                    OPTIONAL   -- Need S
    ]]
}

-- TAG-NZP-CSI-RS-RESOURCESET-STOP
-- ASN1STOP
```

[Table 35b]

| *NZP-CSI-RS-ResourceSet* field descriptions |
|---|
| **aperiodicTriggeringOffset, aperiodicTriggeringOffset-r16** |
| Offset X between the slot containing the DCI that triggers a set of aperiodic NZP CSI-RS resources and the slot in which the CSI-RS resource set is transmitted. For *aperiodicTriggeringOffset*, the value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. For *aperiodicTriggeringOffset-r16*, the value indicates the number of slots. The network configures only one of the fields. When neither field is included, the UE applies the value 0. |
| **nzp-CSI-RS-Resources** |
| NZP-CSI-RS-Resources associated with this NZP-CSI-RS resource set (see TS 38.214 [19], clause 5.2). For CSI, there are at most 8 NZP CSI RS resources per resource set. |
| **repetition** |
| Indicates whether repetition is on/off. If the field is set to *off* or if the field is absent, the UE may not assume that the NZP-CSI-RS resources within the resource set are transmitted with the same downlink spatial domain transmission filter (see TS 38.214 [19], clauses 5.2.2.3.1 and 5.1.6.1.2). It can only be configured for CSI-RS resource sets which are associated with *CSI-ReportConfig* with report of L1 RSRP or "no report". |
| **trs-Info** |
| Indicates that the antenna port for all NZP-CSI-RS resources in the CSI-RS resource set is same. If the field is absent or released the UE applies the value *false* (see TS 38.214 [19], clause 5.2.2.3.1). |

[Table 36]

```
CSI-SSB-ResourceSet
The IE CSI-SSB-ResourceSet is used to configure one SS/PBCH block resource set which refers to SS/PBCH as indicated in ServingCellConfigCommon.

CSI-SSB-ResourceSet information element
-- ASN1START
-- TAG-CSI-SSB-RESOURCESET-START

CSI-SSB-ResourceSet ::=          SEQUENCE {
   csi-SSB-ResourceSetId            CSI-SSB-ResourceSetId,
   csi-SSB-ResourceList             SEQUENCE(SIZE(1..maxNrofCSI-SSB-ResourcePerSet)) OF SSB-Index,
   ...

}

-- TAG-CSI-SSB-RESOURCESET-STOP
-- ASN1STOP
```

[Table 37a]

```
CSI-IM-ResourceSet
The IE CSI-IM-ResourceSet is used to configure a set of one or more CSI Interference Management(IM) resources(their IDs) and set-specific parameters.
CSI-IM-ResourceSet information element
-- ASN1START
-- TAG-CSI-IM-RESOURCESET-START

CSI-IM-ResourceSet ::=           SEQUENCE {
   csi-IM-ResourceSetId             CSI-IM-ResourceSetId,
   csi-IM-Resources                 SEQUENCE(SIZE(1..maxNrofCSI-IM-ResourcesPerSet)) OF CSI-IM-ResourceId,
   ...

}
-- TAG-CSI-IM-RESOURCESET-STOP
-- ASN1STOP
```

[Table 37b]

| CSI-IM-ResourceSet field descriptions |
|---|
| csi-IM-Resources |
| CSI-IM-Resources associated with this CSI-IM-ResourceSet (see TS 38.214 [19], clause 5.2) |

[Table 38a]

```
CSI-AperiodicTriggerStateList
The CSI-AperiodicTriggerStateList IE is used to configure the UE with a list of aperiodic trigger states. Each codepoint of the DCI field "CSI request" is associated with one
trigger state. Upon reception of the value associated with a trigger state, the UE will perform measurement of CSI-RS(reference signals) and aperiodic reporting on L1 according
to all entries in the associatedReportConfigInfoList for that trigger state.

CSI-AperiodicTriggerStateList information element
-- ASN1START
-- TAG-CSI-APERIODICTRIGGERSTATELIST-START

CSI-AperiodicTriggerStateList ::=    SEQUENCE(SIZE(1..maxNrOfCSI-AperiodicTriggers)) OF CSI-AperiodicTriggerState

CSI-AperiodicTriggerState ::=        SEQUENCE {
    associatedReportConfigInfoList     SEQUENCE(SIZE(1..maxNrofReportConfigPerAperiodicTrigger)) OF CSI-AssociatedReportConfigInfo,
    ...
}

CSI-AssociatedReportConfigInfo ::=      SEQUENCE {
    reportConfigId              CSI-ReportConfigId,
    resourcesForChannel            CHOICE {
        nzp-CSI-RS                SEQUENCE {
            resourceSet            INTEGER(1..maxNrofNZP-CSI-RS-ResourceSetsPerConfig),
            qcl-info              SEQUENCE(SIZE(1..maxNrofAP-CSI-RS-ResourcesPerSet)) OF TCI-StateId OPTIONAL -- Cond Aperiodic
        },
        csi-SSB-ResourceSet            INTEGER(1..maxNrofCSI-SSB-ResourceSetsPerConfig)
    },
    csi-IM-ResourcesForInterference    INTEGER(1..maxNrofCSI-IM-ResourceSetsPerConfig)        OPTIONAL, -- Cond CSI-IM-ForInterference
    nzp-CSI-RS-ResourcesForInterference INTEGER(1..maxNrofNZP-CSI-RS-ResourceSetsPerConfig)   OPTIONAL, -- Cond NZP-CSI-RS-ForInterference
    ...
}

-- TAG-CSI-APERIODICTRIGGERSTATELIST-STOP
-- ASN1STOP
```

[Table 38b]

| CSI-AssociatedReportConfigInfo field descriptions |
| --- |
| **csi-IM-ResourcesForInterference** |
| CSI-IM-ResourceSet for interference measurement. Entry number in csi-IM-ResourceSetList in the CSI-ResourceConfig indicated by csi-IM-ResourcesForInterference in the CSI-ReportConfig indicated by reportConfigId above (1 corresponds to the first entry, 2 to the second entry, and so on). The indicated CSI-IM-ResourceSet should have exactly the same number of resources like the NZP-CSI-RS-ResourceSet indicated in nzp-CSI-RS-ResourcesforChannel. |
| **csi-SSB-ResourceSet** |
| CSI-SSB-ResourceSet for channel measurements. Entry number in csi-SSB-ResourceSetList in the CSI-ResourceConfig indicated by resourcesForChannelMeasurement in the CSI-ReportConfig indicated by reportConfigId above (1 corresponds to the first entry, 2 to the second entry, and so on). |
| **nzp-CSI-RS-ResourcesForInterference** |
| NZP-CSI-RS-ResourceSet for interference measurement. Entry number in nzp-CSI-RS-ResourceSetList in the CSI-ResourceConfig indicated by nzp-CSI-RS-ResourcesForInterference in the CSI-ReportConfig indicated by reportConfigId above (1 corresponds to the first entry, 2 to the second entry, and so on). |
| **qcl-info** |
| List of references to TCI-States for providing the QCL source and QCL type for each NZP-CSI-RS-Resource listed in nzp-CSI-RS-Resources of the NZP-CSI-RS-ResourceSet indicated by nzp-CSI-RS-ResourcesforChannel. Each TCI-StateId refers to the TCI-State which has this value for tci-StateId and is defined in tci-StatesToAddModList in the PDSCH-Config included in the BWP-Downlink corresponding to the serving cell and to the DL BWP to which the resourcesForChannelMeasurement (in the CSI-ReportConfig indicated by reportConfigId above) belong to. First entry in qcl-info-forChannel corresponds to first entry in nzp-CSI-RS-Resources of that NZP-CSI-RS-ResourceSet, second entry in qcl-info-forChannel corresponds to second entry in nzp-CSI-RS-Resources, and so on (see TS 38.214 [19], clause 5.2.1.5.1) |
| **reportConfigId** |
| The reportConfigId of one of the CSI-ReportConfigToAddMod configured in CSI-MeasConfig |
| **resourceSet** |
| NZP-CSI-RS-ResourceSet for channel measurements. Entry number in nzp-CSI-RS-ResourceSetList in the CSI-ResourceConfig indicated by resourcesForChannelMeasurement in the CSI-ReportConfig indicated by reportConfigId above (1 corresponds to the first entry, 2 to the second entry, and so on). |

[Table 38c]

| Conditional Presence | Explanation |
|---|---|
| *Aperiodic* | The field is mandatory present if the *NZP-CSI-RS-Resources* in the associated *resourceSet* have the resourceType aperiodic. The field is absent otherwise. |
| *CSI-IM-ForInterference* | This field is optional need M if the *CSI-ReportConfig* identified by *reportConfigId* is configured with *csi-IM-ResourcesForInterference*; otherwise it is absent. |
| *NZP-CSI-RS-ForInterference* | This field is optional need M if the *CSI-ReportConfig* identified by *reportConfigId* is configured with *nzp-CSI-RS-ResourcesForInterference*; otherwise it is absent. |

[Table 39]

```
CSI-SemiPersistentOnPUSCH-TriggerStateList
The CSI-SemiPersistentOnPUSCH-TriggerStateList IE is used to configure the UE with list of trigger states for semi-persistent reporting of channel state
information on L1. See also TS 38.214 [19], clause 5.2.


CSI-SemiPersistentOnPUSCH-TriggerStateList information element
-- ASN1START
-- TAG-CSI-SEMIPERSISTENTONPUSCHTRIGGERSTATELIST-START


CSI-SemiPersistentOnPUSCH-TriggerStateList  ::=  SEQUENCE(SIZE(1..maxNrOfSemiPersistentPUSCH-Triggers))  OF  CSI-SemiPersistentOnPUSCH-
TriggerState


CSI-SemiPersistentOnPUSCH-TriggerState ::=    SEQUENCE {
    associatedReportConfigInfo           CSI-ReportConfigId,
    ...
}


-- TAG-CSI-SEMIPERSISTENTONPUSCHTRIGGERSTATELIST-STOP
-- ASN1STOP
```

For the above-described CSI report configuration (CSI-ReportConfig), each report configuration (CSI-Report-Config) may be associated with a CSI resource configuration associated with the corresponding report configuration and an downlink (DL) bandwidth part identified by a higher layer parameter bandwidth part identifier (bwp-id) given as CSI-ResourceConfig. As a time domain reporting operation for each report configuration CSI-ReportConfig, 'Aperiodic', 'Semi-Persistent', and 'Periodic' methods are supported, which may be configured from the base station to the UE by a reportConfigType parameter configured from the higher layer. The semi-persistent CSI reporting method supports 'PUCCH-based semi-persistent (semi-PersistentOnPUCCH)' and 'PUSCH-based semi-persistent (semi-PersistentOn-PUSCH)'. In the case of the periodic or semi-permanent CSI reporting method, the LTE may receive a configuration of a PUCCH or PUSCH resource to transmit CSI from the base station through higher layer signaling. The period and slot offset of a PUCCH or PUSCH resource to transmit CSI may be given as numerology of an uplink (UL) bandwidth part configured to transmit CSI reporting. In the case of the aperiodic CSI reporting method, the UE may receive scheduling of PUSCH resources to transmit CSI from the base station through L1 signaling (the above-described DCI format 0_1).

For the above-described CSI resource configuration (CSI-ResourceConfig), each CSI resource configuration CSI-ReportConfig may include the S ($\geq$1) number of CSI resource sets (given by higher layer parameter csi-RS-ResourceSetList). The CSI resource set list may be composed of a non-zero power (NZP) CSI-RS resource set and an S S/PBCH block set or may be composed of a CSI-interference measurement (CSI-IM) resource set. Each CSI resource configuration may be located in a downlink (DL) bandwidth part identified by a higher layer parameter bwp-id, and the CSI resource configuration may be connected to a CSI reporting configuration of the same downlink bandwidth part. A time domain operation of the CSI-RS resource in the CSI resource configuration may be configured to one of 'aperiodic', 'periodic' or 'semi-permanent' from a higher layer parameter resourceType. For periodic or semi-permanent CSI resource configuration, the number of CSI-RS resource sets may be limited to S = 1, and the configured period and slot offset may be given as numerology of a downlink bandwidth part identified by a bwp-id. The UE may receive one or more CSI resource configurations for channel or interference measurement from the base station through higher layer signaling, and include, for example, the following CSI resources.

- CSI-IM resources for interference measurement
- NZP CSI-RS resources for interference measurement
- NZP CSI-RS resources for channel measurement

For CSI-RS resource sets associated with resource configuration in which the higher layer parameter resource Type is configured to 'aperiodic', 'periodic', or 'semi-permanent', a trigger state for CSI report configurations in which a reportType is configured to 'aperiodic' and a resource configuration for channel or interference measurement for one or a plurality of component cells (CCs) may be configured to a higher layer parameter CSI-AperiodicTriggerStateList.

Aperiodic CSI reporting of the UE may use a PUSCH, periodic CSI reporting may use a PUCCH, and semi-permanent CSI reporting may be performed using a PUCCH after being activated with the PUSCH and a MAC control element (MAC CE) in the case of being triggered or activated by DCI. As described above, a CSI resource configuration may also be configured to aperiodic, periodic, or semi-permanent. A combination between a CSI report configuration and a CSI resource configuration may be supported based on [Table 40].

[Table 40]

| Table 5.2.1.4-1: Triggering/Activation of CSI Reporting for the possible CSI-RS Configurations. | | | |
|---|---|---|---|
| CSI-RS Configuration | Periodic CSI Reporting | Semi-Persistent CSI Reporting | Aperiodic CSI Reporting |
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

Aperiodic CSI reporting may be triggered by a "CSI request" field of the above-described DCI format 0_1 corresponding to scheduling DCI for the PUSCH. The LTE may monitor the PDCCH, acquire a DCI format 0_1, and acquire scheduling information and a CSI request indicator for the PUSCH. The CSI request indicator may be configured to NTS (= 0, 1, 2, 3, 4, 5, or 6) bits and be determined by higher layer signaling (reportTriggerSize). One trigger state among one or a plurality of aperiodic CSI reporting trigger states that may be configured by higher layer signaling (CSI-AperiodicTriggerStateList) may be triggered by a CSI request indicator.

In the case that all bits of the CSI request field are 0, this may mean that CSI reporting is not requested.

When the number (M) of CSI trigger states in the configured CSI-AperiodicTriggerStateLite is greater than $2^{NTs}-1$, the M number of CSI trigger states may be mapped to $2^{NTs}-1$ according to a predefined mapping relationship, and one trigger state of $2^{NTs}-1$ trigger states may be indicated by the CSI request field.

When the number (M) of CSI trigger states in the configured CSI-AperiodicTriggerStateLite is smaller than or equal to $2^{NTs}-1$, one of the M number of CSI trigger states may be indicated by the CSI request field.

[Table 41] illustrates an example of a relationship between a CSI request indicator and a CSI trigger state that may be indicated by the corresponding indicator.

[Table 41]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The UE may perform measurement on the CSI resource in the CSI trigger state triggered by the CSI request field, and generate CSI (including at least one of the above-described CQI, PMI, CRI, SSBRI, LI, RI, or L1-RSRP) therefrom. The UE may transmit the acquired CSI using the PUSCH scheduled by the corresponding DCI format 0_1. In the case that 1 bit corresponding to the uplink data indicator (UL-SCH indicator) in the DCI format 0_1 indicates "1", uplink data (UL-SCH) and acquired CSI may be multiplexed and transmitted to PUSCH resources scheduled by the DCI format 0_1. In the case that 1 bit corresponding to an uplink data indicator (UL-SCH indicator) in the DCI format 0_1 indicates "0", only CSI without uplink data (LTL-SCH) may be mapped and transmitted to PUSCH resources scheduled by the DCI format 0_1

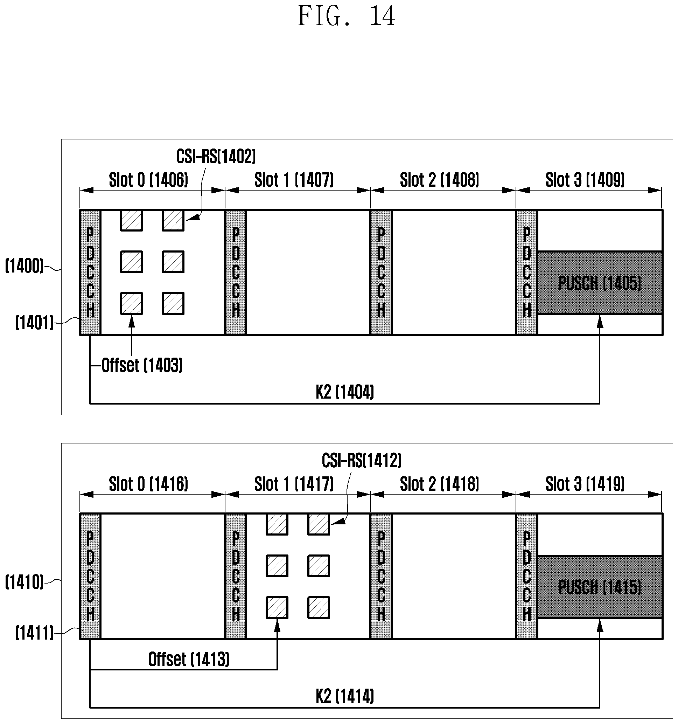

FIG. 14 is a diagram illustrating an example of an aperiodic CSI reporting method according to an embodiment of the disclosure.

According to an example 1400 of FIG. 14, the UE may monitor a PDCCH 1401 to acquire a DCI format 0_1, and acquire scheduling information and CSI request information on a PUSCH 1405 therefrom. The UE may acquire resource information on a CSI-RS 1402 to be measured from a received CSI request indicator. The UE may determine at what time point measurement of the transmitted CSI-RS 1402 resource should be performed based on a time point at which a DCI format 0_1 is received and a parameter for offset (aperiodicTriggeringOffset described above) in a CSI resource set configuration (e.g., NZP-CSI-RS-ResourceSet). More specifically, the UE may receive a configuration of an offset value X of a parameter aperiodicTriggeringOffset in the NZP-CSI-RS resource set configuration from the base station by higher layer signaling, and the configured offset value X may mean an offset between a slot receiving DCI triggering aperiodic CSI reporting and a slot in which CSI-RS resources are transmitted. For example, an aperiodicTriggeringOffset parameter value and the offset value X may have a mapping relationship described in [Table 42].

[Table 42]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

An example 1400 of FIG. 14 illustrates an example in which the above-described offset value is configured to X=0. In this case, the UE may receive the CSI-RS 1402 in a slot (corresponding to a slot 0, 1406 of FIG. 14) receiving a DCI format 0_1 triggering the aperiodic CSI reporting, and report CSI information measured by the received CSI-RS to the base station through the PUSCH 1405. The UE may acquire scheduling information (information corresponding to each field of the above-described DCI format 0_1) for the PUSCH 1405 for CSI reporting from the DCI format 0_1. For example, the UE may acquire information on a slot to transmit the PUSCH 1405 from the above-described time domain resource allocation information on the PUSCH 1405 in the DCI format 0_1. In an example 1400 of FIG. 14, the UE acquired a K2 value 1404 corresponding to a slot offset value for the PDCCH-to-PUSCH as 3, and accordingly, the PUSCH 1405 may be transmitted at a slot 3, 1409 3 slots away from a slot 0, 1406, which is a time point that receives the PDCCH 1401.

In an example 1410 of FIG. 14, the UE may monitor a PDCCH 1411 to acquire a DCI format 0_1, and acquire scheduling information and CSI request information on a PUSCH 1415 therefrom. The UE may acquire resource information on the CSI-RS 1412 to be measured from the received CSI request indicator. An example 1410 of FIG. 14 illustrates an example in which an offset value for the above-described CSI-RS is configured to X=1. In this case, the UE may receive a CSI-RS 1412 in a next slot (slot 1, 1417 of FIG. 14) of a slot (corresponding to a slot 0, 1416 of FIG. 14) receiving a DCI format 0_1 triggering aperiodic CSI reporting, and report CSI information measured by the received CSI-RS to the base station through the PUSCH 1415.

The aperiodic CSI reporting may include at least one or both of a CSI part 1 and a CSI part 2, and in the case that the aperiodic CSI reporting is transmitted through the PUSCH, it may be multiplexed with the transport block. After the CRC is inserted into input bits of the aperiodic CSI for multiplexing, the CRC may be encoded and rate matched, and then mapped to a resource element in the PUSCH in a specific pattern and transmitted. The CRC insertion may be omitted according to a coding method or a length of input bits. The number of modulation symbols calculated for rate matching when multiplexing CSI Part 1 or CSI part 2 included in the aperiodic CSI reporting may be calculated, as illustrated in [Table 43].

[Table 43]

For CSI part 1 transmission on PUSCH not using repetition type B with UL-SCH, the number of coded modulation symbols per layer for CSI part 1 transmission, denoted as $Q'_{\text{CSI-part1}}$, is determined as follows:

$$Q'_{\text{CSI-1}} = \min \left\{ \left\lceil \frac{(O_{\text{CSI-1}} + L_{\text{CSI-1}}) \cdot \beta^{\text{PUSCH}}_{\text{offset}} \cdot \sum_{l=0}^{N^{\text{PUSCH}}_{\text{symb,all}}-1} M^{\text{UCI}}_{\text{sc}}(l)}{\sum_{r=0}^{C^{UL-SCH}-1} K_r} \right\rceil, \left\lceil \alpha \cdot \sum_{l=0}^{N^{\text{PUSCH}}_{\text{symb,all}}-1} M^{\text{UCI}}_{\text{sc}}(l) \right\rceil - Q'_{ACK/CG-UCI} \right\}$$

...

For CSI part 1 transmission on an actual repetition of a PUSCH with repetition Type B with UL-SCH, the number of coded modulation symbols per layer for CSI part 1 transmission, denoted as $Q'_{\text{CSI-part1}}$, is determined as follows:

$$Q'_{\text{CSI-1}} = \min \left\{ \left\lceil \frac{(O_{\text{CSI-1}} + L_{\text{CSI-1}}) \cdot \beta^{\text{PUSCH}}_{\text{offset}} \cdot \sum_{l=0}^{N^{\text{PUSCH}}_{\text{symb,nominal}}-1} M^{\text{UCI}}_{\text{sc,nominal}}(l)}{\sum_{r=0}^{C^{UL-SCH}-1} K_r} \right\rceil, \left\lceil \alpha \cdot \sum_{l=0}^{N^{\text{PUSCH}}_{\text{symb,nominal}}-1} M^{\text{UCI}}_{\text{sc,nominal}}(l) \right\rceil - Q'_{ACK/CG-UCI}, \left\lceil \sum_{l=0}^{N^{\text{PUSCH}}_{\text{symb,actual}}-1} M^{\text{UCI}}_{\text{sc,actual}}(l) \right\rceil - Q'_{ACK/CG-UCI} \right\}$$

...

For CSI part 1 transmission on PUSCH without UL-SCH, the number of coded modulation symbols per layer for CSI part 1 transmission, denoted as $Q'_{\text{CSI-part1}}$, is determined as follows:

if there is CSI part 2 to be transmitted on the PUSCH,

$$Q'_{\text{CSI-1}} = \min \left\{ \left\lceil \frac{(O_{\text{CSI-1}} + L_{\text{CSI-1}}) \cdot \beta^{\text{PUSCH}}_{\text{offset}}}{R \cdot Q_m} \right\rceil, \sum_{l=0}^{N^{\text{PUSCH}}_{\text{symb,all}}-1} M^{\text{UCI}}_{\text{sc}}(l) - Q'_{\text{ACK}} \right\}$$

else

$$Q'_{\text{CSI-1}} = \sum_{l=0}^{N^{\text{PUSCH}}_{\text{symb,all}}-1} M^{\text{UCI}}_{\text{sc}}(l) - Q'_{\text{ACK}}$$

end if

...

For CSI part 2 transmission on PUSCH not using repetition type B with UL-SCH, the number of coded modulation symbols per layer for CSI part 2 transmission, denoted as $Q'_{\text{CSI-part2}}$, is determined as follows:

$$Q'_{\text{CSI-2}} = \min \left\{ \left\lceil \frac{(O_{\text{CSI-2}} + L_{\text{CSI-2}}) \cdot \beta^{\text{PUSCH}}_{\text{offset}} \cdot \sum_{l=0}^{N^{\text{PUSCH}}_{\text{symb,all}}-1} M^{\text{UCI}}_{\text{sc}}(l)}{\sum_{r=0}^{C^{UL-SCH}-1} K_r} \right\rceil, \left\lceil \alpha \cdot \sum_{l=0}^{N^{\text{PUSCH}}_{\text{symb,all}}-1} M^{\text{UCI}}_{\text{sc}}(l) \right\rceil - Q'_{ACK/CG-UCI} - Q'_{\text{CSI-1}} \right\}$$

For CSI part 2 transmission on an actual repetition of a PUSCH with repetition Type B with UL-SCH, the number of coded modulation symbols per layer for CSI part 2 transmission, denoted as $Q'_{\text{CSI-part2}}$, is determined as follows:

$$Q'_{\text{CSI-2}} = \min \left\{ \left\lceil \frac{(O_{\text{CSI-2}} + L_{\text{CSI-2}}) \cdot \beta^{\text{PUSCH}}_{\text{offset}} \cdot \sum_{l=0}^{N^{\text{PUSCH}}_{\text{symb,nominal}}-1} M^{\text{UCI}}_{\text{sc,nominal}}(l)}{\sum_{r=0}^{C^{UL-SCH}-1} K_r} \right\rceil, \left\lceil \alpha \cdot \sum_{l=0}^{N^{\text{PUSCH}}_{\text{symb,nominal}}-1} M^{\text{UCI}}_{\text{sc,nominal}}(l) \right\rceil - Q'_{ACK/CG-UCI} - Q'_{\text{CSI-1}}, \left\lceil \sum_{l=0}^{N^{\text{PUSCH}}_{\text{symb,actual}}-1} M^{\text{UCI}}_{\text{sc,actual}}(l) \right\rceil - Q'_{ACK/CG-UCI} - Q'_{\text{CSI-1}} \right\}$$

...

For CSI part 2 transmission on PUSCH without UL-SCH, the number of coded modulation symbols per layer for CSI part 2 transmission, denoted as $Q'_{\text{CSI-part2}}$, is determined as follows:

$$Q'_{\text{CSI-2}} = \sum_{l=0}^{N^{\text{PUSCH}}_{\text{symb,all}}-1} M^{\text{UCI}}_{\text{sc}}(l) - Q'_{\text{ACK}} - Q'_{\text{CSI-1}}$$

In particular, in the case of PUSCH repetition transmission methods A and B, the UE may multiplex and transmit aperiodic CSI reporting only to the first repetition transmission during PUSCH repetition transmission. This is because the multiplexed aperiodic CSI reporting information is encoded in a polar code method, and in this case, in order to be multiplexed in several PUSCH repetitions, each PUSCH repetition should have the same frequency and time resource allocation, and in particular, in the case of the PUSCH repetition type B, because each actual repetition may have different OFDM symbol lengths, the aperiodic CSI reporting may be multiplexed and transmitted only in the first PUSCH repetition.

Further, for the PUSCH repetition transmission type B, in the case that the UE schedules aperiodic CSI reporting without scheduling for transport blocks or receives DCI for activating semi-permanent CSI reporting, even if the number of PUSCH repetition transmissions configured by higher layer signaling is greater than 1, a value of nominal repetition may be assumed to 1. Further, in the case that the UE schedules or activates aperiodic or semi-permanent CSI reporting without scheduling for transport blocks based on the PUSCH repetition transmission type B, the LTE may expect first nominal repetition to be the same as first actual repetition. After semi-permanent CSI reporting is activated with DCI, for a PUSCH transmitted including semi-permanent CSI based on the PUSCH repetition transmission type B without scheduling for DCI, when the first nominal repetition is different from the first actual repetition, transmission for the first nominal repetition may be ignored.

[Related to LTE capability reporting]

In LTE and NR, the UE may perform a procedure for reporting a capability supported by the UE to the serving base station in a state connected to the serving base station. In the following description, this is referred to as UE capability reporting.

The base station may transmit a UE capability inquiry message requesting a capability report to the UE in a connected state. The message may include a UE capability request for each radio access technology (RAT) type of the base station. The request for each RAT type may include supporting frequency band combination information. Further, in the case of the UE capability inquiry message, each LTE capability for a plurality of RAT types may be requested through one RRC message container transmitted by the base station, or the base station may include a UE capability inquiry message including a UE capability request for each RAT type multiple times and transmit the message to the UE. That is, the UE capability inquiry is repeated multiple times within one message, and the UE may constitute and report to the corresponding UE capability information message multiple times. A next generation mobile communication system may request a UE capability for multi-RAT dual connectivity (MR-DC) including NR, LTE, and EN-DC (EUTRA-NR dual connectivity). Further, although the UE capability inquiry message is generally initially transmitted after the UE is connected to the base station, the base station may request the UE capability inquiry message under any condition when necessary.

In the above step, the UE that has received a UE capability report request from the base station constitutes a UE capability according to the RAT type and band information requested from the base station. Hereinafter, a method for the UE to constitute UE capabilities in the NR system is summarized.

1. When the UE receives a list of LTE and/or NR bands from the base station by a UE capability request, the LTE constitutes a band combination (BC) for EN-DC and NR stand alone (SA). That is, the UE constitutes a BC candidate list for EN-DC and NR SA based on bands requested to the base station through a FreqBandList. Further, bands have priorities in the order described in the FreqBandList.

2. In the case that the base station configures a "eutra-nr-only" flag or a "eutra" flag to request UE capability reporting, the UE completely removes those for NR SA BCs from the constituted BC candidate list. This operation may occur only in the case that the LTE base station (eNB) requests a "eutra" capability.

3. Thereafter, the UE removes fallback BCs from the candidate list of BCs constituted in the above step. Here, the fallback BC means a BC that may be obtained by removing a band corresponding to at least one SCell from any BC, and because a BC before removing a band corresponding to at least one SCell may already cover the fallback BC, the fallback BC may be omitted. This step is applied even to MR-DC, that is, to LTE bands. The remaining BCs after this step are a final "candidate BC list".

4. The UE selects BCs appropriate for a requested RAT type from the final "candidate BC list" to select BCs to report. In this step, the UE constitutes a supportedBandCombinationList in the predetermined order. That is, the UE constitutes the BC and UE capabilities to report according to the order of the preconfigured rat-Type (nr -> eutra-nr -> eutra). Further, the UE constitutes a featureSetCombination for the constituted supportedBandCombinationList, and constitutes a list of "candidate feature set combination" in the candidate BC list from which a list for a fallback BC (including capabilities of the same or lower level) is removed. The above "candidate feature set combination" includes both feature set combinations for NR and EUTRA-NR BC, and may be obtained from the feature set combination of the UE-NR-Capabilities and UE-MRDC-Capabilities containers.

5. Further, when the requested rat Type is eutra-nr and has an effect, featureSetCombinations is included in both containers of UE-MRDC-Capabilities and UE-NR-Capabilities. However, a feature set of NR includes only UE-NR-Capabilities.

After UE capabilities are constituted, the UE transmits a UE capability information message including the UE capabilities to the base station. Thereafter, the base station performs appropriate scheduling and transmission and reception management for the UE based on the UE capabilities received from the UE.

[Related to CA/DC]

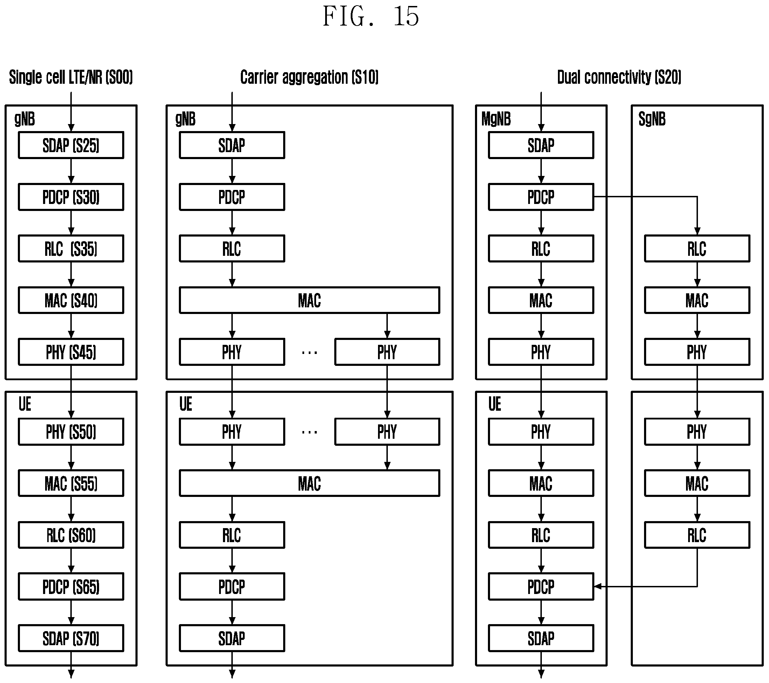

FIG. 15 is a diagram illustrating a radio protocol structure of a base station and a UE in a single cell, carrier aggregation, and dual connectivity situation according to an embodiment of the disclosure.

With reference to FIG. 15, radio protocols of a next generation mobile communication system include NR service data adaptation protocols (SDAPs) 1525 and 1570, NR packet data convergence protocols (PDCPs) 1530 and 1565, NR radio link controls (RLCs) 1535 and 1560, and NR medium access controls (MACs) 1540 and 1555 in the UE and the NR base station, respectively.

Main functions of the NR SDAPs 1525 and 1570 may include some of the following functions.

- transfer of user plane data
- mapping between a QoS flow and a DRB for both DL and UL
- marking QoS flow ID in both DL and UL packets
- reflective QoS flow to DRB mapping for the UL SDAP PDUs.

For the SDAP layer device, the UE may receive a configuration on whether to use a header of the SDAP layer device or whether to use a function of the SDAP layer device for each PDCP layer device, each bearer, or each logical channel with a radio resource control (RRC) message. In the case that the SDAP header is configured, the UE may instruct to update or reconfigure mapping information on uplink and downlink QoS flows and data bearers with non-access stratum (NAS) reflective quality of service (QoS) and access stratum (AS) reflective QoS of the SDAP header. The SDAP header may include QoS flow ID information indicating a QoS. The QoS information may be used as a data processing priority and scheduling information for supporting a smooth service.

Main functions of the NR PDCPs 1530 and 1565 may include some of the following functions.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the above description, reordering of the NR PDCP device may refer to a function of reordering PDCP PDUs received from a lower layer based on a PDCP sequence number (SN) and include a function of transferring data to a higher layer in the rearranged order. Alternatively, the reordering of the NR PDCP device may include a function of directly transferring data without considering the order, a function of rearranging the order and recording lost PDCP PDUs, a function of reporting a status of lost PDCP PDUs to the transmitting side, and a function of requesting retransmission of lost PDCP PDUs.

Main functions of the NR RLCs 1535 and 1560 may include some of the following functions.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, in-sequence delivery of the NR RLC device may mean a function of sequentially transferring RLC SDUs received from a lower layer to a higher layer. In-sequence delivery of the NR RLC device may include a function of reassembling and transferring an original RLC SDU in the case that an original RLC SDU is divided into several RLC SDUs and received, a function of rearranging received RLC PDUs based on an RLC sequence number (SN) or a PDCP sequence number (SN), a function of rearranging the order and recording lost RLC PDUs, a function of reporting a status of lost RLC PDUs to the transmitting side, and a function of requesting retransmission of lost RLC PDUs. In-sequence delivery of the NR RLC device may include a function of sequentially transferring, in the case that there is a lost RLC SDU, only RLC SDUs before the lost RLC SDU to a higher layer or a function of sequentially transferring all RLC SDUs received before the timer starts to the higher layer, when a predetermined timer has expired even if there is a lost RLC SDU. Alternatively, in-sequence delivery of the NR RLC device may include a function of sequentially transferring all RLC SDUs received so far to the higher layer, when a predetermined timer has expired even if there is a lost RLC SDU. Further, the RLC PDUs may be processed in the order of reception (regardless of the order of serial numbers and sequence numbers, in the order of arrival) and transferred to the PDCP device regardless of order (out-of sequence delivery), and in the case of a segment, the NR RLC device may receive segments stored in a buffer or to be received later, reconstitute segments into one complete RLC PDU, and then transfer the one complete RLC PDU to the NR PDCP device. The NR RLC layer may not include a concatenation function, and the NR MAC layer may perform a concatenation function in the NR RLC layer or a function of the NR RLC layer may be replaced with a multiplexing function of the NR MAC layer.

In the above description, out-of-sequence delivery of the NR RLC device may mean a function of directly transferring RLC SDUs received from a lower layer to a higher layer regardless of order and may include a function of reassembling and transferring several RLC SDUs in the case that one RLC SDU is originally divided into several RLC SDUs and received and a function of storing RLC SNs or PDCP sequence numbers (SNs) of received RLC PDUs, arranging the order, and recording lost RLC PDUs.

The NR MACs 1540 and 1555 may be connected to several NR RLC layer devices constituted in one UE, and main functions of the NR MAC may include some of the following functions.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

NR PHY layers 1545 and 1550 may perform operations of channel-coding and modulating higher layer data, making the higher layer data into OFDM symbols and transmitting the OFDM symbols through a radio channel, or demodulating OFDM symbols received through a radio channel, channel-decoding the OFDM symbols, and transferring the OFDM symbols to a higher layer.

The detailed structure of the radio protocol structure may be variously changed according to a carrier (or cell) operation method. For example, in the case that the base station transmits data to the UE based on a single carrier (or cell), the base station and the UE use a protocol structure having a single structure for each layer, as in 1500. In the case that the base station transmits data to the UE based on carrier aggregation (CA) using multiple carriers in a single TRP, the base station and the UE have a single structure up to RLC, as in 1510, but use a protocol structure for multiplexing the PHY layer through the MAC layer. As another example, in the case that the base station transmits data to the UE based on dual connectivity (DC) using multiple carriers in multiple TRPs, the base station and the UE have a single structure up to RLC, as in 1520, but use a protocol structure for multiplexing the PHY layer through the MAC layer.

With reference to the descriptions related to the above-described PDCCH and beam configuration, it is difficult to achieve required reliability in scenarios requiring high reliability such as URLLC because PDCCH repetition transmission is not currently supported in Rel-15 and Rel-16 NRs. In the disclosure, a PDCCH repetition transmission method through multiple transmission points (TRPs) is provided to improve PDCCH reception reliability of the UE. Specific methods thereof are specifically described in the following examples.

Hereinafter, embodiments of the disclosure will be described in detail with accompanying drawings. The contents of this disclosure are applicable to FDD and TDD systems. Hereinafter, higher-layer signaling (or higher layer signaling) in the disclosure is a method of transmitting a signal from a base station to a LTE using a downlink data channel of a physical layer, or from a UE to a base station using an uplink data channel of the physical layer and may also be referred to as RRC signaling, PDCP signaling, or a medium access control (MAC) control element (MAC CE).

Hereinafter, in the disclosure, in determining whether cooperative communication is applied, it is possible for the UE to use various methods in which a PDCCH(s) allocating a PDSCH to which cooperative communication is applied has(have) a specific format, or in which a PDCCH(s) allocating a PDSCH to which cooperative communication is applied include(s) a specific indicator indicating whether communication is applied, or in which a PDCCH(s) allocating a PDSCH to which cooperative communication is applied is(are) scrambled with specific RNTI, or in which cooperative communication application is assumed in a specific segment indicated by a higher layer, and the like. Hereinafter, for convenience of description, the case that the UE receives the PDSCH to which cooperative communication is applied based on conditions similar to the above description will be referred to as an NC-JT case.

Hereinafter, in the disclosure, determining a priority between A and B may be variously referred to as selecting one having a higher priority according to a predetermined priority rule and performing a corresponding operation or omitting or dropping an operation for one having a lower priority.

Hereinafter, in the disclosure, the examples are described through a plurality of embodiments, but they are not independent, and one or more embodiments may be applied simultaneously or in combination.

[Related to NC-JT]

According to an embodiment of the disclosure, non-coherent joint transmission (NC-JT) may be used for a UE to receive a PDSCH from a plurality of TRPs.

The 5G wireless communication system may support not only services requiring high transmission rates, but also services with very short transmission delays and services requiring high connection density, unlike conventional ones. In a wireless communication network including multiple cells, transmission and reception points (TRPs), or beams, coordinated transmission between each cell, TRP or/and beam may increase the strength of a signal received by a UE or efficiently perform interference control between each cell, TRP or/and beam to satisfy various service requirements.

Joint transmission (JT) is a typical transmission technology for the above-described cooperative communication, and transmits a signal to one UE through a plurality of different cells, TRPs, or/and beams, thereby increasing the strength or throughput of the signal received by the UE. In this case, characteristics of a channel between each cell, TRP or/and beam and the UE may be significantly different, and in particular, in the case of non-coherent joint transmission (NC-JT) supporting non-coherent precoding between each cell, TRP or/and beam, individual precoding, MCS, resource allocation, TCI indication, and the like may be required according to channel characteristics of each link between each cell, TRP or/and beam and UE.

The above-described NC-JT transmission may be applied to at least one of a physical downlink shared channel (PDSCH), a physical downlink control channel (PDCCH), a physical uplink shared channel (PUSCH), or a physical uplink control channel (PUCCH). During PDSCH transmission, transmission information such as precoding, MCS, resource allocation, and TCI is indicated as DL DCI, and for NC-JT transmission, the transmission information should be independently indicated for each cell, TRP or/and beam. This becomes a major factor in increasing a payload required for DL DCI transmission, which may adversely affect reception performance of a PDCCH transmitting DCI. Therefore, it is necessary to carefully design the tradeoff between a DCI information amount and a control information reception performance for JT support of a PDSCH.

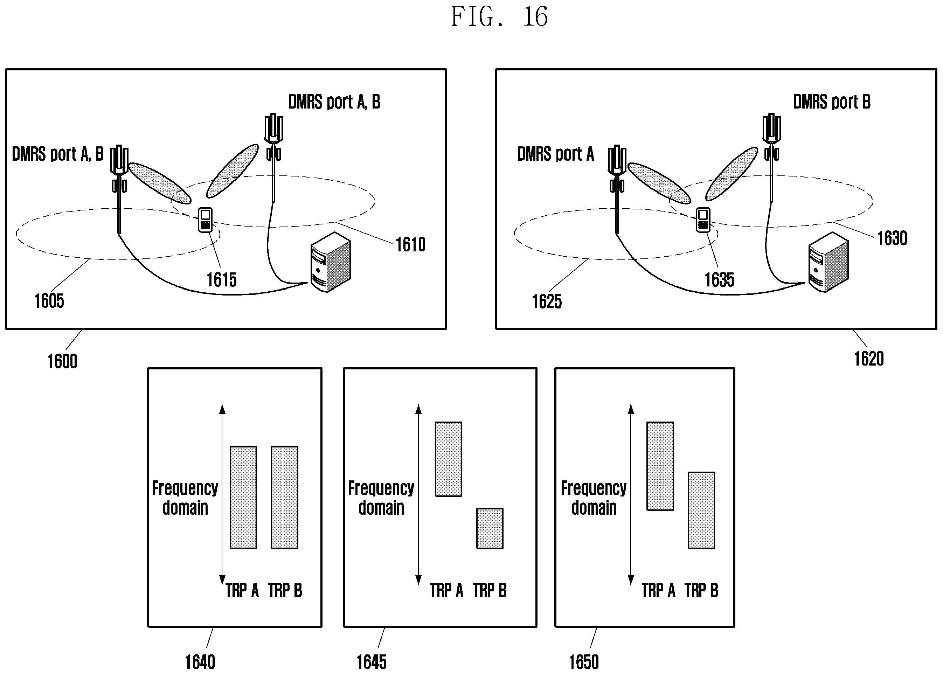

FIG. 16 is a diagram illustrating an example of an antenna port constitution and resource allocation for transmitting a PDSCH using cooperative communication in a wireless communication system according to an embodiment of the disclosure.

With reference to FIG. 16, examples for PDSCH transmission are described for each technique of joint transmission (JT), and examples for allocating radio resources for each TRP are illustrated.

With reference to FIG. 16, an example 1600 of coherent joint transmission (C-JT) supporting coherent precoding between each cell, TRP or/and beam is illustrated.

In the case of C-JT, a TRP A 1605 and a TRP B 1610 transmit single data (PDSCH) to an UE 1615, and joint precoding may be performed in a plurality of TRPs. This may mean that a DMRS is transmitted through the same DMRS ports in order for the TRP A 1605 and the TRP B 1610 to transmit the same PDSCH. For example, each of the TRP A 1605 and the TRP B 1610 may transmit a DRMS to the UE through a DMRS port A and a DMRS B. In this case, the UE may receive one DCI information for receiving one PDSCH demodulated based on the DMRS transmitted through the DMRS port A and the DMRS B.

FIG. 16 illustrates an example 1620 of non-coherentj oint transmission (NC-JT) supporting non-coherent precoding between each cell, TRP or/and beam for PDSCH transmission.

In the case of NC-JT, a PDSCH is transmitted to a UE 1635 for each cell, TRP or/and beam, and individual precoding may be applied to each PDSCH. Each cell, TRP or/and beam may transmit different PDSCHs or different PDSCH layers to the UE to improve throughput compared to single cell, TRP or/and beam transmission. Further, each cell, TRP or/and beam repeatedly transmits the same PDSCH to the UE, thereby improving reliability compared to single cell, TRP or/and beam transmission. For convenience of description, hereinafter, a cell, a TRP, or/and a beam are collectively referred to as a TRP.

In this case, various radio resource allocations may be considered in the case that all frequency and time resources used in a plurality of TRPs for PDSCH transmission are the same (1640), in the case that frequency and time resources used in a plurality of TRPs do not overlap at all (1645), and in the case that some of frequency and time resources used in a plurality of TRPs overlap (1650).

To support NC-JT, DCI of various forms, structures, and relationships may be considered in order to simultaneously allocate a plurality of PDSCHs to one UE.

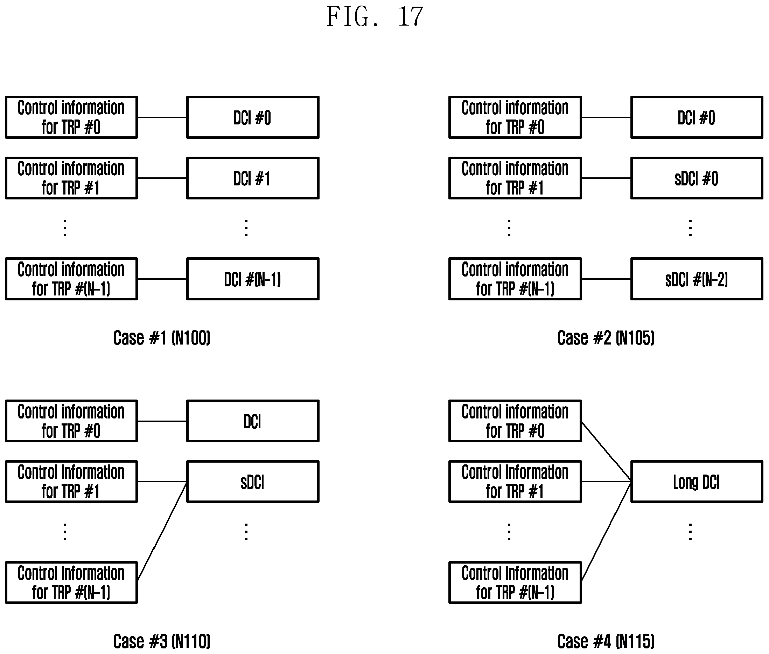

FIG. 17 is a diagram illustrating an example of a downlink control information (DCI) constitution for cooperative communication in a wireless communication system according to an embodiment of the disclosure.

FIG. 17 is a diagram illustrating an example of a constitution of downlink control information for NC-JT in which each TRP transmits a different PDSCH or a different PDSCH layer to a UE in a wireless communication system according to an embodiment of the disclosure.

With reference to FIG. 17, a case #1, 1710 is an example in which control information on PDSCHs transmitted in the (N-1) number of additional TRPs is transmitted independently of control information on PDSCHs transmitted in serving TRPs in a situation in which the different (N-1) number of PDSCHs are transmitted from the (N-1) number of additional TRPs (TRP#1 to TRP#(N-1)) in addition to a serving TRP (TRP#0) used during single PDSCH transmission. That is, the UE may acquire control information on PDSCHs transmitted from different TRPs (TRP#0 to TRP#(N-1)) through independent DCI (DCI#0 to DCI#(N-1)). Formats of the independent DCI may be the same as or different from each other, and payloads of the DCI may also be the same as or different from each other. In the case #1 described above, each PDSCH control or allocation degree of freedom may be completely guaranteed, but in the case that each DCI is transmitted in different TRPs, a coverage difference for each DCI may occur, resulting in deterioration of reception performance.

A case #2, 1715 illustrates an example in which each control information (DCI) on PDSCHs of the (N-1) number of additional TRPs is transmitted and each of these DCI is dependent on control information on the PDSCHs transmitted from the serving TRP in a situation in which the different (N-1) number of PDSCHs are transmitted from the (N-1) number of additional TRPs (TRP#1 to TRP#(N-1)) in addition to the serving TRP (TRP#0) used during single PDSCH transmission.

For example, in the case of DCI#0, which is control information on the PDSCH transmitted from the serving TRP (TRP#0), it includes all information elements of a DCI format 1_0, DCI format 1_1, and DCI format 1_2, but in the case of shortened DCI (hereinafter, sDCI) (sDCI#0 to sDCI#(N-2)), which is control information on PDSCHs transmitted from cooperative TRPs (TRP#1 to TRP#(N-1)), it may include only some of information elements of a DCI format 1_0, DCI format 1_1, and DCI format 1_2. Therefore, in the case of sDCI that transmits control information on PDSCHs transmitted from cooperative TRPs, because a payload is small compared to normal DCI (nDCI) that transmits PDSCH related control information transmitted from serving TRPs, the sDCI may include reserved bits compared to nDCI.

In the above-described case #2, each PDSCH control or allocation degree of freedom may be limited according to the content of information elements included in sDCI, but because a reception performance of sDCI is superior to that of nDCI, a probability of occurrence of a difference in coverage for each DCI may be reduced.

A case #3, 1720 illustrates an example in which one control information on PDSCHs of the (N-1) number of additional TRPs is transmitted and the DCI is dependent on control information on PDSCHs transmitted from the serving TRP in a situation in which the different (N-1) number of PDSCHs are transmitted from the (N-1) number of additional TRPs (TRP#1 to TRP#(N-1)) in addition to the serving TRP (TRP#0) used during single PDSCH transmission.

For example, in the case of DCI#0, which is control information on the PDSCH transmitted from the serving TRP (TRP#0), it includes all information elements of a DCI format 1_0, DCI format 1_1, and DCI format 1_2, and in the case of control information on PDSCHs transmitted from the cooperative TRP (TRP#1 to TRP#(N-1)), only some of information elements of a DCI format 1_0, DCI format 1_1, and DCI format 1_2 may be collected in one 'secondary' DCI (sDCI) and transmitted. For example, the sDCI may include at least one of HARQ related information such as frequency domain resource assignment, time domain resource assignment, and MCS of cooperative TRPs. Further, information not included in sDCI, such as a bandwidth part (BWP) indicator or carrier indicator, may follow DCI (DCI#0, normal DCI, nDCI) of the serving TRP.

In the case #3, 1720, each PDSCH control or allocation degree of freedom may be limited according to the content of information elements included in sDCI, but a reception performance of sDCI may be adjusted, and compared to the case #1, 1710 or the case #2, 1715, complexity of DCI blind decoding of the UE may be reduced.

A case #4, 1725 is an example in which control information on PDSCHs transmitted from the (N-1) number of additional TRPs is transmitted in the same DCI (Long DCI) as that of control information on PDSCHs transmitted from serving TRPs in a situation in which the different (N-1) number of PDSCHs are transmitted from the (N-1) number of additional TRPs (TRP#1 to TRP#(N-1)) in addition to the serving TRP (TRP#0) used during single PDSCH transmission. That is, the UE may acquire control information on PDSCHs transmitted from different TRPs (TRP#0 to TRP#(N-1)) through single DCI. In the case #4 (N115), the complexity of DCI blind decoding of the UE may not increase, but the degree of freedom in PDSCH control or allocation may be low, such as the number of cooperative TRPs being limited according to the long DCI payload limit.

In the following descriptions and embodiments, sDCI may refer to various auxiliary DCI, such as shortened DCI, secondary DCI, or normal DCI (DCI format 1_0 to 1_1 described above) including PDSCH control information transmitted from cooperative TRP, and in the case that special restrictions are not specified, the description is similarly applicable to the various auxiliary DCI.

In the following descriptions and embodiments, the above-described case #1, 1710, case #2, 1715, and case #3, 1720 in which one or more DCI (PDCCH) is used for supporting NC-JT may be classified into multiple PDCCH-based NC-JT, and the above-described case #4, 1725 in which single DCI (PDCCH) is used for supporting NC-JT may be classified into single PDCCH-based NC-JT. In multiple PDCCH-based PDSCH transmission, a CORESET in which DCI of a serving TRP (TRP#0) is scheduled and a CORESET in which DCI of cooperative TRPs (TRP#1 to TRP#(N-1)) is scheduled may be distinguished. As a method of distinguishing CORESETs, there may be a method of distinguishing through a higher layer indicator for each CORESET, a method of distinguishing through a beam configuration for each CORESET, and the like. Further, in the single PDCCH-based NC-JT, single DCI schedules a single PDSCH having a plurality of layers instead of scheduling a plurality of PDSCHs, and the above-described plurality of layers may be transmitted from a plurality of TRPs. In this case, the connection relationship between the layer and the TRP transmitting the layer may be indicated through a transmission configuration indicator (TCI) indication for the layer.

In the embodiments of the disclosure, a "cooperative TRP" may be replaced with various terms such as "cooperative panel" or "cooperative beam" in actual application.

In embodiments of the disclosure, "the case that NC-JT is applied" may be variously interpreted according to the situation such as "the case that the UE simultaneously receives one or more PDSCHs in one BWP", "the case that the UE simultaneously receives the PDSCH based on two or more transmission configuration indicator (TCI) indications in one BWP", and "the case that the PDSCH received by the UE is associated with one or more DMRS port groups", but for convenience, one expression was used.

In the disclosure, a radio protocol structure for NC-JT may be variously used according to TRP deployment scenarios. For example, in the case that there is no or small backhaul delay between cooperative TRPs, a method (CA-like method) using a structure based on MAC layer multiplexing similar to 1510 of FIG. 15 is possible. However, in the case that a backhaul delay between cooperative TRPs is too large to be ignored (e.g., in the case that information exchange such as CSI, scheduling, and HARQ-ACK between cooperative TRPs requires a time of 2 ms or more), similar to 1520 of FIG. 15, a method (DC-like method) of securing a robust characteristic against delay using an independent structure for each TRP from the RLC layer is possible.

A UE supporting C-JT/NC-JT may receive parameters or setting values related to C-JT/NC-JT from higher layer configurations, and set RRC parameters of the UE based on this. For a higher layer configuration, the UE may utilize a UE capability parameter, for example, tci-StatePDSCH. Here, the UE capability parameter, for example, tci-StatePDSCH may define TCI states for the purpose of PDSCH transmission, and the number of TCI states may be configured to 4, 8, 16, 32, 64, and 128 in FR1 and be configured to 64 and 128 in FR2, and maximum 8 states that may be indicated by the TCI field 3 bits of the DCI through the MAC CE message among the configured number may be configured. The maximum value 128 means a value indicated by maxNumberConfiguredTCIstatesPerCC in the tci-StatePDSCH parameter included in capability signaling of the UE. In this way, a series of configuration processes from a higher layer configuration to an MAC CE configuration may be applied to a beamforming instruction or a beamforming change command for at least one PDSCH in one TRP.

[Multi-DCI based Multi-TRP]

According to an embodiment of the disclosure, a downlink control channel for NC-JT transmission may be configured based on Multi-PDCCH.

In NC-JT based on multiple PDCCHs, when transmitting DCI scheduling the PDSCH of each TRP, it is possible to have a CORESET or search space distinguished for each TRP. The CORESET or search space for each TRP may be configured as in at least one of the following cases.

* Higher layer index configuration for each CORESET: CORESET configuration information configured by a higher layer may include an index value, and a TRP transmitting a PDCCH in the corresponding CORESET may be distinguished by an index value for each configured CORESET. That is, in a set of CORESETs having the same higher layer index value, it may be regarded that the same TRP transmits a PDCCH or that a PDCCH scheduling a PDSCH of the same TRP is transmitted. The index for each CORESET described above may be referred to as a CORESETPoolIndex, and it may be regarded that a PDCCH is transmitted from the same TRP for CORESETs in which the same CORESETPoolIndex value is configured. In the case of a CORESET in which a value of CORESETPoolIndex is not configured, it may be regarded that a default value of CORESETPoolIndex was configured, and the above-described default value may be 0.

* A plurality of PDCCH-Config configurations: a plurality of PDCCH-Configs are configured in one BWP, and each PDCCH-Config may include a PDCCH configuration for each TRP. That is, it may be regarded that a list of CORESETs for each TRP and/or a list of search spaces for each TRP may be constituted in one PDCCH-Config, and that one or more CORESETs and one or more search spaces included in one PDCCH-Config correspond to a specific TRP.

* CORESET beam/beam group constitution: TRPs corresponding to the CORESETs may be distinguished through beams or beam groups configured for each CORESET. For example, in the case that the same TCI state is configured in a plurality of CORESETs, it may be regarded that the corresponding CORESETs are transmitted through the same TRP or that a PDCCH scheduling the PDSCH of the same TRP is transmitted in the corresponding CORESET.

* Search space beam/beam group constitution: A beam or beam group is constituted for each search space, and thus, TRPs for each search space may be distinguished. For example, in the case that the same beam/beam group or TCI state is configured in a plurality of search spaces, it may be regarded that the same TRP transmits the PDCCH in the search space, or that the PDCCH scheduling the PDSCH of the same TRP is transmitted in the search space.

As described above, by dividing the CORESET or search space by TRP, it is possible to classify PDSCH and HARQ-ACK information for each TRP, and thus, independent HARQ-ACK codebook generation and independent PUCCH resource use for each TRP are possible.

The above configuration may be independent for each cell or each BWP. For example, two different CORESETPoolIndex values are configured to a PCell, but no CORESETPoolIndex value may be configured in a specific SCell. In this case, NC-JT transmission is constituted in the PCell, whereas it may be regarded that NC-JT transmission is not constituted in the SCell in which the CORESETPoolIndex value is not configured.

[Single-DCI-based Multi-TRP]

According to another embodiment of the disclosure, a downlink beam for NC-JT transmission may be configured based on a single-PDCCH.

In single PDCCH-based NC-JT, a PDSCH in which a plurality of TRPs are transmitted with one DCI may be scheduled. In this case, the number of TCI states may be used with a method of indicating the number of TRPs transmitting the corresponding PDSCH. That is, when the number of TCI states indicated in DCI scheduling the PDSCH is two, it may be regarded as single PDCCH-based NC-JT transmission, and when the number of TCI states is one, it may be regarded as single-TRP transmission. The TCI states indicated by the above DCI may correspond to one or two TCI states among TCI states activated by an MAC-CE. In the case that TCI states of DCI correspond to two TCI states activated by an MAC-CE, the correspondence between a TCI codepoint indicated by DCI and TCI states activated by an MAC-CE is established, and TCI states activated by the MAC-CE and corresponding to the TCI codepoint may be two.

The above configuration may be independent for each cell or each BWP. For example, in a Pcell, activated TCI states corresponding to one TCI codepoint may be maximum two, whereas in a specific Scell, activated TCI states corresponding to one TCI codepoint may be maximum one. In this case, NC-JT transmission is constituted in the PCell, but it may be regarded that NC-JT transmission is not constituted in the above-described SCell.

[PHR]

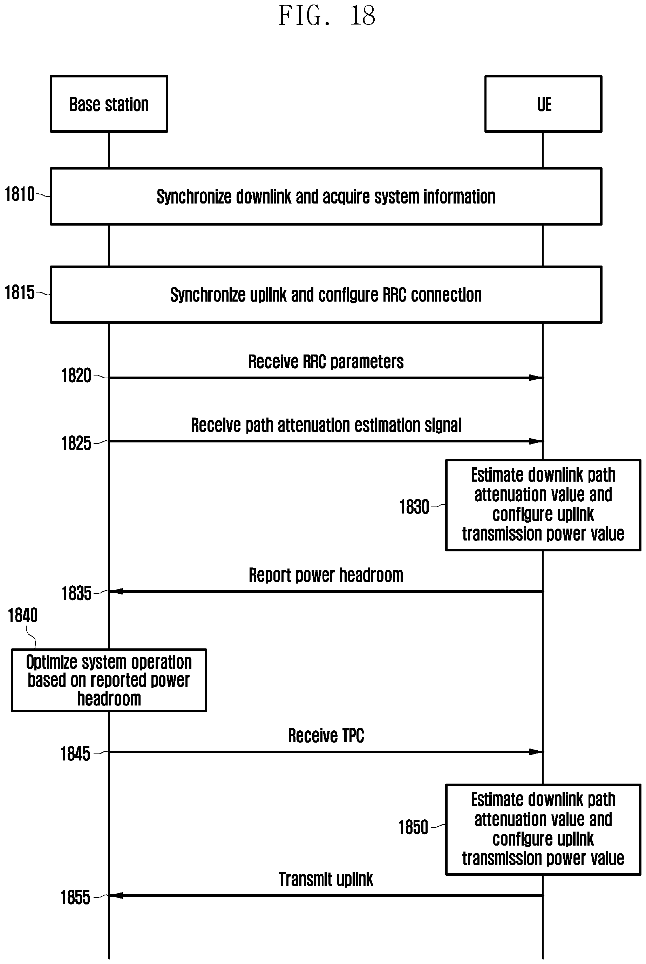

FIG. 18 is a message flow diagram illustrating a procedure in which a base station controls transmission power of a UE in a wireless communication system according to an embodiment of the disclosure.

With reference to FIG. 18, in step 1810, the UE in coverage of the base station may perform downlink synchronization with the base station and acquire system information. According to some embodiments, downlink synchronization may be performed through a primary synchronization signal/secondary synchronization signal (PSS/SSS) received from the base station. UEs that have performed downlink synchronization may receive a master information block (MIB) and a system information block (SIB) from the base station and acquire system information. In step 1815, the LTE may perform uplink synchronization with the base station through a random access procedure and configure a radio resource control (RRC) connection. In the random access procedure, the UE may transmit a random access preamble and message 3 (msg3) to the base station through uplink. In this case, uplink transmission power control may be performed during transmission of the random access preamble and the message 3. Specifically, the UE may receive parameters for uplink transmission power control from the base station through acquired system information, for example, SIB or may control uplink transmission power using promised parameters. In another embodiment of the disclosure, the LTE may measure reference signal received power (RSRP) from a path attenuation estimation signal transmitted by the base station and estimate a downlink path attenuation value as illustrated in [Equation 7]. The UE may configure uplink transmission power values for random access preamble and message 3 transmission based on the estimated path attenuation value.

[Equation 7]

$$\text{Downlink path attenuation} = \text{transmission power of base station signal - RSRP measured by UE}$$

In [Equation 7], transmission power of the base station signal means transmission power of the downlink path attenuation estimation signal transmitted by the base station. The downlink path attenuation estimation signal transmitted by the base station may be a cell-specific reference signal (CRS) or synchronization signal block (SSB). In the case that the path attenuation estimation signal is a cell-specific reference signal (CRS), the transmission power of the base station signal means transmission power of the CRS, and may be transmitted to the UE through a referenceSignalPower parameter of system information. In the case that a path attenuation estimation signal is a synchronization signal block (SSB), transmission power of the base station signal means transmission power of a demodulation reference signal (DMRS) transmitted to a secondary synchronization signal (SSS) and a PBCH, and may be transmitted to the UE through an ss-PBCH-BlockPower parameter of system information. In step 1820, the UE may receive RRC parameters for uplink transmission power control from the base station through LTE-specific RRC or common RRC. In this case, the received transmission power control parameters may be different from each other according to the type of an uplink channel and the type of a signal transmitted to uplink. That is, transmission power control parameters applied to transmission of a physical uplink control channel (PUCCH), a physical uplink shared channel (PUSCH), and a sounding reference signal (SRS) may differ from each other. Further, as described above, transmission power control parameters received by the UE through the SIB from the base station before the RRC connection configuration or transmission power control parameters used by the UE with pre-promised values before the RRC connection configuration may be included in the RRC parameter transmitted from the base station after the RRC connection configuration. Further, power headroom reporting (PHR) configuration information may be included in the RRC parameter, and in this case, the PHR configuration information may include a timer (e.g., phr-PeriodicTimer or phr-ProhibitTimer) value associated with PHR. The UE may use the RRC parameter value received from the base station after the RRC connection configuration for uplink transmission power control. In step 1825, the UE may receive a path attenuation estimation signal from the base station. More specifically, the base station may configure a channel state information-reference signal (CSI-RS) with a path attenuation estimation signal of the UE after an RRC connection configuration of the UE. In this case, the base station may transmit information on transmission power of the CSI-RS to the UE through the powerControlOffsetSS parameter of UE dedicated RRC information. In this case, powerControlOffsetSS may mean a transmission power difference (offset) between the SSB and the CSI-RS. In step 1830, the UE may estimate a downlink path attenuation value and configure an uplink transmission power value. More specifically, the UE may measure downlink RSRP using the CSI-RS and estimate the downlink path attenuation value through [Equation 7] using information on transmission power of the CSI-RS received from the base station. The UE may configure uplink transmission power values for PUCCH, PUSCH, and SRS transmission based on the estimated path attenuation value. In step 1835, the UE may perform PHR to the base station. In the case that a timer associated with the PHR received in step 1820 has expired or the change in the path attenuation value is a specific threshold value or more, the UE according to an embodiment of the disclosure may trigger the PHR and perform step 1835. In the disclosure, PH may mean the difference between maximum output power (Pcmax) of the UE and current transmission power (Ppusch) of the UE. In step 1840, the base station may optimize a system operation based on the reported power headroom. For example, in the case that a power headroom value reported by a specific UE to the base station is the positive number, the base station may allocate more resources (RBs) to the corresponding UE to increase system yield. In step 1845, the UE may receive a transmission power control command (TPC) from the base station. For example, when a power headroom value reported by a specific UE to the base station is a negative number, the base station may allocate fewer resources to the corresponding LTE or reduce transmission power of the corresponding UE through a transmission power control command. Thereby, system yield may be increased or unnecessary power consumption of the UE may be reduced. In step 1850, the UE may update transmission power based on the TPC command. In this case, the TPC command may be transmitted to the UE through UE-specific DCI or group common DCI. Therefore, the base station may dynamically control transmission power of the UE through the TPC command. In step 1855, the UE may perform uplink transmission based on the updated transmission power.

Steps 1810 to 1855 of FIG. 18 may be performed simultaneously or some of them may be omitted.

[PUSCH power control]

PUSCH transmission power may be determined through Equation 8.

[Equation 8]

$$P_{PUSCH}(i, j, q_d, l) =$$
$$\min \left\{ \begin{array}{l} P_{\mathrm{CMAX},f,c}(i), \\ P_{0_{\mathrm{PUSCH}},b,f,c}(j) + 10\log_{10}\left(2^{\mu} \cdot M_{RB,b,f,c}^{PUSCH}(i)\right) + \alpha_{b,f,c}(j) \cdot \mathrm{PL}_{b,f,c}(q_d) + \Delta_{\mathrm{TF},b,f,c}(i) + f_{b,f,c}(i,l) \end{array} \right\} \text{[dBm]}$$

In [Equation 8], $P_{\mathrm{CMAX},f,c}(i)$ is maximum transmission power configured to the LTE for a carrier f of a serving cell c at a PUSCH transmission time point i. $P_{0_{\mathrm{PUSCH}},b,f,c}(j)$ is a reference configuration transmission power value according to an activated uplink bandwidth part (BWP) b of the carrier f of the serving cell c, and has different values according to various transmission types j. In PUSCH transmission, the PUSCH may have various values according to that the PUSCH is a message 3 PUSCH for random access, a configured grant PUSCH, or a scheduled PUSCH. $M_{RB,b,f,c}^{PUSCH}(i)$ means the magnitude of a frequency to which the PUSCH is allocated. $\alpha_{b,f,c}(j)$ means a compensation ratio value for a path loss of UL BWP b of the carrier f of the serving cell c, may be configured by a higher-layer signal, and have different values according to j. $\mathrm{PL}_{b,f,c}(q_d)$ is a downlink path loss estimation value of UL BWP b of the carrier f of the serving cell c and uses a value measured through a reference signal in an activated downlink bandwidth part. The reference signal may be an SS/PBCH block or CSI-RS. In [Equation 7], as described above, the downlink path loss may be calculated. In another embodiment of the disclosure, $PL_{b,f,c}(q_d)$ is a downlink warning attenuation value and is path attenuation calculated by the UE, as illustrated in [Equation 7]. The UE calculates path attenuation based on the reference signal resource associated with the SS/PBCH block or the CSI-RS according to whether the higher-layer signal is configured. The reference signal resource may select one of several reference signal resource sets by a higher-layer signal or an L1 signal, and the UE calculates path attenuation based on the reference signal resource. $\Delta_{TF,b,f,c}(i)$ is a value determined by a modulation and coding scheme (MCS) value of the PUSCH at a PUSCH transmission time point i of UL BWP b of the carrier f of the serving cell c. $f_{b,f,c}(i,l)$ is a power control adaptation value, and may dynamically adjust a power value by the TPC command.

The TPC command is divided into an accumulated mode and an absolute mode, and one of two modes is determined by a higher-layer signal. The accumulation mode may be increased or decreased according to the TPC command in a form in which a currently determined power control adaptation value is accumulated to a value indicated by the TPC command, and has a relationship of $f_{b,f,c}(i,l) = f_{b,f,c}(i - i_0,l) + \Sigma\delta_{PUSCH,b,f,c}$. $\delta_{PUSCH,b,f,c}$ is a value indicated in the TPC command. In the absolute mode, the value is determined by the TPC command regardless of the currently determined power control adaptation value, and has a relationship of $f_{b,f,c}(i,l) = \delta_{PUSCH,b,f,c}$. [Table 44] illustrates values that may be indicated in the TPC command.

[Table 44]

| TPC Command Field | Accumulated $\delta_{PUSCH,b,f,c}$ or $\delta_{SRS,b,f,c}$ [dB] | Absolute $\delta_{PUSCH,b,f,c}$ or $\delta_{SRS,b,f,c}$ [dB] |
|---|---|---|
| 0 | -1 | -4 |
| 1 | 0 | -1 |
| 2 | 1 | 1 |
| 3 | 3 | 4 |

[PUCCH power control]

The following [Equation 9] is an equation for determining PUCCH transmission power.

[Equation 9]

$$P_{PUCCH,b,f,c}(i, q_u, q_d, l)$$
$$= \min\left\{ \begin{array}{l} P_{CMAX,f,c}(i), \\ P_{0_{PUCCH,b,f,c}}(q_u) + 10\log_{10}\left(2^{\mu} \cdot M_{RB,b,f,c}^{PUCCH}(i)\right) + PL_{b,f,c}(q_d) + \Delta_{F_{PUCCH}}(i) + \Delta_{TF,b,f,c}(i) + f_{b,f,c}(i,l) \end{array} \right\}$$
$$[dBm]$$

In [Equation 9], $P_{0_{PUCCH,b,f,c}}(q_u)$ is a reference configuration transmission power value, has different values according to various transmission types $q_u$, and may have a value changed by higher-layer signals such as RRC or MAC CE. In the case that the value is changed by the MAC CE, the LTE determines that the corresponding value is applied from a k + koffset slot in the case that a slot in which the HARQ-ACK is transmitted for a PDSCH receiving the MAC CE is k. koffset has different values according to subcarrier spacing, and may have, for example, 3 ms. $M_{RB,b,f,c}^{PUCCH}(i)$ is the magnitude of a frequency resource domain to which the PUCCH is allocated. $PL_{b,f,c}(q_d)$ is a path attenuation estimation value of the UE, and in [Equation 7], as described above, the UE calculates based on a specific reference signal among various CSI-RSs or SS/PBCHs according to whether the higher-layer signal is configured and the type.

For repetition transmission PUCCHs, the same $q_d$ is applied. For repetition transmission PUCCHs, the same $q_u$ is applied.

According to the description of the above-described PUSCH and aperiodic/semi-permanent CSI reporting, in the current Rel-15/16 NR, the aperiodic CSI reporting may be multiplexed only in a first PUSCH or the first actual repetition according to a PUSCH repetition transmission type A or B. That is, the aperiodic CSI reporting may be transmitted with only a single TRP using a single transmission beam. In Rel-17 FeMIMO, in order to acquire better reliability during PUSCH repetition transmission, a method of extending and supporting to a plurality of TRP-based PUSCH repetitions capable of securing spatial diversity by applying a plurality of transmission beams to PUSCH repetition is being discussed. In this discussion, discussions are mainly being made to support PUSCH repetition transmissions to a plurality of TRPs by applying different beams to each PUSCH repetition based on the existing PUSCH repetition transmission type A or B. In this case, in the case of a plurality of TRP-based PUSCH repetition transmission methods A or B, and in the case that aperiodic CSI reporting is multiplexed and transmitted, when it is multiplexed only in first PUSCH repetition as in the existing Rel-15/16 scheme, transmission to the corresponding TRP may fail due to a channel deterioration factor such as blockage; thus, a method of multiplexing once for each transmission to each TRP may be required. In this case, as described above, upon repeatedly transmitting each PUSCH due to characteristics of a polar code, when time and frequency resource allocation values, that is, the number of resource elements (REs) allocated to the UE is the same, the base station may perform combining after reception. Therefore, in the case that the aperiodic CSI reporting is multiplexed while the transport block is transmitted using the PUSCH repetition transmission type A or B, a method of determining which PUSCH repetition to multiplex the aperiodic CSI reporting among all PUSCH repetitions may be needed. Further, in the case that aperiodic or semi-permanent CSI reporting is multiplexed when no transport block is transmitted in the PUSCH repetition transmission type B, even if the number of PUSCH repetitions is configured to greater than 1, it should be able to be ensured that at least one transmission is possible for each TRP. In this disclosure, in the case of multiplexing or transmitting aperiodic/semi-permanent CSI reporting, a method of multiplexing or transmitting PUSCH repetition transmissions considering a plurality of TRPs is provided, thereby improving CSI reception reliability at the base station. Specific methods thereof are specifically described in the following examples.

In the following description of the disclosure, for convenience, a cell, transmission point, panel, beam, or/and transmission direction that may be distinguished through higher layer/L1 parameters such as a TCI state or spatial relation information, or cell ID, TRP ID, panel ID, reference signal (RS) resource index (e.g., values indicated by the SRI field in DCI of Embodiment 1 to be described later) are unified and described as a transmission reception point (TRP). Therefore, in actual application, the TRP may be appropriately replaced with one of the above terms.

Hereinafter, in the disclosure, in determining whether cooperative communication is applied, the UE may use various methods in which a PDCCH(s) allocating a PDSCH to which cooperative communication is applied has a specific format, or a PDCCH(s) allocating a PDSCH to which cooperative communication is applied may include a specific indicator indicating whether cooperative communication is applied and in which a PDCCH(s) allocating a PDSCH to which cooperative communication is applied may be scrambled with specific RNTI, or in which cooperative communication is assumed in a specific section indicated by a higher layer. Hereinafter, for convenience of description, the case that the UE receives the PDSCH to which cooperative communication is applied based on conditions similar to the above will be referred to as an NC-JT case.

Hereinafter, embodiments of the disclosure will be described in detail with accompanying drawings. Hereinafter, the base station is a subject performing resource allocation of a UE, and may be at least one of a gNode B, a gNB, an eNode B, a node B, a base station (BS), a radio access unit, a base station controller, or a node on a network. The terminal may include a user equipment (UE), a mobile station (MS), a cellular phone, a smart phone, a computer, or a multimedia system capable of performing a communication function. Hereinafter, an embodiment of the disclosure is described using a 5G system as an example, but the embodiment of the disclosure may be applied to other communication systems having a similar technical background or channel type. For example, LTE or LTE-A mobile communication and mobile communication technology developed after 5G may be included therein. Accordingly, the embodiments of the disclosure may be applied to other communication systems through some modification without significantly departing from the scope of the disclosure as determined by a person skilled in the art. The contents of this disclosure are applicable to FDD and TDD systems.

Further, in describing the disclosure, in the case that it is determined that a detailed description of a related function or constitution may unnecessarily obscure the gist of the disclosure, a detailed description thereof will be omitted. Terms described below are terms defined in consideration of functions in the disclosure, which may vary according to intentions or customs of users and operators. Therefore, the definition should be made based on the content throughout this specification.

Hereinafter, in describing the disclosure, higher layer signaling may be signaling corresponding to at least one or a combination of one or more of the following signaling.

- MIB(Master Information Block)
- SIB(System Information Block) or SIB X(X=1, 2, ...)
- RRC(Radio Resource Control)
- MAC(Medium Access Control) CE(Control Element)

Further, L1 signaling may be signaling corresponding to at least one or a combination of one or more of signaling methods using the following physical layer channels or signaling.

- PDCCH(Physical Downlink Control Channel)
- DCI(Downlink Control Information)
- UE-specific DCI
- Group common DCI
- Common DCI
- Scheduling DCI (e.g., DCI used for the purpose of scheduling downlink or uplink data)
- Non-scheduling DCI (e.g., DCI that is not for the purpose of scheduling downlink or uplink data)
- PUCCH(Physical Uplink Control Channel)
- UCI(Uplink Control Information)

Hereinafter, in the disclosure, determining a priority between A and B may be variously referred to as selecting one with higher priority according to a predetermined priority rule and performing a corresponding operation or omitting or dropping an operation for one with a lower priority.

Hereinafter, in the disclosure, the examples are described through a plurality of embodiments, but they are not independent, and one or more embodiments may be applied simultaneously or in combination.

<Embodiment 1: PUSCH repetition transmission method considering multiple TRPs>

Embodiment 1 of the disclosure describes a method of configuring higher layer signaling and instructing L1 signaling for PUSCH repetition transmission considering multiple TRPs. PUSCH repetition transmission considering multiple TRPs may be operated through single or multi-DCI-based instruction, and will be described in each of Embodiments 1-1 and 1-2. Further, in Embodiment 1-3 of the disclosure, a configured grant PUSCH repetition transmission method considering multiple TRPs will be described. Further, in Embodiment 1-4 of the disclosure, a method of configuring an SRS resource set for PUSCH repetition transmission considering multiple TRPs will be described.

<Embodiment 1-1: PUSCH repetition transmission method considering single DCI-based multiple TRPs>

As an embodiment of the disclosure, in Embodiment 1-1, a PUSCH repetition transmission method considering single DCI-based multiple TRPs will be described. The UE may report that a PUSCH repetition transmission method considering single DCI-based multiple TRPs is possible through LTE capability reporting. The base station may configure which PUSCH repetition transmission method is to be used for the UE that has reported the corresponding UE capability (e.g., UE capability supporting PUSCH repetition transmission considering single DCI-based multiple TRPs) through higher layer signaling. In this case, higher layer signaling may be configured by selecting one of two of a PUSCH repetition transmission type A and a PUSCH repetition transmission type B.

In Rel-15/16, in the case of a PUSCH repetition transmission method considering a single TRP, both codebook and non-codebook based transmission methods were performed based on single DCI. When transmitting a codebook-based PUSCH, the UE may apply the same value to each PUSCH repetition transmission using an SRI or TPMI indicated by one DCI. Further, when transmitting a non-codebook based PUSCH, the UE may apply the same value to each PUSCH repetition transmission using an SRI indicated by one DCI. For example, when codebook-based PUSCH transmission and PUSCH repetition transmission type A is configured by higher layer signaling, and a time resource allocation index in which the number of PUSCH repetition transmissions is configured to 4, an SRI index 0, and a TPMI index 0 are instructed through DCI, the UE applies both an SRI index 0 and a TPMI index 0 to each of four PUSCH repetition transmissions. Here, the SRI may be related to a transmission beam, and the TPMI may be related to a transmission precoder. Unlike the PUSCH repetition transmission method considering a single TRP, a PUSCH repetition transmission method considering multiple TRPs may should differently apply a transmission beam and transmission precoder to transmission to each TRP. Accordingly, the LTE may perform PUSCH repetition transmission considering multiple TRPs by receiving a plurality of SRIs or TPMIs indicated through DCI and applying them to each PUSCH repetition transmission.

In the case of instructing a PUSCH repetition transmission method considering single DCI-based multiple TRPs to the UE, methods of indicating a plurality of SRIs or TPMIs in the case that the PUSCH transmission method is a codebook or non-codebook may be considered as follows.

[Method 1] Transmission of single DCI with a plurality of SRI or TPMI fields

In order to support a PUSCH repetition transmission method considering single DCI-based multiple TRPs, the base station may transmit DCI having a plurality of SRI or TPMI fields to the UE. Such DCI has a new format (e.g., DCI format 0_3) or an existing format (e.g., DCI format 0_1, 0_2), but when additional higher layer signaling (e.g., signaling capable of distinguishing whether a plurality of SRI or TPMI fields may be supported) is configured and the corresponding configuring exists, the DCI may be DCI in which a plurality of SRI or TPMI fields, which has previously existed only one, exist. For example, in the case that codebook-based PUSCH transmission is configured by higher layer signaling, when higher layer signaling capable of distinguishing whether a plurality of SRI or TPMI fields may be supported is configured, the UE may receive DCI of a new format or an existing format having two SRI fields and two TPMI fields to perform codebook-based PUSCH repetition transmission considering multiple TRPs. As another example, in the case that non-codebook-based PUSCH transmission is configured by higher layer signaling, when the UE is configured with higher layer signaling capable of distinguishing whether a plurality of SRI or TPMI fields may be supported, the UE may receive DCI of a new format or an existing format having two SRI fields to perform noncodebook based PUSCH repetition transmission considering multiple TRPs. For all of the above-described codebook and non-codebook based PUSCH transmissions, when a plurality of SRI fields are used, an SRS resource set in which usage, which is higher layer signaling is configured to a codebook or non-codebook may be configured to two or more, each SRI field may indicate an SRS resource, and each SRS resource may be included in two different SRS resource sets. Details on the plurality of SRS resource sets will be described in detail in Embodiment 1-4.

[Method 2] Transmission of DCI to which enhanced SRI and TPMI fields are applied

In order to support a PUSCH repetition transmission method considering single DCI-based multiple TRPs, the UE may receive a MAC-CE for supporting an enhanced SRI or TPMI field from the base station. The corresponding MAC-CE may contain information instructing to change the interpretation of a codepoint of a DCI field to indicate a plurality of transmission beams for a specific codepoint of an SRI field in the DCI or to indicate a plurality of transmission precoders for a specific codepoint of a TPMI field. The following two methods for indicating a plurality of transmission beams may be considered.

Reception of an MAC-CE activating a specific codepoint of the SRI field to indicate one SRS resource to which a plurality of SRS spatial relation info is connected

Reception of an MAC-CE activating a specific codepoint of the SRI field to indicate a plurality of SRS resources to which one SRS spatial relation info is connected

In the case that a plurality of SRS resources are indicated using an enhanced SRI field, because a transmission power control parameter of the SRS resource is configured for each SRS resource set, in order to configure different transmission power control parameters for each TRP, each SRS resource may exist in a different SRS resource set. Accordingly, there may be two or more SRS resource sets in which usage, which is higher layer signaling, is configured to a codebook or non-codebook.

<Embodiment 1-2: PUSCH repetition transmission method considering multi-DCI-based multiple TRPs>

As an embodiment of the disclosure, in Embodiment 1-2, a PUSCH repetition transmission method considering multi-DCI-based multiple TRPs will be described. As described above, because all PUSCH repetition transmission methods in Rel-15/16 is a method considering a single TRP, it was possible that a transmission beam, transmission precoder, resource allocation, and power control parameters use the same values for each repetition transmission. However, in the case of PUSCH repetition transmission considering multiple TRPs, different parameters may need to be applied for each TRP for PUSCH transmission related parameters configured by higher layer signaling or indicated by DCI for each PUSCH repetition transmission to multiple TRPs. For example, in the case that multiple TRPs exist in different directions from the UE, because transmission beams or transmission precoders may be different, transmission beams or transmission precoders for each TRP need to be configured or indicated, respectively. As another example, in the case that multiple TRPs exist at different distances from the UE, independent power control schemes between the multiple TRPs and the UE may be required; thus, different time/frequency resource allocations may be made. For example, in order to increase power per RE, a relatively small number of RBs and a large number of symbols may be allocated to a TRP existing in a relatively distant distance compared to a specific TRP. Therefore, in order to transmit different information to the UE through single DCI, a bit length of the corresponding DCI may be very large; thus, it may be more efficient to instruct PUSCH repetition transmission to the UE through a plurality of DCIs.

The UE may report that a PUSCH repetition transmission method considering multi-DCI-based multiple TRPs is possible through UE capability reporting. For the UE that has reported a corresponding UE capability (e.g., LTE capability supporting PUSCH repetition transmission considering multi-DCI-based multiple TRPs), the base station may notify the UE to perform PUSCH repetition transmission considering multiple TRPs through multi-DCI using a configuration through higher layer signaling, an indication through L1 signaling, or a configuration and instruction through a combination of higher layer signaling and L1 signaling. The base station may use a method of configuring or instructing PUSCH repetition transmission considering multi-DCI-based multiple TRPs as follows.

When performing PUSCH repetition transmission considering multi-DCI-based multiple TRPs, the UE may expect different time/frequency resource allocation information indicated by each DCI in consideration of TRPs of different distances from the UE. The UE may report to the base station whether different time/frequency resources may be allocated with the UE capability. The base station may configure whether to allocate different time/frequency resources to the UE by higher layer signaling, and the UE that has received the corresponding configuration may expect different time/frequency resource allocation information to be instructed from each DCI. In this case, the UE may receive a configuration or an instruction from the base station for PUSCH repetition transmission considering multi-DCI-based multiple TRPs in consideration of a higher layer signaling configuration and conditions between a plurality of DCI fields. In the case that transmitting beam and transmission precoder information is instructed through multi-DCI, SRI and TPMI in DCI received first may be applied first when applying to the transmission beam mapping method of Embodiment 2, and SRI and TPMI in DCI received second may be applied second when applying to the transmission beam mapping method of Embodiment 2.

The base station may configure a CORESETPoolIndex, which is higher layer signaling, for each CORESET to the UE, and when receiving a certain CORESET, the UE may know from which TRP the corresponding CORESET is transmitted. For example, when a CORESETPoolIndex is configured to 0 in a CORESET#1 and a CORESETPoolIndex is configured to 1 in a CORESET#2, the UE may know that the CORESET#1 is transmitted from TRP#0 and that the CORESET#2 is transmitted from TRP#1. Further, the fact that DCI transmitted in each CORESET in which the CORESETPoolIndex value is configured to 0 and 1 indicates the repeated PUSCH may be implicitly indicated by a condition between specific fields in a plurality of transmitted DCI. For example, in the case that HARQ process number field values in the plurality of DCI transmitted by the base station to the UE are the same and that NDI field values are the same, the UE may regard implicitly that each of the corresponding plurality of DCI schedules the repeated PUSCH in consideration of the multiple TRPs. In the case that the HARQ process number field value is the same and that the NDI field value is the same, there may be restrictions on reception of a plurality of DCI. For example, the maximum interval between the plurality of DCI receptions may be defined within the number of one or more specific slots or one or more specific symbols. In this case, the UE may perform PUSCH transmission based on the minimum transport block size calculated (or identified) based on time/frequency resource allocation information indicated differently in a plurality of DCI.

<Embodiment 1-3: Configured grant PUSCH repetition transmission method considering multiple TRPs>

As an embodiment of the disclosure, in Embodiments 1-3, a configured grant PUSCH repetition transmission method considering multiple TRPs will be described. The UE may report to the base station with a UE capability whether to repeatedly transmit a configured grant PUSCH considering multiple TRPs. For configured grant PUSCH repetition transmission considering multiple TRPs, the base station may configure to the UE by higher layer signaling, instruct to the UE by L1 signaling, or configure and instruct to the UE using a combination of higher layer signaling or L1 signaling using the following various methods.

[Method 1] Activate single DCI-based single configured grant configuration

Method 1 is a method of indicating a plurality of SRIs or TPMIs based on the single DCI to the UE, and activating a single configured grant configuration along with the corresponding indication. A method of indicating a plurality of SRIs or TPMIs with single DCI may follow a method of Embodiment 1-1, and when there is only one configured grant configuration for the UE, all bits of a HARQ process number field and a redundancy version field in the corresponding DCI may be indicated as 0. When a plurality of configured grant configurations exist for the UE and one of the plurality of configured grant configurations is activated by the corresponding DCI, a HARQ process number field in the corresponding DCI may indicate an index of the configured grant configuration, and all bits in a redundancy version field may be indicated as 0. The UE may map a transmission beam and a transmission precoder to each activated configured grant PUSCH repetition transmission using a plurality of SRIs or TPMIs indicated by single DCI according to a transmission beam mapping method in the following Embodiment 2.

[Method 2] Activate single configured grant configuration based on multi-DCI

Method 2 is a method of indicating each SRI or TPMI with each DCI to the LTE based on the above multi-DCI, and activating a single configured grant configuration along with the corresponding indication. A method of indicating each SRI or TPMI with each DCI based on multi-DCI may follow the method of the Embodiment 1-2, and when there is only one configured grant configuration for the UE, all bits of all HARQ process number fields and the redundancy version field in the corresponding multi-DCI may be indicated as 0. When a plurality of configured grant configurations exist for the UE and one of the plurality of configured grant configurations is activated by the corresponding multi-DCI, all HARQ process number fields in the multi-DCI may indicate an index of the same configured grant configuration, and all bits of all redundancy version fields within the multi-DCI may be indicated as 0. According to a condition of the DCI field in the above multi-DCI-based PUSCH repetition transmission, it is characterized that the NDI field in addition to the HARQ process number field has the same value. The UE may map a transmission beam and a transmission precoder to each activated configured grant PUSCH repetition transmission using a plurality of SRIs or TPMIs indicated by multi-DCI according to the transmission beam mapping method described below. For example, when a transmission beam and transmission precoder related information indicated by first received DCI are SRI#1 and TPMI#1, respectively, a transmission beam and transmission precoder related information indicated by second received DCI are SRI #2 and TPMI#2, respectively, and a transmission beam mapping method configured by higher layer signaling is cyclical, by applying SRI#1 and TPMI#1 to odd-numbered transmissions (1, 3, 5,...) of the activated configured grant PUSCH repetition transmission and SRI#2 and TPMI#2 to even-numbered transmissions (2, 4, 6,...) of repetition transmission, the UE may perform PUSCH transmission.

[Method 3] Activate multi-DCI-based multi-configured grant configurations

Method 3 is a method of indicating each SRI or TPMI with each DCI to the LTE based on the above multi-DCI, and activating multiple configured grant configurations together with the corresponding indication. A method of indicating each SRI or TPMI with each DCI based on multi-DCI may follow a method of the above Embodiment 1-2, a plurality of configured grant configurations exist for the UE, and an index of each configured grant configuration may be indicated through a HARQ process number field in each DCI. Further, all bits of all redundancy version fields in the corresponding multi-DCI may be indicated as 0. According to a condition of a DCI field in the above multi-DCI-based PUSCH repetition transmission, it is characterized that an NDI field in addition to the HARQ process number field has the same value. The UE may receive MAC-CE signaling instructing (commanding) connection between a plurality of configured grant configurations activated by multi-DCI. The UE may receive multi-DCI from the base station 3 ms after performing HARQ-ACK transmission for MAC-CE signaling, and when a configured grant configuration index indicated in each DCI matches configured grant configuration indexes that receive an instruction (command) of connection through the above MAC-CE signaling, the UE may perform PUSCH repetition transmission considering multiple TRPs based on the instructed configured grant configurations. In this case, some configurations may be shared with the same value between a plurality of connected configured grant configurations. For example, repK, which is higher layer signaling that means the number of repetition transmissions, repK-RV, which is higher layer signaling that means the order of a redundancy version in repetition transmission, and periodicity, which is higher layer signaling that means a period of repetition transmission may be configured to have the same value in the connected configured grant configuration.

<Embodiment 1-4: SRS resource set configuration method for PUSCH repetition transmission considering multiple TRPs>

As an embodiment of the disclosure, in Embodiment 1-4, a method of configuring an SRS resource set for PUSCH repetition transmission considering multiple TRPs will be described. Because power control parameters of an SRS (e.g., alpha, p0, pathlossReferenceRS, srs-PowerControlAjdustmentStates, and the like that may be configured by higher layer signaling) may vary for each SRS resource set, when repeatedly transmitting a PUSCH considering multiple TRPs, for different power control of an SRS for each TRP, the number of SRS resource sets may be increased to two or more, and different SRS resource sets may be used for the purpose of supporting different TRPs. An SRS resource set configuration method considered in this embodiment may be applied to the above Embodiments 1-1 to 1-3.
When performing PUSCH repetition transmission considering single DCI-based multiple TRPs, a plurality of SRIs indicated by single DCI may be selected from SRS resources existing in different SRS resource sets. For example, when two SRIs are indicated by single DCI, a first SRI may be selected from an SRS resource set#1, and a second SRI may be selected from an SRS resource set#2.
When repeatedly transmitting a PUSCH considering multi-DCI-based multiple TRPs, each SRI indicated by each of two DCIs may be selected from SRS resources existing in different SRS resource sets, and each SRS resource set may be explicitly or implicitly connected (correspond) with higher layer signaling (e.g., CORESETPoolIndex) meaning each TRP. As a method of explicitly connecting, a quasi-static connection state between the CORESET and the SRS resource set may be notified to the UE by configuring a CORESETPoolIndex value in a configuration of the SRS resource set configured to the higher layer. As another example, as a more dynamic and explicit connection method, a MAC-CE that activates a connection between a specific CORESET (including all cases that a value of CORESETPoolIndex is configured to 0, 1, or not configured) and the SRS resource set may be used. After receiving an MAC-CE that activates a connection between a specific CORESET (including all cases that a CORESETPoolIndex value is configured to 0, 1, or not configured) and the SRS resource set, the UE may transmit HARQ-ACK and regard that the connection between the corresponding CORESET and the SRS resource set has been activated from after 3 ms. As an implicit method, an implicit connection state is assumed using a specific criterion between the CORESETPoolIndex and an index of the SRS resource set. For example, assuming that the UE is configured with two SRS resource sets #0 and #1, the UE may assume that the CORESETPoolIndex is not configured or a SRS resource set#0 set was connected with a CORESET configured to 0 and that a SRS resource set#1 was connected to a CORESET in which the CORESETPoolIndex is configured to 1.

For the above single or multi-DCI-based methods, the UE that has explicitly or implicitly configured or indicated with a connection between different SRS resource sets and each TRP may expect to configure sameAsFci2 to a srs-PowerControlAdjustmentStates value configured by higher layer signaling in each SRS resource set and may not expect to configure to separateClosedLoop. Further, it may be expected that the usage configured by higher layer signaling within each SRS resource set is equally configured to a codebook or noncodebook.

<Embodiment 1-5: Dynamic switching method for determining PUSCH transmission considering a single TRP or PUSCH transmission considering multiple TRPs based on codebook>

As an embodiment of the disclosure, in Embodiment 1-5, a dynamic switching method for determining PUSCH transmission considering a single TRP or PUSCH transmission considering multiple TRPs based on a codebook will be described.

From a UE capable of performing codebook-based PUSCH repetition transmission in consideration of single DCI-based multiple TRPs according to the above Embodiments 1-1 and 1-4, the base station may receive UE capability reporting from the UE and configure higher layer signaling for performing PUSCH repetition transmission through multiple TRPs to the UE. In this case, when performing PUSCH repetition transmission in consideration of single DCI-based multiple TRPs as in the Embodiment 1-4, in order to indicate SRS resources existing in different SRS resource sets, the base station may transmit single DCI including a plurality of SRI fields to the UE. In this case, each of the plurality of SRI fields may be interpreted in the same method as that in NR Release 15/16. More specifically, a first SRI field may select an SRS resource from a first SRS resource set, and a second SRI field may select an SRS resource from a second SRS resource set. Similar to a plurality of SRI fields, in order to repeatedly transmit a PUSCH in consideration of multiple TRPs, the base station may transmit single DCI including a plurality of TPMI fields to the UE so that each TPMI corresponding to the SRS resource indicated by each SRI field may be selected. In this case, the plurality of TPMI fields may be indicated through the same DCI as that including the above-described plurality of SRI fields. A plurality of TPMIs to be used upon PUSCH transmission to each TRP may be selected through the following methods using a plurality of TPMI fields:

[Method 1] Each TPMI field may be interpreted in the same method as that in NR Release 15/16. For example, the first TPMI field may indicate a TPMI index and layer information on the SRS resource indicated by a first SRI field, and the second TPMI field may indicate a TPMI index and layer information on the SRS resource indicated by a second SRI field. In this case, the first TPMI field and the second TPMI field may indicate the same layer information.
[Method 2] The first TPMI field may indicate a TPMI index and layer information on the SRS resource indicated by the first SRI field in the same method as that in NR Release 15/16. In contrast, because the second TPMI field selects a TPMI index for the same layer as that indicated by the first TPMI field, the second TPMI field may not indicate layer information, but may indicate TPMI index information on an SRS resource indicated by the second SRI field.

In the case that a plurality of TPMIs are selected through the method 2, a bit length of the second TPMI field may be smaller than that of the first TPMI field. This is because the second TPMI field indicates one value (index) of the same TPMI index candidates as those of the layer indicated by the first TPMI field, the second TPMI field may not indicate layer information.

The UE may receive single DCI including a plurality of SRI fields and a plurality of TPMI fields, and support a dynamic switching method of determining PUSCH repetition transmission considering multiple TRPs or PUSCH repetition transmission considering a single TRP based on this. The UE may support dynamic switching using a reserved value that does not have any meaning among values that may have a plurality of TPMI fields or SRI fields included in the received DCI. For example, when a bit length of the SRI field is 2 bits, total 4 cases may be expressed, and in this case, each expressible case may be defined to a codepoint. Further, in the case that three codepoints among total four codepoints have a meaning on which SRI to indicate and that the remaining one codepoint do not have any meaning, this codepoint may be a codepoint indicating a reserved value.(In the following description, a codepoint indicating a reserved value may be expressed as being configured as reserved). It will be described in more detail through the contents to be described later.

In order to describe a dynamic switching method in which a plurality of TPMI fields may be supported through a reserved value as a specific example, it is assumed that a PUSCH antenna port is 4. Further, it is assumed that the first TPMI field is composed of 6 bits, a higher layer parameter codebookSubset is configured to fullyAndPartialAndNon-

Coherent and that it is indicated in the same method as that of NR Release 15/16. In this case, in the first TPMI field, indexes 0 to 61 may be configured to indicate valid TPMI indexes and layer information, and indexes 62 to 63 may be configured to reserved. When the second TPMI field includes only TPMI index information excluding layer information as in the above method 2, the second TPMI field may indicate only a TPMI index of the case that a layer for PUSCH transmission is limited to one value (e.g., one value of 1 to 4) according to the first TPMI field. In this case, the number of bits of the second TPMI field may be configured based on the number of bits capable of representing a layer with the most candidates among TPMI index candidates that may be configured for each layer. For example, according to an example in which a layer 1 has candidates from 0 to 27, a layer 2 has candidates from 0 to 21, a layer 3 has candidates from 0 to 6, and a layer 4 has candidates from 0 to 4, the layer 1 has the most candidates. Accordingly, the number of bits of the second TPMI field may be configured to 5 according to the number of TPMI index candidates of the layer 1. When a second TPMI field constitution is described in detail, in the case that the first TPMI field indicates 1 layer and the corresponding TPMI index, the UE may interpret the second TPMI field to a codepoint indicating a value of one of TPMI indexes 0 to 27 for 1 layer and a codepoint indicating a reserved value. For example, in the case that the first TPMI field indicates 2 layer and the corresponding TPMI index, the UE may interpret the second TPMI field to a codepoint indicating a value of one of TPMI indexes 0 to 21 for 2 layer and a codepoint indicating a reserved value. Further, for example, in the case that the first TPMI field indicates 3 or 4 layer and the corresponding TPMI index, the LTE may interpret the second TPMI field similarly to the above. In this case, in the case that there are two or more codepoints indicating a reserved value in addition to the codepoint indicating a TPMI index in the second TPMI field, codepoints indicating two reserved values may be used for indicating dynamic switching. That is, among codepoints of the second TPMI field composed of 5 bits, the second to last codepoint (i.e., the 31st codepoint in the example) corresponding to a codepoint indicating a reserved value may be used for indicating PUSCH repetition transmission considering a single TRP with the first TRP, and the last codepoint (i.e., the 32nd codepoint in the example) may be used for indicating PUSCH repetition transmission considering a single TRP with the second TRP. In this case, the LTE may receive an indication of layer information and TPMI index information for PUSCH repetition transmission considering a single TRP by the first TPMI field. The assumption as described above is for convenience of description, but the disclosure is not limited thereto.

For convenience of description, when the specific example for two TRPs is generalized and described, the LTE may receive single DCI including two SRI fields and two TPMI fields, and perform dynamic switching according to a codepoint indicated by the second TPMI field. When a codepoint of the second TPMI field indicates a TPMI index for a layer indicated by the first TPMI field, the UE may perform PUSCH repetition transmission considering multiple TRPs. When the second TPMI field indicates a second to last codepoint corresponding to a codepoint indicating a reserved value, the UE may perform PUSCH repetition transmission considering a single TRP for the TRP 1 and identify layer information and TPMI index information for codebook-based PUSCH transmission from the first TPMI field. When the second TPMI field indicates a last codepoint corresponding to a codepoint indicating a reserved value, the UE may perform PUSCH repetition transmission considering a single TRP for the TRP 2, and identify layer information for codebook-based PUSCH transmission and TPMI index information from the first TPMI field.

The above-described example used two reserved codepoints at the end of the second TPMI field in order to indicate dynamic switching, but this embodiment is not limited thereto. That is, dynamic switching may be indicated using codepoints indicating two other reserved values of the second TPMI field, and PUSCH repetition transmission considering a single TRP for the TRP 1 or PUSCH repetition transmission considering a single TRP for the TRP 2 may be indicated by mapping to a codepoint indicating each reserved value.

Further, the above-described example describes the case that the second TPMI field is determined by the method 2, but even in the case that the second TPMI field is determined identically to NR Release 15/16 as in the method 1, dynamic switching may be supported using the reserved codepoints of TPMI with the same method with that of the above-described example.

For example, in the case that the number of codepoints indicating a reserved value of the second TPMI field is smaller than 2, the number of bits of the second TPMI field is increased by 1, and the second to last codepoint and the last codepoint based on the increased number of bits may be used for supporting dynamic switching.

In the case that two TPMI fields are determined as in the method 1, a method of supporting dynamic switching according to whether each TPMI field was indicated by a codepoint indicating a reserved value may be additionally considered. That is, when a first TPMI field is indicated with a codepoint indicating a reserved value, the LTE may perform PUSCH repetition transmission considering a single TRP for the TRP 2, and when the second TPMI field is indicated with a codepoint indicating a reserved value, the UE may perform PUSCH repetition transmission considering a single TRP for the TRP 1. When both TPMI fields indicate codepoints for TPMIs other than codepoints indicating reserved values, the UE may perform PUSCH repetition transmission considering multiple TRPs. When a codepoint having a reserved value does not exist, the UE may increase the number of bits in the TPMI field by 1, and use a last codepoint based on the increased number of bits for supporting dynamic switching.

As another method of supporting dynamic switching, the UE may indicate dynamic switching with two SRI fields and identify layer information and TPMI index information for PUSCH repetition transmission considering multiple TRPs or single TRP from two TPMI fields. When one or more codepoints indicating a reserved value exist in each SRI field, the UE may support dynamic switching according to whether the corresponding SRI field indicates a codepoint indicating a reserved value. When the first SRI field indicates a codepoint indicating a reserved value and the second SRI field indicates an SRS resource of the second SRS resource set, the LTE may perform PUSCH repetition transmission considering a single TRP for the TRP 2. In this case, in order to perform PUSCH repetition transmission considering a single TRP for the TRP 2, the UE may identify layer information and TPMI index information from the first TPMI field. When the second SRI field indicates a codepoint indicating a reserved value and the second SRI field indicates an SRS resource of the second SRS resource set, the LTE may perform PUSCH repetition transmission considering a single TRP for the TRP 1. In this case, in order to perform PUSCH repetition transmission considering a single TRP for the TRP 1, the UE may identify layer information and TPMI index information from the first TPMI field. When both SRI fields indicate a SRS resource of each SRS resource set rather than a codepoint indicating the reserved value, the UE may perform PUSCH repetition transmission considering multiple TRPs. In this case, the UE may identify layer information and TPMI index information from a first TPMI field in order to perform PUSCH repetition transmission for the TRP 1 and identify TPMI index information from a second TPMI field in order to perform PUSCH repetition transmission for the TRP 2. In this case, when a PUSCH for the TRP 1 and the TRP 2 is transmitted, the layer may be configured identically. When a codepoint indicating a reserved value does not exist in two SRI fields, the UE may increase the number of bits of each SRI field by 1 and use a last codepoint among codepoints indicating a reserved value for supporting dynamic switching based on the increased number of bits.

<Embodiment 1-6: Dynamic switching method for determining PUSCH transmission considering a single TRP or PUSCH transmission considering multiple TRPs based on a non-codebook>

As an embodiment of the disclosure, in Embodiments 1-6, a dynamic switching method for determining PUSCH transmission considering a single TRP or PUSCH transmission considering multiple TRPs based on a non-codebook will be described.

According to the above Embodiments 1-1 and 1-4, the base station may receive UE capability reporting from a UE capable of performing non-codebook-based PUSCH repetition transmission in consideration of single DCI-based multiple TRPs and configure higher layer signaling for performing PUSCH repetition transmission through multiple TRPs to the LTE. In this case, when performing PUSCH repetition transmission in consideration of single DCI-based multiple TRPs, as in Embodiment 1-4, in order to indicate SRS resources existing in different SRS resource sets, the base station may transmit single DCI including a plurality of SRI fields to the UE. A plurality of SRI fields may be selected according to, for example, the following method.

[Method 1] Each SRI field may be selected in the same method as that in NR Release 15/16. For example, a first SRI field may indicate an SRS resource for PUSCH transmission in a first SRS resource set, and a second SRI field may indicate an SRS resource for PUSCH transmission in a second SRS resource set. In this case, the first SRI field and the second SRI field may indicate the same layer information.

[Method 2] The first SRI field may indicate an SRS resource(s) for PUSCH transmission in the first SRS resource set in the same method as that in NR Release 15/16. The second SRI field may indicate an SRS resource(s) for PUSCH transmission in the second SRS resource set for the same layer as that indicated by the first SRI field.

In the case that a plurality of SRIs are selected through the method 2, a bit length of the second SRI field may be smaller than that of the first SRI field. This is because the second SRI is determined among SRI candidates for the same layer as that determined by the first SRI field among SRI candidates for all supportable layers.

The UE may receive single DCI including a plurality of SRIs and support a dynamic switching method of determining PUSCH repetition transmission considering multiple TRPs or PUSCH repetition transmission considering a single TRP based on this. The LTE may support dynamic switching using codepoints indicating reserved values of a plurality of SRI fields included in the received DCI.

In order to describe a dynamic switching method that may be supported through codepoints indicating reserved values of a plurality of SRI fields as a specific example, it is assumed that the number of PUSCH antenna ports is maximum 4 and that the number of SRS resources in each SRS resource set is 4. Further, it is assumed that the first SRI field is composed of 4 bits and is indicated in the same method as that in NR Release 15/16. In this case, in a first SRI area, indexes 0 to 14 may be configured to indicate a layer according to a selected SRS resource and an SRS resource for PUSCH transmission, and an index 15 may be configured to a codepoint indicating a reserved value. When the second SRI field selects the same number of SRS resources as the number of layers indicated by the first SRI as in the above method 2, the second SRI field may indicate an SRS resource selection candidate of the case that a layer for PUSCH transmission is limited to one value (e.g., a value of one of 1 to 4) according to the first SRI field. In this case, the number of bits of the second SRI field may be configured based on a layer having the largest number of candidates among the number of SRS resource selection candidates for each layer. For example, there may be total 4 candidates as SRI field values of 0 to 3 indicating SRS resource selection candidates for a layer 1, and there may be total 6 candidates as SRI field values of 4 to 9 indicating SRS resource selection candidates for a layer 2, there may be total 4 candidates as SRI field values of 10 to 13 indicating SRS resource selection candidates for a layer 3, and there may be total 1 candidate as a SRI field value of 14 indicating SRS resource selection candidates for a layer 4. In this case, because the number of candidates for the layer 2 has the largest value as total 6, the number of bits of the second SRI field may be configured to 3. When a constitution of the second SRI field is described in detail, in the case that the SRI value is indicated when a layer for PUSCH transmission with the first SRI field is 1, the UE may interpret the second SRI field to a codepoint indicating one value of SRI candidates 0 to 3 for 1 layer or another value to a codepoint having a reserved value. For example, in the case that an SRI value is indicated when a layer for PUSCH transmission with the first SRI field is 2, the LTE may interpret the second SRI field to a codepoint indicating one of SRI candidates 0 to 5 for 2 layer or another value to a codepoint having a reserved value. Further, for example, in the case of indicating an SRI value when a layer for PUSCH transmission with the first SRI field is 3 or 4, the UE may interpret the second SRI field in a similar method. In this case, in the case that there are two or more codepoints indicating reserved values in addition to codepoints indicating SRI values according to layers in the second SRI field, codepoints indicating two reserved values may be used for indicating dynamic switching. That is, among codepoints of the second SRI field composed of 3 bits, the second to last codepoint (i.e., the 7th codepoint in the example) corresponding to a codepoint indicating a reserved value may be used for indicating PUSCH repetition transmission considering a single TRP with a first TRP, and the last codepoint (i.e., the 8th codepoint in the example) may be used for indicating PUSCH repetition transmission considering a single TRP with a second TRP. In this case, the UE may receive an indication of an SRI for PUSCH repetition transmission considering a single TRP with the first SRI field. The assumption as described above is for convenience of description, but the disclosure is not limited thereto.

For convenience of description, when the above specific example for two TRPs is generalized and described, the UE may receive single DCI including two SRI fields and perform dynamic switching according to a codepoint indicated by the second SRI field. When the codepoint of the second SRI field indicates an SRI value for a layer indicated by the first SRI field, the UE may perform PUSCH repetition transmission considering multiple TRPs. When the second SRI field indicates the second to last codepoint corresponding to a codepoint indicating a reserved value, the LTE may perform PUSCH repetition transmission considering a single TRP for the TRP 1, and identify a SRI for non-codebook based PUSCH transmission from the first SRI field. When the second SRI field indicates a last codepoint corresponding to the codepoint indicating a reserved value, the LTE may perform PUSCH repetition transmission considering a single TRP for the TRP 2 and identify an SRI for non-codebook based PUSCH transmission from the first SRI field.

In the above-described example, codepoints indicating two reserved values at the end of the second SRI field were used for indicating dynamic switching, but this embodiment is not limited thereto. That is, dynamic switching may be indicated using codepoints indicating two other reserved values of the second SRI field, and PUSCH repetition transmission considering a single TRP for the TRP 1 or PUSCH repetition transmission considering a single TRP for the TRP 2 may be indicated by mapping to a codepoint indicating each reserved value.

Further, the above-described example described the case that the second SRI field is determined by the method 2, but even in the case that the second SRI field is determined identically to NR Release 15/16 as in the method 1, dynamic switching may be supported using a codepoint indicating a reserved value of the SRI field with the same method as that in the above example.

For example, in the case that the number of codepoints indicating a reserved value of the second SRI field is smaller than 2, the number of bits of the second SRI field is increased by 1, and the second to last codepoint and the last codepoint based on the increased number of bits may be used for supporting dynamic switching.

In the case that two SRI fields are determined as in the method 1, a method of supporting dynamic switching according to whether each SRI field is indicated by a codepoint indicating a reserved value may be additionally considered. That is, when the first SRI field is indicated by a codepoint indicating a reserved value, the LTE may perform PUSCH repetition transmission considering a single TRP for the TRP 2, and when the second SRI field is indicated by a codepoint indicating a reserved value, the LTE may perform PUSCH repetition transmission considering a single TRP for the TRP 1. When both SRI fields indicate a codepoint for indicating an SRI rather than a codepoint indicating a reserved value, the UE may perform PUSCH repetition transmission considering multiple TRPs. When a codepoint indicating a reserved value does not exist, the number of bits in a SRI area is increased by 1, and a last codepoint based on the increased number of bits may be used for supporting dynamic switching.

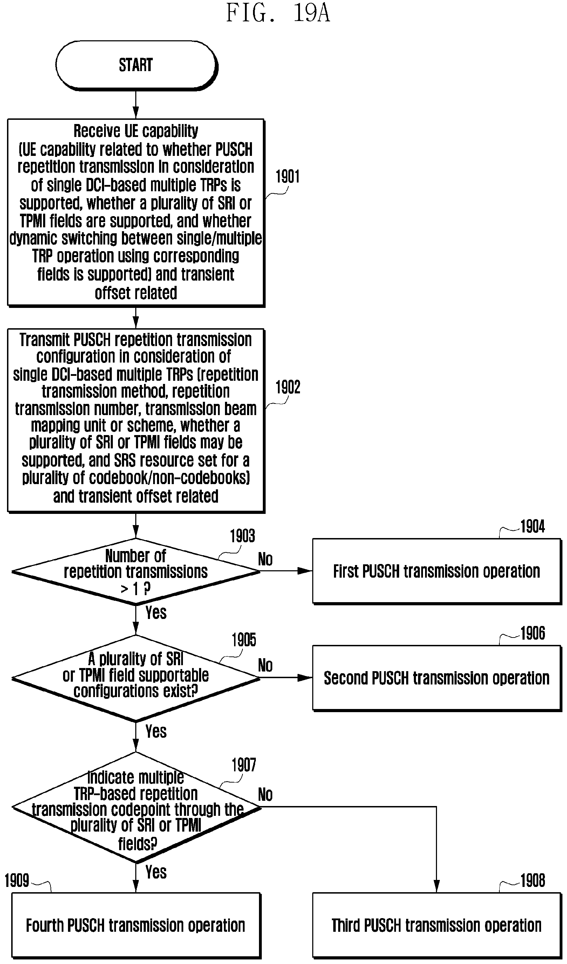

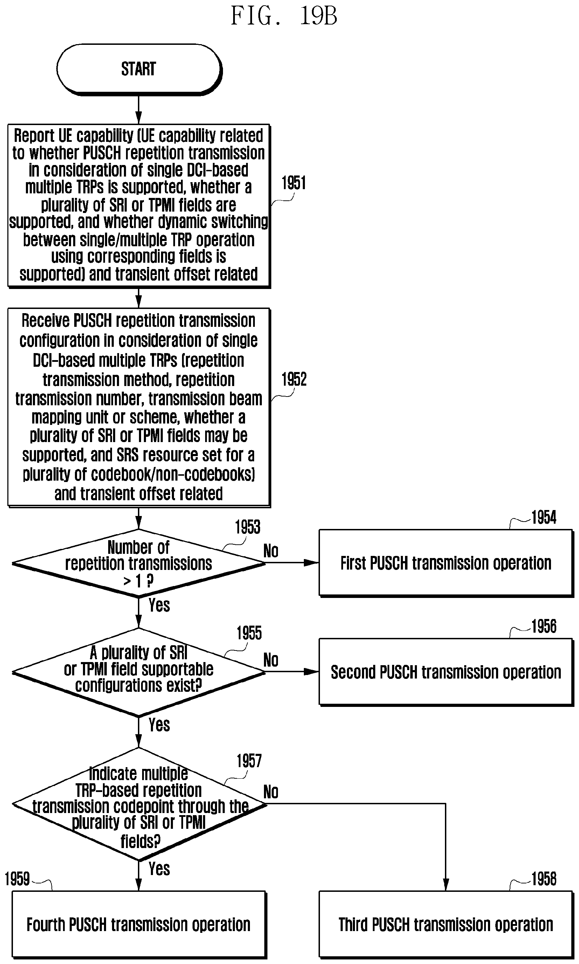

FIGS. 19A and 19B illustrate an operation of a base station and a LTE for PUSCH repetition transmission in consideration of single DCI transmission-based multiple TRPs in which a plurality of SRI or TPMI fields exist according to an embodiment of the disclosure.

With reference to FIGS. 19A and 19B, the UE performs UE capability reporting on whether the UE supports PUSCH repetition transmission in consideration of single DCI-based multiple TRPs, whether a plurality of SRI or TPMI fields are supported, whether dynamic switching between single/multiple TRP operations using the corresponding fields is supported, and transient offset related information when changing a transmission beam to be described later in the following Embodiment 2 (1951), and the base station that has received the LTE capability report (1901) transmits a PUSCH repetition transmission configuration in consideration of a single DCI-based multi-TRP to the UE (1902). In this case, the transmitted configuration information may include a repetition transmission method, the number of repetition transmissions, a transmission beam mapping unit or method, whether a plurality of SRI or TPMI fields may be supported, SRS resource sets for a plurality of codebooks or non-codebooks, and transient offset related information when changing a transmission beam to be described later in the following Embodiment 2. The UE that has received the corresponding configuration (1952) may be configured by higher layer signaling or identify the number of repetition transmissions of PUSCH transmission through a time resource allocation field in DCI. In this case, when the number of repetition transmissions is not greater than 1 (1953), that is, when repetition transmission is not performed, the LTE may perform a first PUSCH transmission operation (1954). The first PUSCH transmission operation may be an operation of performing single transmission of a PUSCH to a single TRP using one SRI and TPMI field in case of codebook-based PUSCH transmission and one SRI field, that is, one transmission beam in case of non-codebook-based PUSCH transmission. In the case that the number of repetition transmissions is greater than 2 (1953), when the UE does not receive a plurality of SRI or TPMI field supportable configurations from the base station (1955), the UE may perform a second PUSCH transmission operation (1956). The second PUSCH transmission operation may be an operation of repeatedly transmitting a PUSCH to a single TRP using one SRI and TPMI field in the case of codebook-based PUSCH transmission and one SRI field, that is, one transmission beam in case of non-codebook-based PUSCH transmission. When the UE received a plurality of SRI or TPMI field supportable configurations from the base station (1955) and the UE does not indicate a codepoint meaning multiple TRP-based repetition transmissions through the plurality of SRI or TPMI fields in the received DCI, but indicated a codepoint meaning single TRP-based repetition transmission (1957), as described above in Embodiments 1-5 and 1-6, the UE may perform a third PUSCH transmission operation (1958). The third PUSCH transmission operation is an operation in which the LTE repeatedly transmits a PUSCH to a specific single TRP through a codepoint indicating single TRP transmission among codepoints in each field, that is, using one transmission beam while using two SRI and TPMI fields in the case of codebook-based PUSCH transmission and two SRI fields in the case of non-codebook-based PUSCH transmission. Therefore, repetition transmission to the TRP 1 or 2 may be instructed according to which codepoint is indicated through a plurality of SRI or TPMI fields. When the LTE received a configuration capable of supporting a plurality of SRI or TPMI fields from the base station (1955), and the UE indicated a codepoint meaning multiple TRP-based repetition transmission through the plurality of SRI or TPMI fields in the received DCI (1957), the LTE may perform a fourth PUSCH transmission operation (1959). The fourth PUSCH transmission operation is an operation in which the UE repeatedly transmits the PUSCH to a plurality of TRPs through codepoints that instruct transmission of a plurality of TRPs among codepoints in each field, that is, using two transmission beams while using two SRI and TPMI fields in the case of codebook-based PUSCH transmission and two SRI fields in the case of non-codebook-based PUSCH transmission.

<Embodiment 2: Time Interval Definition and Uplink Signal Transmission Method Considering LTE Capability Reporting>

As an embodiment of the disclosure, the UE may perform UE capability reporting by defining a time interval (e.g., which may be expressed as a transient period, a transient offset, a transient gap, and the like) that may be required between a plurality of uplink transmissions or may be configured from the base station, and apply a corresponding time interval between each uplink transmission when transmitting an uplink signal considering this. In order to transmit an uplink signal, the UE may change at least one of an uplink beam, transmission power, or frequency before signal transmission. Further, in order to transmit an uplink signal, the UE may change a panel before signal transmission. Accordingly, in order to transmit an uplink signal, the UE may change at least one of an uplink beam, transmission power, frequency, or panel before signal transmission. Here, for example, in the case of dividing a plurality of beams into a plurality of beam groups, a panel corresponding to each beam group may be configured, such as a panel #1 for a beam group #1, a panel #2 for a beam group #2,... As another example, in the case that the panel includes a plurality of antenna modules for forming a beam in the UE and that the plurality of antenna modules are installed in different locations, a panel corresponding to each antenna module may be configured. Further, a plurality of panels may be configured in various manners capable of distinguishing a plurality of beams having different beam widths, beam directions, and the like. Changes for transmission of such uplink signals may be performed in the following cases:

Case 1) In the case that an uplink signal (e.g., PUCCH, PUSCH, or SRS) is repeatedly transmitted to a plurality of TRPs, when the UE changes an uplink beam, transmission power, or frequency in order to change and transmit the TRP between repetition transmissions or when the UE changes the panel in order to change and transmit the TRP between repetition transmissions

Case 2) In the case that the base station instructs transmission of an uplink signal by MAC CE signaling or L1 signaling including DCI, when the UE changes an uplink beam, transmission power, or frequency in order to transmit an uplink signal or when the UE changes a panel in order to transmit uplink signals

Case 3) When SRS transmission is instructed or configured, when a plurality of SRS resources included in the SRS resource set are used, when an uplink beam, transmission power, or frequency is changed in order to use a plurality of SRS resource sets, or when the UE changes a panel for SRS transmission

In Case 1, the case of changing the transmission information in order to change a TRP between repetition transmissions may be determined according to a mapping pattern between repetition transmission and TRP. Here, repetition transmission means, for example, the case of transmitting the same uplink signal. In the 3GPP Release 16 standard, when the base station repeatedly transmits a PDSCH, the base station supports two mapping patterns (e.g., 'Sequential' and 'Cyclical'). A mapping pattern for repeatedly transmitting the PDSCH to a plurality of TRPs may be applied when the UE repeatedly transmits uplink signals to a plurality of TRPs. 'Sequential' mapping is a method of changing and transmitting a TRP in two repetition transmission units, for example, as in {TRP1, TRP1, TRP2, TRP2}, and 'cyclical' mapping is a method of changing and transmitting a TRP for every repetition transmission, for example, as in {TRP1, TRP2, TRP1, TRP2}. When at least one of an uplink beam for transmitting an uplink signal to a plurality of TRPs, transmission power, or frequency (or frequency hop) to transmit is determined, the LTE may apply uplink transmission change information determined according to a mapping method to transmit an uplink signal. Alternatively, when a panel for transmitting an uplink signal to a plurality of TRPs is determined, by applying uplink transmission change information determined according to the mapping method, the UE may transmit an uplink signal. Here, the uplink transmission change information may mean at least one of an uplink beam for transmitting an uplink signal, transmission power, or a frequency to transmit. Alternatively, the uplink transmission change information may mean a panel for transmitting an uplink signal. When the PUSCH is repeatedly transmitted to a plurality of TRPs, for example, both a PUSCH repetition transmission type A and a PUSCH repetition transmission type B may be included. The PUSCH repetition transmission type B may consider both nominal repetition and actual repetition in a repetition transmission unit.

In Case 2, the base station may configure a higher layer parameter for uplink signal transmission to the UE and instruct the UE to transmit an uplink signal (e.g., PUCCH, PUSCH, or SRS) through L1 signaling (e.g., DCI). In this case, a time interval between signaling instructing to transmit an uplink signal to the UE by the base station and an uplink signal transmitted by the UE is defined to 'time offset', which may be replaced with a 'scheduling interval', 'scheduling offset', 'time interval', 'transient period', 'transient offset', 'transient time', and the like. In the case that the base station instructs to transmit an uplink signal to the UE by L1 signaling including DCI, the time offset may be calculated from a last symbol in which a PDCCH including DCI is transmitted and before a first symbol in which an 'uplink (e.g., PUCCH including HARQ-ACK for aperiodic/semipersistent SRS, PUSCH, or PDSCH) is transmitted. In the case that a DCI decoding time of the UE is additionally considered, the time offset may be calculated as 'after a last symbol in which a PDCCH including DCI is transmitted and before a first symbol in which an uplink signal is transmitted'. In the case that the base station instructs transmission of an uplink signal through MAC CE signaling, the time offset may be calculated by the following method.

Method 1: between the end of a last symbol in which a PDSCH including MAC CE signaling is transmitted and before the start of a first symbol in which an uplink signal (e.g., aperiodic/semi-persistent SRS) is transmitted

Method 2: between the end of a last symbol in which a PUCCH/PUSCH including a HARQ-ACK for a PDSCH including MAC CE signaling is transmitted and before the start of a first symbol in which an uplink signal is transmitted

Method 3: between a MAC CE application delay time (e.g., until the first slot after 3 ms has elapsed) has elapsed at an end time point of a last symbol in which a PUCCH/PUSCH including a HARQ-ACK for a PDSCH including MAC CE signaling is transmitted and before the start of a first symbol in which an uplink signal is transmitted

This time offset may be converted into an absolute time unit (e.g., ms) or a symbol unit. When receiving an instruction to transmit an uplink signal from the base station, the UE may change at least one of an uplink transmission beam for transmitting an uplink beam, transmission power, or frequency during a time offset. Alternatively, the UE may change a panel for uplink transmission during the time offset.

In case 3, when the UE transmits an SRS scheduled by the base station, the UE may change and transmit an uplink beam, transmission power, and frequency according to a higher layer configuration of the SRS resource included in an SRS resource set to be transmitted. Alternatively, by changing the panel according to a higher layer configuration of the SRS resource, the UE may transmit the SRS.

The UE may require a transient time in order to change at least one of an uplink beam, transmission power, or frequency according to a UE capability. Alternatively, the UE may require a transient time in order to change a panel for uplink transmission according to a UE capability. Such a transient time may be considered, for example, in the case that repetition transmission is performed in units of long subslots or in units of short subslots. According to whether a transient time according to the UE capability is satisfied between repetition transmissions of the uplink signal or during a time offset, when transmitting the uplink signal, some or all of the determined uplink beams, transmission powers, or frequencies may be applied. As described above, a certain time may be required to change the uplink beam, transmission power, or frequency, and in order to satisfy this, an offset interval may be added between repetition transmissions or the base station may instruct to transmit an uplink signal to the UE so that the time offset is greater than a certain time for change. Alternatively, even in the case of additionally performing a panel change for uplink transmission, a certain amount of time may be required, and in order to satisfy this, an offset interval may be added between repetition transmissions or the base station may instruct to transmit an uplink signal to the LTE so that the time offset is greater than a certain time for change.

Hereinafter, in the disclosure, an offset in a time domain for uplink transmission of a LTE may be understood as encompassing the above time offset or a time interval between repetition transmissions of an uplink signal.

Specific examples for a method for the base station to determine an offset in a time domain for ensuring a time required for changing an uplink beam, transmission power, or frequency according to a LTE capability of the disclosure, and a method for the LTE to transmit an uplink signal instructed by the base station will be described in detail through Embodiments 2-1 and 2-2. The division of the following Embodiments 2-1 and 2-2 is for convenience of description, and the embodiments of the disclosure may be implemented by combining at least an embodiment as well as each.

<Embodiment 2-1: Determination of offset of a base station according to UE capability report and method of configuring offset in a UE>

As an example of a method of determining an offset in a time domain for transmission of an uplink signal, the UE may report UE capability information including at least one of a UE capability for performing an uplink beam change, a UE capability for performing a transmission power change, or a UE capability for performing frequency hopping to the base station. Alternatively, the three UE capabilities may be individually reported to the base station. Further, the UE may select and report some of the three UE capabilities. Further, the UE may report a representative value of UE capabilities for changing a transmission configuration of an uplink signal.

In addition, when the UE may transmit uplink signals using a plurality of panels, in step of determining a UE capability to report, a UE capability for panel change may be considered together. That is, the UE may report UE capability information including at least one of a UE capability for performing uplink beam change, a UE capability for performing transmission power change, a UE capability for performing frequency change in consideration of frequency hopping, or a UE capability for performing panel change to the base station. Alternatively, each of the four UE capabilities may be individually reported to the base station. Further, the UE may select and report some of the four UE capabilities. Further, the UE may report a representative value of UE capabilities for changing a transmission configuration of an uplink signal.

Hereinafter, UE capability and UE capability information, which are terms used interchangeably in the disclosure, may be understood as the same meaning.

This is to provide information necessary for determining an offset by the base station in the case that a part or all of an uplink beam, transmission power, or frequency is changed when an uplink signal is transmitted. In addition, when the LTE supports a plurality of panels, the base station may provide information necessary for determining an offset in the case that the panel is changed. The UE may report a UE capability for each uplink beam change or transmission power or frequency change using one of the following methods. In addition, a UE capability for panel change may be reported using one of the following methods:

A UE capability for an uplink transmission configuration change of NR release 15/16 may be reported. For example, in order to report a UE capability for a beam change, the UE may configure 'beamSwitchTiming' to one of {14, 28, 48} as in NR Release 15/16, and report it to the base station. In order to report a UE capability for a panel change, the UE may configure 'beamSwitchTiming' to one of {224, 336} and report it to the base station. Here, the number representing the 'beamSwitchTiming' is a symbol unit, and for example, in the case that 'beamSwitchTiming' is configured to "224" in UE capability reporting for a panel change, it means that a processing time for beam switching in a LTE capability for panel change takes as much as 224 symbols. Further, the above 'beamSwitchTiming' may be configured for each subcarrier spacing.

A required time for a change may be reported in symbol or absolute time units (e.g., ms).

The base station and the LTE may predefine a processing time capable of indicating a processing capability. A processing time for the N number of processing capacities may be defined in advance, and a processing time may be different according to an indication of subcarrier spacing. [Table 45] and [Table 46] represent examples of processing times defined in advance by the base station and the UE for processing capabilities n and n_1 for changing an uplink beam, transmission power, or frequency. Here, a value of a required time area may be configured such that a relationship of, for example, {al <a2<a3<a4} and {b1<a1, b2<a2, b3<a3} is established. The unit of a required time may be configured to a symbol or ms.

[Table 45]

| Processing capability n | |
|---|---|
| μ | Required time |
| 0 | at |
| 1 | a2 |
| 2 | a3 |
| 3 | a4 |

[Table 46]

| Processing capability n+1 | |
|---|---|
| μ | Required time |
| 0 | b1 |
| 1 | b2 |
| 2 | b3 |

When reporting a processing time for changing at least one of an uplink beam, transmission power, or frequency as a LTE capability, the UE may determine a value to report in consideration of each uplink signal. For example, when a processing time for an uplink beam change is reported as a LTE capability, the LTE may classify and report into a UE capability for a beam change for a PUCCH, a UE capability for a beam change for a PUSCH, and a UE capability for a beam change for an SRS. The UE may classify and report into a UE capability for transmission power change and a UE capability for frequency change according to a PUCCH, PUSCH, or SRS. When the UE reports a UE capability for changing at least one of each uplink beam, transmission power, or frequency for a PUCCH, the UE may determine in consideration of the number of PUCCH resources, the number of configured spatial relation info, the number of activated spatial relation info, and a frequency hopping configuration, and the like. When the UE reports a UE capability for each uplink beam, transmission power, and frequency change for the PUSCH, the UE may determine in consideration of a PUSCH precoding method (e.g., 'Codebook' or 'Non-codebook'), the number of SRS resource sets associated with PUSCH transmission, the number of configured SRS resources in the associated SRS resource set, the relationship between PUSCH and SRS antenna ports, frequency hopping configuration, and the like. When the LTE reports a UE capability for each uplink beam, transmission power, and frequency change for an SRS, the UE may determine in consideration of a SRS transmission indication method (e.g., DCI-based or MAC CE-based), SRS time axis information (e.g., periodic SRS, semi-persistent SRS, or aperiodic SRS), usage of SRS (e.g., 'beamManagement', 'codebook', 'nonCodebook', or 'antennaSwitching'), the number of SRS resource sets, the number of SRS resources, and the like. In addition, when the UE supporting multiple panels reports a processing time for panel change as UE capability, the UE may determine a reporting value in consideration of an uplink signal. Alternatively, the UE may determine and report a UE capability for a change in at least one of an uplink beam, transmission power, or frequency without distinguishing a UE capability for each uplink signal. The UE may determine and report a UE capability for a panel change without distinguishing a UE capability for each uplink signal.

The UE may additionally report a UE capability for indicating whether the uplink beam, transmission power, and frequency may be changed simultaneously or sequentially. Here, the UE supporting multiple panels may report with a corresponding UE capability whether the panel may be simultaneously changed. That is, the UE may report with a corresponding UE capability whether the uplink beam, transmission power, frequency, and panel may be simultaneously changed. As an example of the corresponding LTE capability, the UE may select and report either 'simultaneous' or 'sequential' to the base station. When the UE reports the UE capability with 'simultaneous', it means that the UE may simultaneously change the uplink beam, transmission power, and frequency. It means that the UE supporting multiple panels may change simultaneously panels. When the UE reports the UE capability with 'sequential', it means that the UE may sequentially change the uplink beam, transmission power, and frequency. It further means that the UE supporting multiple panels may sequentially change panels.

The UE may report UE capability 'beamCorrespondenceWithoutUL-BeamSweeping' for notifying whether a beam correspondence request is satisfied to the base station in addition to reporting a UE capability for supporting the uplink beam, transmission power, frequency, and panel change. The beam correspondence means a capability on whether the UE may select a beam for uplink transmission based on downlink measurement without depending on uplink beam sweeping. When the UE reports that 'beamCorrespondenceWithoutUL-BeamSweeping', which is a UE capability for the beam correspondece, may be supported, the UE may select an uplink beam for uplink transmission without uplink beam sweeping and transmit an uplink signal using the uplink beam.

The base station may determine an offset for securing a request time for applying uplink transmission change information through a UE capability reported by the UE. The base station may determine the offset in consideration of one of the following options or a combination thereof:

Option 1) The base station may determine an offset based on a largest value for at least one of a UE capability for uplink beam change reported by the UE, a LTE capability for transmission power change, or a UE capability for frequency change.

Option 2) The base station determines an offset based on the largest value among LTE capabilities for changes necessary for performing actual uplink transmission among UE capabilities reported by the UE. For example, in the case that the base station indicates an uplink signal to the UE so that only the uplink beam and transmission power change is performed, the base station may determine an offset based on a largest value among a UE capability for uplink beam change and a UE capability for transmission power change. The base station may determine an offset in the same method as that in the above example for an uplink transmission change information combination other than the above example.

Option 3) The base station may determine an offset based on the sum of a UE capability for uplink beam change reported from the UE, a UE capability for transmission power change, and a UE capability for frequency change.

Option 4) The base station may determine an offset based on the sum of UE capabilities for changes necessary for performing actual uplink transmission among UE capabilities reported by the UE. For example, in the case that the base station indicates an uplink signal to the UE so that only the uplink beam and transmission power change is performed, the base station may determine an offset based on the sum of a UE capability for uplink beam change and a UE capability for transmission power change. The base station may determine an offset in the same method as that in the above example for an uplink transmission change information combination other than the above example.

Option 5) When determining an offset through one of the above options 1 to 4, the base station may determine an offset in consideration of a configuration of each uplink transmission signal. For example, in the case that the base station determines the offset for repeatedly transmitting a PUCCH to a plurality of TRPs as the option 1, the UE may determine the offset based on the UE capabilities reported in consideration of the PUCCH configuration. Alternatively, in the case that the UE does not report a LTE capability by distinguishing for each uplink signal, the base station may estimate an additional request time due to a PUCCH configuration to the UE capabilities reported by the UE to determine an offset. This may be applied even when the base station determines an offset for transmitting another uplink signal (e.g., PUSCH or SRS).

Option 6) When determining an offset through one of the above options 1 to 4, the base station may determine an offset without distinguishing configurations of each uplink transmission signal.

Option 7) The base station may determine a random value as an offset. In this case, a higher layer parameter configuration of the uplink signal, an uplink resource configuration, and the like may be considered.

Option 8) When the UE supports multiple panels, when determining the offset through options 1 to 6, the base station may determine an offset in additional consideration of an UE capability for panel change.

Each option is an example of the case that the UE reports all of UE capabilities for the above three uplink transmission change information, and when the UE reports only some of the UE capabilities, the base station may apply only the reported UE capabilities to each option to determine the offset.

When the UE reports that the uplink beam, transmission power, and frequency may be changed simultaneously, the base station may select option 1 or option 2 to determine the offset. When the UE reports that the uplink beam, transmission power, and frequency may be sequentially changed, the base station may select option 3 or option 4 to determine the offset. When the UE supports multiple panels and reports that an uplink beam, transmission power, frequency, and panel (or at least two thereof) may be changed simultaneously, the base station may determine the offset in additional consideration of a UE capability for panel change to option 1 according to option 8 or may determine the offset in additional consideration of a UE capability for panel change in option 2 according to option 8. This is an example of the above embodiment, and the base station may determine the offset in consideration of one or a combination of the above-described options 1 to 8 according to the UE capability reported by the UE.

The base station may adjust an offset value determined by the above option according to whether beam correspondent reported by the UE through the UE capability is supported. For example, when the UE supports beam correspondence, the base station may determine an offset value determined through the above option as a final offset value or adjust an offset value to a value smaller than a final offset value. When the UE does not support beam correspondence, the base station may add an additional request time to the offset value determined through the above option.

The base station may adjust an offset value determined by the above-described option according to whether the UE reports an uplink beam to transmit to an uplink for multiple TRPs. When the uplink beam is reported to the base station, this may mean that the corresponding uplink beam is a 'known' beam for the UE. When the uplink beam is not reported to the base station, it may mean that the corresponding uplink beam is an 'unknown' beam for the UE. When the UE reports an uplink beam to transmit to the uplink to the base station, the base station may determine an offset value determined through the option as a final offset value or adjust an offset value to a value smaller than a final offset value. When the UE does not report the uplink beam to transmit to the uplink to the base station, the base station may add an additional request time to the offset value determined through the option.

The base station may notify the UE of the determined offset. In this case, the base station may explicitly or implicitly notify the UE of the offset:

In the case that the base station explicitly configures the determined offset to the UE: The base station may configure the offset as a new higher layer parameter and explicitly notify the UE of this. For example, the base station may add a new higher layer parameter 'timeDurationForULSwitch' to configuration information for PUCCH transmission such as PUCCH-FormatConfig or PUCCH-Config. Similarly for a PUSCH or SRS, the base station may add a new parameter for offset to higher layer parameters for PUSCH transmission and higher layer parameters for SRS transmission. The above example is one of methods of configuring a new higher layer parameter for indicating the offset determined by the base station to the UE, and may be defined as a different name of higher layer parameter having the same function.

In the case that the base station implicitly indicates the determined offset: The base station may implicitly indicate the offset through a configuration(s) for transmitting another uplink signal rather than directly configuring the offset as a higher layer parameter as in the above operation. For example, the base station may indicate the offset through a 'startingSymbolIndex' configured in a PUCCH-format[a] (where a is, for example, 0, 1, 2, 3 or 4) in a higher layer parameter PUCCH-Resource. More specifically, as one example of reinforcement methods for indicating PUCCH repetition transmission in a slot, a startingSymbolIndex in PUCCH-format[a] of PUCCH-Resource may be configured as many times as the number of repetitions of PUCCH in a slot. As a detailed example, when the number of repetitions in a slot is, for example, 2, a startingSymbolIndex indicates a transmission start symbol of a first PUCCH repetition transmission occasion in the slot, and a 'startingSymbolIndex2' that may be newly added may indicate a transmission start symbol of a second PUCCH repetition transmission occasion in the slot. In this case, a symbol position indicated by a startingSymbolIndex should be faster than that indicated by a startingSymbolIndex2, and the base station may configure an interval between two symbols to be greater than one PUCCH transmission symbol nrofSymbols and an offset determined by the base station. The above example is one example, and the base station may implicitly notify the LTE of the offset through a PUCCH resource configuration for PUCCH transmission. Alternatively, when the base station schedules a PUCCH including HACK information of a PDSCH to the UE, the base station may indicate a PDSCH-to-HARQ_feedback timing indicator to the UE so that the time offset is greater than the determined offset. For uplink signals (e.g., PUSCH or SRS) other than PUCCH, the base station may implicitly notify the UE of the offset through a higher layer parameter configuration of an uplink signal or transmission timing indicated by DCI.

<Embodiment 2-2: Method of transmitting an uplink signal indicated by a base station according to UE capabilities>

When the UE receives an instruction to repeatedly transmit an uplink signal from the base station, the LTE may determine an operation for uplink repetition transmission according to whether an offset determined by the base station is explicitly configured or implicitly indicated. When the UE is explicitly configured with an offset from the base station, the UE may configure an interval between repetition transmissions according to the offset in a time domain to transmit an uplink signal. When the UE is implicitly indicated with the offset, the UE transmits an uplink signal according to the higher layer parameter configuration for the uplink signal configured by the base station. When the UE is explicitly configured or implicitly indicated with the offset and applies this to repetition transmission of an uplink signal, the UE may change and transmit at least one of an uplink beam, transmission power, or frequency during the offset according to the capability thereof. When the offset determined by the base station is configured to be larger than the UE capability for changing the uplink beam, transmission power, or frequency, in order to change and transmit the TRP between repetition transmissions, the UE may change the uplink beam or transmission power or perform a frequency change for frequency hopping. When the offset determined by the base station is configured to be smaller than the UE capability for changing the uplink beam, transmission power, or frequency, in order to repeatedly transmit the uplink signal, the base station and the UE may define in advance a default uplink transmission method in consideration of one of the following operations or a combination thereof:

Transmit an uplink signal with the same uplink beam, transmission power, and frequency as previous repetition transmissions: Because the offset determined by the base station is smaller than the UE capability, the UE may satisfy a time for changing a beam, transmission power, or frequency between repetition transmissions. Therefore, the UE may perform next repetition transmission with the beam, transmission power, and frequency applied to previous repetition transmission. Here, the previous repetition transmission means a repetition transmission occasion immediately preceding a repetition transmission occasion to be transmitted. Further, it is possible to use at least one of the uplink beam, transmission power, or frequency in the same manner as in previous (repetition) transmission and to change the rest. For example, it is possible to use the uplink beam and frequency in the same manner as in the previous (repetition) transmission and to change transmission power in the next repetition transmission.

Transmit an uplink signal with an uplink beam, transmission power, and frequency configured to the default: The LTE may not satisfy a time for changing a beam, transmission power, or frequency between repetition transmissions because the offset determined by the base station is smaller than the UE capability. Accordingly, the UE may perform the next repetition transmission with a predefined default uplink beam, default transmission power, and default frequency. Here, the base station and the UE may define default transmission information for each uplink signal (PUCCH, PUSCH, or SRS). Alternatively, the base station and the UE may commonly define default transmission information for an uplink signal. Further, it is possible to use at least one of the uplink beam, transmission power, or frequency as a default configuration and to change the rest. For example, it is possible to use the uplink beam and frequency as a default configuration and to change transmission power in the next repetition transmission.

Transmit an uplink signal by conditionally changing an uplink beam, transmission power, or frequency: In the case that mapping between uplink repetition transmission and TRP is configured to 'sequential', in a repetition transmission occasion that satisfies the UE capability, an uplink beam, transmission power, or frequency may be changed and transmitted. The UE may transmit an uplink signal with the same configuration as that of the previous repetition transmission occasion in a repetition transmission occasion that does not satisfy the UE capability. For example, when mapping was configured as {TRP1, TRP1, TRP2, TRP2}, first two repetition transmission occasions are transmitted with an uplink beam, transmission power, and frequency for the TRP1. A third repetition transmission occasion should be changed and transmitted to an uplink beam, transmission power, and frequency for the TRP2, but because the offset is smaller than the UE capability, the LTE transmits an uplink signal with a configuration for the TRP1 without changing uplink transmission information. The UE may transmit a fourth repetition transmission occasion by changing to an uplink beam, transmission power, and frequency for the TRP2.

Transmit an uplink repetition signal by applying a changeable configuration among an uplink beam, transmission power, or frequency: When the UE compares magnitudes between the offset configured by the base station and the UE capability, the UE may apply some of the UE capabilities some changeable configurations having the UE capability smaller than the offset among UE capabilities to the next repetition transmission occasion. For example, when the offset is larger than the UE capability for uplink beam change and is smaller than the UE capability for other transmission power changes or frequency changes, the UE may change only the uplink beam and apply the same transmission power and frequency as in the previous repetition transmission occasion to transmit the next repetition transmission occasion. When the UE sequentially changes the uplink beam, transmission power, and frequency, the UE compares the offset determined by the base station with the sum of the UE capability combination for changing the uplink beam, transmission power, or frequency. In this case, when a value of the plurality of combinations is smaller than the offset, it is determined according to the priority of the uplink beam, transmission power, or frequency change previously determined between the base station and the UE. For example, when the offset determined by the base station is smaller than the sum of all UE capabilities, and the sum of UE capabilities for uplink beam and transmission power changes, the sum of UE capabilities for uplink beam and frequency changes, and the sum of the capabilities for transmission power and frequency changes are smaller than the offset, and the base station and the UE have previously defined the order of a priority, for example, as {uplink beam>transmission power>frequency}, the UE may change the uplink beam and transmission power to transmit the uplink signal.

Transmit an uplink signal by dropping some symbols or repetition transmission occasions: In order to repeatedly transmit an uplink signal by applying uplink transmission change information, the UE may drop some symbols before a repetition transmission occasion that changes at least one of a beam, transmission power, or frequency and transmit the uplink signal through the remaining resources. For example, when mapping between PUCCH repetition transmission and TRP is configured as {TRP1, TRP1, TRP2, TRP2}, until a required time for changing an uplink beam, transmission power, and frequency for the TRP2 is satisfied at third repetition transmission, the UE does not transmit a PUCCH during the previous symbol. After a required time for changing an uplink beam, transmission power, and frequency is satisfied, the UE may repeatedly transmit a third PUCCH for the remaining symbols.

As another example, when the UE does not satisfy a required time for changing an uplink beam, transmission power, or frequency for repetition transmission in which the TRP is changed, the UE may drop the corresponding uplink repetition transmission occasion. For example, when mapping between PUCCH repetition transmission and TRP is configured as {TRP1, TRP1, TRP2, TRP2}, a third PUCCH repetition transmission occasion may be dropped. Thereafter, a fourth PUCCH repetition transmission occasion may be changed and transmitted to an uplink beam, transmission power, and frequency for the TRP2. As another example, when mapping between PUCCH repetition transmission and TRP is configured as {TRP1, TRP2, TRP1, TRP2}, the second and fourth PUCCH repetition transmission occasions may be dropped to support single TRP-based PUCCH repetition transmission.

In the case that PUCCH repetition transmission is performed in consideration of a channel state for each TRP through the method provided in the above-described embodiments of the disclosure, an increase in coverage of an uplink control signal may be expected. Further, because transmission power is controlled for each transmission and reception point, efficient battery management of the UE may be expected.

This may be equally applied to the magnitude relationship between the time offset for uplink signal transmission and the UE capability. When the time offset is larger than an UE capability for changing the uplink beam, transmission power, or frequency, the UE may transmit the uplink signal. When the time offset is smaller than an UE capability for changing an uplink beam, transmission power, or frequency, similar to the case that the above offset between repetition transmissions does not satisfy the UE capability, the UE may consider one or a combination of the following operations and transmit uplink signals.

- Transmit an uplink signal with the same uplink beam, transmission power, and frequency as those of the previous uplink signal transmission
- Transmit an uplink signal with an uplink beam, transmission power, and a frequency configured to the default
- Transmit an uplink repetition signal by applying changeable configurations among an uplink beam, transmission power, or a frequency
- Transmit an uplink signal by dropping some symbols of the first repetition transmission occasion or the first repetition transmission occasion

Operations according to the above conditions have been described for a method in which the UE supporting a single panel changes an uplink beam, transmission power, or frequency. When the UE may support multiple panels, the UE identifies whether the offset determined by the base station is configured to be smaller than an UE capability for changing the uplink beam, transmission power, frequency, or panel. When the offset determined by the base station is greater than an UE capability for changing the uplink beam, transmission power, frequency, or panel, the UE may transmit the uplink signal. When the offset is configured to be smaller than an UE capability for changing the uplink beam, transmission power, frequency, or panel, the UE may transmit an uplink signal according to one or a combination of the following operations in additional consideration of the UE capability for panel change similar to the case that the offset between repetition transmissions does not satisfy an UE capability.

- Transmit an uplink signal with the same uplink beam, transmission power, frequency, and panel as those of the previous uplink signal transmission
- Transmit an uplink signal with an uplink beam, transmission power, frequency, and panel configured to the default
- Transmit an uplink repetition signal by applying changeable configurations among an uplink beam, transmission power, frequency, or panel
- Transmit an uplink signal by dropping some symbols of the first repetition transmission occasion or the first repetition transmission occasion

Here, the previous uplink signal means the most recently transmitted physical channel identical to that of an uplink signal (PUCCH, PUSCH, or SRS) intending to transmit. The base station and the UE may define default transmission information for each uplink signal (PUCCH, PUSCH, or SRS). Alternatively, the base station and the UE may commonly define default transmission information for an uplink signal.

<Embodiment 3: Method of Generating PH Information in Multiple TRPs>

As an embodiment of the disclosure, in the case that the LTE performs PUSCH repetition transmission for multiple TRPs according to the above-described Embodiment 1 or 2, a method of generating PH information (may be referred to as PH, PHR, PH value, or PHR information and referred to terms having the same meaning without being limited thereto.) will be described. When reporting PH information on a specific cell, the UE may select and report one of two types of PH information. A first type is actual PHR and is PH information calculated based on actually transmitted PUSCH transmission power. A second type is virtual PHR (or reference format) and does not have an actually transmitting PUSCH, but is PH information calculated based on a transmission power parameter configured to a higher-layer signal. After the PHR is triggered, when a first PUSCH capable of transmitting the corresponding PHR information is a scheduled PUSCH resource, the UE may determine whether PHR calculated for a specific cell is actual PHR or virtual PHR based on an L1 signal and higher-layer signal information received up to a PDCCH monitoring occasion that schedules the corresponding PUSCH. Alternatively, in the case that the PHR is triggered, when a first PUSCH capable of transmitting the PHR information is a configured PUSCH resource, the UE may determine whether PHR calculated for a specific cell is actual PHR or virtual PHR based on higher-layer signal information and the L1 signal received before $T_{proc,2}$ based on a first symbol of the corresponding PUSCH. Here, a value calculated based on $d_{2,1} = 1$ and $d_{2,2} = 0$ in [Equation 3] may be applied to $T_{proc,2}$, but this is only an example, and other values are also sufficiently applicable. For example, when the UE calculates the PHR based on the actual PUSCH (or transmission power or actual transmission for transmitting an actual PUSCH), the UE may express the PHR information as in Equation 10 at a serving cell c, carrier f, BWP b, and PUSCH transmission time point i.

[Equation 10]

$$PH_{type1,b,f,c}(i,j,q_d,l)$$
$$= P_{\text{CMAX},f,c}(i) - \{P_{0_{\text{PUSCH}},b,f,c}(j) + 10\log_{10}\left(2^\mu \cdot M_{RB,b,f,c}^{PUSCH}(i)\right) + \alpha_{b,f,c}(j) \cdot \text{PL}_{b,f,c}(q_d) + \Delta_{\text{TF},b,f,c}(i)$$
$$+ f_{b,f,c}(i,l)\}[\text{dBm}]$$

As another example, when the UE calculates PH information based on a virtual PUSCH (or power or reference format calculated based on higher-layer signal information without actual PUSCH transmission), the UE may express PH information as in Equation 11 at a serving cell c, carrier f, BWP b, and PUSCH transmission time point i.

[Equation 11]

$$PH_{type1,b,f,c}(i,j,q_d,l) = \tilde{P}_{\text{CMAX},f,c}(i) - \{P_{0_{\text{PUSCH}},b,f,c}(j) + \alpha_{b,f,c}(j) \cdot \text{PL}_{b,f,c}(q_d) + f_{b,f,c}(i,l)\}[\text{dBm}]$$

In the above equation, $\tilde{P}_{\text{CMAX},f,c}(i)$ assumes that MPR = MPR = 0 dB, A-MPR = 0 dB, and P-MPR = 0 dB. Here, definitions of MPR, A-MPR, and P-MPR may follow those described in 3GPP TS 38.101-1, TS38.101-2, and TS 38.101-3. [Equation 10] to [Equation 11] are a first type of PH information. In a communication system to which the disclosure may be applied, first type PH information may indicate PH information on PUSCH transmission power, and second type PH information may indicate PH information on PUCCH transmission power, third type PH information may indicate PH information on SRS transmission power. The disclosure is not limited thereto.

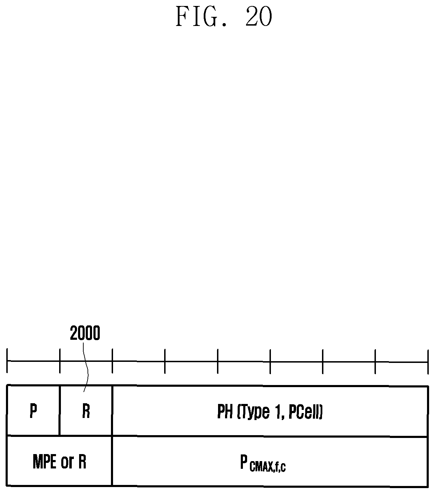

FIG. 20 is a diagram illustrating a MAC CE structure including PHR information according to an embodiment.

Specifically, FIG. 20 illustrates a PHR MAC CE format generated when the UE reports PHR information on one serving cell. The PHR MAC CE format may have a fixed size and be composed of 2 octets. Each field of FIG. 20 may be defined as follows. This is only an example, and the disclosure is not limited thereto.

P: P composed of 1 bit is configured to 0 in the case that mpe-Reporting-FR2 is configured and that a P-MPR applied according to TS38.133 is smaller than P-MPR_00 when a serving cell operates in FR2, otherwise P composed of 1 bit is configured to 1. In the case that mpe-Reporting-FR2 is not configured or that the serving cell operates in FR1, P notifies whether power backoff is applied for transmission power control. In the case that the Pcmax,c field has different values according to power backoff being applied to a different value, P is configured to 1.

Pcmax,c: This field is the maximum transmission power value calculated when reporting PH information. The Pcmax,c may have 6 bits of information and select one of total 64 levels of information.

MPE: In the case that mpe-Reporting-FR2 is configured and that the serving cell operates in FR2 and that the P field is configured to 1, the MPE indicates a power backoff value applied to satisfy the MPE requirement. The MPE is a field composed of 2 bits and indicates one value among total 4 steps. In the case that mpe-Reporting-FR2 is not configured, in the case that the serving cell operates in FR1, or in the case that the P field is configured to 0, the MPE may exist as a reversed bit as in R.

R: As a reserved bit, R is configured to 0.

PH: This field indicates a PHR level. The PH may be composed of 6 bits and select one value among total 64 PHR levels.

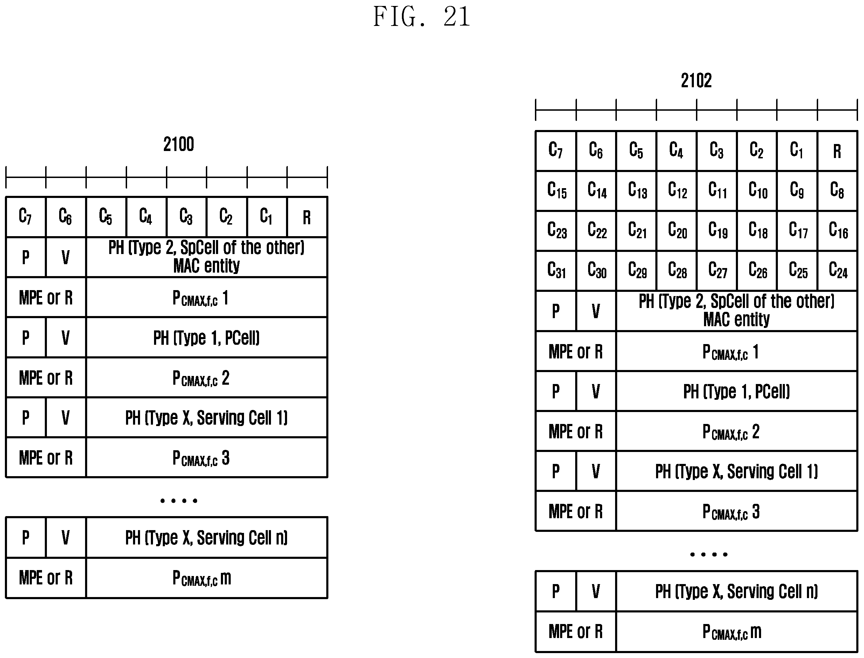

FIG. 21 is a diagram illustrating a MAC CE structure including PH information according to an embodiment.

Specifically, FIG. 21 illustrates a PHR MAC CE format generated when a UE reports PH information on a plurality of serving cells. 2100 of FIG. 21 is a PHR MAC CE format that may be used in the case that a plurality of serving cells are configured and that a largest index value among the corresponding serving cells is smaller than 8. 2102 of FIG. 21 is a PHR MAC CE format that may be used in the case that a plurality of serving cells are configured and that a largest index value among the corresponding serving cells is greater than or equal to 8. Unlike the PHR MAC CE format illustrated in FIG. 20, the PHR MAC CE format of FIG. 21 may have a variable magnitude according to the set or number in which serving cells are configured. The corresponding information may include PH information of a second type for a special cell (SpCell) of another MAC entity and PH information of a first type for a Pcell. In the case that a value of the largest index among corresponding serving cells is smaller than 8, a field notifying serving cell information may be composed of one octet. In the case that a value of the largest index among corresponding serving cells is greater than or equal to 8, a field notifying serving cell information may be composed of 4 octets. PH information may be included according to the order of the serving cell index. In the case that PHR is triggered, the MAC entity may transmit a PHR MAC CE including PH information through a transmittable PUSCH. In this case, whether PH information is calculated based on an actual PUSCH (i.e., actual PHR) or a virtual PUSCH (i.e., virtual PHR) may be determined based on a higher-layer signal and DCI information received up to a specific time point, as described above. Fields of the PHR MAC CE format illustrated in FIG. 21 may have the same meaning (definition) as most fields of the PHR MAC CE format illustrated in FIG. 20, and V may have the following meaning.

V: This field is information indicating whether PH information has been calculated based on actual transmission (actual PUSCH) or a reference format (virtual PUSCH). For first type PH information, V is configured to 0 in the case that the PUSCH is actually transmitted, and is configured to 1 in the case that the reference format for the PUSCH is used. For second type PH information, V is configured to 0 in the case that a PUCCH is actually transmitted, and is configured to 1 in the case that a reference format for a PUCCH is used. For third type PH information, V is configured to 0 in the case that an SRS is actually transmitted and is configured to 1 in the case that a reference format for the SRS is used. Further, for first type, second type, and third type PH information, in the case that a value of V is 0, there are Pcmax,f,c and MPE fields thereof, and in the case that a value of V is 1, Pcmax,f,c and MPE fields thereof may be omitted.

As illustrated in FIG. 16, in the case that one UE communicates with multiple TRPs, there is a possibility that path attenuation and physical channel environments are different for each TRP; thus, there may be a need to differently operate transmission power configurations and adjustments for each TRP. For example, in the PUSCH transmission power formula of [Equation 8], the remaining parameters except for $PL_{b,f,c}(q_d)$ are information indicated in advance by the base station as a higher-layer signal or L1 signal, but because a PUSCH transmission power value is finally determined based on that measured by the UE as a reference signal for $PL_{b,f,c}(q_d)$, the UE may calculate different transmission powers for each TRP, and this may be applied to actual multi-TRP based PUSCH repetition transmission. Further, in the case that the UE is closer to the first TRP than the second TRP in a situation in which the UE communicates with the first TRP and the second TRP, when transmitting the PUSCH, PUCCH, or SRS for the first TRP, the UE may have a smaller transmission power value compared to the second TRP. Further, because panel and antenna structure characteristics may be different for each TRP, codebook or beam configuration information considering this may be different; thus, transmission power in which the UE determines based on this may be different for each TRP.

In [Equation 8], as described above, when determining PUSCH transmission power, the UE receives configuration information for each different parameter as a higher-layer signal or an L1 signal, and in the case of multiple TRPs, the UE may determine transmission power based on different signal information for each TRP or may receive a configuration of common signal information, but may determine transmission power based on different indexes or indication information within corresponding signal information.

In the case that the LTE transmits and receives control and data information to and from multiple TRPs in one serving cell, the UE may transmit PH information to each of the first TRP and the second TRP. Specifically, the UE may transmit a PUSCH including PH information to the first TRP or the second TRP, and the PUSCH may be scheduled in the same TRP as or different TRP from the TRP transmitting the PUSCH or may be preconfigured as a higher-layer signal. In the case that the base station receives the PH information of FIG. 20, it is necessary that the UE defines in advance whether the PH information is PH information for PUSCH transmission power based on the first TRP or PUSCH transmission power based on the second TRP according to [Equation 10] or [Equation 11]. Hereinafter, a method of constituting MAC CE information considering multiple TRPs according to each embodiment will be described. In the disclosure, transmitting a PUSCH including PH information by the UE to the TRP may mean transmitting the corresponding PH information (or transmitting the MAC CE including the corresponding PH information) in the PUSCH resource connected to a CORESETPoolIndex corresponding to the TRP (or a resource index or RS resource index, which is a value indicated by an SRI field in DCI described in the first embodiment). For example, transmitting a PUSCH including PH information by the UE to the first TRP among the first TRP and the second TRP may mean transmitting an MAC CE including the PH information by the UE in the PUSCH resource connected to a CORESETPoolIndex 1 corresponding to the first TRP. Further, in the disclosure, calculating PH information by the UE based on any one TRP of a plurality of TRPs may mean calculating PH information (actual PHR) based on actual transmission power (actual PUSCH) of a PUSCH connected to a CORESETPoolIndex corresponding to the TRP or calculating PH information (virtual PHR) based on a transmission power parameter (virtual PUSCH) configured as a higher-layer signal for a PUSCH connected to a CORESETPoolIndex corresponding to the TRP, even though an actual PUSCH has not been transmitted to the corresponding TRP.

As described above, a resource index and an RS resource index, which are values indicated by the SRI field in the DCI described in Embodiment 1 or the CORESETPoolIndex, may be used as information (TRP information) used for distinguishing TRPs. It is noted that the disclosure is not limited thereto, and TRPs may be distinguished according to various types of information.

<Embodiment 3-1 - Single entry PHR MAC CE type 1>

Embodiment 3-1 proposes a method of using the existing MAC CE format of FIG. 20 and using a reserved bit R 2000 in the case of multi-TRP based transmission and reception. That is, according to whether a value of the reserved bit R is 0 or 1, it indicates whether the corresponding PH information is a PH based on an actual PUSCH or a virtual PUSCH. The base station may determine whether the UE has calculated PH information based on which TRP information (e.g., a TRP index or a CORESETPoolIndex corresponding to the TRP index) based on this. Although it is described as R for convenience of description, the disclosure is not limited thereto and may be used as other names, and for example, it may be used as V. For example, in a situation in which a first TRP and a second TRP are connected to the UE, in the case that the UE transmits a PUSCH including an MAC CE for the first TRP and that a value of the reserved bit R is configured to 0 (actual PUSCH) in the corresponding MAC CE format, the base station may determine that the UE has calculated PH information based on the first TRP. That is, the base station may determine that the UE has calculated PH information based on transmission power (actual PUSCH transmission) of the PUSCH actually transmitted to the first TRP. As another example, in a situation in which the first TRP and the second TRP are connected to the UE, in the case that the UE transmits a PUSCH including an MAC CE for the first TRP and that a value of the reserved bit R in the corresponding MAC CE format is configured to 1 (virtual PUSCH), the base station may determine that the UE has calculated PH information based on the second TRP. That is, the base station may determine that the LTE did not actually transmit a PUSCH to the second TRP, but calculated PH information based on higher-layer signal information (reference format) for PUSCH transmission power. As another example, in a situation in which the first TRP and the second TRP are connected to the UE, in the case that the UE transmits a PUSCH including an MAC CE to the second TRP and that a value of the reserved bit R in the corresponding MAC CE format is configured to 0 (actual PUSCH), the base station may determine that the UE has calculated the PH information based on the second TRP. That is, the base station may determine that the UE has calculated PH information based on transmission power of the PUSCH (actual PUSCH transmission) actually transmitted to the second TRP. As another example, in a situation in which the first TRP and the second TRP are connected to the UE, in the case that the UE transmits a PUSCH including an MAC CE for the second TRP and that a value of the reserved bit R is configured to 1 (virtual PUSCH) in the corresponding MAC CE format, the base station determines that the UE has calculated PH information based on the first TRP. That is, the base station may determine that the LTE did not actually transmit the PUSCH to the first TRP, but calculated PH information based on higher-layer signal information (reference format) for PUSCH transmission power. Summarizing the above examples, according to determining by the UE whether based on which TRP to calculate PH information and whether to transmit a PUSCH including the corresponding PH information to which TRP, it is determined that the corresponding PH information is calculated based on an actual PUSCH or a virtual PUSCH. In the case that a TRP to be a reference for calculating PH information is the same as a TRP in which the PUSCH including the corresponding PH information is transmitted, the UE will generate PH information based on the actual PUSCH. In the case that a TRP to be a reference for calculating PH information is not the same as a TRP in which the PUSCH including the corresponding PH information is transmitted, the UE will generate PH information based on the virtual PUSCH.

<Embodiment 3-2 - Single entry PHR MAC CE type 2>

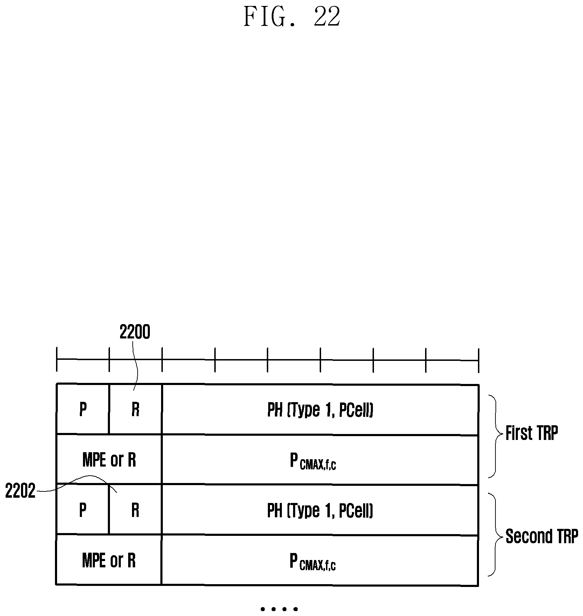

In Embodiment 3-1, the UE may not provide a MAC CE format including PH information on at least two TRPs for multiple TRPs within one serving cell. Therefore, in Embodiment 3-2, as illustrated in FIG. 22, a bitmap capable of generating PH information for each TRP is constituted in a situation in which the UE is configured with one serving cell. In FIG. 22, it is assumed that the number of TRPs is two, but the disclosure is not limited thereto, and it may be possible to constitute the N number of TRPs. Further, in FIG. 22, reserved bits 2200 and 2202 are used as the V field in FIG. 21 and may include information that may indicate whether PH information calculated by the UE for each TRP is based on the actual PUSCH or the virtual PUSCH. Further, in the case that the virtual PUSCH is indicated by the V field, the UE may omit the MPE field and the Pcmax,f,c field for the corresponding TRP. FIG. 22 is similar to FIG. 21, but there is no field indicating a serving cell, and each PH information bitmap may be determined according to the number of TRPs configured by the UE, and be determined in ascending or descending order according to the TRP index. Alternatively, in Embodiment 3-2, the reserved bits 2200 and 2202 of FIG. 22 are left as they are, and it may be possible to determine based on the TRP that receives the PUSCH including the PH information based on which criteria PH information is generated for each TRP. For example, in the case that the first TRP receives the PHR information of FIG. 22, the base station may determine that the first TRP is PH information calculated based on the actual PUSCH and determine other TRPs other than the first TRP as PH information calculated based on the virtual PUSCH.

<Embodiment 3-3 - Single entry PHR MAC CE type 3>

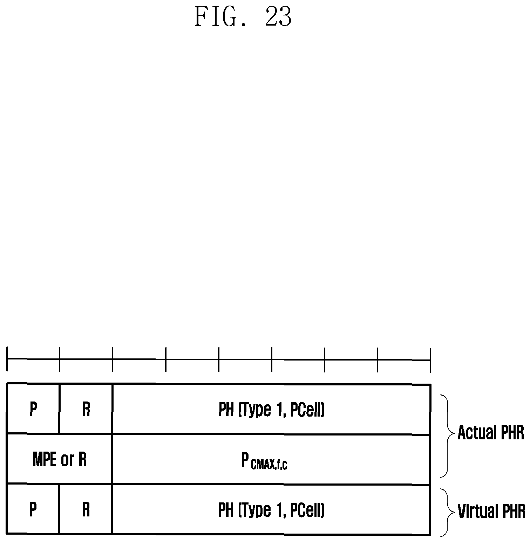

In Embodiment 3-3, a bitmap for calculating actual PHR and a bitmap for calculating virtual PHR are fixed without necessity to utilize the reserved bits of FIG. 20 by the UE for other purposes. As illustrated in FIG. 23, the actual PHR may be first composed of two octets, and the virtual PHR may be composed of one octec. The disclosure is not limited thereto, and the virtual PHR may be first composed of one octec, and the actual PHR may be composed of two octets, and various constitutions may be possible. In FIG. 23, two TRPs are assumed and illustrated, but the disclosure is not limited thereto and is generally applicable to multiple TRPs. In this case, a bitmap for the virtual PHR may be configured for each TRP, and the remaining TRPs other than the TRP for the actual PHR may be mapped in ascending or descending order. In FIG. 23, the TRP calculated by the UE for the bitmap, which is the actual PHR may be a TRP that receives a PUSCH in which the corresponding PH information is transmitted. For other TRPs, PH information may be calculated based on the virtual PUSCH. Therefore, in FIG. 23, MPE and Pcmax,f,c information may exist only in the bitmap corresponding to the actual PHR, and MPE and Pcmax,f,c information may be omitted in the bitmap corresponding to the virtual PHR.

<Embodiment 3-4 - Single entry PHR MAC CE type 4>

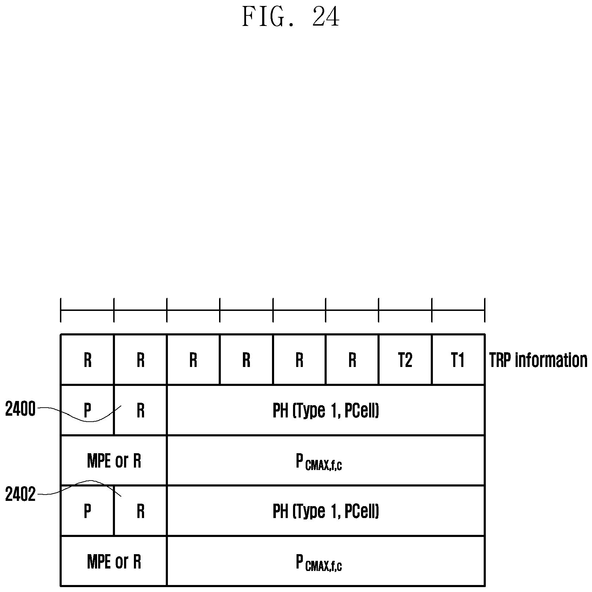

As illustrated in FIG. 24, in Embodiment 3-4, an octek including index information for each TRP is first included, and then PH information composed of 1 or 2 octets, respectively may be mapped in ascending or descending order of the TRP index based on the corresponding TRP index information. In FIG. 24, it is assumed the case that two TRPs are configured to one UE, but it is possible to generally apply even more TRPs. Similar to FIG. 22, reserved bits R 2400 and 2402 may be used for notifying whether the PHR is actual PHR or virtual PHR. Alternatively, it may be possible to determine whether the PHR is actual PHR or virtual PHR according to which TRP receives a PUSCH including PHR MAC CE information. This is similar to Embodiment 3-2, but differs in that an octek including information on TRPs including PH information is added and that TRPs and PH information are mapped according to information on TRPs.
Embodiments 3-1 to 3-4 relate to a method of generating PH information in the case that the UE is configured with one serving cell in a multi-TRP situation. In the following embodiments, a method of generating PH information in the case that the UE is configured with a plurality of serving cells in a multi-TRP situation will be described.

<Embodiment 3-5 - Multiple Entry PHR MAC CE Type 1>

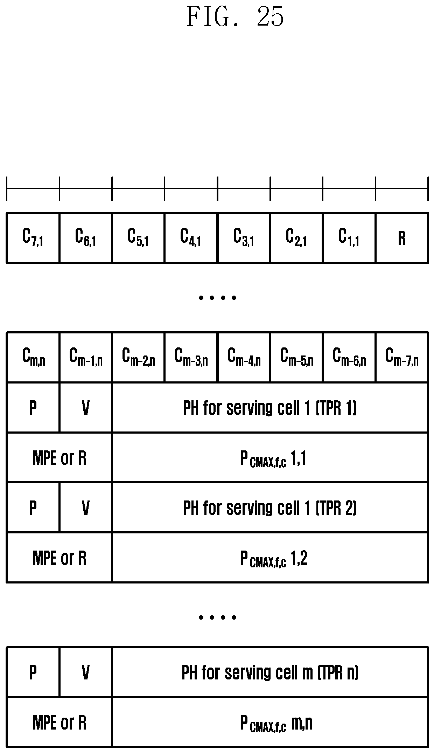

FIG. 25 is a diagram illustrating a method of generating PH information in a situation in which a UE is configured with multiple TRPs and multiple cells according to Embodiment 3-5. Similar to FIG. 21, the UE has an octek including information for each serving cell, and simultaneously includes TRP information for each serving cell. For example, Cm,n means the m-th serving cell and the n-th TRP, and in the case that the corresponding value is 1, PH information thereof may be composed of maximum two different octets. FIG. 25 illustrates that the order of mapping PH information is to first map for each TRP index in the corresponding serving cell index based on the serving cell index, but this is only an example and it may also be possible to map for each serving cell index in the corresponding TRP index based on a TRP index. In summary, PH information may be mapped based on a serving cell index and a TRP index. For example, in the case that m is 7 and n is 2, the UE will constitute total 14 PH information, and a value of V may indicate whether PH information is calculated based on an actual PUSCH or a virtual PUSCH. In the case that PH information is calculated based on a virtual PUSCH, fields for Pcmax,f,c and an MPE field may be omitted.

<Embodiment 3-6 - Multiple Entry PHR MAC CE Type 2>

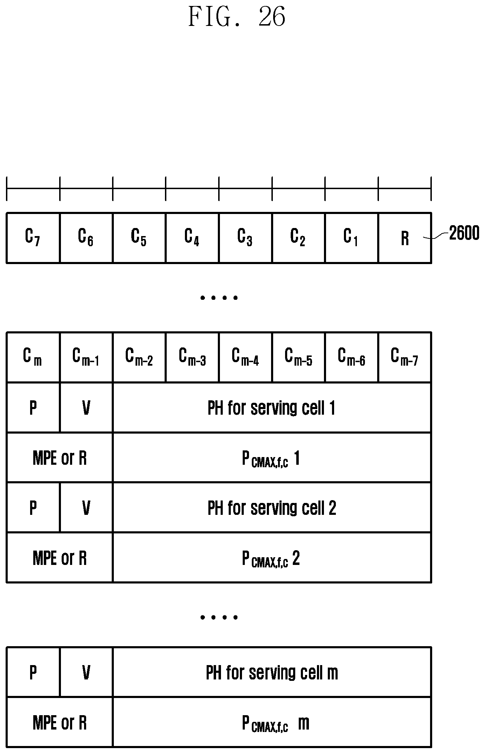

FIG. 26 is a diagram illustrating a method for a UE to generate PH information in a multi-TRP situation according to Embodiment 3-6.
Similar to FIG. 21, the UE includes octets capable of indicating each serving cell index, and lists PH information for the octets based on a serving cell index. Information on a TRP may be indicated through a reserved bit R 2600 of FIG. 26. For example, in the case that an R value indicates 0, PH information for each serving cell is determined based on a first TRP, and in the case that an R value indicates 1, PH information for each serving cell is determined based on a second TRP. The UE may report a MAC CE having the same MAC CE format as that illustrated in FIG. 26 to the base station, and the base station may determine based on which TRP the UE generated PH information according to information indicated by the R value.

<Embodiment 3-7 - Multiple Entry PHR MAC CE Type 3>

The LTE may report a PHR MAC CE having the MAC CE format illustrated in FIG. 21 to the base station. However, whether the UE calculates PH information based on which TRP may be determined according to a TRP in which a PUSCH including the corresponding PH information is transmitted. For example, in the case that a PUSCH including PH information is to be transmitted to a first TRP, the UE may calculate in advance PH information on a plurality of serving cells based on the first TRP, and when PHR is triggered, the UE may transmit an MAC CE including PH information to the base station, and the base station may regard that the UE has calculated in advance PH information on a plurality of serving cells based on the first TRP. According to this embodiment, there is an advantage that an existing MAC CE format may be reused without necessity to newly define a separate MAC CE format.

In the above Embodiments 3-1 to 3-7, there will be no problem the case that the corresponding PUSCH transmission and reception are executed in only one TRP for a method based on a TRP in which a PUSCH including specific PH information is transmitted and received during an operation of determining based on which TRP was determined specific PH information. However, in the case that the corresponding PUSCH is repeatedly transmitted in consideration of multiple TRPs (e.g., PUSCH repetition transmissions are performed for each of the first TRP and the second TRP), the above methods may not be applied. In this case, both the LTE and the base station may determine based on a TRP in which a first PUSCH is transmitted and received or a TRP in which a last PUSCH is transmitted and received.

Further, in the above-described embodiments, the MAC entity may determine based on which TRP PH information was determined based on a TRP in which a PUSCH including PH information was transmitted and received. Specifically, in an operation of determining based on which TRP PH information is generated (or calculated), the MAC entity may consider a TRP in which a PUSCH including the corresponding PH information is transmitted and received. For example, the MAC entity may determine that PH information included in a PUSCH transmitted and received through a first TRP is calculated based on the first TRP. Alternatively, the MAC entity may determine that PH information included in a PUSCH transmitted and received through a second TRP is calculated based on the second TRP. Here, the MAC entity may mean a MAC entity of the base station or a MAC entity of the UE.

<Embodiment 4: UE operation for determining a specific PUSCH resource when reporting PH information in a multi-cell environment>

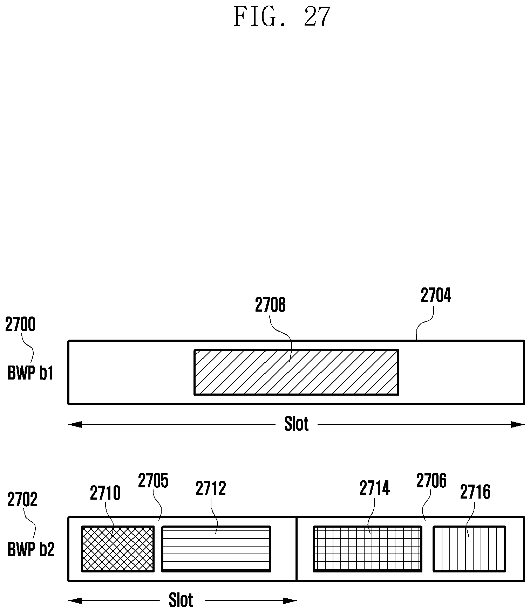

FIG. 27 is a diagram illustrating scheduling of PUSCH resources including PH information in a multi-cell environment according to an embodiment of the disclosure.

In a situation in which the UE operates a plurality of cells for PUSCH transmission, PH information on other cells is included in PUSCH transmission resources transmitting in a specific cell A, and in this case, in the case that there are a plurality of PUSCHs scheduled in other cells, it may be necessary to determine based on which PUSCH transmission resource PH information is reported.

As an example, in a situation in which the LTE is configured with a plurality of cells for PUSCH transmission and in which a subcarrier value $\mu_1$ of an uplink BWP $b_1$ 2700 of a carrier $f_1$ of a serving cell $c_1$ is smaller than a subcarrier value $\mu_2$ of an uplink BWP $b_2$ 2702 of a carrier $f_2$ of a serving cell cz, when the UE provides type 1 PHR included in one PUSCH transmission 2708 in one slot 2704 in the active uplink BWP $b_1$ 2700 overlapped with a plurality of slots 2705 and 2706 in the active uplink BWP $b_2$ 2702, the UE provides type 1 PHR for a first PUSCH 2710 in the first slot 2705 of the plurality of slots 2705 and 2706 of the active UL BWP $b_2$ 2702 completely overlapped with the slot 2704 of the active uplink BWP $b_1$ 2700.

As another example, in a situation in which the UE is configured with a plurality of cells for PUSCH transmission and in which a subcarrier value $\mu_1$ of the uplink BWP $b_1$ 2700 of the carrier $f_1$ of the serving cell $c_1$ is the same as a subcarrier value $\mu_2$ of the uplink BWP $b_2$ 2702 of the carrier $f_2$ of the serving cell $c_2$, when the UE provides type 1 PHR included in one PUSCH 2708 transmission in one slot 2704 in the active uplink BWP $b_1$ 2700, the UE provides type 1 PHR for the first PUSCH 2710 in the slot of the active UL BWP $b_2$ 2702 overlapped with the slot 2704 of the active uplink BWP $b_1$ 2700.

As another example, when the LTE is configured with a plurality of cells for PUSCH transmission and transmits type 1 PHR in PUSCH transmission, which is a PUSCH repetition transmission type B with normative repetition transmission over a plurality of slots in the active uplink BWP $b_1$ 2700 and overlapped with one or a plurality of slots of the active uplink BWP $b_2$ 2702, the LTE transmits type 1 PHR for a first PUSCH in a first slot of one or a plurality of slots of the active uplink $b_2$ overlapped with the plurality of slots of normative repetition transmission of the active uplink BWP $b_1$.

When describing with reference to FIG. 27 of the disclosure as an example, the determination of a first PUSCH 2710 may be different according to whether the PUSCH 2708 is a dynamic PUSCH transmitted by scheduling DCI or a configured grant-based PUSCH transmitted periodically without scheduling DCI. For example, in the case that the PUSCH 2708 is indicated by scheduling DCI, PUSCH resources determined by a higher-layer signal or an L1 signal may be considered until a time point at which the corresponding scheduling DCI is transmitted and received. In the case that the PUSCH 2708 is a grant-based PUSCH configured without scheduling DCI, PUSCH resources determined by the higher-layer signal or the L1 signal may be considered up to a time point before a $T_{proc,2}$ value described in [Equation 3] based on a first symbol of the corresponding PUSCH 2708. For example, in the case that the PUSCH 2710 has not been scheduled and that a PUSCH 2712 has been scheduled up to the time point, the UE may judge the PUSCH 2712 as the first PUSCH.

As another example, as described with reference to FIG. 16, in the case that the UE may repeatedly transmit for a plurality of TRPs, it may be necessary to determine based on which TRP among the repeatedly transmitted PUSCHs PH information on the transmitted PUSCH should be calculated. For example, in FIG. 27, PH information is included in the PUSCH 2708 transmitting to the TRP 1, and in BWP $b_2$ 2702, PUSCHs 2710, 2712, 2714, and 2716 may be transmitted for different TRPs by repetition transmission or PUSCHs 2710, 2712, 2714, and 2716 may be transmitted for each different TRP even if PUSCHs 2710, 2712, 2714, and 2716 are not repeatedly transmitted. In this situation, when the UE reports PH information for a plurality of cells, different operations may be possible according to a PHR MAC CE format.

- Case 27-1: This is the case that follows a PHR MAC CE format in which PH information on a PUSCH based on one TRP for each serving cell may be generated and be included in the MAC CE. In this case, the MAC CE may include PH information for each serving cell, as illustrated in FIG. 26, but may not include PH information on a PUSCH based on a plurality of TRPs in one serving cell. In FIG. 26, PH information included in the MAC CE according to the corresponding MAC CE PHR format is based on the same TRP information on all serving cells as an example, but a modified case including PH information on a PUSCH based on different TRPs for each serving cell may be sufficiently possible. In this case, the same PHR MAC CE format as illustrated in FIG. 21 may be followed.

-- In the case that the UE includes PH information in the PUSCH 2708, as illustrated in FIG. 27, the UE may generate (actual) PH information on the first PUSCH 2710 included in the first slot 2705 among slots of the active uplink BWP $b_2$ 2702 overlapped with the corresponding slot of the active uplink BWP $b_1$ 2700. For example, in the case that the first PUSCH 2710 is transmitted to the TRP 1, the UE may calculate (actual) PH information on the PUSCH 2710 determined based on the TRP 1 and include the corresponding information in the MAC CE when reporting the PHR. Here, it is natural that the TRP 1 may be modified and applied to other TRP indexes.

-- Alternatively, in the case that the UE includes PH information in the PUSCH 2708, as illustrated in FIG. 27, the UE may generate (actual) PH information on the first PUSCH 2710 transmitted in the same TRP as the PUSCH 2708 (or connected to the same CORESETPoolIndex) among the PUSCHs 2710 and 2712 in the first slot 2705 among the slots 2705 and 2706 of the active uplink BWP $b_2$ 2702 overlapped with the corresponding slot 2704 of the active uplink BWP $b_1$ 2700. For example, in the case that the PUSCH 2708 is transmitted to the TRP 1 and that the PUSCH 2710 of the PUSCHs 2710 and 2712 in the first slot 2705 among the slots 2705 and 2706 of the BWP $b_2$ 2702 overlapped with the slot 2704 of the BWP $b_1$ 2700 corresponds to the first PUSCH transmitted to the TRP 1, when the LTE calculates (actual) PH information on the PUSCH 2710 and reports PHR, the UE may include the corresponding information. Alternatively, in the case that the PUSCH 2708 is transmitted to the TRP 1 and that the PUSCH 2712 among the PUSCHs 2710 and 2712 in the first slot 2705 among slots of the BWP $b_2$ 2705 and 2706 overlapped with the slot 2704 of the BWP $b_1$ 2700 corresponds to the first PUSCH transmitted to the TRP 1, when the LTE calculates (actual) PH information on the corresponding PUSCH 2712 and reports the PHR, the UE may include the corresponding information. Here, it is natural that the TRP 1 may be modified and applied to other TRP indexes.

--Alternatively, in the case that the UE includes PH information in the PUSCH 2708, as illustrated in FIG. 27, the LTE generates (actual) PH information on a first PUSCH following a TRP index (or connected to the CORESETPoolIndex) indicated by a higher-layer signal or an L1 signal among PUSCHs 2710 and 2712 in the first slot 2705 among slots 2705 and 2706 of the active uplink BWP $b_2$ 2702 overlapped with the corresponding slot 2704 of the active uplink BWP $b_1$ 2709. For example, in the case that the TRP 1 is indicated by a higher-layer signal (or a TRP index is indicated to 1) and that the PUSCH 2710 is a first PUSCH transmitted to the TRP 1, when the UE calculates (actual) PH information on the PUSCH 2710 and reports PHR, the UE may include the corresponding information.

-- Alternatively, in the case that the UE includes PH information in the PUSCH 2708, as illustrated in FIG. 27, when the LTE generates (actual) PH information on a first PUSCH that satisfies a timeline among the PUSCHs 2710 and 2712 in the first slot 2705 of the slots 2705 and 2706 of the active uplink BWP $b_2$ 2702 overlapped with the corresponding slot 2704 of the active uplink BWP $b_1$ 2700 and reports the PHR, the UE may include the corresponding information. Here, the first PUSCH satisfying the timeline may mean a first PUSCH among PUSCHs connected to the same CORESETPoolIndex indicating the PUSCH 2708. For example, in the case that the PUSCH 2708 is indicated by a PDCCH connected to a specific CORESETPoolIndex, a first PUSCH among PUSCHs having the same value as the CORESETPoolIndex among PUSCHs determined by a higher-layer signal or an L1 signal received by the UE until a PDCCH transmission and reception time point may be referred to as a first PUSCH satisfying a timeline. As another example, in the case that the PUSCH 2708 is a grant PUSCH configured without scheduling DCI and that the UE receives information that the PUSCH 2708 is connected to a specific CORESETPoolIndex by a higher-layer signal or an L1 signal, the UE may generate and transmit (actual) PH information based on the first PUSCH among PUSCHs identical to the CORESETPoolIndex among PUSCH resources determined by a higher-layer signal or an L1 signal received up to a time point before $T_{proc,2}$, as illustrated in [Equation 3] in a start symbol of the PUSCH 2708. When describing with reference to FIG. 27 as an example, in the case that the UE identifies the PUSCHs 2712 and 2714 connected to the same CORESETPoolIndex as that of the PUSCH 2708 in the BWP $b_2$ 2702 by a higher-layer signal or an L1 signal received up to the time point, the LTE may generate and report (actual) PH information on the PUSCH 2712, which is a first PUSCH thereof. This is a description on a timeline for determining whether a PUSCH resource in the BWP $b_2$ 2702, and the UE of the disclosure may be applied to other embodiments of the disclosure, as described above.

-- Alternatively, in the case that the UE includes PH information in the PUSCH 2708, as illustrated in FIG. 27, and in the case that the PUSCH included in the first slot 2705 among the slots 2705 and 2706 of the active uplink BWP $b_2$ 2702 overlapped with the corresponding slot 2704 of the active uplink BWP $b_1$ 2700 does not exist, the UE needs to determine based on which TRP to determine virtual PH information. A time point for determining the case that the PUSCH does not exist may be the last symbol in which the PDCCH is transmitted in the case that the PUSCH 2708 is scheduled by DCI of the PDCCH. Alternatively, in the case that the PUSCH 2708 is a grant PUSCH configured without a PDCCH, the time point may be a time point before $T_{proc,2}$ based on the first symbol of the PUSCH 2708. This is only an example and may be sufficiently applicable to other time points. The UE may determine whether to allocate PUSCH resources based on information received with a higher-layer signal or an L1 signal received from the base station up to the corresponding time point. In the case that a PUSCH included in the first slot among slots of the active uplink BWP $b_2$ 2702 does not exist, the UE calculates virtual PH information calculated based on the same CORESETPoolIndex as that of the PUSCH 2708. Here, virtual PH information may be calculated based on [Equation 11], and at least one of parameters of [Equation 11] may have different values value according to CORESETPoolIndex. For example, in [Equation 11], $\alpha_{b,f,c}(j)$ is a parameter reflecting a ratio of a power headroom according to path attenuation, and it may be possible to be configured with different values in advance by a higher-layer signal according to CORESET-PoolIndex.

Alternatively, in the case that the PUSCH does not exist, the UE calculates virtual PH information calculated based on a specific CORESETPoolIndex indicated by a higher-layer signal or an L1 signal in advance. Alternatively, in the case that the PUSCH does not exist, the LTE always calculates virtual PH information calculated based on a value of CORESETPoolIndex 0.

- Case 27-2: This is the case that PH information on several PUSCHs is generated based on a plurality of TRPs for each serving cell and conforms to a MAC CE PHR format that may be included in the MAC CE. That is, this is the case that the UE may report PH information of individual PUSCHs based on a plurality of TRPs for one serving cell according to the MAC CE PHR format described above with reference to FIG. 25.

-- In the case that the UE includes PH information in the PUSCH 2708, as illustrated in FIG. 27, the LTE may generate (actual) PH information on the first PUSCHs connected to each CORESETPoolIndex among the PUSCHs 2710 and 2712 included in the first slot 2705 among the slots 2705 and 2706 of the active uplink BWP $b_2$ 2702 overlapped with the corresponding slot 2704 of the active uplink BWP $b_1$ 2700. For example, in the case that the PUSCH 2710 is the first PUSCH connected to a CORESETPoolIndex 0 (or to TRP 1) and that the PUSCH 2712 is a first PUSCH connected to a CORESETPoolIndex 1 (or to TRP 2), when the UE generates (actual) PH information based on the TRP 1, the UE may consider the PUSCH 2710, and when the LTE generates (actual) PH information based on the TRP 2, the UE may consider the PUSCH 2712. In FIG. 27, in the case that the PUSCH 2712 does not exist, when the UE generates PH information based on a TRP 2, the UE may generate virtual PH information because there is no scheduled PUSCH. Alternatively, in FIG. 27, in the case that the PUSCH 2710 does not exist, when generating PH information based on the TRP 1, the UE may generate virtual PH information because there is no scheduled PUSCH. As another example, in the case that the PUSCH 2710 or the PUSCH 2712 is not allocated to the first slot, and in the case that there is the first PUSCH connected to a CORESETPoolIndex among slots other than a first slot among slots of the active uplink BWP $b_2$ 2702 completely overlapped with the slot 2704 in which the PUSCH 2708 including PH information of the active uplink BWP $b_1$ 2700 is transmitted and received, the UE may calculate (actual) PH information based on the corresponding PUSCH instead of calculating virtual PH information on the corresponding TRP. For example, in the case that the PUSCH 2710 is not allocated, but that the PUSCH 2714 is allocated, and in the case of PUSCH transmission for the TRP 1 (or PUSCH transmission connected to a CORESETPoolIndex 0), when generating (actual) PH information based on the TRP 1, the UE may consider the PUSCH 2714. As another example, in the case that the PUSCH 2712 is not allocated, but the PUSCH 2716 is allocated, and in the case of PUSCH transmission for the TRP 2 (or PUSCH transmission connected to a CORESETPoolIndex 1), when generating (actual) PH information based on the TRP 2, the UE may consider the PUSCH 2716.

-- Alternatively, in the case that the UE includes PH information in the PUSCH 2708, as illustrated in FIG. 27, the UE may generate (actual) PH information only for the first PUSCH included in the first slot among the slots 2705 and 2706 of the active uplink BWP $b_2$ 2702 overlapped with the corresponding slot 2704 of the active uplink BWP $b_1$ 2700 and generate virtual PH information even if other PUSCHs exist in the first slot. For example, in the case that the PUSCH 2710 is a first PUSCH connected to the CORESETPoolIndex 0 and that the PUSCH 2712 is a first PUSCH connected to the CORESETPoolIndex 1, the UE may generate (actual) PH information based on the TRP 1 for the PUSCH 2710 and generate virtual PH information based on the TRP 2 without considering the PUSCH 2712.

-- Alternatively, in the case that the UE includes PH information in the PUSCH 2708, as illustrated in FIG. 27, the LTE may generate (actual) PH information only for a first PUSCH connected to the same CORESETPoolIndex as that of the PUSCH 2708 included in the first slot 2705 among the slots 2705 and 2706 of the actual uplink BWP $b_2$ 2702 overlapped with the corresponding slot 2704 of the actual uplink BWP $b_1$ 2700 and generate virtual PH information, even if other PUSCHs exist in the first slot. For example, in the case that the PUSCH 2708 is a PUSCH connected to a CORESETPoolIndex 1 and that the PUSCH 2710 is a first PUSCH connected to a CORESETPoolIndex 0 and that the PUSCH 2712 is a first PUSCH connected to a CORESETPoolIndex 1, the UE may generate (actual) PH information based on the TRP 2 for the PUSCH 2712 and generate virtual PH information based on the TRP 1 without considering the PUSCH 2710.

-- Alternatively, in the case that the UE includes PH information in the PUSCH 2708, as illustrated in FIG. 27, and in the case that a PUSCH included in the first slot 2705 among the slots 2705 and 2706 of the active uplink BWP $b_2$ 2702 overlapped with the corresponding slot 2704 of the active uplink BWP $b_1$ 2700 does not exist, the UE may determine virtual PH information on all of the plurality of TRPs. A time point for judging the case that the PUSCH does not exist may be a last symbol in which the PDCCH is transmitted in the case that the PUSCH 2708 is scheduled by DCI of the PDCCH. Alternatively, in the case that the PUSCH 2708 is a grant PUSCH configured without a PDCCH, the time point may be a time point before $T_{proc,2}$ based on the first symbol of the PUSCH 2708. This is only an example and may be sufficiently applicable to other time points. The LTE may judge whether to allocate PUSCH resources based on information received by a higher-layer signal or an L1 signal received from the base station up to the corresponding time point.

Although FIG. 27 illustrates a situation that subcarrier spacings of the BWP $b_1$ 2700 and BWP $b_2$ 2702 are different, all of the above-described embodiments may be applied to the case that the subcarrier spacings of the BWP $b_1$ 2700 and the BWP $b_2$ 2702 are the same. Further, in the disclosure, as illustrated in FIG. 27, the PUSCH 2708 including PH information may correspond to a PUSCH resource including initial transmission data, but the disclosure is not limited thereto.

<Embodiment 5 - PH Information Calculation Equation>

All of the above-described methods assume that the UE calculates PH information based on [Equation 10] or [Equation 11], and have been described. However, in a situation in which the LTE of the disclosure operates communication with a plurality of TRPs, a method of calculating modified PH information and reporting it to the base station may be possible. For example, in the case that the UE is configured with 5 serving cells and transmits and receives to and from total 2 TRPs, the UE should arithmetically calculate each of maximum 10 PH information, and include and transmit them in the MAC CE according to an MAC CE PHR format. Therefore, there is a possibility that the magnitude of the MAC CE format increases as the number of serving cells or the number of TRPs increases. Accordingly, it requires a larger data magnitude; thus, the base station requires more radio resources. Therefore, Embodiment 5 provides a method for the base station to receive MAC CE PHR information from the UE while efficiently using radio resources.

Therefore, a method of constituting one PH information regardless of the number of TRPs for each serving cell may be possible in the form of [Equation 12],

[Equation 12]

$$PH_{type1,b,f,c}(i,j,q_d,l) = PH_{type1,b,f,c,t1}(i,j,q_d,l) \blacksquare PH_{type1,b,f,c,t2}(i,j,q_d,l)$$

$PH_{type1,b,f,c,t1}(i,j,q_d,l)$ e.is the same as [Equation 10] or [Equation 11], and t1 means PH information on a TRP 1 (or connected to a CORESETPoolIndex 0). $PH_{type1,b,f,c,t2}(i,j,q_d,l)$ is the same as [Equation 10] or [Equation 11], and t2 means PH information on a TRP 2 (or connected to a CORESETPoolIndex 0). In [Equation 12], a value of

$PH_{type1,b,f,c}(i,j,q_d,l)$ is a result value in which $PH_{type1,b,f,c,t1}(i,j,q_d,l)$ and $PH_{type1,b,f,c,t2}(i,j,q_d,l)$ are obtained through a specific function (■). In the disclosure, a specific function is not limited, and for example, ■ is four arithmetic operations such as addition, subtraction, division, and multiplication or may be the maximum value (A■B=maximum(A,B)), the minimum value (A■B=minimum(A,B)), or an average value(A■B=Average(A,B)). Further, other arithmetic operations defined by the above combinations may be sufficiently possible, and $PH_{type1,b,f,c}(i,j,q_d,l)$ may be calculated based on a specific function according to various forms without being limited thereto.

In the case that, in one serving cell, the LTE performs simultaneous PUSCH transmission for a plurality of TRPs, the LTE may calculate PH information based on [Equation 13].

[Equation 13]

$$PH_{type1,b,f,c}(i,j,q_d,l) = P_{\text{CMAX,f,c}}(i) - \sum_t PH'_{type1,b,f,c,t}(i,j,q_d,l)\,[\text{dBm}]$$

[Equation 13] may mean that the UE includes the remaining transmission power value (power headroom) information except for PUSCH transmission power simultaneously transmitted for each TRP at the maximum transmission power. Further, $P_{\text{CMAX,f,c}}(i)$ determined by the UE in [Equation 13] may be determined by assuming a value of at least one or part of MPR, A-MPR, or P-MPR to a different value unlike [Equation 10] or [Equation 11]. $PH_{type1,b,f,c,t}(i,j,q_d,l)$ in [Equation 13] may correspond to at least one of the same actual transmission power as that in [Equation 14] or the same virtual transmission power as that in [Equation 15] for a specific TRP t.

[Equation 14]

$$PH'_{type1,b,f,c,t}(i,j,q_d,l)$$
$$= P_{0_{\text{PUSCH}},b,f,c}(j) + 10\log_{10}\left(2^{\mu} \cdot M_{RB,b,f,c}^{PUSCH}(i)\right) + \alpha_{b,f,c}(j) \cdot \text{PL}_{b,f,c}(q_d) + \Delta_{\text{TF},b,f,c}(i) + f_{b,f,c}(i,l)$$

[Equation 15]

$$PH'_{type1,b,f,c,t}(i,j,q_d,l) = P_{0_{\text{PUSCH}},b,f,c}(j) + \alpha_{b,f,c}(j) \cdot \text{PL}_{b,f,c}(q_d) + f_{b,f,c}(i,l)$$

According to the above-described [Equation 12] to [Equation 15], the UE may be sufficiently applied to at least one of embodiments described in this disclosure or a combination thereof.

In the case that the UE is configured with a plurality of serving cells according to the method provided in Embodiment 5, the UE may provide PHR to the base station by utilizing the same MAC CE format as that in FIG. 21 or 26 without necessity to report PH information for each serving cell and each TRP, as illustrated in FIG. 25.

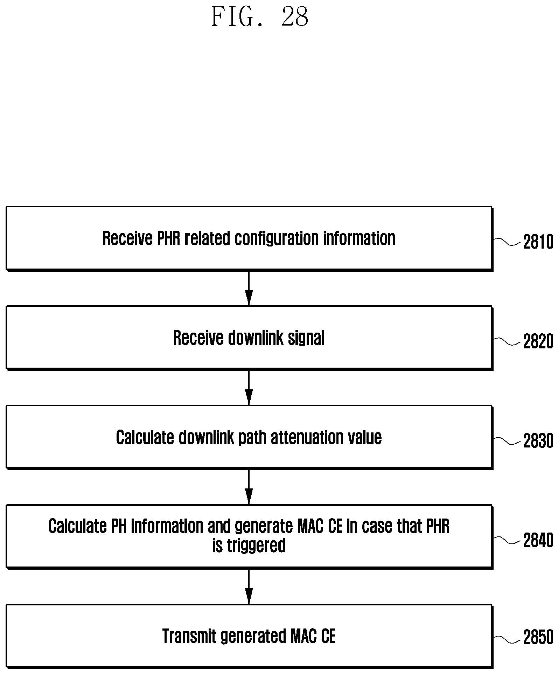

FIG. 28 is a flowchart illustrating an operation of a UE according to an embodiment of the disclosure.

With reference to FIG. 28, in step 2810, the UE may receive PHR related configuration information from the base station. The PHR related configuration information may include a timer value related to PHR, an indicator indicating a MAC CE format to be used for the PHR, a PHR configuration parameter for PUSCH transmission in FR2, and a value indicating the degree of downlink path attenuation (or transmission power) change for satisfying PHR trigger conditions. The PHR related configuration information may be received through a higher-layer signal.

In step 2820, the UE may receive a downlink signal (e.g., CSI-RS, SSB, and the like) from a first TRP or a second TRP.

In step 2830, the UE may calculate a downlink path attenuation value based on the measurement result of the downlink signal received in step 2820.

In step 2840, in the case that the PHR is triggered, the UE (MAC entity) may generate a MAC CE having a MAC CE format according to the above-described Embodiment 3 or a MAC CE format according to a combination thereof. In the case that the UE is configured with a plurality of serving cells, the UE may calculate PH information in consideration of at least one of detailed embodiments described in the above-described Embodiment 4 or a combination thereof and include the PH information in the MAC CE. Further, the UE may calculate (generate) PH information in consideration of at least one of detailed embodiments described in the above-described Embodiment 5 or a combination thereof. In the disclosure, in the case that a timer configured according to a timer value included in PHR related configuration information has expired or in the case that a change in a downlink path attenuation value is a specific threshold value or more, the PHR may be triggered.

In step 2850, the UE may transmit a PUSCH including an MAC CE generated in step 2840 to any one TRP of at least one TRP.

Steps 2810 to 2850 of FIG. 28 may be performed simultaneously or some thereof may be omitted.

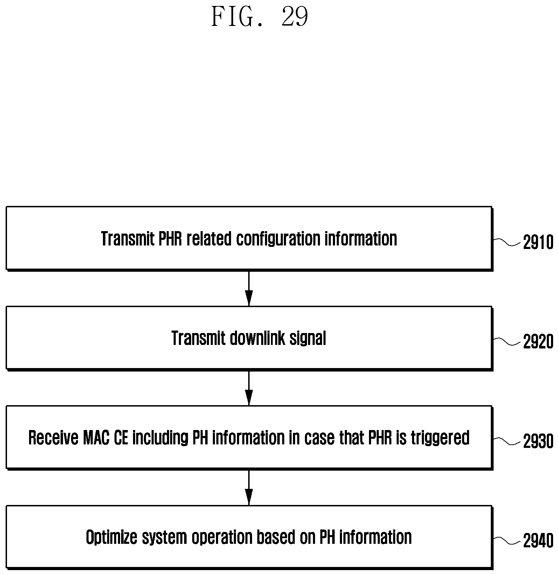

FIG. 29 is a flowchart illustrating an operation of a base station according to an embodiment of the disclosure.

With reference to FIG. 29, in step 2910, the base station may transmit PHR related configuration information. The PHR related configuration information may include a timer value related to PHR, an indicator indicating a MAC CE format to be used for the PHR, and the like. The PHR related configuration information may be transmitted through a higher-layer signal.

In step 2920, the base station may transmit a downlink signal (e.g., CSI-RS, SSB, and the like) to the UE through at least one TRP.

In step 2930, in the case that the PHR is triggered, the base station may receive an MAC CE including PH information through any one TRP among at least one TRP. In the disclosure, in the case that a timer configured according to a timer value included in PHR related configuration information has expired or in the case that a change in a downlink path attenuation value is a specific threshold value or more, the PHR may be triggered. In step 2930, it may be determined that PH information received by the base station from the UE considers the assumption determined based on at least one of detailed embodiments described in the above-described Embodiment 4 or 5 or a combination thereof.

In step 2940, the base station may optimize a system operation based on the PH information received in step 2930. For example, in the case that PH information reported by a specific UE is a remaining amount of power having a positive value, the base station may increase system yield by allocating more resources to the corresponding UE, whereas in the case that the PH information is a remaining amount of power having a negative value, by re-instructing scheduling appropriate for the maximum transmission power and allocating the remaining resources to other UEs because transmission power of the corresponding UE has already exceeded the maximum value, the base station may optimize system yield.

Steps 2910 to 2940 of FIG. 29 may be performed simultaneously or some thereof may be omitted. For example, in optimizing a system operation, the base station may selectively perform step 2940 by considering or not considering PH information received from the UE.

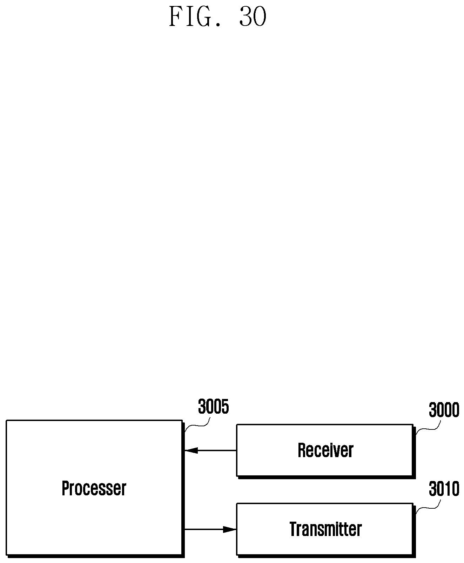

FIG. 30 is a block diagram illustrating a structure of a UE in a communication system according to an embodiment of the disclosure.

With reference to FIG. 30, the UE may include a transceiver that refers to a receiver 3000 and a transmitter 3010, a memory (not illustrated), and a processer 3005 (or a controller or processor). According to the communication method of the UE described above, the transceivers 3000 and 3010, the memory, and the processer 3005 of the UE may operate. However, the components of the UE are not limited to the above-described examples. For example, the UE may include more or fewer components than the above-described components. Further, the transceivers 3000 and 3010, the memory, and the processor 3005 may be implemented into the form of a single chip.

The transceivers 3000 and 3010 may transmit and receive signals to and from the base station. Here, the signal may include control information and data. To this end, the transceiver may include an RF transmitter for up-converting and amplifying a frequency of a signal to be transmitted, and an RF receiver for low-noise amplifying a received signal and down-converting a frequency thereof. However, this is only an embodiment of the transceivers 3000 and 3010, and components of the transceivers 3000 and 3010 are not limited to the RF transmitter and the RF receiver.

Further, the transceivers 3000 and 3010 may receive signals through a wireless channel, output the signals to the processor 3005, and transmit signals output from the processor 3005 through a wireless channel.

The memory may store programs and data necessary for an operation of the UE. Further, the memory may store control information or data included in signals transmitted and received by the UE. The memory may include a storage medium such as a read only memory (ROM), a random access memory (RAM), a hard disk, a compact disc read-only memory (CD-ROM), and a digital versatile disc (DVD), or a combination of storage media. Further, there may be a plurality of memories.

Further, the processor 3005 may control a series of processes so that the UE may operate according to the above-described embodiment. For example, the processor 3005 may control components of the UE to simultaneously receive a plurality of PDSCHs by receiving DCI composed of two layers. There may be a plurality of processors 3005, and the processor 3005 may execute a program stored in a memory to perform a component control operation of the UE.

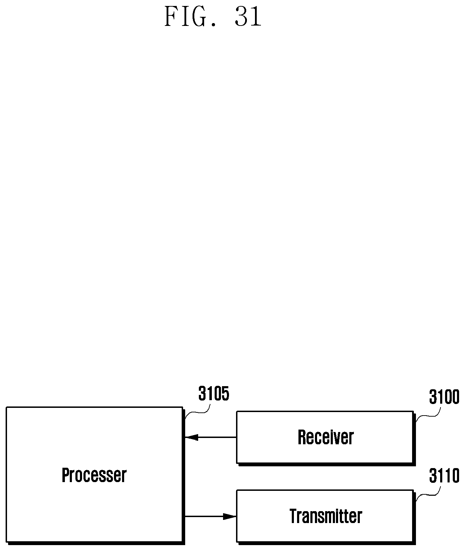

FIG. 31 is a block diagram illustrating a structure of a base station in a communication system according to an embodiment of the disclosure.

With reference to FIG. 31, the base station may include a transceiver that refers to a receiver 3100 and a transmitter 3110, a memory (not illustrated), and a processer 3105 (or a controller or processor). According to the communication method of the base station described above, the transceivers 3100 and 3110, the memory and the processer 3105 of the base station may operate. However, components of the base station are not limited to the above-described examples. For example, the base station may include more or fewer components than those described above.

Further, the transceivers 3100 and 3110, the memory, and the processor 3105 may be implemented into the form of a single chip.

The transceivers 3100 and 3110 may transmit and receive signals to and from the UE. Here, the signal may include control information and data. To this end, the transceivers 3100 and 3110 may include an RF transmitter for up-converting and amplifying a frequency of a signal to be transmitted, and an RF receiver for low-noise amplifying a received signal and down-converting a frequency thereof. However, this is only an embodiment of the transceivers 3100 and 3110, and components of the transceivers 3100 and 3110 are not limited to the RF transmitter and the RF receiver.

Further, the transceivers 3100 and 3110 may receive signals through a wireless channel, output the signals to the processor 3105, and transmit signals output from the processor 3105 through a wireless channel.

The memory may store programs and data necessary for an operation of the base station. Further, the memory may store control information or data included in signals transmitted and received by the base station. The memory may include a storage medium such as a ROM, a RAM, a hard disk, a CD-ROM, and a DVD, or a combination of storage media. Further, there may be a plurality of memories.

The processor 3105 may control a series of processes so that the base station operates according to the above-described embodiment of the disclosure. For example, in order to constitute and transmit two layers of DCI including allocation information on a plurality of PDSCHs, the processor 3105 may control each component of the base station. There may be a plurality of processors 3105, and by executing a program stored in the memory, the processor 3105 may perform a component control operation of the base station.

Methods according to the embodiments described in the claims or specifications of the disclosure may be implemented in the form of hardware, software, or a combination of hardware and software.

In the case of being implemented in software, a computer readable storage medium storing one or more programs (software modules) may be provided. One or more programs stored in the computer readable storage medium are configured for execution by one or more processors in an electronic device. The one or more programs include instructions for causing an electronic device to execute methods according to embodiments described in claims or specification of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), another form of optical storage device, or a magnetic cassette. Alternatively, the programs may be stored in a memory composed of a combination of some or all thereof. Further, each constitution memory may be included in the plural.

Further, the program may be stored in an attachable storage device that may access through a communication network such as the Internet, Intranet, local area network (LAN), wide LAN (WLAN), or storage area Network (SAN), or a communication network composed of a combination thereof. Such a storage device may access a device implementing an embodiment of the disclosure through an external port. Further, a separate storage device on the communication network may access the device implementing the embodiment of the disclosure.

In the above-described specific embodiments of the disclosure, components included in the disclosure have been expressed in the singular or the plural according to the presented specific embodiments. However, the singular or plural expression is appropriately selected for a presented situation for convenience of description, and the disclosure is not limited to the singular or plural components, and even if a component is represented in the plural, it may be composed of the singular, or even if a component is represented in the singular, it may be composed of the plural.

Embodiments of the disclosure disclosed in this specification and drawings merely present specific examples in order to easily describe the technical contents of the disclosure and help the understanding of the disclosure, and they are not intended to limit the scope of the disclosure. That is, it will be apparent to those of ordinary skill in the art to which the disclosure pertains that other modifications based on the technical spirit of the disclosure may be implemented. Further, each of the above embodiments may be operated in combination with each other, as needed. For example, a base station and a UE may be operated by combining parts of an embodiment of the disclosure and another embodiment. For example, a base station and a UE may be operated by combining parts of Embodiment 1 and Embodiment 2 of the disclosure. As another example, the UE of the disclosure may be operated by combining parts of Embodiments 3 to 5. In the case that a plurality of serving cells are configured to the UE, the UE may generate a MAC CE including PH information according to at least one of detailed embodiments described in Embodiment 3 or a combination thereof, and in this case, the UE may calculate PH information according to at least one or a combination of detailed embodiments described in Embodiment 4. As another example, the base station and the UE may be operated by combining parts of Embodiments 1 to 5 of the disclosure. For example, as described in Embodiment 1, the UE may classify a TRP according to a value indicated by an SRI field in DCI, that is, an RS resource index or a resource index, and calculate (generate) PH information and transmit a PHR MAC CE. In the case that a plurality of serving cells or one serving cell is configured in the UE, the LTE may generate the PH information according to at least one of detailed embodiments described in Embodiment 5 or a combination thereof.

Although the above embodiments have been presented based on an FDD LTE system, other modifications based on the technical idea of the above embodiment may be implemented even in other systems such as a TDD LTE system, 5G or NR system.

In the drawings for describing the method of the disclosure, the order of description does not necessarily correspond to the order of execution, and the precedence relationship may be changed or may be executed in parallel.

Alternatively, the drawings illustrating the method of the disclosure may omit some components and include only some components within the scope that does not impair the essence of the disclosure.

Further, the method of the disclosure may be implemented in a combination of some or all of the contents included in each embodiment within a range that does not impair the essence of the disclosure.

Various embodiments of the disclosure have been described above. The foregoing description of the disclosure is for illustrative purposes, and the embodiments of the disclosure are not limited to the disclosed embodiments. Those of ordinary skill in the art to which the disclosure belongs will be able to understand that it may be easily modified into other specific forms without changing the technical spirit or essential features of the disclosure. The scope of the disclosure is indicated by the following claims rather than the detailed description above, and all changes or modifications derived from the meaning and scope of the claims and equivalent concepts should be interpreted as being included in the scope of the disclosure.

## Claims

1. A method performed by a terminal in a communication system, the method comprising:

   receiving power headroom reporting (PHR) related configuration information;
   identifying at least one PHR based on the PHR related configuration information; and
   transmitting the at least one PHR,
   wherein the at least one PHR comprises one of a PHR for an actual physical uplink shared channel (PUSCH) associated with a first resource index and a PHR for a reference PUSCH associated with the first resource index, and
   wherein in the case that a PUSCH associated with the first resource index is transmitted in a slot n, the PHR for the actual PUSCH associated with the first resource index is for a first PUSCH associated with the first resource index overlapped with the slot n.

2. The method of claim 1, wherein the at least one PHR comprises a PHR for an actual PUSCH associated with the first resource index,

   wherein in the case that a PUSCH associated with a second resource index is transmitted in the slot n, the at least one PHR further comprises a PHR for an actual PUSCH associated with the second resource index overlapped with the slot n, and
   wherein in the case that a PUSCH associated with the second resource index is not transmitted in the slot n, the at least one PHR further comprises a PHR for a reference PUSCH associated with the second resource index.

3. The method of claim 1, wherein the at least one PHR comprises a PHR for a reference PUSCH associated with the first resource index and a PHR for a reference PUSCH associated with a second resource index.

4. A method performed by a base station in a communication system, the method comprising:

   transmitting configuration information power headroom reporting (PHR) related configuration information; and
   receiving at least one PHR,
   wherein the at least one PHR is based on the PHR related configuration information,
   wherein the at least one PHR comprises one of a PHR for an actual physical uplink shared channel (PUSCH) associated with a first resource index and a PHR for a reference PUSCH associated with the first resource index, and
   wherein in the case that a PUSCH associated with the first resource index is transmitted in a slot n, the PHR for the actual PUSCH associated with the first resource index is for a first PUSCH associated with the first resource index overlapped with the slot n.

5. The method of claim 4, wherein the at least one PHR comprises a PHR for an actual PUSCH associated with the first resource index,

wherein in the case that a PUSCH associated with a second resource index is transmitted in the slot n, the at least one PHR further comprises a PHR for an actual PUSCH associated with the second resource index overlapped with the slot n, and

wherein in the case that a PUSCH associated with the second resource index is not transmitted in the slot n, the at least one PHR further comprises a PHR for a reference PUSCH associated with the second resource index.

6. The method of claim 4, wherein the at least one PHR comprises a PHR for a reference PUSCH associated with the first resource index and a PHR for a reference PUSCH associated with a second resource index.

7. A terminal of a communication system, the terminal comprising:

> a transceiver; and
> a controller coupled with the transceiver and configured to:

>> receive power headroom reporting (PHR) related configuration information,
>> identify at least one PHR based on the PHR related configuration information, and
>> transmit the at least one PHR,
>> wherein the at least one PHR comprises one of a PHR for an actual physical uplink shared channel (PUSCH) associated with a first resource index and a PHR for a reference PUSCH associated with the first resource index, and
>> wherein in the case that a PUSCH associated with the first resource index is transmitted in a slot n, the PHR for the actual PUSCH associated with the first resource index is for a first PUSCH associated with the first resource index overlapped with the slot n.

8. The terminal of claim 7, wherein the at least one PHR comprises a PHR for an actual PUSCH associated with the first resource index,

> wherein in the case that a PUSCH associated with a second resource index is transmitted in the slot n, the at least one PHR further comprises a PHR for an actual PUSCH associated with the second resource index overlapped with the slot n, and
> wherein in the case that a PUSCH associated with the second resource index is not transmitted in the slot n, the at least one PHR further comprises a PHR for a reference PUSCH associated with the second resource index.

9. The terminal of claim 7, wherein the at least one PHR comprises a PHR for a reference PUSCH associated with the first resource index and a PHR for a reference PUSCH associated with a second resource index.

10. A base station of a communication system, the base station comprising:

> a transceiver; and
> a controller coupled with the transceiver and configured to:

>> transmit power headroom reporting (PHR) related configuration information, and
>> receive at least one PHR,
>> wherein the at least one PHR is based on the PHR related configuration information,
>> wherein the at least one PHR comprises one of a PHR for an actual physical uplink shared channel (PUSCH) associated with a first resource index and a PHR for a reference PUSCH associated with the first resource index, and
>> wherein in the case that a PUSCH associated with the first resource index is transmitted in a slot n, the PHR for the actual PUSCH associated with the first resource index is for a first PUSCH associated with the first resource index overlapped with the slot n.

11. The base station of claim 10, wherein the at least one PHR comprises a PHR for an actual PUSCH associated with the first resource index,

> wherein in the case that a PUSCH associated with a second resource index is transmitted in the slot n, the at least one PHR further comprises a PHR for an actual PUSCH associated with the second resource index overlapped with the slot n, and
> wherein in the case that a PUSCH associated with the second resource index is not transmitted in the slot n, the at least one PHR further comprises a PHR for a reference PUSCH associated with the second resource index.

12. The base station of claim 10, wherein the at least one PHR comprises a PHR for a reference PUSCH associated with the first resource index and a PHR for a reference PUSCH associated with a second resource index.

# FIG. 1

One subframe (110)

$N_{symb}^{subframe,\mu}$ OFDM symbols

1 OFDM symbols (102)

1 subcarrier (103)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

$k = 0$

Frequency

$\bar{l} = 0$

$\bar{l} = 14 \cdot 2^{\mu} - 1$

Time

# FIG. 2

# FIG. 3

BWP#1
(301)

BWP#2
(302)

UE bandwidth
(300)

Frequency

FIG. 4

Duration (404)

Frequecy resources (403)

UE bandwidth part (410)

Frequency

Time

Slot (420)

Control resource set#1 (401)

Control resource set#2 (402)

EP 4 301 052 A1

100

# FIG. 5

# FIG. 6

| 1 slot = 14 OFDM symbols |
|---|

| 0 | 1 | 2 | 3 | 4 | 5 | 6 | 7 | 8 | 9 | 10 | 11 | 12 | 13 |

Legend:
- Search space 1
- Search space 2
- Search space 3

(6-00) [X,Y] = (7,4)
X=7, Y=3, Y=3

(6-05) [X,Y] = (4,3)
X=4, X'= 5 > X, X'= 5 > X, Y=3, Y=3, Y=3

(6-10) [X,Y] = (2,2)
X=2, X=2, X=2, X=2, X=2, X=2, X=2
Y=2, Y=2, Y=2, Y=2, Y=2, Y=2, Y=2

EP 4 301 052 A1

# FIG. 7

TCI state #0
(700)

TCI state #1
(705)

TCI state #2
(710)

FIG. 8

RRC configuration TCI states (800)

| TCI #0 (805) | TCI #1 (810) | TCI #2 (815) | • • • • • | TCI #N (820) |

List of TCI for CORSET (825)

| TCI #a (830) | TCI #b (835) | • • • • • | TCI #n (840) |

TCI indication through MAC CE (845)

FIG. 9

| Serving Cell ID (915) | CORESET ID (920) | Oct 1 (900) |
|---|---|---|
| CORE SET ID | TCI state ID (925) | Oct 2 (905) |

EP 4 301 052 A1

FIG. 10

# FIG. 11A

BWP#1
(Active)
on Cell#1
(1100)

CSS#1 ←→ CORESET#1
(Ref: CSI-RS#1/Cell#1/BWP#1
with QCL-TypeD) — 1115

CSS#2

USS#1

BWP#1
(Active)
on Cell#2
(1105)

CSS#1 ←→ CORESET#1
(Ref: CSI-RS#1/Cell#1/BWP#1
with QCL-TypeD) — 1120

USS#2

USS#2 ←→ CORESET#2
(Ref: CSI-RS#1/Cell#2/BWP#1
with QCL-TypeD) — 1125

PDCCH monitoring occasion
(1110)

# FIG. 11B

Active BWP on Cell#1 (1130)

USS#1

USS#2

USS#3

CORESET#1 (Ref: CSI-RS#1/Cell#1/BWP#1 with QCL-TypeD) — 1145

CORESET#2 (Ref: CSI-RS#1/Cell#1/BWP#1 with QCL-TypeD) — 1150

Active BWP on Cell#2 (1135)

USS#1

USS#2

USS#3

CORESET#1 (Ref: CSI-RS#1/Cell#2/BWP#1 with QCL-TypeD) — 1155

CORESET#2 (Ref: CSI-RS#2/Cell#2/BWP#1 with QCL-TypeD) — 1160

PDCCH monitoring occasion (1140)

# FIG. 12

# FIG. 13

Actual repetition (1303)

| D | D | D | S | U | D | D | S | U | U | D | D | D | S | U | D | D | S | U | U |

nominal repetition (1301): 1 2 3 4 5 6 7 8 9 10 11 12 13 14 15 16

Invalid symbol pattern (1302): 0 0 0 0 0 1 1 1 1 1 1 1 1 1 1

Slot

Frequency

Time

EP 4 301 052 A1

# FIG. 14

# FIG. 15

Single cell LTE/NR (S00)

**gNB**
- SDAP (S25)
- PDCP (S30)
- RLC (S35)
- MAC (S40)
- PHY (S45)

**UE**
- PHY (S50)
- MAC (S55)
- RLC (S60)
- PDCP (S65)
- SDAP (S70)

Carrier aggregation (S10)

**gNB**
- SDAP
- PDCP
- RLC
- MAC
- PHY ... PHY

**UE**
- PHY ... PHY
- MAC
- RLC
- PDCP
- SDAP

Dual connectivity (S20)

**MgNB**
- SDAP
- PDCP
- RLC
- MAC
- PHY

**SgNB**
- RLC
- MAC
- PHY

**UE**
- PHY
- MAC
- RLC
- PDCP
- SDAP

**SgNB (UE)**
- PHY
- MAC
- RLC

EP 4 301 052 A1

FIG. 16

EP 4 301 052 A1

# FIG. 17

| | |
|---|---|
| Control information for TRP #0 | DCI #0 |
| Control information for TRP #1 | DCI #1 |
| ⋮ | ⋮ |
| Control information for TRP #(N-1) | DCI #(N-1) |

Case #1 (N100)

| | |
|---|---|
| Control information for TRP #0 | DCI #0 |
| Control information for TRP #1 | sDCI #0 |
| ⋮ | ⋮ |
| Control information for TRP #(N-1) | sDCI #(N-2) |

Case #2 (N105)

| | |
|---|---|
| Control information for TRP #0 | DCI |
| Control information for TRP #1 | sDCI |
| ⋮ | ⋮ |
| Control information for TRP #(N-1) | |

Case #3 (N110)

| | |
|---|---|
| Control information for TRP #0 | |
| Control information for TRP #1 | Long DCI |
| ⋮ | ⋮ |
| Control information for TRP #(N-1) | |

Case #4 (N115)

# FIG. 18

```
        Base station                                    UE
```

1810 — Synchronize downlink and acquire system information

1815 — Synchronize uplink and configure RRC connection

1820 — Receive RRC parameters

1825 — Receive path attenuation estimation signal

1830 — Estimate downlink path attenuation value and configure uplink transmission power value

1835 — Report power headroom

1840 — Optimize system operation based on reported power headroom

1845 — Receive TPC

1850 — Estimate downlink path attenuation value and configure uplink transmission power value

1855 — Transmit uplink

FIG. 19A

START

Receive UE capability
(UE capability related to whether PUSCH
repetition transmission in consideration
of single DCI-based multiple TRPs is
supported, whether a plurality of SRI or
TPMI fields are supported, and whether
dynamic switching between single/multiple
TRP operation using corresponding
fields is supported) and transient
offset related
— 1901

Transmit PUSCH repetition transmission
configuration in consideration of
single DCI-based multiple TRPs (repetition
transmission method, repetition
transmission number, transmission beam
mapping unit or scheme, whether a
plurality of SRI or TPMI fields may be
supported, and SRS resource set for a
plurality of codebook/non-codebooks)
and transient offset related
— 1902

Number of
repetition transmissions
> 1 ?  — 1903

No → First PUSCH transmission operation — 1904

Yes

A plurality of SRI
or TPMI field supportable
configurations exist? — 1905

No → Second PUSCH transmission operation — 1906

Yes

Indicate multiple
TRP-based repetition
transmission codepoint through the
plurality of SRI or TPMI
fields? — 1907

No → Third PUSCH transmission operation — 1908

Yes

Fourth PUSCH transmission operation — 1909

FIG. 19B

```
                    ( START )
                        │
                        ▼
┌──────────────────────────────────────┐
│ Report UE capability (UE capability    │
│ related to whether PUSCH repetition    │
│ transmission in consideration of single│ 1951
│ DCI-based multiple TRPs is supported,  │
│ whether a plurality of SRI or TPMI     │
│ fields are supported, and whether      │
│ dynamic switching between single/      │
│ multiple TRP operation using           │
│ corresponding fields is supported)     │
│ and transient offset related           │
└──────────────────────────────────────┘
                        │
                        ▼
┌──────────────────────────────────────┐
│ Receive PUSCH repetition transmission  │
│ configuration in consideration of      │
│ single DCI-based multiple TRPs         │
│ (repetition transmission method,       │
│ repetition transmission number,        │ 1952
│ transmission beam mapping unit or      │
│ scheme, whether a plurality of SRI or  │
│ TPMI fields may be supported, and SRS  │
│ resource set for a plurality of        │
│ codebook/non-codebooks) and transient  │
│ offset related                          │
└──────────────────────────────────────┘
```

1953 Number of repetition transmissions > 1 ? — No → 1954 First PUSCH transmission operation

Yes

1955 A plurality of SRI or TPMI field supportable configurations exist? — No → 1956 Second PUSCH transmission operation

Yes

1957 Indicate multiple TRP-based repetition transmission codepoint through the plurality of SRI or TPMI fields? — No → 1958 Third PUSCH transmission operation

Yes

1959 Fourth PUSCH transmission operation

# FIG. 20

| 2000 | | |
|---|---|---|
| P | R | PH (Type 1, PCell) |
| MPE or R | | $P_{CMAX,f,c}$ |

## FIG. 21

**2102**

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |

| P | V | PH (Type 2, SpCell of the other MAC entity) |
|---|---|---|
| MPE or R | | $P_{CMAX,f,c}$ 1 |
| P | V | PH (Type 1, PCell) |
| MPE or R | | $P_{CMAX,f,c}$ 2 |
| P | V | PH (Type X, Serving Cell 1) |
| MPE or R | | $P_{CMAX,f,c}$ 3 |

. . . .

| P | V | PH (Type X, Serving Cell n) |
|---|---|---|
| MPE or R | | $P_{CMAX,f,c}$ m |

**2100**

| $C_7$ | $C_6$ | $C_5$ | $C_4$ | $C_3$ | $C_2$ | $C_1$ | R |
|---|---|---|---|---|---|---|---|

| P | V | PH (Type 2, SpCell of the other MAC entity) |
|---|---|---|
| MPE or R | | $P_{CMAX,f,c}$ 1 |
| P | V | PH (Type 1, PCell) |
| MPE or R | | $P_{CMAX,f,c}$ 2 |
| P | V | PH (Type X, Serving Cell 1) |
| MPE or R | | $P_{CMAX,f,c}$ 3 |

. . . .

| P | V | PH (Type X, Serving Cell n) |
|---|---|---|
| MPE or R | | $P_{CMAX,f,c}$ m |

FIG. 22

2200

| P | R | PH (Type 1, PCell) | ⎫ |
|---|---|---|---|
| MPE or R | | $P_{CMAX,f,c}$ | ⎬ First TRP |
| P | R | PH (Type 1, PCell) | ⎫ |
| MPE or R | | $P_{CMAX,f,c}$ | ⎬ Second TRP |

2202

. . . .

FIG. 23

| | | |
|---|---|---|
| P | R | PH (Type 1, PCell) |
| MPE or R | | $P_{CMAX,f,c}$ |
| P | R | PH (Type 1, PCell) |

Actual PHR (rows 1-2)
Virtual PHR (row 3)

# FIG. 24

| | | | | | | | | |
|---|---|---|---|---|---|---|---|---|
| R | R | R | R | R | R | T2 | T1 | TRP information |
| P | R | PH (Type 1, PCell) | | | | | | |
| MPE or R | | $P_{CMAX,f,c}$ | | | | | | |
| P | R | PH (Type 1, PCell) | | | | | | |
| MPE or R | | $P_{CMAX,f,c}$ | | | | | | |

2400

2402

# FIG. 25

| $C_{7,1}$ | $C_{6,1}$ | $C_{5,1}$ | $C_{4,1}$ | $C_{3,1}$ | $C_{2,1}$ | $C_{1,1}$ | R |
|---|---|---|---|---|---|---|---|

. . . .

| $C_{m,n}$ | $C_{m-1,n}$ | $C_{m-2,n}$ | $C_{m-3,n}$ | $C_{m-4,n}$ | $C_{m-5,n}$ | $C_{m-6,n}$ | $C_{m-7,n}$ |
|---|---|---|---|---|---|---|---|
| P | V | PH for serving cell 1 (TPR 1) | | | | | |
| MPE or R | | $P_{CMAX,f,c}\ 1,1$ | | | | | |
| P | V | PH for serving cell 1 (TPR 2) | | | | | |
| MPE or R | | $P_{CMAX,f,c}\ 1,2$ | | | | | |

. . . .

| P | V | PH for serving cell m (TPR n) | |
|---|---|---|---|
| MPE or R | | $P_{CMAX,f,c}\ m,n$ | |

FIG. 26

| C₇ | C₆ | C₅ | C₄ | C₃ | C₂ | C₁ | R |
|----|----|----|----|----|----|----|----|

$\sim$2600

. . . .

| Cₘ | Cₘ₋₁ | Cₘ₋₂ | Cₘ₋₃ | Cₘ₋₄ | Cₘ₋₅ | Cₘ₋₆ | Cₘ₋₇ |
|-----|------|------|------|------|------|------|------|
| P | V | PH for serving cell 1 | | | | | |
| MPE or R | | $P_{CMAX,f,c}$ 1 | | | | | |
| P | V | PH for serving cell 2 | | | | | |
| MPE or R | | $P_{CMAX,f,c}$ 2 | | | | | |

. . . .

| P | V | PH for serving cell m |
|---|---|----------------------|
| MPE or R | | $P_{CMAX,f,c}$  m |

# FIG. 27

# FIG. 28

Receive PHR related configuration information ~2810

Receive downlink signal ~2820

Calculate downlink path attenuation value ~2830

Calculate PH information and generate MAC CE in case that PHR is triggered ~2840

Transmit generated MAC CE ~2850

FIG. 29

| Transmit PHR related configuration information | 2910 |

| Transmit downlink signal | 2920 |

| Receive MAC CE including PH information in case that PHR is triggered | 2930 |

| Optimize system operation based on PH information | 2940 |

FIG. 30

3005

Processer

Receiver 3000

Transmitter 3010

FIG. 31

3105

3100

Processer

Receiver

3110

Transmitter

## INTERNATIONAL SEARCH REPORT

| International application No. |
| --- |
| **PCT/KR2022/004800** |

**A. CLASSIFICATION OF SUBJECT MATTER**

**H04W 52/36**(2009.01)i; **H04W 52/14**(2009.01)i

According to International Patent Classification (IPC) or to both national classification and IPC

**B. FIELDS SEARCHED**

Minimum documentation searched (classification system followed by classification symbols)

H04W 52/36(2009.01); H04W 52/24(2009.01); H04W 52/34(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PHR, 자원 인덱스(resource index), 실제(real), 기준(reference), PUSCH, 슬롯(slot), 중첩(overlap)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | HUAWEI et al. Correction to NR TC 7.1.1.3.8.X-PHR report. R5-211385, 3GPP TSG-RAN5 Meeting #90-e. 05 March 2021.<br>See pages 1-11. | 1,4,7,10<br>2-3,5-6,8-9,11-12 |
| Y | ZTE. Summary for AI 7.1.5 Maintenance for UL power control. R1-1907739, 3GPP TSG-RAN1 Meeting #97. 16 May 2019.<br>See pages 1-19 and figure 3. | 1,4,7,10 |
| A | US 2019-0349866 A1 (ASUSTEK COMPUTER INC.) 14 November 2019 (2019-11-14)<br>See paragraphs [0147], [0213], [0298] and [0325]-[0382] and figure 16. | 1-12 |
| A | HUAWEI et al. Running CR for MAC in R16 positioning. R2-2006172, 3GPP TSG-RAN2 Meeting #110-e. 19 June 2020.<br>See pages 1-11. | 1-12 |
| A | KR 10-2016-0135312 A (ALCATEL LUCENT) 25 November 2016 (2016-11-25)<br>See paragraphs [0008]-[0130] and [0164]-[0200] and figure 3. | 1-12 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **22 June 2022** | **23 June 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/004800**

| Patent document cited in search report | | | Publication date (day/month/year) | Patent family member(s) | | | Publication date (day/month/year) |
|---|---|---|---|---|---|---|---|
| US | 2019-0349866 | A1 | 14 November 2019 | CN | 110475334 | A | 19 November 2019 |
| | | | | CN | 110475334 | B | 22 October 2021 |
| | | | | EP | 3567939 | A1 | 13 November 2019 |
| | | | | EP | 3567939 | B1 | 08 July 2020 |
| | | | | ES | 2828080 | T3 | 25 May 2021 |
| | | | | JP | 2019-198068 | A | 14 November 2019 |
| | | | | JP | 6818805 | B2 | 20 January 2021 |
| | | | | KR | 10-2019-0129710 | A | 20 November 2019 |
| | | | | KR | 10-2257411 | B1 | 28 May 2021 |
| | | | | TW | 201947973 | A | 16 December 2019 |
| | | | | TW | I699128 | B | 11 July 2020 |
| | | | | US | 10986585 | B2 | 20 April 2021 |
| | | | | US | 2021-0235390 | A1 | 29 July 2021 |
| KR | 10-2016-0135312 | A | 25 November 2016 | CN | 104936222 | A | 23 September 2015 |
| | | | | CN | 104936222 | B | 12 April 2019 |
| | | | | EP | 3120629 | A2 | 25 January 2017 |
| | | | | JP | 2017-515341 | A | 08 June 2017 |
| | | | | US | 2017-0150458 | A1 | 25 May 2017 |
| | | | | WO | 2015-140634 | A2 | 24 September 2015 |
| | | | | WO | 2015-140634 | A3 | 14 January 2016 |

Form PCT/ISA/210 (patent family annex) (July 2019)